(19) Europäisches Patentamt
European Patent Office
Office européen des brevets

(11) EP 1 538 858 A1

(12) **EUROPEAN PATENT APPLICATION**
published in accordance with Art. 158(3) EPC

(43) Date of publication:
**08.06.2005 Bulletin 2005/23**

(21) Application number: **02780033.3**

(22) Date of filing: **07.11.2002**

(51) Int Cl.7: **H04Q 7/38**

(86) International application number:
**PCT/JP2002/011588**

(87) International publication number:
**WO 2004/025985 (25.03.2004 Gazette 2004/13)**

(84) Designated Contracting States:
**AT BE CH CY DE DK ES FI FR GB GR IE IT LI LU MC NL PT SE TR**

(30) Priority: **13.09.2002 JP 2002268185**

(71) Applicant: **FUJITSU LIMITED**
**Kawasaki-shi, Kanagawa 211-8588 (JP)**

(72) Inventors:
- **AOKI, Nobuhisa FUJITSU LIMITED**
**Kawasaki-shi, Kanagawa 211-8588 (JP)**
- **KAWABATA, Kazuo FUJITSU LIMITED**
**Kawasaki-shi, Kanagawa 211-8588 (JP)**
- **TAJIMA, Yoshiharu FUJITSU LIMITED**
**Kawasaki-shi, Kanagawa 211-8588 (JP)**
- **SUGIYAMA, Katsumasa FUJITSU LIMITED**
**Kawasaki-shi, Kanagawa 211-8588 (JP)**
- **HAMANO, Yuichiro FUJITSU LIMITED**
**Kawasaki-shi, Kanagawa 211-8588 (JP)**
- **SAKAI, Masashi FUJITSU LIMITED**
**Kawasaki-shi, Kanagawa 211-8588 (JP)**

(74) Representative: **Sunderland, James Harry**
**Haseltine Lake,**
**Imperial House,**
**15-19 Kingsway**
**London WC2B 6UD (GB)**

(54) **MOBILE COMMUNICATION SYSTEM**

(57) In a communication system that transmits broadcast data from a base station, a judgment standard for determining whether broadcast data is transmitted to each zone is held and the transmission and transmission stoppage of the broadcast data are controlled for each zone in accordance with the judgment standard. Furthermore, a judgment standard for determining the type of a wireless channel for transmitting the broadcast data to each zone is held, and the channel type for transmitting the broadcast data to each zone is determined in accordance with the judgment standard.

FIG. 2

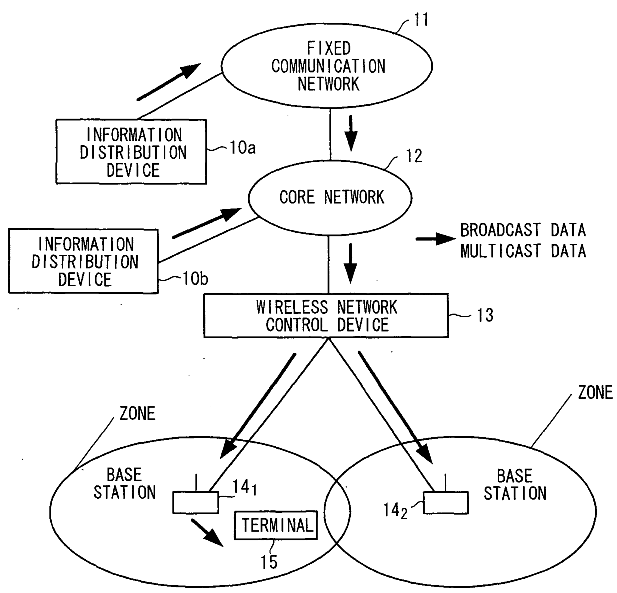


EP 1 538 858 A1

**Description**

TECHNICAL FIELD

The present invention relates to a system for providing control of the execution and stoppage of broadcasting services for each zone and for controlling changes to the type of wireless channel for supplying broadcasting services, and so forth in a mobile communication system that provides broadcasting services such as broadcast and multicast services. Here, a 'multicast' is a form of broadcasting for transmitting information to all contracted terminals and a 'broadcast' is a form of broadcasting for transmitting information to all terminals irrespective of contract.

BACKGROUND ART

Fig. 1 shows the constitution of broadcast services and multicast services of a conventional mobile communication network. Broadcast data and multicast data from an information distribution device 1 reaches a wireless network control device 3 via a fixed communication network 2 and a core network 2a that constitutes a switching network and is transmitted from all the base stations 4a, 4b, ... in the service area to all the mobile devices 5 in the zone via the wireless network control device 3.

In the case of a conventional broadcasting method of this kind, broadcasting data is transmitted unconditionally from all the base stations in the service area. Further, when the service area (referred to as cell) of the base station is converted into sectors, broadcasting data is transmitted unconditionally to the sectors. For this reason, even in a case where a terminal receiving services does not exist in the cell or sector (generally referred to as the 'zone'), transmission is performed from the base stations to an area where no terminal exists and, hence, there is the problem that wireless resources are used wastefully, the transmission power of the base station increases, and interference power increases.

Therefore, a first object of the present invention is to make it possible to use wireless resources efficiently and reduce the transmission power and interference power of the base station.

A second object of the present invention is to perform a zone transfer in a system that uses wireless resources efficiently without problems.

DISCLOSURE OF THE INVENTION

In the case of a first mobile communication system of the present invention, when one zone is established by combining one or more service areas or when the service areas are divided into a plurality of zones, a judgment standard (whether a terminal receiving a supply of services exists or not, for example) is established for each zone and broadcast data and multicast data, and so forth, are not transmitted from the base station to zones where the standard is not fulfilled (a terminal does not exist). Accordingly, in one zone, when the standard is not fulfilled, the transmission of broadcast data and multicast data is not performed and, therefore, the wireless resources in the zone can be used efficiently.

Further, when, as a result of movement by a terminal receiving a supply of services, the terminal exists in a region that also allows services to be received from a base station in another zone and the terminal requests wireless-channel data transmission from the base station, the data is transmitted on the wireless channel from the base station on the basis of the request. Alternatively, a network device detects the fact that the terminal receiving the supply of services exists in a region that allows services to be received from the other zone and the data is transmitted on a wireless channel from the base station of the other zone. Thus, a zone transfer in a system that uses wireless resources efficiently can be implemented without problems.

In a second mobile communication system of the present invention, when one zone is established by combining one or more service areas or when the service areas are divided into a plurality of zones, a judgment standard is established for each zone and the type of wireless channel (dedicated physical channel, common physical channel, for example) is determined on the basis of the judgment result. Thus, in one zone, the optimal wireless channel for transmitting broadcast data and multicast data can be selected in accordance with the judgment standard. Therefore, the wireless resources in the zone can be used efficiently and the transmission power and interference power of the base station can be reduced.

Further, when, as a result of movement by a terminal receiving a supply of services, the terminal exists in a region that also allows services to be received from a base station of another zone and when the terminal requests a wireless channel for the supply of services of the base station, a network device determines a wireless channel on the basis of this request and the data is transmitted on the wireless channel. Alternatively, the network device detects the fact that a terminal receiving the supply of services exists in a region that allows services to be received from another zone and, determines a wireless channel when the existence of terminals is detected, and transmits the data by means of the wireless channel. Thus, a zone transfer in a system that uses wireless resources efficiently can be implemented without problems.

BRIEF DESCRIPTION OF THE DRAWINGS

Fig. 1 shows the constitution of broadcast and multicast of a conventional mobile communication network;
Fig. 2 is a constitutional view of a mobile communication system that implements the broadcast and multicast of the present invention;
Fig. 3 is a block constitutional view of a wireless network control device;
Fig. 4 is a block constitutional view of a base station;
Fig. 5 is a block constitutional view of a terminal;
Fig. 6 shows the process flow of the wireless network control device or base station of a first embodiment;
Fig. 7 shows a process flow that illustrates the operation of a terminal of the first embodiment;
Fig. 8 shows the process flow of a modified example of the first embodiment;
Fig. 9 shows the process flow for confirming the existence of terminals;
Fig. 10 shows the process flow for confirming the number of terminals;
Fig. 11 shows the process flow of the wireless network control device of a second embodiment;
Fig. 12 shows the process flow of the base station of the second embodiment;
Fig. 13 shows the process flow of the terminal of the second embodiment;
Fig. 14 shows the process flow of the wireless network control device of a first modified example;
Fig. 15 shows the process flow of the wireless network control device of a second modified example;
Fig. 16 shows the process flow of a transmission power calculation;
Fig. 17 shows the process flow of another transmission power calculation;
Fig. 18 shows the process flow of yet another transmission power calculation;
Fig. 19 shows the process flow of the terminal of a third modified example;
Fig. 20 shows the process flow of the wireless network control device of a fourth modified example;
Fig. 21 shows the process flow of an interference amount calculation of a base station;
Fig. 22 is an explanatory view of an interference power calculation when an dedicated physical channel is used;
Fig. 23 shows the process flow of the wireless network control device of a fifth modified example;
Fig. 24 is an explanatory view of a zone-switching procedure of a third embodiment;
Fig. 25 is an explanatory view of another zone-switching procedure of the third embodiment;
Fig. 26 shows the process flowof the wireless network control device of the third embodiment;
Fig. 27 shows the process flow of the movement-destination base station of the third embodiment;
Fig. 28 shows the process flow of the terminal of the third embodiment;
Fig. 29 is an explanatory view of a sequence of a modified example;
Fig. 30 is an explanatory view of another sequence of a modified example;
Fig. 31 shows the process flow of a wireless network control device of a modified example;
Fig. 32 is a modified example of Figs. 25 and 30 of the third embodiment;
Fig. 33 shows the process flow of the wireless network control device in the sequence of Fig. 32;
Fig. 34 shows the process flow of a movement-source base station;
Fig. 35 shows the process flow of a terminal;
Fig. 36 is a sequence in a case where a plurality of wireless network control devices is mounted in the embodiment of Fig. 32;
Fig. 37 shows the process flow of a movement-source wireless network control device of the sequence of Fig. 36;
Fig. 38 shows the process flow of a movement-destination wireless network control device;
Fig. 39 is an example of a sequence in a case where a plurality of wireless network control devices is mounted in the embodiment of Fig. 32;
Fig. 40 shows the process flow of the movement-source wireless network control device of Fig. 39;
Fig. 41 shows the process flow of the movement-destination wireless network control device;
Fig. 42 is an explanatory view of a zone-switching sequence of a fourth embodiment;
Fig. 43 is an explanatory view of another zone-switching sequence of the fourth embodiment;
Fig. 44 shows the process flow of the wireless network control device of the fourth embodiment;
Fig. 45 shows the process flow of a terminal;
Fig. 46 is an explanatory view of a measurement value report condition;
Fig. 47 is an explanatory view of a sequence of a modified example;
Fig. 48 is an explanatory view of another sequence of a modified example;
Fig. 49 shows the process flow of the wireless network control device of a modified example;

Fig. 50 is an explanatory view of a zone-switching procedure of a fifth embodiment;
Fig. 51 is an explanatory view of another zone-switching procedure of the fifth embodiment;
Fig. 52 shows the process flowof the wireless network control device of the fifth embodiment;
Fig. 53 shows the process flow of a movement-destination base station;
Fig. 54 shows the process flow of a terminal;
Fig. 55 shows an embodiment in which a physical channel receiving a supply of multicast (broadcast) services is switched between physical channels of a plurality of types in the sequence of Fig. 50;
Fig. 56 shows an embodiment in which a physical channel receiving a supply of multicast (broadcast) services is switched between physical channels of a plurality of types in the sequence of Fig. 51;
Fig. 57 is an explanatory view of the zone-switching procedure of a modified example;
Fig. 58 is an explanatory view of another zone-switching procedure of a modified example;
Fig. 59 shows the process flow of a wireless network control device of a modified example;
Fig. 60 shows a modified example of Fig. 51 and 58 of the fifth embodiment;
Fig. 61 shows the process flow of a wireless network control device in the sequence of Fig. 60;
Fig. 62 shows the process flow of the terminal in the sequence of Fig. 60;
Fig. 63 is an explanatory view of a zone-switching procedure of a sixth embodiment;
Fig. 64 is an explanatory view of another zone-switching procedure of the sixth embodiment;
Fig. 65 shows the process flow of a wireless network control device of the sixth embodiment;
Fig. 66 shows an embodiment in which a physical channel receiving a supply of multicast (broadcast) services is switched between physical channels of a plurality of types in the sequence of Fig. 63;
Fig. 67 shows an embodiment in which a physical channel receiving a supply of multicast (broadcast) services is switched between physical channels of a plurality of types in the sequence of Fig. 64;
Fig. 68 is an explanatory view of the zone-switching procedure of a modified example;
Fig. 69 shows the process flow of the wireless network control device of a modified example;
Fig. 70 is a modified example of Figs. 64 and 68 of the sixth embodiment;
Fig. 71 shows the process flow of a wireless network control device in the sequence of Fig. 70;
Fig. 72 shows a process flow of the terminal in the sequence of Fig. 70;
Fig. 73 is an example of a sequence in a case where a plurality of wireless network control devices is mounted in the embodiment in Fig. 70;
Fig. 74 shows the process flow of the movement-source wireless network control device in the sequence of Fig. 73;
Fig. 75 shows the process flow of the movement-destination wireless network control device in the sequence of Fig. 73;
Fig. 76 is an example of a sequence in a case where a plurality of wireless network control devices b is mounted in the embodiment of Fig. 70;
Fig. 77 shows the process flow of the movement-source wireless network control device in the sequence of Fig. 76;
Fig. 78 shows the process flow of the movement-destination wireless network control device in the sequence of Fig. 76;
Fig. 79 is an explanatory view of a zone-switching procedure of a seventh embodiment;
Fig. 80 is an explanatory view of another zone-switching procedure of the seventh embodiment;
Fig. 81 shows the process flow of the terminal of the seventh embodiment;
Fig. 82 is a table illustrating specification at the time of the zone switching that is determined in the system according to an eighth embodiment;
Fig. 83 is a table illustrating channel switching specification after the zone switching according to an eighth embodiment;
Fig. 84 is an explanatory view of a zone-switching procedure of an eighth embodiment;
Fig. 85 is another explanatory view of the zone-switching procedure of the eighth embodiment;
Fig. 86 is a table illustrating specification at the time of zone switching of the first modified example;
Fig. 87 is a table illustrating channel switching specification after the zone switching according to the first embodiment;
Fig. 88 is a table illustrating specification at the time of zone switching of a second modified example and channel switching specification after the zone switching;
Fig. 89 is a table illustrating specification at the time of zone switching of a third modified example and channel switching specification after the zone switching;
Fig. 90 is a table illustrating specification at the time of zone switching of a fourth modified example and channel switching specification after the zone switching;
Fig. 91 is a table illustrating specification at the time of zone switching of a fifth modified example and channel switching specification after the zone switching;
Fig. 92 is a sixth modified example of the eighth embodiment;

Fig. 93 is another example of the sixth embodiment;
Fig. 94 is a seventh modified example of the eighth embodiment;
Fig. 95 is another example of the seventh modified example;
Fig. 96 is another example of the seventh modified example;
Fig. 97 is another example of the seventh modified example;
Fig. 98 is a table illustrating correspondence between combinations of mobile-source and mobile-destination channel types, the channels communicated to the terminals and the method of implementation;
Fig. 99 is a conceptual view of a tenth embodiment;
Fig. 100 is a constitutional example of report information;
Fig. 101 is a conceptual view of an eleventh embodiment; and
Fig. 102 is a constitutional example of report information.

## BEST MODE FOR CARRYING OUT THE INVENTION

### (A) Overview of Inventions

#### (1) Overview of the First Invention

When one zone is established by combining one or more service areas or when the service areas are divided into a plurality of zones, a judgment standard (whether a terminal receiving a supply of services exists or not, for example) is established for each zone and, when the standard is not fulfilled (a terminal does not exist), broadcast data and multicast data, and so forth, are not transmitted from the base station to the zone. Accordingly, in one zone, when the standard is not fulfilled, the transmission of broadcast data and multicast data is not performed. Therefore, the wireless resources in the zone can be used efficiently. For example, (1) a case where the judgment standard is the existence of terminals receiving a supply of services and (2) a case where the judgment standard is the service quality, number of services and number of terminals using the services will be described.

Supposing that the (i) judgment standard is 'the existence of terminals receiving a supply of services', the condition according to which the judgment standard is not satisfied is 'a terminal receiving a supply of services does not exist'. Therefore, the base station or wireless network control device does not transmit broadcast data or multicast data unless a terminal receiving a supply of services exists in the zone.
(ii) Further, if the judgment standard is 'service quality, number of services, and number of terminals using services', the condition according to which the judgment standard is not fulfilled is 'that the lowest service quality required for each of these services is calculated and the transmission amount required in order to satisfy the overall service quality exceeds the transmission amount that has been allocated to multicast (broadcast)'. In this case, the base station or wireless network control device stops services with the smallest number of service usage terminals and satisfies the judgment standard.

#### (2) Overview of the Second Invention

When one zone is established by combining one or more base station service areas or the service areas are divided into a plurality of zones, a judgment standard is set for each zone and a wireless channel type (dedicated physical channel, common physical channel, for example) is selected in accordance with the content of the judgment. Thus, in one zone, it is possible to select the optimal wireless channel for transmitting broadcast data and multicast data in accordance with the judgment standard. Therefore, the wireless resources in the zone can be used efficiently. Judgment standards include (1) the number of terminals receiving a supply of services, (2) the transmission power required to provide services, (3) the amount of interference produced when services are supplied, and (4) the combination of services.

(i) Supposing that the judgment standard is 'number of terminals receiving a supply of services', a and b below may be considered as the conditions for selecting a wireless channel.

a. It can be assumed that terminals are uniformly present within a zone when there are a large number of terminals. Accordingly, if there are a large number of terminals, a common physical channel that allows the zone to be serviced by means of one channel is used. In a case where there are a small number of terminals, it can be assumed that terminals only exist in partial regions of the zone. Therefore, dedicated physical channels for which a technology such as beam forming, which enables an increase in the communication capacity within the zone, is employed, are used.

b. When there are a small number of terminals, dedicated logical channels that enable retransmission control are used and settings are made for efficient reception quality. When there are a large number of terminals, a common logical channel to which increase of the retransmission traffic is neglected is employed and settings are made to provide adequate reception quality.

A logical channel is a channel in an upper layer that is used to send and receive data between a terminal and a wireless network and a physical channel is a channel in a lower layer that is used to send and receive data between a base station and a terminal.
(ii) If a judgment standard is the 'required transmission power in order to supply services' , the condition for selecting a wireless channel is to 'compare the transmission power when data is transmitted by means of a common physical channel and the transmission power when data is sent on an dedicated physical channel and then select the physical channel with the smaller transmission power'.
(iii) If the judgment standard is 'amount of interference that is produced when services are supplied' , the condition for selecting a wireless channel is to 'compare the amount of interference when data is transmitted on a common physical channel and the amount of interference when data is sent on an dedicated physical channel and then select the physical channel with the smaller amount of interference'.
(iv) If the judgment standard is 'combination of services', the condition for selecting a wireless channel is 'in a case where a combination of services enabling wireless resources to be used efficiently is possible, supply services supplied on an dedicated physical channel by means of the common physical channel'.

(3) Overview of the Third Invention

The third invention is related to intermittent reception of services in a zone transfer and appears in the forms (1) to (7) below.

(1) In the case of the system of the first invention, when a terminal receiving a supply of services moves to another zone, transmission from the other zone is requested. Thus, because the transmission of services is executed from the other zone in response to a request from the terminal even when the other zone is in a transmission stoppage state, zone switching can be performed by continuing services.
(2) In the case of the system of the first invention, the network device detects the fact that a terminal receiving a supply of services has moved to the another zone and starts transmission from the other zone even when the other zone is in the transmission stoppage state. Thus, because movement of the terminal is detected by the network device and the transmission of services from the other zone is performed even when the other zone is in the transmission stoppage state, zone switching can be performed by continuing services.
(3) In the case of the system of the second invention, when a terminal receiving a supply of services moves to another zone, the type of wireless channel whereby the terminal receives services in the other zone is requested and the network device communicates the wireless channel type of the zone to the terminal. The terminal is thus able to perform zone switching by continuing services.
(4) In the case of the system of the second invention, the network device detects the fact that a terminal receiving a supply of services has moved to another zone and communicates the wireless channel type for supplying services in the other zone to the terminal. The terminal is thus able to perform zone switching by continuing services.
(5) In the case of the system of the second invention, when a terminal receiving a supply of services moves to another zone, the terminal changes a current wireless channel type to a wireless channel type of the other zone in accordance with report information from the network device. Thus, because the terminal changes the wireless channel type of services in said another zone, zone switching can be performed by continuing services.
(6) In the case of the systems of the first and second inventions, when a terminal receiving a supply of services moves to another zone, the terminal performs the zone transfer by switching a current wireless channel to a channel type determined by the system. That is, the terminal requests either one or both of the channel type receiving a supply of services in said another zone or the start request of transmission, the network device communicates the wireless channel type for supplying services to the terminal in the zone after the terminal has moved and, the terminal, after the terminal has moved to the other zone, changes the current wireless channel type to the channel type for supplying services in the other zone. The terminal is thus able to perform zone switching by continuing services.
(7) In the case of the systems of the first and second inventions, when a terminal receiving a supply of services moves to another zone, the terminal performs the zone transfer by switching a wireless channel to a channel type determined by the system, That is, the network device detects the fact that that the terminal has moved to another zone and notifies the terminal of a wireless channel type for supplying services in the zone following the move, and, after moving to the other zone, the terminal changes the current wireless type to the channel type for supplying services in the other zone. The terminal is thus able to perform zone switching by continuing services.

(B) System constitution

Fig. 2 is a constitutional view of a mobile communication system that implements the broadcast and multicast of the present invention and is constituted by an information distribution device 10 that distributes broadcast data or multicast data, a wireless network control device 13 that receives the broadcast data or multicast data distributed by the information distribution device via a fixed communication network 11 and a core network 12 and transmits the data to the base station on a logical channel, base stations $14_1$ and $14_2$ that receive broadcast data or multicast data from the wireless network control device and transmit data to the terminal on a physical channel, and a terminal 15 that receives the broadcast data or multicast data. Although not illustrated, the wireless network control device 13 sometimes also receives broadcast data or multicast data distributed by the information distribution device 10 from the core network 12 without the involvement of the fixed communication network 11.

The base stations also appear with the number '14' hereinafter.

Fig. 3 is a block constitutional view of the wireless network control device 13.

A core network interface portion 13a receives broadcast data and multicast data from the information distribution device 11 via the core network 12 and sends the data to a data processing portion 13b.

The data processing portion 13b maps broadcast data and multicast data that is inputted from the core network interface portion 13a and data (a terminal control signal) that is inputted from a wireless resource control portion 13c with a logical channel. Further, the data processing portion 13b fetches a data part of an interterminal control signal (control signal between terminals) that is inputted by a base station interface portion 13d and then sends the data part to the wireless resource control portion 13c. In addition, the data processing portion 13b transmits/stops transmission on the logical channel in accordance with an instruction from the wireless resource control portion 13c.

The base station interface portion 13d transmits broadcast data and multicast data that has been sent by the data processing portion 13b, an interterminal control signal and an inter-base station control signal (control signal between base stations) that has been sent by the wireless resource control portion 13c to the base stations $14_1$ and $14_2$, sends an interterminal control signal that has been sent by a base station to the data processing portion 13b and sends the inter-base-station control signal to the wireless resource control portion 13c.

The wireless resource control portion 13c performs allocation and management, and so forth of wireless resources (the channel type, wireless channel (code in CDMA)) for communication between base stations and terminals. Further, the wireless resource control portion 13c judges the zone shift from peripheral-cell quality measurement information from the terminal and judges the transmission/stoppage of transmission of multicast (broadcast) data. In addition, the wireless resource control portion 13c performs processing to confirm the existence of terminals, processing to confirm the number of terminals, processing to calculate transmission power and processing to calculate the amount of interference.

Fig. 4 is a block constitutional view of the base station 14.

A wired transmission channel interface portion 14-1 sends broadcast data, multicast data and the interterminal control signal, which have been sent on a logical channel from the wireless network control device 13, to a modem portion 14-2 and sends the inter-base station control signal to a control portion 14-3. Further, the interterminal control signal inputted by the modem portion 14-2 and the inter-base station control signal inputted by the control portion 14-3 are sent to the wireless network control device 13.

The modem portion 14-2 subjects broadcast data, multicast data and the interterminal control signal that have been sent by the wired transmission channel interface portion 14-1 to error-correction encoding processing in accordance with instructions from the control portion 14-3 and performs mapping to physical channels and modulation processing. In addition, the modem portion 14-2 subjects the interterminal control signal that has been sent by the terminal to demodulation and error correction in accordance with instructions from the control portion 14-3, and then inputs the processed interterminal control signal to the wired transmission channel interface portion 14-1 and inputs the control signal from the terminal to the base station to the control portion 14-3. In addition, the modem portion 14-2 performs transmission/transmission stoppage processing in accordance with instructions from the control portion 14-3.

A transceiver portion and amplifier portion 14-4 receives the signal from the terminal, amplifies the signal by means of a low noise amplifier, and performs QPSK detection. Further, the modulated signal inputted from the modem portion 14-2 is rendered an RF signal and then transmitted to the terminal by means of an antenna following amplification by means of a transmission power amplifier.

The control portion 14-3 receives the inter-base station control signal from the wired transmission channel interface portion 14-1 and then instructs the modem portion 14-2 to set the wireless resources (example: the channel type, the wireless channel (code in CDMA)). Further, the control portion 14-3 receives the inter-base station control signal from the wired transmission channel interface portion 14-1 and instructs the modem portion 14-2 to set the transmission/transmission stoppage of the physical channel. In addition, the control portion 14-3 sends and receives control signals to and from a terminal existence confirmation processing portion or terminal number confirmation processing portion 14-5, a transmission power calculation processing portion or interference amount calculation processing portion 14-6 and a data transmission/transmission stoppage judgment portion 14-7, and instructs the modem portion 14-2 to set the channel type and to set data transmission/transmission stoppage.

The terminal existence confirmation processing portion or terminal number confirmation processing portion 14-5 performs terminal existence confirmation processing or terminal number confirmation processing in accordance with a control signal from the terminal that has been sent by the control portion 14-3 and with the wireless-resources usage status and sends the results to the control portion.

The transmission power calculation processing portion or interference amount calculation processing portion 14-6 performs transmission power calculation processing or interference amount calculation processing in accordance with a control signal from a terminal that has been sent by the control portion 14-3 and with the wireless resources usage status and sends the results to the control portion.

The data transmission/transmission stoppage judgment portion 14-7 performs data transmission/transmission stoppage judgment processing in accordance with the control signal from the terminal that has been sent by the control portion 14-3 and with the wireless resources usage status and sends the judgment result to the control portion.

Fig. 5 is a block constitutional view of the terminal 15.

A receiver portion 15a receives a signal from a base station, performs frequency conversion to render a high frequency signal a baseband signal and performs a QPSK detection. A demodulation portion 15b subjects the received signal to demodulation and error correction in accordance with settings from a control portion 15c, acquires broadcast data and multicast data and sends the data to a data processing portion 15d. Further, the demodulation portion 15b similarly acquires an inter-wireless network control signal (a control signal between wireless networks) and an inter-base station control signal (a control signal between base stations) that have been sent by the receiver portion and sends these signals to the control portion 15c.

A reception field strength detection portion 15e detects the received signal strength (reception field strength), measures the reception power, interference power, and so forth of a reference signal (pilot signal) in the resident zone and peripheral zones, as well as the reception power, interference power, and so forth of the communication channel and sends the measurement results to the control portion 15c.

A modulation portion 15f subjects the data sent by the data-processing portion 15d to encoding for error correction in accordance with settings from the control portion 15c and performs mapping to physical channels and modulation processing before sending the processing results to a transmission portion 15g. Further, the modulation portion 15f similarly subjects the inter-wireless network control signal and inter-base station control signal that have been inputted by the control portion 15c to encoding for error correction in accordance with settings from the control portion and performs mapping to physical channels and modulation processing before sending the processing results to the transmission portion. Further, the inter-wireless network control signal and inter-base station control signal contain the measurement results of the reception field strength detection portion 15e.

The transmission portion 15g renders the modulated signal inputted by the modulation portion an RF signal and transmits the signal to the base station by means of an antenna after amplifying the signal by means of a transmission power amplifier.

The data-processing portion 15d processes the broadcast data and multicast data that have been sent by the demodulation portion 15b in accordance with the data type, sends the processed data to a display portion 15h and a speaker portion 15i to produce a rendering output and speech output respectively. Further, the data processing portion 15d sends the transmission data to the modulation portion 15f.

An operation portion 15j performs operations to request the provision of broadcast services and multicast services and to request an end to this provision before transmitting the request data to the control portion 15c.

The control portion 15c performs the following processing:

- Receives control signals from a wireless network control device and base station from the demodulation portion 15a.
- Transmits a control signal for the wireless network control device and base station to the modulation portion 15f.
- Instructs the modulation portion 15f and demodulation portion 15b to set the wireless resources (for example, the channel type, wireless channel (code in CDMA)) by means of a control procedure that is determined by the specifications beforehand on the basis of the control signal from the wireless network control device.
- Receives a call control signal from the wireless network control device or base station and sends a response control signal to the modulation portion 15f.
- Sends a control signal indicating a service provision request for broadcast services and multicast services and a request to stop this provision to the modulation portion 15f in accordance with a request from the operation portion 15j.
- Sends, when a condition designated by a control signal from the wireless network control device or base station is fulfilled on the basis of a measured value from the reception field strength detection portion 15e, the measured value to the modulation portion 15f in order to inform the wireless network control device or base station.

- Sends, when a condition that is designated by a control signal from the wireless network control device is fulfilled on the basis of a measured value from the reception field strength detection portion 15e, a control signal to request a zone update communication or channel setting for the movement-destination zone to the modulation portion 15f.
- Instructs, when a condition that is designated by a control signal from the wireless network control device is fulfilled on the basis of a measured value from the reception field strength detection portion 15e, the demodulation portion 15b and the modulation portion 15f to set wireless resources communicated by the wireless network control device beforehand.

(C) First Embodiment

The first embodiment is an embodiment in which the transmission of broadcast data and multicast data is not performed when a judgment standard is not fulfilled.

Fig. 6 shows the process flow of the first embodiment, wherein the judgment standard is the judgment standard (i) in the earlier overview of the first invention. The processing may be performed by the base station 14 or may be performed by the wireless network control device 13.

When multicast (broadcast) services have begun and the service area of the base station is divided into one or more sectors (zones), processing to confirm the existence of terminals receiving services is performed in each of these zones (step 1). Details on the terminal existence confirmation processing will be provided subsequently with reference to Fig. 9.

It is then judged from the results of step 1 whether the number of terminals in each zone is "0" (step 2). If the number of terminals is "0", transmission stoppage processing for the wireless channel in the relevant zone is performed (step 3). Further, when the base station 14 performs transmission stoppage processing, transmission on a physical channel is stopped. Further, in cases where the wireless network control device 13 performs the transmission stoppage processing, transmission on a logical channel is stopped.

On the other hand, if the number of terminals is not "0", processing to start (continue) transmission of broadcast data and multicast data on a wireless channel is performed. Further, the transmission of broadcast data and multicast data is started on a physical channel when the base station performs processing to start transmission and on a logical channel when the wireless network control device performs processing to start (continue) transmission.

Following the processing of steps 3 and 4, it is judged whether multicast (broadcast) services have ended (step 5). When services have ended, the operation is terminated (step 6).

The case above was a case where all the processing is performed by the base station 14 or the wireless network control device 13. However, steps 1, 2, 5, and 6 may be performed by the wireless network control device 13, while steps 3 and 4 may be executed by the base station 14. In this case, the wireless network control device 13 performs the judgment of step 2 and then communicates the judgment results to the base station 14, whereupon the base station 14 terminates the physical channel.

Fig. 7 shows a process flow that illustrates the operation of the terminal.

The terminal 15 performs the following operation each time there is a call request from the base station 14 (or the wireless network control device 13). That is, terminal 15 performs reception processing in response to a call request from the base station 14 (or the wireless network control device 13) (step 1), and transmits a call response to the base station (wireless network control device) in response to a call request (step 2).

(c-1) First Modified Example

Although the judgment standard is "the existence of terminals receiving a supply of services " in the first embodiment, the judgment standard may be the judgment standard (ii) in the earlier overview of the first invention. The judgment standard (ii) is "service quality, number of services, and number of terminals using the services (or the estimated number of terminals using services)". The lowest service quality required by each of the services is calculated and the transmission amount required to supply all the services is determined and, in cases where the transmission amount exceeds the transmission amount allocated to the multicast (broadcast), services with a small number of terminals using the services are terminated to establish a transmission amount that is equal to or below the allocated transmission amount.

Fig. 8 shows the process flow of the first modified example and is an example of a case where processing to confirm the number of terminals and the transmission amount required to transmit all the services is performed by the base station 14 or the wireless network control device 13.

When multicast (broadcast) services have begun, processing to confirm the number of terminals receiving services is performed in the zone of each sector of the base station 14 (step 1). Processing to confirm the number of terminals will be described below with reference to Fig. 10.

It is judged whether the total transmission amount of services exceeds the total transmission amount allocated to multicast (broadcast) in a zone (step 2).

In cases where the total transmission amount of services exceeds the transmission amount allocated within the zone, the number of terminals for which services can be continued is judged (step 3).

In cases where the number of terminals is not the number of terminals for which services can be continued, wireless-channel transmission stoppage processing is performed (step 4). Further, in cases where the base station 14 performs the transmission stoppage processing, transmission on a physical channel is terminated. Further, when the wireless network control device 13 performs the transmission stoppage processing, transmission on a logical channel is terminated.

On the other hand, when the total transmission amount of services does not exceed the transmission amount allocated within the zone in step 2 and the number of terminals is the number of terminals for which services can be continued in step 3, processing to start (continue) transmission on a wireless channel is performed (step 5). The transmission of broadcast data and multicast data is started on a physical channel when the base station performs processing to start transmission and on a logical channel when the wireless network control device performs processing to start (continue) transmission.

Following the processing of step 4 or step 5, it is judged whether multicast (broadcast) services have ended (step 6) and, when services have ended, the operation is terminated.

Although a case where all the processing is performed by the base station 14 or the wireless network control device 13 was described above, steps 1, 2, 3 and 6 may be performed by the wireless network control device 13, while steps 4 and 5 may be executed by the base station 14. In this case, the wireless network control device 13 performs the judgment of step 2 or three and then communicates the judgment result to the base station 14, whereupon the base station 14 terminates the physical channel.

(c-2) Terminal existence confirmation processing

Fig. 9 shows the process flow of terminal existence confirmation.

The base station 14 or wireless network control device 13 sets a variable x, which indicates the reference number of the terminal in a zone existence list at 1 (step 1). Thereafter, it is judged whether there is a request to stop the supply of services from the terminal (reduction request) with respect to the zone supplying services (step 2).

It is judged that there has been a service supply stoppage request in the following two cases, when

(1) when the terminal ends the call;
(2) when the terminal moves to another zone. When the terminal has moved, there are the following methods (1) and (2) for issuing a service supply stoppage request.

(1) A method that performs terminal existence confirmation processing by means of a base station. This method involves cases where:

- a communication is sent from a terminal to a movement-source base station; and
- a communication is sent from the wireless network control device 13 to the movement-source base station.

(2) A method that performs terminal existence confirmation processing by means of a wireless network control device. This method involves cases where:

- a communication is sent from terminal 15 to a wireless network control device; and
- the wireless network control device detects a terminal zone shift.

When there is a reduction request in step 2, a terminal with a reduction request is erased from the list (step 3) and the processing moves on to the processing of step 4. Thereafter, it is judged whether there has been a service supply request (registration request) from a terminal with respect to a zone supplying services (step 4). In the following three cases, it is judged that there has been a service supply request:

- when a terminal starts a call;
- when a terminal has moved from another zone;
- when the base station or wireless network control device seeks a response from a terminal as to whether services are required and there is a response regarding such a requirement.

The following methods exist for issuing a service supply request when a terminal has moved. That is,

(1) A method that performs terminal existence confirmation processing by means of a base station. This method involves cases where:

- a communication is made from a terminal to the base station;
- a communication is made from the wireless network control device to the base station.

(2) A method that performs terminal existence confirmation processing by means of a wireless network control device. This method involves cases where:

- a communication is made from a terminal to the wireless network control device;
- a zone shift is detected by the wireless network control device.

When there is a registration request in step 4, a terminal for which there is a request is registered in the list and the processing moves to step 6.

Thereafter, variable y, which indicates the number of call repetitions in the existence processing, is set at 1 (step 6), a call from a user whose terminal reference number is x is made (step 7), response reception processing for the user with the reference number x in response to this call is performed (step 8), and it is judged whether there has been a response from the user with the reference number x (step 9).

When there is a response, the user for which there is a response is registered in the list or updated (step 10) and the terminal existence confirmation processing is stopped when a terminal exists.

On the other hand, if there is no response in step 9, it is judged whether the call repetition number y has reached the repetition termination number (step 11). As long as the repetition termination number has not been reached, the call repetition variable y is incremented (step 12) and the processing of step 7 and subsequent steps is repeated.

If the repetition termination number is reached in step 11, non-respondent users are erased from the list (step 13). Subsequently, the terminal reference number is incremented (step 14) and it is judged whether confirmation of the existence of all terminals has been performed (step 15). If confirmation of the existence of all terminals is not complete, the processing of step 2 and subsequent steps is repeated and, when no terminals exist when confirmation of the existence of all terminals is complete, the terminal existence confirmation processing is terminated.

(c-3) Processing to confirm number of terminals

Fig. 10 shows the process flow for confirming the number of terminals. The processing of steps 1 to 8 is the same as the processing of steps 1 to 8 in Fig. 9.

The base station 14 or wireless network control device 13 performs processing to receive responses from a user terminal with the reference number x (step 8) and, shortly afterwards, judges whether there has been a response from the user with the reference number x (step 9). If there has been a response, the user of the response is registered in the list or updated (step 10) and the number of terminal n is incremented (n=n+1, step 11).

On the other hand, if there is no response in step 9, it is judged whether the call repetition number y has reached the repetition termination number (step 12). As long as the call termination number has not been reached, the call repetition variable y is incremented (step 13) and the processing of step 7 and subsequent steps is repeated. If the call repetition number y has reached the repetition termination number in step 12, users from which there has been no response are erased from the list (step 14).

Thereafter, the terminal reference number is incremented (x=x+1, step 15) and it is judged whether confirmation of the existence of all the terminals has been performed (step 16). If there are terminals for which existence confirmation has not been performed, the processing of step 2 and subsequent steps is repeated and, when confirmation of the existence of all the terminals is complete, processing to confirm the number of terminals n is terminated.

(D) Second embodiment

The second embodiment is an example in which the optimum wireless channel for transmitting broadcast data and multicast data is selected in accordance with a judgment standard.

Fig. 11 shows the process flow of the wireless network control device 13 and represents a case where the judgment standard is the judgment standard (i) of the earlier overview of the second invention (the number of terminals receiving a supply of services) and where the wireless channel selection condition is a.

When multicast (broadcast) services have begun, the wireless network control device 13 judges whether services are supplied on a common physical channel in the zone of each sector of the base station 14 supplying the services (step 1). If the physical channel supplying the services is a common physical channel, processing to confirm the number of terminals receiving services is performed (step 2). Subsequently, it is judged whether the number of terminals in the zone of each sector is "0" (step 3) and, if the number of terminals is not zero, it is judged whether the number of terminals in the zone is equal to or less than x1 (step 4). If the number of terminals is not equal to or less than x1, because there is an adequate number of terminals for supplying services on a common physical channel, the transmission on the common physical channel is continued (step 5). However, if the number of terminals is equal to or less than x1, there are an insufficient number of terminals for supplying services on a common physical channel and, therefore, a change is made to dedicated physical channels (step 6).

On the other hand, when the number of terminals is "0" in step 3, transmission stoppage processing is performed (step 7). Further, when the physical channel for supplying the services is not a common physical channel in step 1, it is judged whether the physical channel for supplying the services is-an dedicated physical channel (step 8). If the physical channel for supplying the services is in dedicated physical channel, it is judged whether the number of terminals in the zone is equal to or more than x2 (step 9). In this case, the physical channel for supplying the services is an dedicated physical channel and the number of dedicated physical channels corresponds to the number of terminals, and, therefore, the number of terminals is found from the number of dedicated physical channels.

If the number of terminals is equal to or more than x2, there is sufficient number of terminals for supplying services on a common physical channel and, therefore, a change is made to a common physical channel (step 10). However, if the number of terminals is not equal to or more than x2, there is inadequate number of terminals for supplying services on a common physical channel and, therefore, the supply of services on dedicated physical channels is continued (step 11).

On the other hand, if the physical channel for supplying the services is not an dedicated physical channel in step 8, because all the terminals in the cell terminate services during the supply of services on dedicated physical channels, that is, because transmission stoppage is in progress, transmission stoppage is continued (step 12). Following the processing of steps 5 to 7 and 10 to 12, it is judged whether multicast (broadcast) services have ended (step 13) and, if services have not ended, the processing returns to step 1 and the processing of step 1 and subsequent steps is repeated. If services have ended, processing is terminated.

Fig. 12 shows the process flow of a base station.

When multicast (broadcast) services have begun, it is judged whether a change from a common physical channel to an dedicated physical channel has been instructed by the wireless network control device 13 (step 1).

If an instruction for a change to an dedicated physical channel has been issued, processing for the change to an dedicated physical channel is performed (step 2). On the other hand, if an instruction for a change to an dedicated physical channel has not been made, it is judged whether a change from an dedicated physical channel to a common physical channel has been issued by the wireless network control device 13 (step 3).

In the event of an instruction for a change to a common physical channel, processing for the change to a common physical channel is performed (step 4). However, if a change to a common physical channel has not been instructed, it is considered that no instruction for a physical-channel change has been made by the wireless network control device 13. Following processing to change the one or more physical channels, it is judged whether multicast (broadcast) services have ended (step 5). If services have not ended, processing returns to step 1, whereupon subsequent steps is repeated and, if services have ended, processing is terminated (step 6).

Fig. 13 shows the process flow of the terminal.

When multicast (broadcast) services have begun, it is judged whether a call request from the base station 14 (or the wireless network control device 13) has been made (step 1). If a call request has been made, processing to receive the call from the base station (wireless network control device) is performed (step 2) and, following reception processing, a response is transmitted to the base station (wireless network control device) (step 3).

On the other hand, if there is no call request in step 1, it is judged whether there is a physical-channel change request (step 4). If there is a physical-channel change request, processing to change the physical channel is performed (step 5).

After the processing above has ended, it is judged whether multicast (broadcast) services have ended (step 6) and, if these services have not ended, the processing returns to step 1, whereupon the processing of step 1 and subsequently steps is repeated and, if services have ended, the processing is terminated (step 7).

(d-1) First Modified Example

The first modified example is a method for determining the wireless channel in a case of adopting the wireless channel selection condition b of the judgment standard (i) described in the overview of the second invention and Fig. 14 shows the process flow of the wireless network control device 13 of the first modified example.

When multicast (broadcast) services have begun, processing to confirm the number of terminals receiving services is performed (step 1). After the processing to confirm the number of terminals receiving services has ended, it is judged whether the number of terminals in the zone of each sector is "0" (step 2). If the number of terminals is not "0", it is judged whether the logical channel for supplying the services is a common logical channel (step 3). If the logical channel for supplying the services is a common logical channel, it is judged whether the number of terminals in the zone is equal to or less than x1.

If the number of terminals is not equal to or less than x1, the wireless resources can be efficiently used by supplying services on a common logical channel and, therefore, the transmission on the common logical channel is continued (step 5). However, if the number of terminals is equal to or less than x1, the wireless resources can be efficiently used by supplying services on an dedicated logical channel and, therefore, a change is made to dedicated logical channels (step 6).

If the number of terminals in step 2 is "0", processing to stop transmission (continue stoppage) is performed (step 7). Further, if the logical channel for supplying the services is not a common logical channel in step 3, an dedicated logical channel is being used and, therefore, a judgment standard for an dedicated logical channel is used and it is judged whether the number of terminals in the zone is equal to or more than x2 (step 8).

If the number of terminals is equal to or more than x2, wireless resources can be used efficiently by supplying services on a common logical channel and, therefore, a change is made to a common logical channel (step 9). However, if the number of terminals is not equal to or more than x2, wireless resources can be efficiently used by supplying services on dedicated logical channels and, therefore, the supply of services on dedicated logical channels is continued (step 10).

After the processing of steps 5 to 7 and 9 to 10, it is judged whether the multicast (broadcast) services have ended (step 11). If services have not ended, processing returns to step 1 and the processing of step 1 and subsequent steps is repeated. If services have ended, the processing is terminated.

(d-2) Second Modified Example

The second modified example is a method of determining the wireless channel in a case of adopting the judgment standard (ii) described in the overview of the second invention (the transmission power required to supply services) and Fig. 15 shows the process flow of the wireless network control device.

When multicast (broadcast) services have begun, processing to calculate the transmission power of all the terminals receiving services is performed (step 1). The processing to calculate transmission power will be described subsequently with reference to the process flow of Figs. 16 to 18.

After the processing to calculate the transmission power has ended, it is judged whether the transmission power within the zone of each sector is 0 (step 2). If the transmission power is not 0, it is judged whether the physical channel supplying the services is a common physical channel (step 3).

When the physical channel for supplying the services is a common physical channel, when it is assumed that the transmission power difference within the zone, that is, the common physical channel transmission power is Pc, and the dedicated physical channel transmission power is Pd, it is judged whether (Pc-Pd) is equal to or more than x1 (step 4).

If the transmission power difference (Pc-Pd) is not equal to or more than x1, that is, if $Pc<Pd+x1$, the transmission on the common physical channel is continued (step 5). However, if the transmission power difference (Pc-Pd) is equal to or more than x1, that is, if $Pc=Pd+x1$, a change is made to the dedicated physical channel (step 6).

Further, if the transmission power is 0 in step 2, processing to stop transmission (continue stoppage) is performed (step 7).

On the other hand, if the physical channel for supplying the services is not a common physical channel in step 3, an dedicated physical channel is being used, and, therefore, a judgment standard for an dedicated physical channel is employed and it is judged whether the transmission power difference (Pc-Pd) within the zone is equal to or less than -x2 (step 8). In cases where the transmission power difference (Pc-Pd) is equal to or less than -x2, that is, if $Pc+x2=Pd$, a change is made to a common physical channel (step 9). On the other hand, if the transmission power difference (Pc-Pd) is equal to or less than -x2, that is, if $Pc>Pd-x2$, the supply of services on an dedicated physical channel is continued (step 10).

After the processing of steps 5 to 7 and 9 to 10, it is judged whether the multicast (broadcast) services have ended (step 11). In cases where services have not ended, the processing returns to step 1 and the processing of step 1 and subsequent steps is continued. If services have ended, the processing is terminated (step 12).

Fig. 16 shows the process flow for calculating transmission power and steps 1 to 8 are the same as those in Fig. 9.

Following the processing of step 8, it is judged whether there has been a response from the terminal with the reference number x (step 9). If there has been a response from the terminal, the terminal is registered in the list and updated together with the reception power value of the reference signal of the terminal (pilot signal) (step 10). Further, the call response from the terminal includes the reported value for the reception power of the reference signal of the terminal.

On the other hand, if there has been no response from the terminal, it is judged whether the call repetition number y has reached the repetition termination number (step 11). If the repetition termination number has not been reached, the call repetition variable y is incremented (step 12), and the processing returns to step 7, whereupon the processing of step 7 and subsequent steps is repeated. If the repetition termination number has been reached, users from which there has been no response are erased from the list (step 13).

Subsequently, the reference number of the terminal is incremented (step 14) and it is judged whether confirmation of the existence of all terminals has been performed (step 15). If there are terminals for which the existence confirmation has not then performed, the processing returns to step 2, and the processing of step 2 and subsequent steps is repeated. If confirmation of the existence of all terminals has ended, the reception power values of the reference signals reported from the terminals are totaled to determine the transmission power when an dedicated physical channel is used (step 16). Further, the transmission power when a common physical channel is used is set beforehand.

(d-3) Third modified Example

The third modified example is an example in which the transmission power is calculated by performing the terminal call for each group and Fig. 17 shows the process flow for calculating transmission power of the third modified example.

The base station 14 or wireless network control device 13 sets the variables x1 and x2, which denote the reference numbers of the terminals within the zone, at 1, and a(=2) respectively (step 1). Subsequently, the base station 14 or wireless network control device 13 performs the same processing as the processing of steps 2 to 6 of Fig. 16. Following the execution of the process of step 6, the base station 14 or wireless network control device 13 multiplexes the call data of all the terminals with reference numbers x1 to x2 to send the data to the terminals before making a call (step 7). Subsequently, the base station 14 or wireless network control device 13 performs processing to receive responses from the terminals with reference numbers x1 to x2 (step 8) and it is judged whether there has been a response from the terminals with reference numbers x1 to x2 (step 9).

Is there has been a response from the terminal, the terminal number is registered or updated in the list together with the reception power value of the reference signal of this terminal (pilot signal) (step 10). Further, the call response from the terminal includes the reception power report value of the reference signal of the terminal.

Subsequently, it is judged whether there has been a response from all the terminals with reference numbers x1 to x2(step 11). If there has been a response from all the terminals x1 to x2, the processing of step 16 is performed and, if there has been no response, it is judged whether the call repetition number y has reached the repetition termination number (step 12). If the repetition termination number has not been reached, the call repetition variable y is incremented (step 13)and, among the terminals with reference numbers x1 to x2, the call data of terminals for which there has been no call response is multiplexed and transmitted to the terminals before a call is made (step 14), whereupon the processing of step 8 and subsequent steps is repeated.

If the repetition termination number has been reached in step 12, terminals from which there has been no response are erased from the list (step 15).

Following the above processing, the terminal reference number x1 is changed to x2+1 and x2 is changed to x2+a. That is, x1=x2+1 and x2=x2+a (step 16). Subsequently, it is judged whether confirmation of the existence of all terminals has been performed (step 17). If there are terminals for which existence confirmation has not then performed, the processing returns to step 2, whereupon the processing of step 2 and subsequent steps is repeated. If confirmation of the existence of all the terminals has ended, the reception power values of reported reference signals from the terminals are totaled to determine the transmission power when dedicated physical channels are used (step 18). Further, the transmission power when a common physical channel is used is set beforehand.

Although grouping under reference numbers in a list was implemented above, grouping may also be implemented by means of a lower digit n for the telephone number or a lower digit n for the device number. Further, the terminal processing operation is the same as that shown in Fig. 13.

Fig. 18 shows another process flow of the transmission power calculation processing of the third modified example. This process flow differs from the process flow in Fig. 17 in that, (1) step 14 in Fig. 17 has been removed; (2) step 21 is provided and the base station issues a reception response confirmation communication to the terminal making the call response; (3) the terminal receiving the reception response confirmation communication does not respond even when called.

Fig. 19 shows the process flow of the terminal of the third modified example in Fig. 18.

When multicast (broadcast) services have begun, it is judged whether there has been a call request from the base station (step 1). If there has been a call request, processing to receive a call from the base station is performed (step 2). Subsequently, it is judged whether the received data is a call regarding the non-communication of reception response confirmation (step 3). A call regarding the non-communication of reception response confirmation is a call to the effect that a reception response confirmation communication has not yet been received. In the event of a call regarding the non-communication of reception response confirmation, a call response is issued to the base station (step 4).

In step 1, if there is no call request from the base station, it is judged whether there has been a reception response communication from the base station (step 5). If there has been a reception response communication, processing to receive the reception response confirmation communication is performed (step 6). However, if there has been no reception response communication, it is judged whether there has been a physical-channel change request (step 7). If there has been a physical-channel change request, processing to change the physical channel is performed (step 8).

Thereafter, after the processing of step 4 or 6 and 8 has ended, when there has been no call regarding the non-communication of reception response confirmation in step 3, or there has been no physical-channel change request in step 7, it is judged whether multicast (broadcast) services have ended (step 9). If the services have not ended, the processing returns a step 1 and the processing of step 1 and subsequent steps is repeated. However, if the services have ended, the processing is terminated (step 10).

(d-4) Fourth Modified Example

The fourth modified example is a method of determining the wireless channel in a case of adopting the judgment standard (iii) described in the overview of the second invention (the interference amount generated when services are supplied) and Fig. 20 shows the process flow of the wireless network control device.

When multicast (broadcast) services have begun, the terminal receiving services calculates the interference amount with respect to other communications (step 1). The processing to calculate the interference amount is performed by the base station or the wireless network control device 13 as detailed subsequently and the calculation results are acquired.

After the processing to calculate the interference amount has ended, it is judged whether the number of terminals in the zone of each sector is 0 (step 2). Further, processing to confirm the number of terminals during the interference amount calculation processing is performed.

If the number of terminals is not 0, it is judged whether the physical channel providing the services is a common physical channel (step 3).

If the physical channel for supplying the services is a common physical channel, it is judged whether the interference power difference is equal to or more than x1. That is, when it is assumed that the interference power of the common physical channel is Ic and the interference power of the dedicated physical channel is Id, it is judged whether (Ic-Id) is equal to or more than x1 (step 4). If the interference power difference (Ic-Id) is not equal to or more than x1, in other words, if $Ic<Id+x1$, the transmission on the common physical channel is continued (step 5). However, if the interference power difference (Ic-Id) is equal to or more than x1, that is, if $Ic=Id+x1$, a change is made to an dedicated physical channel (step 6).

In step 2, if the number of terminals is 0, processing to stop transmission (continue stoppage) is performed (step 7). Further, in step 3, if the physical channel for supplying the services is not a common physical channel, an dedicated physical channel is employed and, therefore, a judgment standard for an dedicated physical channel is employed and it is judged whether the interference power difference (Ic-Id) is equal to or less than -x2 (step 8).

In cases where the interference power difference (Ic-Id) is equal to or less than -x2, that is, if $Ic+x2=Id$, a change is made to a common physical channel (step 9). However, if the interference power difference (Ic-Id) is equal to or less than -x2, in other words, if $Ic+x2>Id$, the supply of services on an dedicated physical channel is continued (step 10).

After the processing of steps 5 to 7 and 9 to 10, it is judged whether the multicast (broadcast) services have ended (step 11). In cases where services have not ended, the processing returns to step 1 and the processing of step 1 and subsequent steps is continued. If services have ended, the processing is terminated. The processing of the base station and terminal is the same as that shown in Figs. 12 and 13.

Fig. 21 shows the process flow of an interference amount calculation by the base station on the wireless network control device 13 and is substantially the same as the process flow for calculating the transmission power shown in Fig. 16. The difference lies in the fact that, in step 16, the interference power when an dedicated physical channel is employed is determined by using reception power values reported by the terminal. Further, the interference power when a common physical channel is employed is calculated by using a preset transmission power value.

Fig. 22 is an explanatory view of an interference power calculation.

The items of terminals $15_4$ to $15_6$, which are not channel switching targets, are referenced from the list of interference power measurement values reported when all the terminals $15_1$ to $15_6$ communicate with the base station 14 and the interference power from the terminals $15_1$ to $15_3$ constituting the channel-type switching targets is calculated.

The interference power recorded in the list is the total of (1) the interference from other cells, (2) interference from channels constituting channel-type switching targets, and (3) interference from the other channels within the cell in question. The interference power from other cells has a value that is dependent on the propagation loss and is determined beforehand (as the propagation loss increases, interference from the other cells increases). Further, the interference from channels constituting channel-type switching targets and the interference from the other channels within the cell in question are established by means of the ratio between the transmission powers P1 and P2 transmitted from the base station 14. Hereinabove, the interference power of channels constituting channel-type switching targets is calculated.

Suppose that the interference power recorded in the list =It, the interference power of the other cells=Io, the transmission power of channels constituting channel-type switching targets = P1, and the transmission power from the other channels within the cell in question=P2. The interference power I1 from channels constituting channel-type switching targets is then:

$$I1=(It\text{-}Io)\times P1/(P1+P2) \text{ based on the transmission power ratio.}$$

On the other hand, when the channel-type is switched, the interference power It' for terminals $15_4$ to $15_6$ that do not constitute channel switching targets is, supposing that the transmission power when the channel type is switched is P1':

$$It' =\{(P1'+P2)/(P1+P2)\}\times(It\text{-}Io)+Io.$$

Further, P1 and P1' are the total of the reception power report values from reporting terminals in step 10 in Fig. 20 when the physical channel is an dedicated physical channel and are transmission power values determined beforehand by the sys tem when the physical channel is a common physical channel.

(d-5) Fifth Modified Example

The fifth modified example is a method of determining the wireless channel in a case of adopting the judgment standard (iv) described in the overview of the second invention (combination of services) and Fig. 23 shows the process flow of a wireless network control device.

When new multicast (broadcast services have begun, a list of service combinations for the common physical channel is retrieved (step 1). Subsequently, it is judged whether there is a suitable combination (step 2). For example, N broadcasting data items can be transmitted on a common physical channel and, where not all N broadcasting data items are transmitted, broadcasting data for new services can be transmitted on the common physical channel. Therefore, if there is scope in the common physical channel, it is judged that a suitable combination exists and, when there is no scope, it is judged that the combination is not a suitable combination.

If there is a suitable combination, it is judged whether the physical channel supplying the services is a common physical channel (step 3). If the physical channel supplying the services is a common physical channel, the transmission on a common physical channel is continued (step 4). If the physical channel supplying the services is not a common physical channel, a change is made to a common physical channel (step 5).

On the other hand, if there is no suitable combination in step 2, it is judged whether the number of terminals receiving new services is large or small (step 6). If the number of terminals receiving new services is large, transmission is performed on a new common physical channel (step 7). However, if the number of terminals receiving new services is small, transmission is performed on dedicated physical channels (step 8).

Following the processing of steps 4, 5, 7, and 8, it is judged whether multicast (broadcast) services have ended (step 9). If the services have not ended, the processing returns to step 1 and the processing of step 1 and subsequent steps is repeated. If the services have ended, the processing is terminated. Further, the processing of the base station and terminal is the same as that in Figs. 12 and 13.

(E) Third Embodiment

The third embodiment is an embodiment of a communication method in which, when a terminal receiving a supply of services has moved to a region that can be presumed to allow the terminal to receive services from another zone, the terminal issues a request to a network device to transmit broadcasting data (broadcast data or multicast data) from the other zone and the network device commences transmission on the basis of the request.

Fig. 24 is an explanatory view of the zone-switching procedure of the third embodiment.

Terminal 15 issues a request to start transmission by means of a zone update communication to the wireless network control device 13 via base station $14_2$ of the movement-destination zone (1).

The wireless network control device 13 issues a transmission start communication to the base station $14_2$ in the movement-destination zone as shown in table 1 in accordance with the state of the movement-destination zone (only in a case where the transmission has stopped). The wireless network control device 13 also issues a response to a request for an update communication confirmation to terminal 15 via the movement-destination base station $14_2$ ... (2).

The base station $14_2$ of the movement-destination zone starts to transmit broadcast data or multicast data in accordance with the communication from the wireless network control device 13 ... (3).

Terminal 15 starts to receive the broadcast data or multicast data in the movement-destination zone at the time designated by the wireless network control device 13 ...(4).

Table 1

| State of movement destination | Response to terminal | Communication to movement-destination zone |
|---|---|---|
| Transmission stoppage | Update communication confirmation | Start of transmission |
| Common physical channel | Update communication confirmation | None |

Although, in Fig. 24, a request to start transmission by means of a zone update communication from terminal 15 is made to the wireless network control device 13 via the movement-destination base station $14_2$, a request to start transmission by means of a zone update communication can also be made to the wireless network control device 13 via the base station $14_1$ of the movement-source zone as shown in Fig 25.

Fig. 26 shows the process flow of the wireless network control device 13.

The wireless network control device 13 judges whether there is a request for a zone update communication from the terminal 15 when multicast (broadcast) services have begun (step 1). If there is a request for a zone update communication, it is judged whether the movement-destination base station $14_2$ has stopped transmission (step 2). If the movement-destination base station $14_2$ has stopped transmission, the transmission start communication is transmitted to the movement-destination base station (step 3).

Following the process of step 3 or if the movement-destination base station $14_2$ has not stopped transmission in step 2 (is communicating on a common physical channel), an update communication confirmation is transmitted to terminal 15 (step 4). A short while afterward or when there is no zone update communication in step 1, it is judged whether multicast (broadcast) services have ended (step 5). If services have not ended, the processing returns to step 1 and the processing of step 1 and subsequent steps is repeated. If services have ended, the processing is terminated.

Fig. 27 shows the process flow of the movement-destination base station.

When multicast (broadcast) services have begun; it is judged whether transmission has stopped (step 1). If transmission has stopped, it is judged whether there is a transmission start communication from the wireless network control device 13 (step 2). If there is a transmission start communication, transmission start processing is performed (step 3).

After the processing of step 3 has ended or in a case where transmission has not stopped in step 1 or there is no transmission start communication in step 2, it is judged whether multicast (broadcast) services have ended (step 4). If services have not ended, the processing returns to step 1 and the processing of step 1 and subsequent steps is repeated. If the services have ended, the processing is terminated.

Fig. 28 shows the process flow of the terminal.

When multicast (broadcast) services have begun, it is judged whether a zone update condition (described later) is fulfilled (step 1). If the zone update communication condition is fulfilled, processing to transmit a zone update communication is performed (step 2). A short while afterward, processing to receive the update communication confirmation is performed (step 3) and processing to receive multicast (broadcast) data is executed (step 4).

After the processing of step 4 is complete or if the zone update communication condition is not fulfilled in step 1, it is judged were the multicast (broadcast) services have ended (step 5). If the services have not ended, the processing returns to step 1 and the processing of step 1 and subsequent steps is repeated. If the services have ended, the processing is terminated.

Examples of zone update communication conditions

The zone update communication condition is that the following two first and second conditions be fulfilled.

Supposing that the quality measured by means of a reference signal (pilot) (measured quality) is Qmeas and the lowest required quality is Qqmin, the first condition fulfils the following equation:

Qmeas = Qqmin.

Supposing that the measured quality of the resident zone (measured by means of the reference signal) is Qs and the measured quality (measured by means of the reference signal) of a peripheral zone is Qn, 1, ..., Qn, n, the second condition is that at least one peripheral zone satisfying the following equation

Qs <Qn, x(where x is one value from 1 to n)

should exist continuously for a fixed time.
Further, as shown in Fig. 25, in cases where a request for the start of transmission is made to the wireless network control device 13 by means of a zone update communication via the base station $14_1$ of the movement-source zone, the first condition can be:

Qmeas = Qqmin - $\Delta$1 and the second condition can be Qs<Qn, x-$\Delta$2.

That is, the zone update communication condition can be a zone update communication condition for the periphery of a region that is actually able to receive multicast (broadcast) services.

As a result, the processing time required for zone switching can be extended, for example.

(e-1) Modified Example

The third embodiment represents a case where the wireless network control device 13 has already transmitted multicast (broadcast) data on a logical channel to each base station and the movement-destination base station $14_2$ transmits the above data to the terminal in accordance with an instruction from the wireless network control device 13. However, in the modified example, the wireless network control device 13 has not yet transmitted multicast (broadcast) data to the movement-destination base station $14_2$ and the data is transmitted to the movement-destination base station $14_2$ on a logical channel in accordance with a request from the terminal and is transmitted from the base station to the terminal.
Fig. 29 is an explanatory view of a sequence of a modified example.
Terminal 15 issues a request to the wireless network control device 13 to start transmission by means of a zone update communication via the movement-destination base station $14_2$.
If the wireless network control device 13 receives a zone update communication, same performs processing to start transmission as shown in table 2 in accordance with the state of the movement-destination base station $14_2$. That is, if the movement-destination base station $14_2$ has stopped transmission, the wireless network control device 13 issues an instruction to transmit multicast (broadcast) data to the movement-destination base station $14_2$ on a logical channel and to transmit the data to the terminal. Further, the wireless network control device 13 does nothing if the movement-destination base station $14_2$ is transmitting the data on a common physical channel.

Table 2

| State of movement destination | Response to terminal | Communication to movement-destination zone |
|---|---|---|
| Transmission stoppage | Update communication confirmation | Start of transmission |
| Common physical channel | Update communication confirmation | None |

Subsequently, the wireless network control device 13 issues a response to the request by sending an update communication confirmation to terminal 15 via the movement-destination base station $14_2$. Thereafter, terminal 15 starts receiving broadcast data or multicast data in the movement-destination zone at the time designated by the wireless network control device 13.

In Fig. 29, terminal 15 issues a transmission start request to the wireless network control device 13 by means of a zone update communication via the movement-destination base station $14_2$. However, as shown in Fig. 30, a request to start transmission can also be made to the wireless network control device 13 by means of the zone update communication via the base station $14_1$ of the movement-source zone.

Fig. 31 shows the process flow of the wireless network control device of a modified example. Further, the terminal processing is the same as that of the case of the third embodiment.

The wireless network control device 13 judges whether there is a request for a zone update communication from terminal 15 when multicast (broadcast) services have begun (step 1). If there is a request for a zone update communication, the wireless network control device 13 judges whether the movement-destination base station $14_2$ has stopped transmission (step 2). If the movement-destination base station $14_2$ has stopped transmission, the transmission of multicast (broadcast) data is started on the logical channel to the movement-destination base station (step 3). As a result, the movement-destination base station $14_2$ maps the common logical channel to the physical channel and transmits the data on the common physical channel.

Following the processing of step 3 or if the movement-destination base station $14_2$ has not stopped transmission in step 2, an update communication confirmation message is transmitted to terminal 15 (step 4). A short while afterward or when there is no zone update communication in step 1, it is judged whether multicast (broadcast) services have ended (step 5). If services have not ended, the processing returns to step 1 and the processing of step 1 and subsequent steps is repeated. If services have ended, the processing is terminated.

In the above embodiment, 'zone update communication' and 'update communication confirmation' were performed via the same base station that may also be performed via different base stations. In addition, in the above embodiment, a communication to the movement destination is not issued when the movement-destination base station communicates on a common wireless channel but a communication may be issued regardless of the state of the movement-destination base station. Further, a common physical channel and a common logical channel were used as the channel employed in the above embodiment. However, other channels, such as dedicated physical channels, dedicated logical channels, and a common physical channel could also be employed. These modified examples are also valid for the following embodiments.

(e-2) Modified Example of Figs. 25 and 30

(e-2-1) First Modified Example

Fig. 32 is a modified example of Figs. 25 and 30 of the third embodiment and is an embodiment in which (1) physical-channel transmission and logical-channeltransmission are both performed and in which (2) processing with respect to the movement-source zone and processing to set the user-data transmission channel are added. The sequence of Fig. 32 is implemented in cases where, for example, the movement-source zone $14_1$ communicates on a common physical channel and a common logical channel and the movement-destination zone $14_2$ does not supply services. Further, this sequence can also be applied to a case where the movement-source zone $14_1$ communicates on a common physical channel and a common logical channel and the movement-destination zone $14_2$ also communicates on a common physical channel and a common logical channel, and to a case where the movement-destination zone communicates on a common physical channel and a common logical channel, and so forth, for example.

Although the designations 'zone update communication' and 'update communication confirmation' in Figs. 25 and 30 have been expediently changed in Fig. 32 to 'zone update reservation' and 'zone update reservation completion' respectively, these terms have the same meaning. Further, the 'transmission start communication' and 'start of transmission' of Fig. 25 and 'start of transmission' in Fig. 30 have been combined in (2) of Fig. 32 as 'wireless channel setting, start of physical channel transmission, and start of logical channel transmission'. Further, 'start of reception' of (4) in Figs. 25 and 30 is the same as 'start of reception' of (7) in Fig. 32.

When the operation is described, when the processing of (1), (2) has ended, terminal 15 receives setting information on the wireless channel (physical channel, logical channel) following the zone shift from the wireless network control device 13 in the form of a communication regarding zone update reservation completion via the movement-source zone $14_1$. ...(3)

Subsequently, if a zone shift state exists, that is, in a state in which the data of the movement-destination zone can be received, the terminal 15 sets the wireless channel on the basis of the wireless channel information that is communicated by means of the zone update reservation completion communication. ... (4), (5).

The setting of the user-data transmission channel is completed as a result of terminal 15 setting the wireless channel, whereupon the terminal starts reception. ...(6), (7).

Thereafter, if data reception from the movement-source zone (movement-source zone base station) $14_1$ is impossible or unnecessary, terminal 15 communicates the fact that 'the logical-channel or physical-channel transmission by the v zone base station can be stopped' to the network control device 13 by means of a zone-update completion communication. ...(8), (9)

Further, there are also cases where the processing of (7) and (8) is executed at the same time.

The wireless network control device 13, which has received the communication regarding zone update completion, checks the states of the movement-source zone $14_1$ and, for example, checks whether another terminal that has set the same user transmission channel as the terminal 15 performing the zone shift exists in the movement-source zone. If such a terminal does not exist, the wireless network control device issues an instruction to the movement-source base station $14_1$ to stop logical-channel transmissions and physical-channel transmissions and to cancel the wireless channel....(10)

As a result, the movement-source base station $14_1$ cancels the user-data transmission channel used by the terminal 15. A short while afterward, the wireless network control device 13 transmits a zone-update-completion confirmation communication, which indicates that processing for a communication regarding zone update completion of (9) is finished, to terminal 15 and terminates the serial processing. ...(12)

Further, the terminal 15 transmits a zone update reservation and, following receipt of a zone update reservation completion, in cases where terminal 15 has not moved to the reserved zone, in the following cases (i) to (iv), for example, the wireless network control device 13 cancels the reservation of multicast (broadcast) services and stops the transmission of multicast (broadcast) services of the reserved zone.

(i) A case where the wireless network control device 13 activates a timer after receiving a zone update reservation and the timer ends without a zone-update completion communication being received.

(ii) A case where, when a zone update reservation communication is transmitted at regular intervals in a state where the terminal sends and receives multicast (broadcast) services, the wireless network control device 13 has not been able to receive the next zone update reservation communication and so forth even after a fixed time has elapsed after receiving a zone update reservation.

(iii) A case where a system that transmits a zone update reservation to only one zone or the transmission of a zone update reservation to only one zone is known, the wireless network control device newly detects the zone update reservation in another zone.

(iv) A case where a communication regarding the suspension of multicast (broadcast) service transmission from the terminal is performed. This case (iv) includes a case where that the communication is made directly to the zone transmitting the multicast (broadcast) services andacasewhere the communication is made via another zone.

Further, a zone update reservation communication can also be transmitted to a plurality of movement destinations. In this case, a plurality of movement-destination information items is included in one message or the zone update reservation notification is transmitted dedicatedly to each of the movement destinations. Further, although 'zone update reservation' of (1) in Fig. 32 is communicated in cases where a plurality of zone update communications is issued, when a shift has not been made to this zone, the transmission of data of the zone to which the terminal has not moved is suspended.

Further, in a cases where the terminal 15 has not been able to receive the zone update reservation completion of (3) even in the zone shift state of (4), a zone update reservation is transmitted once again via the movement-destination zone $14_2$. Further, the wireless network control device 13 is also able to send the zone update reservation completion of (3) to both the movement-source zone $14_1$ and also the movement-destination zone $14_2$. In this case, the terminal receives the zone update reservation completion in the movement-source zone $14_1$ prior to a zone update and in the movement-destination zone $14_2$ following a zone update.

Fig. 33 shows the process flowof the wireless network control device 13 in the sequence of Fig. 32. This process flow represents an embodiment in which, following the transmission of the 'zone update reservation completion', detection of the non-arrival of the terminal in the reserved zone is performed by means of a time base. When detection is unnecessary, steps 2, 6, 10, and 11 are not required and 'processing to receive a zone-update completion communication' is performed in place of step 6.

With the exception of the following operation, the process flow of the movement-destination base station $14_2$ is the same as the processing in Fig. 27.

- 'Zone-update completion communication' from terminal 15 is transmitted to the wireless network control device 13 in the procedure (9) in Fig. 32.
- 'Zone update completion confirmation' from the wireless network control device 13 is transmitted to terminal 15 in procedure (12) in Fig 32.
- 'Zone update communication' (the name has been changed to 'zone update reservation') from terminal 15 is not transmitted to the wireless network control device 13.

  (This is because, although terminal 15 makes a transmission to the wireless network control device 13 via the movement-destination zone $14_2$ in Fig. 24, in the sequence of Fig. 32, a transmission is made via the movement-

source zone $14_1$).

- 'Update communication confirmation' ('the name has been changed to 'zone update reservation completion') from the wireless network control device 13 is not transmitted to terminal 15.

  (This is because, although the wireless network control device 13 makes a transmission to terminal 15 via the movement-destination zone $14_2$ in Fig. 24, in the sequence of Fig. 32, a transmission is made via the movement-source zone $14_1$).
- A logical channel loaded with multicast (broadcast) data is mapped to a physical channel.

  Fig. 34 shows the process flow of the movement-source base station $14_1$. In addition to the illustrated operations, the following operations are performed:

- An operation that transmits a 'zone update reservation' from the terminal 15 to the wireless network control device 13.
- An operation that transmits a 'zone update reservation completion' from the wireless network control device 13 to the terminal 15.

Fig. 35 shows the process flow of terminal 15. Detection of the zone shift state can also be rendered unnecessary if the state has the same conditions as the zone update reservation conditions.

(e-2-2) Second Modified Example

Fig. 36 is a sequence for a case where a message is transmitted by extending a plurality of wireless network control devices 13a and 13b in the embodiment of Fig. 32.

(1) The terminal 15 transmits a zone update reservation to the movement-source wireless network control device 13a via the movement-source zone $14_1$.
(2) The movement-source wireless network control device 13a issues a request for multicast (broadcast) services to the core network 12 for the 'provision of multicast (broadcast) services from the movement-destination wireless network control device 13b to the terminal 15 that has changed zone'.
(3) The core network 12, which has received the multicast (broadcast) service request, then issues a multicast (broadcast) service transmission instruction to transmit multicast (broadcast) services to the movement-destination wireless network control device 13b.
(4) The core network 12, which has received the multicast (broadcast) service request, also makes settings for the user data channel with the movement-destination wireless network control device 13b. Further, in cases where multicast (broadcast) data that can be supplied to the terminal 15 is transmitted from the core network 12, it is not necessary to additionally set the user channel.
(5) The movement-destination wireless network control device 13b, which has received the multicast (broadcast) service transmission instruction, makes wireless channel settings for communications with terminal 15 to and from the movement-destination zone $14_2$ and starts physical-channel and logical-channel transmissions. Further, in a case where multicast (broadcast) data is transmitted from the movement-destination wireless network control device 13b and settings for the wireless channel set for the terminal 15 are the same, it is not necessary to also make wireless-channel settings and perform physical-channel and logical-channel transmission.
(6) The movement-destination wireless network control device 13b makes settings for a user channel with the core network 12 by means of the processing of (4) and (5) above and makes settings for a wireless channel with the movement-destination wireless zone $14_2$ and, once physical-channel and logical-channel transmission is started, transmits a response to a multicast (broadcast) service transmission instruction to the core network 12.
(7) The core network 12, which has received a response to the multicast (broadcast) transmission instruction, transmits a multicast (broadcast) service request confirmation to the movement-source wireless network control device 13a in order to communicate the fact that the supply of multicast (broadcast) services is being performed by means of the movement-destination wireless network control device 13b.
(8) The movement-source wireless network control device 13a, which has received the multicast (broadcast) servicerequest confirmation, transmits a zone update reservation completion to terminal 15.
(9) Terminal 15, which has received the zone update reservation completion, then executes the processing (7)' of procedures (4) to (8) in Fig. 32. A short while afterward, a zone-update completion communication is transmitted to the movement-destination wireless network control device 13b via the movement-destination zone $14_2$.
(10) The movement-destination wireless network control device 13b, which has received a zone-update completion communication, issues a multicast (broadcast) service cancellation request to the core network 12 in order to stop the supply of multicast (broadcast) services of the movement-source zone $14_1$.
(11) The core network 12, which has received the multicast (broadcast) service cancellation request, then transmits a multicast (broadcast) service transmission stoppage instruction to the movement-source wireless network control device 13a.

(12) The movement-source wireless network control device 13a, which has received the multicast (broadcast) service transmission stoppage instruction, then stops logical-channel and physical-channel transmission and cancels the wireless channel. In cases where a terminal serviced with multicast (broadcast) data that is the same as the settings for the wireless channel that has been set for terminal 15 remains in the movement-source zone $14_1$, the stoppage of physical-channel and logical-channel transmission and wireless-channel cancellation is unnecessary.

(13) In addition, the movement-source wireless network control device 13b performs user data channel cancellation. Further, in cases where a terminal that is serviced with multicast (broadcast) data that is the same as the settings of the wireless channel that is set for terminal 15 remains in the movement-source zone, user data channel cancellation is unnecessary.

(14) As described above, the movement-source wireless network control device 13a, which has performed logical-channel and physical-channel transmission stoppage, wireless-channel cancellation, and user data channel cancellation, then transmits a response to the multicast (broadcast) service transmission stoppage instruction to the core network 12.

(15) The core network 12, which has received the response to the multicast (broadcast) service transmission stoppage instruction, communicates the fact that 'the supply of multicast (broadcast) services in the movement-source zone $14_1$ has ended' to the movement-destination wireless network control device 13b by means of a multicast (broadcast) service cancellation request confirmation.

(16) The movement-destination wireless network control device 13b, which has received the multicast (broadcast) service cancellation request confirmation, communicates the fact that the processing with respect to the zone-update completion communication from terminal 15 is complete to terminal 15 by means of a zone update completion confirmation.

Fig. 37 shows the process flow for the movement-source wireless network control device 13a in the sequence of Fig. 36 and Fig. 38 shows the process flow of the movement-destination wireless network control device 13b.

(e-2-3) Third Modified Example

Fig. 39 is an example of a sequence in a case where a plurality of wireless network control devices 13a and 13b is mounted in the embodiment of Fig. 32.

(1) Terminal 15 transmits a zone update reservation to the movement-source wireless network control device 13a via the movement-source zone $14_1$.

(2) The movement-source wireless network control device 13a communicates the fact that 'terminal 15 has changed zone' to the movement-destination wireless network control device 13b by means of a zone transfer communication.

(3) The movement-destination network device 13b transmits a multicast (broadcast) service request to the core network 12 in order to request the transmission of multicast (broadcast) services from the core network 12. Further, in cases where multicast (broadcast) data that can be supplied to terminal 15 has already been transmitted by the core network 12, the transmission of a multicast (broadcast) service request is unnecessary.

(4) The core network 12, which has received the multicast (broadcast) service request, performs user data channel setting in conjunction with the movement-destination wireless network control device 13b. Further, in cases where multicast (broadcast) data that can be supplied to terminal 15 has already been transmitted by the core network 12, it is not necessary to newly set the user data channel.

(5) Upon completion of the user data channel setting, the core network 12 transmits a multicast (broadcast) service transmission instruction to the movement-destination wireless network control device 13b. Further, in cases where multicast (broadcast) data that can be supplied to terminal 15 has already been transmitted from the core network 12, a multicast (broadcast) service transmission instruction is not issued.

(6) The movement-destination wireless network control device 13b, which has received the multicast (broadcast) service transmission instruction, commences wireless channel setting and the physical-channel and logical-channel transmission. Further, in a case were the setting of the wireless channel for supplying multicast (broadcast) services and the physical-channel and logical-channel transmission have already begun, and where the wireless channel setting set for terminal 15 is the same, it is not necessary to newly perform wireless channel setting and physical-channel and logical-channel transmission.

(7) Upon completion of the processing to start the wireless channel setting and physical-channel and logical-channel transmission, the movement-destination wireless network control device 13b transmits a response to the multicast (broadcast) service transmission instruction to the core network 12. Further, in cases where multicast (broadcast) data that can be supplied to terminal 15 is transmitted from the core network, it is unnecessary to transmit a response to the multicast (broadcast) service transmission instruction.

(8) When the wireless channel setting and the physical-channel and logical-channel transmission are complete, the movement-destination wireless network control device 13b transmits a response to the multicast (broadcast) service zone transfer communication to the movement-source wireless network control device 13a.

(9) The movement-source wireless network control device 13a, which has received the response to the multicast (broadcast) service zone transfer communication, then transmits a zone update reservation completion to terminal 15.

(9)' Terminal 15, which has received the zone update reservation completion, executes the same operation as (4) to (8) in Fig. 32.

(10) A short while afterward, the zone-update completion communication is transmitted to the movement-destination wireless network control device 13b via the movement-destination zone.

(11) The movement-destination wireless network control device 13b transmits a multicast (broadcast) service zone transfer completion communication to the movement-source wireless network control device 13a. The multicast (broadcast) service zone transfer completion communication communicates the fact that 'terminal 15 has completed the zone shift and the supply of multicast (broadcast) services by the mobile source zone $14_1$, can be ended'.

(12) The movement-source wireless network control device 13a, which has received the multicast (broadcast) service zone transfer completion communication, issues a multicast (broadcast) service cancellation request to the core network 12 requesting the cancellation of the user data channel. Further, in cases where a terminal that is serviced with multicast (broadcast) data on the same user channel as the user data channel supplied to terminal 15 still remains in the movement-source zone $14_1$, it is unnecessary to issue the user data channel cancellation request.

(13) Subsequently, the movement-source wireless network control device 13a stops physical-channel and logical-channel transmission and cancels the wireless channel. Further, in cases where a terminal that is serviced with multicast (broadcast) data that is the same as the wireless channel settings set for terminal 15 remains in the movement-source zone, it is unnecessary to stop the physical-channel and logical-channel transmission and perform wireless-channel cancellation.

(14) Cancellation of the user data channel between the movement-source wireless network control device 13a and the core network 12 is performed. In cases where a terminal that is serviced with multicast (broadcast) data on the same user channel as the user data channel supplied to terminal 15 remains in the movement-source zone, it is unnecessary to cancel the user data channel.

(15) Following the user data channel cancellation, the core network 12 transmits confirmation of the multicast (broadcast) service cancellation request to the movement-source wireless network control device 13a. In cases where a terminal that is serviced with multicast (broadcast) data on the same user channel as the user data channel supplied to terminal 15 remains in the movement-source zone, it is unnecessary to confirm the multicast (broadcast) service cancellation request.

(16) When the processing with respect to the multicast (broadcast) service zone transfer completion communication is complete, the movement-source wireless network control device 13a transmits a response to the multicast (broadcast) service zone transfer completion communication to the movement-destination wireless network control device 13b.

(17) The movement-destination wireless network control device 13b, which has received the response to the multicast (broadcast) service zone transfer completion communication, then communicates the fact that the processing with respect to the zone-update completion communication from terminal 15 is complete to terminal 15 by means of a zone update completion confirmation.

Fig. 40 shows the process flow of the movement-source wireless network control device 13a of Fig. 39. Fig. 41 shows the process flow of the movement-destination wireless network control device 13b.

(F) The Fourth Embodiment

The fourth embodiment is an embodiment in which a network device detects the fact that a terminal exists in a region that can be presumed to allow the terminal to receive services from another zone and in which the transmission of broadcast data or multicast data on a wireless channel from the other zone is started.

Fig. 42 is an explanatory view of the zone-switching sequence of the fourth embodiment.

Terminal 15 communicates a measurement value report (reception field strength and so forth) to the wireless network control device 13 via the movement-destination base station $14_2$ ...(1).

Upon receiving the measurement value report, the wireless network control device 13 detects the fact that the terminal has moved to another zone or is moving to another zone on the basis of the measured value from the terminal and determines zone-shift implementation ... (2). Subsequently, the wireless network control device 13 issues a communication to commence transmission to the movement-destination base station as shown in table 3 in accordance with the state of the movement-destination base station $14_2$. That is, if the movement-destination base station $14_2$ has stopped transmission, the wireless network control device 13 issues an instruction to start transmission and does nothing if the movement-destination base station $14_2$ is transmitting the data on a common physical channel.... (3)

Table 3

| State of movement-destination base station | Response to terminal | Communication to movement-destination zone (movement-destination base station ) |
|---|---|---|
| Transmission stoppage | Channel setting communication | Start of transmission |
| Common physical channel | Channel setting communication | None |

Subsequently, the wireless network control device 13 issues a channel setting communication to terminal 15 via the movement-destination base station $14_2$...(4).

A short while afterward, the movement-destination base station $14_2$ commences transmission in accordance with the transmission start communication from the wireless network control device 13 ...(5).

As described above, terminal 15 starts to receive broadcast data or multicast data in the movement-destination zone at the time designated by the wireless network control device 13 ...(6).

Further, a transmission start completion and channel setting completion are sent back to the wireless network control device 13 in response to the transmission start communication and channel setting communication respectively....(3)',(4)'

Although a measurement value report is sent from terminal 15 to the wireless network control device 13 via the movement-destination base station $14_2$ in Fig. 42, the measurement value report can also be sent to the wireless network control device 13 via the base station $14_1$ of the movement-source zone as shown in Fig. 43.

Fig. 44 shows the process flow of the wireless network control device of the fourth embodiment.

The wireless network control device 13 judges whether there is a measurement value report from terminal 15 when multicast (broadcast) services have begun (step 1). If there is a measurement value report, the wireless network control device 13 decides, based on the report value, whether the terminal has shifted zone and judges how the zone shift is implemented on the basis of this decision (step 2).

When the zone shift implementation has been determined, it is judged whether the movement-destination base station $14_2$ has stopped transmission (step 3). If the movement-destination base station has stopped transmission, a transmission start communication is transmitted to the movement-destination base station (step 4).

Following the processing of step 4 or if the movement-destination base station has not stopped transmission in step 3 (transmission is taking place on a common physical channel), a channel setting communication is transmitted to terminal 15 (step 5).

Following the processing of step 5, or when there is no measurement value report in step 1 or the zone shift implementation is not determined in step 2, it is judged whether multicast (broadcast) services have ended (step 6). If services have not ended, the processing returns to step 1 and the processing of step 1 and subsequent steps is repeated. If services have ended, the processing is terminated. Further, the operation of the movement-destination base station is the same as that of the third embodiment.

Fig. 45 shows the process flow of the terminal.

When multicast (broadcast) services have begun, it is judged whether a measurement value report condition (described later) is fulfilled (step 1). If the measurement value report condition is fulfilled, processing to transmit a measurement value report is performed (step 2).

Following the processing of step 2, receipt of a channel setting communication is awaited for a fixed time and it is judged whether the channel setting communication has been received (step 3). If a channel setting communication has been received, channel setting communication processing is performed (step 4). Subsequently, processing to receive multicast (broadcast) data in the movement-destination zone is performed (step 5).

Following completion of the processing of step 5 or if the measurement value report condition is not fulfilled in step 1 or there is no channel setting report in step 3, it is judged whether the multicast (broadcast) services have ended (step 6). If the services have not ended, the processing returns to step 1 and the processing of step 1 is and subsequent steps is repeated. If the services have ended, the processing is terminated (step 7).

Further, the operation of the movement-destination base station is the same as that of the third embodiment.

Fig. 46 is an explanatory view of a measurement value report condition. The measurement report condition is fulfilled when the reception quality of a reference signal A in the movement-source zone deteriorates, the reception quality of a reference signal B in the movement-destination zone improves, and the reception quality in the movement-destination zone continues to be more favorable for a fixed time t or more than the reception quality in the movement-source zone.

Further, in cases where a measurement value report is issued to the wireless channel control device 13 via the base station $14_1$ of the movement-source zone as shown in Fig. 43, the reference-signal reception quality is raised by Δx and a measurement value report can also be issued from the periphery of the region that allows multicast (broadcast) services to actually be received. As a result, the time required for zone switching can be extended, for example.

(f-1) Modified Example

The fourth embodiment represents a case where multicast (broadcast) data has already been transmitted on a logical channel to each of the base stations by the wireless network control device 13 and the movement-destination base station $14_2$ transmits this data to a terminal in accordance with an instruction from the wireless network control device 13. The modified example represents a case where the multicast (broadcast) data has not been transmitted to the movement-destination base station $14_2$ by the wireless network control device 13 and in which the data is transmitted to the movement-destination base station $14_2$ on a logical channel on the basis of the measurement value report from the terminal and is then transmitted to the terminal from the base station.

Fig. 47 is an explanatory view of a sequence of a modified example.

Terminal 15 issues a measurement value report to the wireless network control device 13 via the movement-destination base station $14_2$...(1).

Upon receiving the measurement value report, the wireless network control device 13 detects the fact that the terminal has moved to another zone or is moving to another zone on the basis of the measurement value from terminal 15 and determines the zone shift implementation ...(2).

Subsequently, the wireless network control device 13 performs processing to commence transmission as shown in table 4 in accordance with the state of the movement destination...(3). That is, if the movement-destination base station $14_2$ has stopped transmission, the wireless network control device 13 issues an instruction to the base station to transmit multicast (broadcast) data to the movement-destination base station $14_2$ on a logical channel and to transmit the data to the terminal. Further, the wireless network control device 13 does nothing if the movement-destination base station $14_2$ is transmitting the data on the common physical channel.

Subsequently, the wireless network control device 13 issues a channel setting communication to terminal 15 via the movement-destination base station $14_2$...(4).

Table 4

| State of movement destination | Response to terminal | Settings for movement-destination zone (movement-destination base station) |
|---|---|---|
| Transmission stoppage | Channel setting communication | Start of transmission |
| Common logical channel | Channel setting communication | None |

Hereinabove, terminal 15 starts reception in the movement-destination zone at the time designated by the wireless network control device 13.

Although the measurement value report is transmitted from terminal 15 to the wireless network control device 13 via the movement-destination base station $14_2$ in Fig. 47, the measurement value report can also be issued to the wireless network control device 13 via the base station $14_1$ in the movement-source zone as shown in Fig. 48.

Fig. 49 shows the process flow of the wireless network control device of a modified example. This process flow is substantially the same as the process flow of the embodiment in Fig. 44 but the difference lies in the processing of step 4. In step 4 of the embodiment, if the movement-destination base station $14_2$ has stopped transmission, the wireless network control device transmits a transmission start communication to the movement-destination base station. However, in the case of the modified example, transmission to the movement-destination base station is started. That is, if the movement-destination base station $14_2$ has stopped transmission, the wireless network control device issues an instruction to the base station to transmit multicast (broadcast) data to the movement-destination base station $14_2$ on a logical channel and to transmit the data to the terminal.

Further, the operation of the terminal is the same as that of the fourth embodiment.

(G) Fifth Embodiment

The fifth embodiment is an embodiment in which, when a terminal receiving a supply of services is in a region that can be presumed to allow the terminal to receive services from another zone, the terminal issues a request to a network device for a wireless channel for supplying the services from the other zone and the network device communicates by allocating a wireless channel.

Fig. 50 is an explanatory view of the zone-switching procedure of the fifth embodiment.

Terminal 15 issues a request for wireless resources to the wireless network control device 13 by means of a channel setting request via the movement-destination base station $14_2$ ...(1).

Upon receiving the channel setting request, the wireless network control device 13 issues a channel setting communication to the movement-destination base station $14_2$ as shown in table 5 in accordance with the state of the movement-destination base station...(2). Further, a response is made to the request by transmitting a channel setting communication to the terminal via the movement-destination base station...(2).

The movement-destination base station $14_2$ starts to transmit to the terminal on the channel that corresponds with the communication from the wireless network control device 13 (an dedicated physical channel or common physical channel)...(3).

Terminal 15 starts to receive multicast data or broadcast data in the movement-destination zone at the time designated by the wireless network control device 13 ...(4).

Table 5

| State of terminal | State of movement destination | Terminal operation | Response to terminal | Communication to movement-destination zone |
|---|---|---|---|---|
| Dedicated physical channel | Stopped | Request to wireless network control device for wireless resources | Channel setting communication | Channel setting communication |
| Dedicated physical channel | Dedicated physical channel | Request to wireless network control device for wireless resources | Channel setting communication | Channel setting communication |
| Dedicated physical channel | Common physical channel | Request to wireless network control device for wireless resources | Channel setting communication | Channel setting communication |
| Common physical channel | Stopped | Request to wireless network control device for wireless resources | Channel setting communication | Channel setting communication |
| Common physical channel | Dedicated physical channel | Request to wireless network control device for wireless resources | Channel setting communication | Channel setting communication |
| Common physical channel | Common physical channel | Request to wireless network control device for wireless resources | Channel setting communication | Channel setting communication |

Although a channel setting request is sent from terminal 15 to the wireless network control device 13 via the movement-destination base station $14_2$ in Fig. 50, the channel setting request can also be sent to the wireless network control device 13 via the base station $14_1$ in the movement-source zone as shown in Fig. 51.

Fig. 52 shows the process flow of the wireless network control device of the fifth embodiment.

The wireless network control device 13 judges whether there is a channel setting request from terminal 15 when multicast (broadcast) services have begun (step 1). If there is a channel setting request, the wireless network control device 13 transmits a channel setting communication to the movement-destination base station $14_2$ (step 2). As a result, the movement-destination base station $14_2$ transmits multicast data or broadcast data to the terminal on the channel thus set (dedicated physical channel or common physical channel).

Subsequently, the wireless network control device 13 transmits a channel setting communication to the terminal 15 (step 3).

Following the processing of step 3 or when there is no channel setting request in step 1, it is judged whether the multicast (broadcast) services have ended (step 4). If services have not ended, the processing returns to step 1 and the processing of step 1 and subsequent steps is repeated. If services have ended, the processing is terminated (step 5).

Fig. 53 shows the process flow of the movement-destination base station.

The movement-destination base station $14_2$ judges whether there has been a channel setting communication from the wireless network control device 13 when multicast (broadcast) services have begun (step 1). If there is a channel setting communication, the movement-destination base station $14_2$ performs channel setting processing and commences transmission (step 2). That is, the movement-destination base station $14_2$ transmits multicast data or broadcast data to the terminal on the channel thus set (dedicated physical channel or common physical channel).

Following the end of the processing of step 2 or when there is no channel setting communication in step 1, it is judgedwhether multicast (broadcast) services have ended (step 3). If services have not ended, the processing returns to step 1 and the processing of step 1 and subsequent steps is repeated. If services have ended, the processing is terminated (step 4).

In addition to the above operation, the movement-destination base station $14_2$ relays a channel setting communication to the terminal together with the channel setting request from terminal 15.

Fig. 54 shows the process flow of the terminal.

Terminal 15 judges whether the channel setting request condition is fulfilled when multicast (broadcast) services have begun (step 1). If the channel setting request condition is fulfilled, terminal 15 performs processing to transmit a channel setting request (step 2). Subsequently, terminal 15 performs processing to receive a channel setting communication (step 3). After receiving the channel setting communication, terminal 15 performs processing to receive multicast (broadcast) data on the channel thus set (dedicated physical channel or common physical channel) (step 4).

Following the end of the processing of step 4 or if the channel setting request condition is not fulfilled in step 1, it is judged with the multicast (broadcast) services have ended (step 5). If services have not ended, the processing returns to step 1 and the processing of step 1 and subsequent steps is repeated. If services have ended, the process is terminated (step 6).

The channel setting request condition in step 1 is the same as the 'zone update communication condition' of the third embodiment.

Figs. 55 and 56 represent embodiments in which, in the sequences of Figs. 50 and 51 respectively, terminal 15 switches a physical channel receiving a supply of multicast (broadcast) services between physical channels of a plurality of types when a plurality of physical channels is set at the same time. The difference lies in the fact that, in Figs. 55 and 56, 'start of transmission' of procedure (3) in the sequences of Figs. 50 and 51 has been changed to 'change in mapping of data to physical channel'. That is, in Figs. 55 and 56, the movement-destination zone $14_2$ transmits multicast (broadcast) data to terminal 15 by mapping the data to different channel types in accordance with a channel setting communication.

(g-1) Modified Example

The fifth embodiment represents a case where multicast (broadcast) data has already been transmitted on a logical channel to each of the base stations by the wireless network control device 13 and in which the movement-destination base station $14_2$ transmits the data to the terminal in accordance with an instruction from a wireless network control device 13. In the case of the modified example, multicast (broadcast) data is not transmitted to the movement-destination base station $14_2$ by the wireless network control device 13 and the data is transmitted to the movement-destination base station $14_2$ on a logical channel on the basis of the channel setting request from the terminal before being transmitted from the base station to the terminal.

Fig. 57 is an explanatory view of the zone-switching procedure of a modified example.

Terminal 15 issues a request for wireless resources to the wireless network control device 13 by means of a channel setting request via the movement-destination base station $14_2$...(1).

Upon receiving the channel setting request, the wireless network control device 13 sets the channel of the movement-destination base station $14_2$ as shown in table 6 in accordance with the state of the movement-destination base station and performs transmission...(2). That is, if the movement-destination base station $14_2$ has stopped transmission, an instruction is sent to the base station to transmit multicast (broadcast) data to the movement-destination base station $14_2$ on a logical channel and to transmit the data to the terminal. The movement-destination base station

$14_2$ then starts to transmit to the terminal on the channel corresponding with the communication from the wireless network control device 13 (dedicated physical channel or common physical channel).

Further, the wireless network control device 13 sends the channel setting communication to terminal 15 as per table 6 in accordance with the state of the movement-destination base station...(3).

Terminal 15 starts to receive broadcast data or multicast data in the movement-destination zone at the time designated by the wireless network control device 13...(4).

Table 6

| State of terminal | State of movement destination | Terminal operation | Response to terminal | Settings for movement-destination zone |
|---|---|---|---|---|
| Dedicated logical channel | Stopped | Request to wireless network control device for wireless resources | Channel setting communication | Channel setting, transmission |
| Dedicated logical channel | Dedicated logical channel | Request to wireless network control device for wireless resources | Channel setting communication | Channel setting, transmission |
| Dedicated logical channel | Common logical channel | Request to wireless network control device for wireless resources | Channel setting communication | None |
| Common logical channel | Stopped | Request to wireless network control device for wireless resources | Channel setting communication | Channel setting, transmission |
| Common logical channel | Dedicated logical channel | Request to wireless network control device for wireless resources | Channel setting communication | Channel setting, transmission |
| Common physical channel | Common physical channel | Request to wireless network control device for wireless resources | Channel setting communication | None |

Although, in Fig. 57, a channel setting request is sent from terminal 15 to the wireless network control device 13 via the movement-destination base station $14_2$, the channel setting request can also be sent to the wireless network control device 13 via the base station $14_1$ of the movement-source zone as shown in Fig 58.

Fig. 59 shows the process flow of the wireless network control device of a modified example.

The wireless network control device 13 judges whether there is a channel setting request from the terminal when multicast (broadcast) services have begun (step 1). If there is a channel setting request, the wireless network control device 13 performs channel setting processing for the movement-destination base station $14_2$ and commences transmission. That is, if the movement-destination base station $14_2$ has stopped transmission, the wireless network control device 13 issues an instruction to the base station to transmit multicast (broadcast) data to the movement-destination base station $14_2$ on a logical channel and to transmit the data to the terminal. The movement-destination base station $14_2$ then starts to transmit to the terminal on the channel set by the wireless network control device 13 (dedicated logical channel or common logical channel).

Following the processing of step 2, the wireless network control device 13 also transmits a channel setting communication to terminal 15 (step 3).

Following the processing of step 3 or when there is no channel setting request in step 1, it is judged whether multicast (broadcast) services have ended (step 4). If services have not ended, the processing returns to step 1 and the processing of step 1 and subsequent steps is repeated. If services have ended, the processing is terminated (step 5).

(g-2) Modified Example of Figs. 51 and 58

(g-2-1) First Modified Example

Fig. 60 is a modified example of Figs. 51 and 58 of the fifth embodiment and represents an embodiment in which (1) physical-channel transmission and logical-channel transmission are both performed and in which (2) processing for the movement-source zone and processing to set the user-data transmission channel have been added. The sequence of Fig. 60 can also be applied to a case where, for example, the movement-source zone $14_1$ communicates on a common physical channel and a common logical channel and the movement-destination zone $14_2$ does not supply services or to a case where terminal 15 communicates on an dedicated physical channel and an dedicated logical channel at the movement destination when services are supplied on an dedicated physical channel.
In the sequence of Fig. 60, the designations 'channel setting request' and 'channel setting communication' in Figs. 51 and 58 have been expediently changed to 'zone update reservation' and 'zone update reservation completion' respectively. Further, the 'channel setting communication' and 'start of transmission' of Fig. 51 and 'start of transmission' of Fig. 58 have been combined as '(2) wireless channel setting, start of physical channel transmission, and start of logical channel transmission'. Further, 'start of reception' of (4) in Figs. 51 and 58 are the same as 'start of reception' of (7) in Fig. 60. The operation will be described below.

(3) Upon completion of the processing (1) and (2), terminal 15 receives information for setting the wireless channel (physical channel, logical channel) following a zone shift from the wireless network control device 13 by means of a zone update reservation completion communication.
(4) Terminal 15 detects the fact that a zone shift state has been assumed, i.e. a state where the data of the movement-destination zone $14_2$ can be received has been assumed, for example.
(5) Upon detecting a zone shift state, terminal 15 sets a wireless channel of a different type from the channel type of the movement source in accordance with wireless channel information that is communicated by means of the zone update reservation completion communication of (3).
(6) The setting of the user-data transmission channel is completed as a result of terminal 15 setting the wireless channel.
(7) Subsequently, terminal 15 starts to receive data.
(8) Thereafter, once reception from the movement-source zone $14_1$ has become impossible or reception is unnecessary, reception from the movement-source zone is stopped. (7) and (8) are sometimes performed at the same time.
(9) After reception has been stopped, terminal 15 issues a zone-update completion communication and communicates the fact that 'it is possible stop the logical-channel and physical-channel transmission by the movement-source base station' to the wireless network control device 13.
(10) The wireless network control device 13, which has received the zone-update completion communication, checks the state of the movement-source zone $14_1$, for example, whether another terminal making the same user-transmission-channel settings as the terminal 15 making the zone shift exists in the movement-source zone $14_1$. Further, if another terminal does not exist, logical-channel transmission and physical-channel transmission are stopped and the wireless channel is cancelled.
(11) As a result, the movement-source base station $14_1$ cancels the user-data transmission channel.
(12) Further, the wireless network control device 13 communicates 'zone update completion confirmation' to terminal 15 in order to indicate that the processing resulting from receipt of the zone-update completion communication is complete. Further, in cases where terminal 15 transmits a zone update reservation and receives a zone update reservation completion and then the terminal does not move to the reserved zone, the wireless network control device cancels the multicast (broadcast) service reservation and stops transmission of multicast (broadcast) services in the reserved zone. A case where a reservation is cancelled is the same as that of (i) to (iv) in the first modified example of (e-2-1) of the third embodiment.

Fig. 61 shows the process flowof the wireless network control device 13 in the sequence of Fig. 60, wherein the part of step 3 in Fig. 33 has become steps 3 and 3'. Fig. 33 shows the operation of the wireless network control device 13 in a case where two states in which the movement-destination base station $14_1$ is transmitting and not transmitting are captured. Hence, the judgment of the state of the movement-destination base station is 'whether transmission has stopped'. However, in Fig. 61, because there is a change in the type of the wireless channel, when the movement-destination base station is transmitting, processing to judge whether services are being supplied on a wireless channel that is different from the wireless channel being used for transmission by the movement-destination base station as shown in step 3' is required and added.
The operation of the movement-destination base station $14_2$ in the sequence of Fig. 60 is the same as that of Fig. 53 except that the following operations have been removed.

- In procedure (9), 'zone update completion communication' from terminal 15 is transmitted to the wireless network control device 13.
- In procedure (12), the 'zone update completion confirmation' from the wireless network control device 13 is transmitted to terminal 15.
- The 'channel setting request' (the name has been changed to 'zone update reservation') from terminal 15 is not transmitted to the wireless network control device 13. (This is because, although terminal 15 makes a transmission to the wireless network control device 13 via the movement-destination zone $14_2$ in Fig. 53, in the sequence of Fig. 60, a transmission is made via the movement-source zone $14_1$).
- 'Channel setting communication' ('the name has been changed to 'zone update reservation completion') from the wireless network control device 13 is not transmitted to terminal 15.
  (This is because, although the wireless network control device 13 makes a transmission to terminal 15 via the movement-destination zone $14_2$ in Fig. 53, in the sequence of Fig. 60, a transmission is made via the movement-source zone $14_1$).
- A logical channel loaded with multicast (broadcast) data is mapped to a physical channel.

The operation of the movement-source base station $14_1$ in the sequence of Fig. 60 performs the following operations in addition to the operation of the movement-source base station $14_1$ in Fig. 34:

- In procedure (1), a 'zone update reservation' (the name has been changed from 'channel setting request') from terminal 15 is transmitted to the wireless network control device 13.
- In procedure (3), a 'zone update reservation completion' (the name has been changed from 'channel setting communication') from the wireless network control device 13 is transmitted to terminal 15.

Fig. 62 shows the process flow of terminal 15 in the sequence of Fig. 60 and differs from the process flow of Fig. 35 as a result of the addition of processing to change the channel type in step 5.

(g-2-2) Second Modified Example

The sequence in a case where a plurality of wireless network channels 13a and 13b is mounted in the embodiment of Fig. 60 performs a sequence that is the same as that of the third embodiment and the second modified example of (e-2-2). However, procedure (2) of Fig. 60 is executed in procedure (5) in this sequence, procedures (4) to (8) of Fig. 60 are executed in procedure (9) in this sequence, and procedure (10) of Fig. 60 is performed in procedure (12) in this sequence.

(g-2-3) Third Modified Example

A sequence of a case where a plurality of wireless network channels 13a and 13b is mounted in the embodiment in Fig. 60 performs a sequence that is the same as that of the third embodiment and the third modified example of (e-2-3). However, procedure (2) of Fig. 60 is executed in procedure (4) in this sequence, procedures (4) to (8) of Fig. 60 are executed in procedure (9) in this sequence, and procedure (10) of Fig. 60 is performed in procedure (13) in this sequence.

(H) Sixth Embodiment

The sixth embodiment is an embodiment of a mobile communication system in which a network device detects measurement results from a terminal receiving a supply of services or detects, from a report value, that the terminal exists in a region that can be presumed to allow the terminal to receive services from another zone, and sets the wireless channel to communicate on the wireless channel.

Fig. 63 is an explanatory view of the zone-switching procedure of the sixth embodiment.

Terminal 15 sends a measurement value report to the wireless network control device 13 via the mobile destination base station $14_2$...(1).

The wireless network control device 13 detects the fact that the terminal has moved to another zone or is moving to another zone on the basis of the measurement value from the terminal and determines the implementation of zone shift control ...(2).

Subsequently, the wireless network control device 13 sends a channel setting communication to the movement-destination base station as shown in table 7 in accordance with the state of the movement-destination base

station $14_2$...(3).

Further, the wireless network control device 13 sends a channel setting communication to terminal 15 via the movement-destination base station...(4).

The movement-destination base station $14_2$ starts to transmit broadcast data or multicast data to the terminal in accordance with the channel communication from the wireless network control device 13...(5).

Terminal 15 starts to receive the data in the movement-destination zone at the time designated by the wireless network control device 13.

Table 7

| State of terminal | State of movement destination | Terminal operation | Response to terminal | Communication to movement-destination zone |
|---|---|---|---|---|
| Dedicated physical channel | Stopped | Measurement value report to wireless network control device | Channel setting communication | Channel setting communication |
| Dedicated physical channel | Dedicated physical channel | Measurement value report to wireless network control device | Channel setting communication | Channel setting communication |
| Dedicated physical channel | Common physical channel | Measurement value report to wireless network control device | Channel setting communication | Channel setting communication |
| Common physical channel | Stopped | Measurement value report to wireless network control device | Channel setting communication | Channel setting communication |
| Common physical channel | Dedicated physical channel | Measurement value report to wireless network control device | Channel setting communication | Channel setting communication |
| Common physical channel | Common physical channel | Measurement value report to wireless network control device | Channel setting communication | Channel setting communication |

Although a measurement value report is sent from terminal 15 to the wireless network control device 13 via the movement-destination base station $14_2$ in Fig. 63, a channel setting request can also be sent to the wireless network control device 13 via the base station $14_1$ of the movement-source zone as shown in Fig. 64.

Fig. 65 shows the process flow of the wireless network control device of the sixth embodiment. The process flow of the movement-destination base station is the same as the process flow of the fifth embodiment (Fig. 53) and the process flow of the terminal is the same as the process flow of the fourth embodiment (Fig. 45).

The wireless network control device 13 judges whether there is a measurement value report from terminal 15 when multicast (broadcast) services have begun (step 1). If there is a measurement value report, the wireless network control device 13 judges how to implement zone shift control on the basis of the reported value (step 2). The measurement value report condition is the same as the condition of the fourth embodiment.

In cases where implementation of zone shift control is determined in step 2, the wireless network control device transmits a channel setting communication to the movement-destination base station $14_2$ (step 3). As a result, the movement-destination base station $14_2$ starts to transmit broadcast data or multicast data to the terminal on the channel set by the wireless network control device 13 (dedicated physical channel or common physical channel).

A short while afterward, the wireless network control device 13 transmits a channel setting communication to the terminal (step 4). As a result, terminal 15 is able to receive broadcast data or multicast data on the channel thus set (dedicated physical channel or common physical channel).

After the processing of step 4, or if there is no measurement value report in step 1 or implementation of the zone shift is not determined in step 2, it is judged whether multicast (broadcast) services have ended (step 5). If the services have not ended, the processing returns to step 1 and the processing of step 1 and subsequent steps is repeated. If services have ended, the processing is terminated (step 6).

Figs. 66 and 67 are embodiments in which a physical channel receiving a supply of multicast (broadcast) services is switched between physical channels of a plurality of types in the sequence of Figs. 63 and 64. The difference lies in the fact that, in Figs. 66 and 67, 'start of transmission' in the procedure (5) of the sequence of Figs. 63 and 64 has been changed to 'change in mapping of data to physical channel'. That is, in Figs. 66 and 67, when terminal 15 simultaneously sets a plurality of physical channels, the movement-destination zone $14_2$ maps multicast (broadcast) data with different channel types in accordance with the channel setting communication before sending the data to terminal 15.

(h-1) Modified Example

The sixth embodiment represents a case where multicast (broadcast) data has already been transmitted on a logical channel to each of the base stations by the wireless network control device 13 and in which the movement-destination base station $14_2$ transmits the data to the terminal in accordance with a channel setting communication from the wireless network control device 13. In this modified example, the wireless network control device 13 has not yet transmitted multicast (broadcast) data to the movement-destination base station $14_2$ and the data is transmitted to the movement-destination base station base station $14_2$ on a logical channel on the basis of the measurement value report from the terminal before being transmitted from the base station to the terminal.

Fig. 68 is an explanatory view of the zone-switching procedure of a modified example.

Terminal 15 transmits a measurement value report to the wireless network control device 13 via the movement-destination base station $14_2$...(1).

Upon receiving the measurement value report, the wireless network control device 13 detects the fact that the terminal has moved to another zone or is moving to another zone on the basis of the measurement value from terminal 15 and determines the implementation of the zone shift...(2).

Subsequently, the wireless network control device 13 performs processing to start transmission as shown in table 8 in accordance with the state of the movement-destination base station...(3). That is, if the movement-destination base station $14_2$ has stopped transmission, the wireless network control device 13 instructs the base station to transmit multicast (broadcast) data to the movement-destination base station $14_2$ on a logical channel and to start transmitting the data to the terminal.

Subsequently, the wireless network control device 13 issues a channel setting communication to terminal 15 via the movement-destination base station $14_2$...(4).

Thereafter, terminal 15 starts to receive data in the movement-destination zone at the time designated by the wireless network control device 13...(5).

Table 8

| State of terminal | State of movement destination | Terminal operation | Response to terminal | Settings for movement-destination zone |
|---|---|---|---|---|
| Dedicated logical channel | Stopped | Measurement value report to wireless network control device | Channel setting communication | Channel setting, transmission |
| Dedicated logical channel | Dedicated logical channel | Measurement value report to wireless network control device | Channel setting communication | Channel setting, transmission |
| Dedicated logical channel | Common logical channel | Measurement value report to wireless network control device | Channel setting communication | None |

Table 8 (continued)

| State of terminal | State of movement destination | Terminal operation | Response to terminal | Settings for movement-destination zone |
|---|---|---|---|---|
| Common logical channel | Stopped | Measurement value report to wireless network control device | Channel setting communication | Start of transmission |
| Common logical channel | Dedicated logical channel | Measurement value report to wireless network control device | Channel setting communication | Channel setting, transmission |
| Common logical channel | Common logical channel | Measurement value report to wireless network control device | Channel setting communication | None |

Fig. 69 shows the process flow of the wireless network control device of a modified example.

The wireless network control device 13 judges whether there are measurement report values from terminal 15 when multicast (broadcast) services have begun (step 1). If there are measurement report values, the wireless network control device 13 judges how to implement zone shift control on the basis of the report values (step 2). When implementation of zone shift control has been determined, channel setting processing is performed and transmission is started (step 3). A short while afterward, a channel setting communication is transmitted to terminal 15 (step 4).

Following the processing of step 4, or when there are no measurement report values in step 1 or when zone shift implementation is not determined in step 2, it is judged whether multicast (broadcast) services have ended (step 5). If services have not ended, the processing returns to step 1 and the processing of step 1 and subsequent steps is repeated. If services have ended, the processing is terminated (step 6).

(h-2) Modified Example of Figs. 64 and 68

Fig. 70 is a modified example of Figs. 64 and 68 of the sixth embodiment and is an embodiment where (1) physical-channel transmission and logical-channel transmission are both performed and in which (2) processing for the movement-source zone and processing to set the user-data transmission channel are added. Further, where logical-channel transmission is concerned, although terminal 15 sends and receives messages to and from the wireless network control device 13 via the movement-destination zone $14_2$ in Fig. 68, messages are sent and received to and from the wireless network control device 13 via the movement-source zone $14_1$ in the modified example.

The sequence of Fig. 70 is implemented in a case where, for example, when the movement-source zone $14_1$ communicates on an dedicated physical channel and an dedicated logical channel and the movement-destination zone $14_2$ communicates on a common physical channel and a common logical channel, communication takes place on a common physical channel and a common logical channel at the movement destination. Further, this sequence can also be applied to a case where the movement-source zone $14_1$ communicates on an dedicated physical channel and an dedicated logical channel and communication takes place on a common physical channel and a common logical channel at the movement destination when the movement-destination zone $14_2$ does not supply services, for example.

In the sequence of Fig. 70, '(3) channel setting communication', '(3)' channel setting completion communication' and '(5) start of transmission' in Fig. 64 and the '(3) start of transmission' in Fig. 68 are combined as '(3) wireless-channel setting, start of physical-channel transmission and start of logical-channel transmission'. Further, (6) reception processing in Fig. 64 and (5) start of reception in Fig. 68 are the same as (8) start of reception in Fig. 70.

When the operation is described, following the end of the processing of (1) to (3), terminal 15 receives setting information on the wireless channel (physical channel, logical channel) following the zone shift by means of a channel setting communication from the wireless network control device 13...(4).

Terminal 15 checks the zone shift state and confirms the fact that the movement-destination zone $14_2$ has entered a state where data can be received. ...(5)

Subsequently, a wireless channel that is different from the channel type of the movement source is set in accordance with wireless channel information that is communicated by means of the channel setting communication. ...(6)

As a result of terminal 15 setting the wireless channel, the setting of the user-data transmission channel is completed and the terminal starts reception. ...(7), (8)

Thereafter, if data reception from the mobile source zone $14_1$ is impossible or unnecessary, terminal 15 communicates the fact that 'it is possible to stop the logical-channel and physical-channel transmission by the mobile source base station' to the network control device 13 by means of a channel setting completion communication. ...(9), (10)

The wireless network control device 13, which has received the channel setting completion communication, checks the state of the movement-source zone $14_1$, for example, checks for the existence in the movement-source zone $14_1$ of another terminal that is performing the same user transmission channel settings as the terminal 15 making the zone shift and, if no such terminal is present, stops logical-channel transmission and physical-channel transmission and cancels the wireless channel. ...(11)

As a result, the movement-source zone $14_1$ cancels the user-data transmission channel....(12)

Fig. 71 shows the process flow of the wireless network control device 13 in the sequence of Fig. 70.

The operation of the movement-destination base station $14_2$ in the sequence of Fig. 70 is the same as that of Fig. 53 except that the following operations have been removed:

- In procedure (10), 'channel setting completion' from terminal 15 is transmitted to the wireless network control device 13.
- 'Channel setting request' from terminal 15 is not transmitted to the wireless network control device 13. This is because, although terminal 15 in Fig. 50 has made a transmission to the wireless network control device 13 via the movement-destination zone $14_2$, in the sequence of Fig. 70, 'measurement value report' is transmitted via the movement-source zone $14_1$.
- 'Channel setting communication' from the wireless network control device 13 is not transmitted to terminal 15. This is because, in Fig. 50, the wireless network control device 13 made a transmission to terminal 15 via the wireless destination zone $14_2$, but, in the sequence of Fig. 70, a transmission is made via the movement-source zone $14_1$.
- A logical channel loaded with multicast (broadcast) data is mapped to a physical channel.

The operation of the movement-source base station $14_1$ in the sequence of Fig. 70 is the same as the processing of the movement-source base station in Fig. 34. However, this sequence further comprises a function to transmit the 'measurement value report' from terminal 15 to the wireless network control device 13 in procedure (1) and a function to transmit a 'channel setting communication' from the wireless network control device to terminal 15 in procedure (4).

The operation of terminal 15 in the sequence of Fig. 70 is as shown in Fig. 72. This operation differs from the processing in Fig. 62 as follows:

- Steps 1 and 2 of Fig. 62 are changed to steps 1, 2, 2' in Fig. 72. This is because, in Fig. 62, when 'zone update reservation' is transmitted, 'zone update reservation completion' is compulsorily transmitted, but, in Fig. 72, a channel setting communication is not transmitted in accordance with the judgment by the wireless network control device 13.
- Step 10 in Fig. 62 has been omitted. This is because, although 'zone update completion confirmation' is received after a 'zone update completion communication' has been transmitted in Fig. 62, 'channel setting completion' is sent by way of response to the 'channel setting communication' in Fig. 72.
- 'Zone update reservation completion reception processing' in step 3 of Fig. 62 has been changed to 'channel setting communication reception processing' in step 3 of Fig. 72.
- ' Zone update completion communication' in step 8 of Fig. 62 has been changed to channel setting completion communication in step 8 of Fig. 72.

Fig. 73 is an example of a sequence in a case where a message is transmitted by mounting a plurality of wireless network control devices 13a and 13b in the embodiment in Fig. 70. In the sequence of Fig. 73, an operation that is the same as the sequence of Fig. 36 is performed with the exception of the following points:

(1) The commitment for a zone shift to another zone is not the 'zone update reservation' from terminal 15 but is instead determined by the movement-source wireless network control device 13a on the basis of the measurement value reported by terminal 15.
(2) 'Zone update reservation completion' is 'channel setting communication'.
(3) 'Zone update completion communication' is 'channel setting completion'.
(4) A message corresponding with 'zone update completion confirmation' is not required.

Fig. 74 shows the process flow of the movement-source wireless network control device 13a in the sequence of Fig. 73 and Fig. 75 shows the process flow of the movement-destination wireless network control device 13b in the sequence of Fig. 73.

Fig. 76 is an example of a sequence in a case where a message is transmitted by extending a plurality of wireless network control devices 13a and 13b in the embodiment of Fig. 70. In the sequence of Fig. 76, an operation that is the same as the sequence of Fig. 42 with the exception of the following points is performed.

(1) The commitment for a zone shift to another zone is not the 'zone update reservation' from terminal 15 but is instead determined by the movement-source wireless network control device 13a on the basis of the measurement value reported by terminal 15.
(2) 'Zone update reservation completion' is 'channel setting communication'.
(3) 'Zone update completion communication' is 'channel setting completion'.
(4) A message corresponding with 'zone update completion confirmation' is not required.

Fig. 77 shows the process flow of the movement-source wireless network control device 13a in the sequence of Fig. 76 and Fig. 78 shows the process flow of the movement-destination wireless network control device 13b in the sequence of Fig. 76.

Further, the operation shown in Figs. 70 to 78 can also be applied by means of the same procedure to the fourth embodiment.

(I) Seventh Embodiment

The seventh embodiment is an embodiment of a mobile communication system in which, when a terminal receiving a supply of services exists in a region that can be presumed to allow the terminal to receive services from another zone, the wireless channel of the movement-destination base station captured beforehand is employed and a change is made to the wireless channel of the movement-destination base station to receive the supply of services.

Fig. 79 is an explanatory view of the zone-switching procedure of a seventh embodiment.

The wireless network control device 13 reports channel setting information from each zone to the terminal via each base station ...(1).

Terminal 15 determines zone shift implementation when the zone update condition is fulfilled... (2). Subsequently, terminal 15 receives channel setting information that has been reported by the wireless network control device 13 via the movement-destination base station $14_2$...(3). The channel setting information includes a predetermined common wireless channel that corresponds with table 9 from a combination of wireless channel types of the movement-source base stations $14_1$ and $14_2$.

A short while afterward, terminal 15 commences reception in the moving destination zone in accordance with the channel setting information designated by the wireless network control device 13.

Table 9

| State of terminal (movement source) | State of movement destination | Operation of terminal |
|---|---|---|
| Common wireless channel (common physical channel, common logical channel) | Common wireless channel (common physical channel, common logical channel) | Change to settings of common wireless channel recorded in channel setting information (common physical channel, common logical channel) |

Although channel setting information is reported to the terminal by the wireless network control device 13 via the movement-destination base station $14_2$ in Fig. 79, the channel setting information can also be reported via the base station $14_1$ of the movement-source zone as shown in Fig. 80.

Fig. 81 shows the process flow of the terminal of the seventh embodiment.

Terminal 15 performs the same judgment as 'zone update communication condition' of the third embodiment, for example, and judges how to implement zone shift control (step 1). When zone shift control is implemented, processing to receive the channel setting information is performed (step 2) and processing to receive multicast (broadcast) data is performed on the basis of the wireless channel that is set by means of channel setting information (step 3).

Following the end of the processing of step 3 or when the condition for zone shift implementation is not fulfilled in step 1, it is judged whether the multicast (broadcast) services have ended (step 4). If services have not ended, the processing returns to step 1 and the processing of step 1 and subsequent steps is repeated. If services have ended, the processing is terminated (step 5).

(J) Eighth Embodiment

The eighth embodiment is an embodiment of a mobile communication system in which, when a terminal receiving a supply of services move to another zone, the terminal performs the zone movement by switching the wireless channel to the channel type established by the system and, after the terminal has moved to the other zone, the terminal changes to the channel type for supplying services in the other zone.

The rules during the zone switching established by the system are shown in Fig. 82. This constitutes an example in which a terminal is always switched to an dedicated physical channel during zone switching.

Further, rules for channel switching following zone switching are shown in Fig. 83. If the movement-destination base station has stopped, after performing the zone movement, the terminal continues to communicate with the movement-destination base station on an dedicated physical channel. Further, if the movement-destination base station is communicating on an dedicated physical channel, the terminal continues to communicate with the movement-destination base station on an dedicated physical channel after performing the zone movement. Further, if the movement-destination base station is communicating on a common physical channel, the terminal continues to communicate with the movement-destination base station on the common physical channel by switching from an dedicated physical channel to the common physical channel.

(j-1) First zone switching procedure

Fig. 84 is an explanatory view of the zone-switching procedure of the eighth embodiment when the broadcast channel of the movement-source terminal is an dedicated physical channel. This procedure is similar to the procedure of the sixth embodiment.

Terminal 15 sends a measurement value report to the wireless network control device 13 via the movement-destination base station $14_2$...(1). The wireless network control device 13 detects the fact that the terminal has moved to another zone or is moving to another zone based on measurement value from the terminal and determines implementation of zone shift control and determines the implementation of zone shift control...(2). Subsequently, the wireless network control device 13 communicates the settings of the dedicated physical channel to the movement-destination base station $14_2$. Further, if the movement-destination base station $14_2$ is communicating with another terminal on a predetermined channel as shown in Fig. 82, the movement-destination base station $14_2$ continues to communicate with the other terminal in this state...(3). Further, the wireless network control device 13 communicates the settings of the dedicated physical channel to terminal 15 as shown in Fig. 82 via the movement-destination base station...(4). As described earlier, the movement-destination base station $14_2$ transmits broadcast data or multicast data to the terminal on an dedicated physical channel that is communicated by the wireless network control device 13...(5). Terminal 15 starts to receive the data in the movement-destination zone at the time designated by the wireless network control device 13...(6).

A short while afterward, the wireless network control device 13 switches the communication channel of terminal 15 to the communication channel of the movement-destination base station $14_2$ as shown in Fig. 83 by sending a channel setting communication to terminal 15...(7). For example, in cases where the movement-destination base station $14_2$ is transmitting broadcast data or multicast data on a common physical channel, the wireless network control device 13 sets the common physical channel in terminal 15 by means of the channel setting communication and, thereafter, the movement-destination base station $14_2$ transmits the data to all the terminals on the common physical channel.

According to the eighth embodiment, when it takes time to afford the movement-destination base station $14_2$ and terminal 15 the same physical channel, communications between the movement-destination base station $14_2$ and terminal 15 are first continued by connecting same by means of an dedicated physical channel and, thereafter, the time-consuming processing to render the channels the same can be performed. As a result, broadcast services are not cut off. That is, the terminal is able to perform zone switching with continued service.

(j-2) Second zone-switching procedure

Fig. 85 is another explanatory view of the zone switching procedure of the eighth embodiment when the broadcast channel of the movement-source terminal is a common physical channel. The procedure is the same as the procedure of the fifth embodiment.

Terminal 15 transmits a channel setting request to the wireless network control device 13 via the movement-destination base station $14_2$ upon detecting zone movement...(1). Upon receiving the channel setting request, the wireless network control device 13 communicates the settings of an dedicated physical channel to the movement-destination base station $14_2$. Further, if the movement-destination base station $14_2$ is communicating with another terminal on a predetermined channel as shown in Fig. 82, communications with the other terminal are continued in this state...(2). Further, the wireless network control device 13 communicates the settings of an dedicated physical channel to terminal 15 as shown in Fig. 82 via the movement-destination base station...(2).

As described earlier, the movement-destination base station $14_2$ transmits broadcast data or multicast data to the terminal on an dedicated physical channel that is communicated by the wireless network control device 13...(3). The terminal 15 starts to receive the data in the movement-destination zone at the time designated by the wireless network control device 13...(4).

A short while afterward, the wireless network control device 13 switches the communication channel of the terminal 15 as shown in Fig. 83 to the communication channel of the movement-destination base station $14_2$ by sending a channel setting communication to terminal 15...(5). For example, in cases where broadcast data or multicast data is transmitted by the movement-destination base station $14_2$ on a common physical channel, the wireless network control device 13 sets a common physical channel for the terminal 15 by means of the channel setting communication. Thereafter, the movement-destination base station $14_2$ transmits the data to all the terminals on the common physical channel.

As described earlier, when a terminal that is receiving a supply of services moves to another zone, the terminal performs the zone movement by switching the wireless channel to a channel type that is established by the system, requests the channel type for receiving a supply of services in the movement destination, communicates the wireless channel type whereby a network device supplies services to the terminal in the other zone and, after the terminal has moved to the other zone, changes to the channel type for supplying services in the other zone. Thus, the terminal is able to perform zone switching with continued service.

(j-3) First Modified Example

The rules during the zone switching established by the system are shown in Fig. 86. This constitutes an example in which a terminal is always switched to an dedicated logical channel. Further, rules for channel switching following zone switching are shown in Fig. 87.

(j-4) Second Modified Example

Rules during zone switching established by the system and rules for channel switching following zone switching are shown in Fig. 88. This constitutes an example in which the terminal is switched to a common physical channel only when the movement-destination base station $14_2$ is serviced on a common physical channel and where the terminal is otherwise switched to an dedicated physical channel. The channel-type switching of this modified example can be implemented by means of the same procedure as the procedure shown in the eighth embodiment.

(j-5) Third Modified Example

Rules during zone switching established by the system and rules for channel switching following zone switching are shown in Fig. 89. This constitutes an example in which the terminal is switched to a common logical channel only when the movement-destination base station is serviced on a common logical channel and where the terminal is otherwise switched to an dedicated logical channel.

(j-6) Fourth Modified Example

Rules during zone switching established by the system and rules for channel switching following zone switching are shown in Fig. 90. This constitutes an example in which zone switching is performed by means of the movement-source channel. The channel-type switching of this modified example can be implemented by means of the same procedure as the procedure shown in the eighth embodiment.

(j-7) Fifth Modified Example

Rules during zone switching established by the system and rules for channel switching following zone switching are shown in Fig. 91. This constitutes an example in which the terminal performs zone switching by means of the movement-source channel.

According to the eighth embodiment, when it takes time to afford the movement-destination base station and the terminal the same wireless channel, communications between the movement-destination base station and the terminal are first continued by connecting same by means of a wireless channel established by the system and, thereafter, the time-consuming processing to render the channels the same can be performed. As a result, broadcast services are not cut off.

Furthermore, according to the eighth embodiment, a zone shift can be performed regardless of the type of the physical channel for supplying the services by means of the movement-source base station $14_1$ and movement-destination base station $14_2$. As a result, a zone shift can be executed on a channel that possesses the characteristic of not being susceptible to the interruption of data in the communication system or a channel that allows wireless resources in the periphery of the zone to the used efficiently, and so forth, whereby services can be improved and the system usage efficiency can be increased.

In this case, in an example where zone switching is performed on a channel that allows wireless resources in the zone periphery to be used efficiently, the procedure of (2) 'detecting movement to another zone and determining zone shift implementation' in Fig. 84 is a procedure known as (2) 'other zone periphery movement detection and channel-type change determination'. Further, the 'channel setting request' of procedure (1) in Fig. 85 can also be transmitted by terminal 15 upon detection of arrival in the periphery of the other zone.

(j-8) Sixth Modified Example

As shown in Figs. 92 and 93, through the addition of the procedures indicated by the dotted lines to the sequences of Figs. 84 and 85 respectively, the settings for the movement-source zone $14_1$ can also be made at the same time as or prior to the channel settings for the movement-destination zone $14_2$.

(j-9) Seven Modified Example

As shown in Fig. 94, terminal 15 can also issue a 'measurement value report' that constitutes a trigger for issuing the 'channel setting communication' of procedure (7) between procedures (6) and (7) in Fig. 84.

Further, as shown Fig. 95, terminal 15 can also issue a 'measurement value report' that constitutes a trigger for issuing the 'channel setting communication' of procedure (5) between procedures (4) and (5) in Fig. 85.

In addition, as shown in Figs. 96 and 97, the constitution can be such that terminal 15 issues the 'channel setting request' of procedure (8) and the wireless network control device 13 issues the channel setting communication of (9) after procedure (6) of Fig. 84 and procedure (4) of Fig. 85 respectively.

Further, Figs. 84 and 85 are examples in which a zone shift takes place via movement-destination zone $14_2$ when movement is from the movement-source zone $14_1$ to movement-destination zone $14_2$ but can instead take place via the movement-source zone $14_1$.

(K) Ninth Embodiment

The ninth embodiment is an embodiment a system that performs a broadcast or multicast by means of a predetermined method (the third to seventh embodiments) in accordance with the channel type, transmission state, and transmission stoppage state of the wireless channel for supplying the services of the movement destination, as well as the channel type of the wireless channel of the terminal receiving a supply of services.

The table in Fig. 98 shows how to implement (1) the channel of communication to the terminal and (2) any of the methods of the third to seventh embodiments in correspondence with a combination of channel types of the movement source and movement destination.

Therefore, the system performs a broadcast or multicast in accordance with any of the methods of the third to seventh embodiments on the basis of the combination of channel types of the movement source and movement destination.

(L) Tenth Embodiment

The tenth embodiment is an embodiment in which the channel type, transmission state, and transmission stoppage state of the wireless channel for supplying the services of the movement destination is reported by the movement-destination base station $14_2$. Fig. 99providesaconceptualview. Further, Fig. 100 shows an example of the constitution of report information. The base station manages, for each service, (1) the transmission state (transmission in progress, transmission stopped), (2) the supply channel, (3) the wireless resources (frequency, spread code, time slot) and then creates and reports the table in Fig. 100.

(M) Eleventh Embodiment

The eleventh embodiment is an example where the channel type, transmission state, and transmission stoppage state of the wireless channel supplying the services of the movement source are reported by the movement-source base station $14_1$.

Fig. 101 provides a conceptual view. Further, Fig. 102 shows an example of the constitution of report information. Each base station manages, for each of the services of adjacent zones, (1) the transmission state (transmission in progress, transmission stopped), (2) the supply channel, (3)the wireless resources (frequency, spread code, time slot) and then creates and reports the table in Fig. 102.

Although, in the above description, the service area of the base station was one zone or an area established by dividing the service area into a plurality of zones constituted a zone, a variety of zone definitions can be considered. For example, the service areas of one or more base stations can be combined to establish one zone or an area established by dividing the service area into a plurality of zones can constitute a zone.

According to the present invention above, a judgment standard (the existence of a terminal receiving a supply of services, for example) is established for one zone within a service area or for each zone divided into a plurality of zones and broadcast data or multicast data is not transmitted by the base station to a zone that does not satisfy the standard (in which a terminal is not present). Therefore, when the standard is not satisfied in one zone, broadcast data and multicast data are not transmitted, meaning that the wireless resources in the zone can be used efficiently.

In addition, according to the present invention above, when a terminal that is receiving a supply of services exists in a region that allows services to be received from the base station of another zone and the terminal requests wireless-channel data transmission from the base station, the data is transmitted on the wireless channel from the base station on the basis of the request, or it is detected that a terminal that is receiving a supply of services exists in a region that allows services to the received from another zone and the data is transmitted on the wireless channel from the base station of the other zone, whereby a zone shift in a system that makes efficient use of wireless resources can be performed without problems.

Furthermore, according to the present invention, a judgment standard is established for one zone in a service area or for each zone divided into a plurality of zones and a wireless channel type (dedicated physical channel, common physical channel, for example) is determined on the basis of the judgment result. Therefore, in one zone, the optimal wireless channel for transmitting broadcast data and multicast data can be selected in accordance with the judgment standard, whereby the wireless resources in the zone can be used efficiently and the transmission power and interference power of the base station can be reduced.

Moreover, according to the present invention, when a terminal that is receiving a supply of services exists in a region that allows services to be received from the base station of another zone and the terminal requests a wireless channel for supplying the services of the base station, the wireless channel is determined on the basis of the request and the data is transmitted on the wireless channel, or it is detected that a terminal receiving a supply of services exists in a region that allows services to be received from another zone and, when the existence of the terminal is detected, the wireless channel is determined and the data is transmitted on the wireless channel, whereby a zone shift in a system that makes efficient use of wireless resources can be performed without problems.

## Claims

**1.** A mobile communication system that transmits broadcast data or multicast data from a base station, comprising:

means for holding a judgment standard for determining whether the data is transmitted to each zone in a case where the service areas of one or more base stations are combined to establish one zone or in a case where the service areas are divided into a plurality of zones; and
control means for controlling the transmission and transmission stoppage of the data in accordance with the judgment standard.

**2.** The mobile communication system according to claim 1, wherein the judgment standard is a determination of whether a terminal receiving services exists in a zone and the control means stops the transmission of the data if such a terminal does not exist.

**3.** The mobile communication system according to claim 1, comprising:

means that, when a terminal receiving a supply of services exists in a region that allows services to be received from a base station of another zone and the terminal requests wireless-channel data transmission from the base station, implement control such that the data is transmitted on the wireless channel from the base station on the basis of the request.

**4.** The mobile communication system according to claim 1, comprising:

detection means for detecting the existence of a terminal receiving a supply of services in a region that allows services to be received from another zone; and
means for implementing control such that the data is transmitted on a wireless channel from the base station of the other zone.

**5.** The mobile communication system according to claim 4, wherein the detection means detects that a terminal has moved to a region that allows services to be received from another zone on the basis of a measurement report value received from the terminal.

**6.** The mobile communication system according to claim 5, wherein the terminal transmits the measurement report value when a measurement value report condition is satisfied, this condition being that the reception quality in the other zone is continuously favorable for a fixed time or more.

**7.** The mobile communication system according to claim 1, comprising:

transmission control means for implementing control such that, when a terminal receiving a supply of services requests, from a movement-source base station, a wireless-channel data transmission of a movement-destination base station, a wireless channel from the movement-destination base station is determined on the basis of the request and the data is transmitted on the wireless channel.

**8.** The mobile communication system according to claim 7, comprising:

means for controlling the disconnection of a user data transmission path of a movement-source base station in accordance with a request from the terminal,

wherein the movement-destination base station establishes an user data transmission path in a movement-destination zone with respect to the terminal on the basis of the transmission instruction from said transmission control means and, after zone movement has completed, the terminal issues a request to said disconnection control means to stop data transmission by the movement-source base station via the movement-destination base station and the movement-source base station disconnects the user data transmission path in accordance with a disconnection instruction from the disconnection control means.

**9.** The mobile communication system according to claim 1, comprising:

means for detecting that a terminal receiving a supply of services exists in a region that allows services to be received from a neighboring zone; and
transmission control means for implementing control such that the data is transmitted on a wireless channel from the neighboring zone on the basis of the detection result.

**10.** The mobile communication system according to claim 9, comprising:

means for controlling the disconnection of a user data transmission path of a movement - source base station in accordance with a request from the terminal,

wherein a movement-destination base station establishes the user data transmission path in the movement-destination zone with respect to the terminal on the basis of a transmission instruction from the transmission control means and, after zone movement has completed, the terminal issues a request to the disconnection control means to stop data transmission by the movement-source base station via the movement-destination base station and the movement-source base station disconnects the user data transmission path in accordance with a disconnection instruction from the disconnection control means.

**11.** The mobile communication system according to claim 1,
wherein, when a terminal makes a request for a wireless network control device of a wireless-channel data transmission of a movement-destination base station via movement-source base station upon detecting movement to a region that allows services to be received from a neighboring zone or when it is detected that the terminal exists in the region that allows services to be received from neighboring zone, the wireless network control device establishes a user data channel between its own device and core network, determines a wireless channel of the movement-destination base station, and transmits the data received from the core network to the terminal on the wireless channel.

**12.** The mobile communication system according to claim 11, wherein the wireless network control device disconnects the user data channel established between its own device and the core network in accordance with a request from the terminal following zone movement.

**13.** A wireless network control device in a mobile communication system that transmits broadcast data or multicast data from a base station, comprising:

means for holding a judgment standard for determining whether the data is transmitted to each zone in a case where the service areas of one or more base stations are combined to establish one zone or in a case where the service areas are divided into a plurality of zones; and
control means for controlling the transmission and transmission stoppage of the data in accordance with the judgment standard.

**14.** A base station in a mobile communication system that transmits broadcast data or multicast data from a base station, comprising:

means for holding a judgment standard for determining whether the data is transmitted to each zone in a case where the service area of the base station is one zone or in a case where the service area is divided into a plurality of zones; and
control means for controlling the transmission and transmission stoppage of the data in accordance with the judgment standard.

**15.** A mobile communication system that transmits broadcast data or multicast data from a base station, comprising:

means for holding a judgment standard for determining type of a wireless channel for transmitting the data to each zone in a case where the service areas of one or more base stations are combined to establish one zone or in a case where the service areas are divided into a plurality of zones; and
means for determining the type of the wireless channel for transmitting the data in accordance with the judgment standard.

**16.** The mobile communication system according to claim 15, wherein the judgment standard is a number of terminals receiving services that exist in a zone, or a power required to supply services, or a interference amount produced when services are supplied.

**17.** The mobile communication system according to claim 16, comprising:

means for calling terminals receiving a supply of services one by one or simultaneously in group unit and calculating the power required to supply services or the interference amount produced when services are supplied.

**18.** The mobile communication system according to claim 15, comprising:

detection means for detecting the existence of a terminal receiving a supply of services in a region that allows services to be received from another zone; and
means for implementing control such that the data is transmitted on a wireless channel from the base station of the other zone.

wherein the terminal transmits the measurement report value when a measurement value report condition is satisfied, the condition being that the reception quality in the other zone is continuously favorable for a fixed time or more; and the detection means detects that the terminal has moved to the region that allows services to be received from another zone on the basis of a measurement report value received from the terminal.

**19.** The mobile communication system according to claim 15, comprising:

means that, when a terminal receiving a supply of services exists in a region that allows services to be received from a base station in another zone and the terminal requests a wireless channel for receiving the services from the base station, determine a wireless channel on the basis of the request; and
means for implementing control such that the data is transmitted on the wireless channel.

**20.** The mobile communication system according to claim 15, comprising:

detection means for detecting the existence of a terminal receiving a supply of services in a region that allows services to be received from other zone; and
means for determining a wireless channel when said existence of the terminal is detected and implementing control such that the data is transmitted on the wireless channel.

**21.** The mobile communication system according to claim 20, wherein the detection means detects, on the basis of a measurement report value received from the terminal, that the terminal has moved to the region that allows services to be received from the other zone.

**22.** The mobile communication system according to claim 15, comprising:

transmission control means for implementing control such that, when a terminal receiving a supply of services requests, from a movement-source base station, a wireless-channel data transmission of a movement-destination base station, a wireless channel from the movement-destination base station is determined on the basis of the request and the data is transmitted on the wireless channel.

**23.** The mobile communication system according to claim 22, comprising:

means for controlling the disconnection of a user data transmission channel of the movement-source base station in accordance with a request from the terminal,

wherein the movement-destination base station establishes a user data transmission path and a wireless channel in a movement-destination zone with respect to the terminal on the basis of a transmission instruction from the transmission control means and, after zone movement has completed, the terminal issues a request to the disconnection control means to stop data transmission by the movement-source base station via the movement-destination base station and the movement-source base station disconnects the user data transmission path in accordance with a disconnection instruction from the disconnection control means.

**24.** The mobile communication system according to claim 15, comprising:

means for detecting that a terminal receiving a supply of services exists in a region that allows services to be received from a neighboring zone; and
means for implementing control such that the data is transmitted on a wireless channel from the neighboring zone on the basis of the detection result.

**25.** The mobile communication system according to claim 24, comprising:

means for controlling the disconnection of a user data transmission path of amovement-source base station in accordance with a request from the terminal,

wherein a movement-destination base station establishes a user data transmission path and a wireless channel in a movement-destination zone with respect to the terminal on the basis of a transmission instruction from the transmission control means and, after zone movement has completed, the terminal issues a request to the disconnection control means to stop data transmission by the movement-source base station via the movement-destination base station and the movement-source base station disconnects a user data transmission channel in accordance with a disconnection instruction from the disconnection control means.

**26.** The mobile communication system according to claim 15,
wherein, when a terminal makes a request for a wireless control device of a wireless-channel data transmission from a movement-destination base station, via a movement-source base station upon detecting movement to a region that allows services to be received from another zone or when it is detected that the terminal exists in a region that allows services to be received from another zone, the wireless network control device establishes a user data channel between its own device and a core network, determines a wireless channel of the movement-destination base station and transmits the data received from the core network to the terminal on the wireless channel.

27. The mobile communication system according to claim 26, wherein the wireless network control device cancels the user data disconnects established between its own device and the core network in accordance with a request from the terminal following zone movement.

28. A mobile communication system that transmits broadcast data or multicast data, comprising:

a base station that transmits the data to a terminal of each zone;
a wireless network control device that transmits channel setting information to the terminal of each zone via the base station; and
a terminal that, upon moving to a region that allows services to be received from another zone, changes a current wireless channel to a wireless channel corresponding to said zone that is acquired from the channel setting information and receives a supply of services.

29. A mobile terminal in a mobile communication system that transmits broadcast data or multicast data, comprising:

means for receiving channel setting information that is transmitted from a wireless network control device via a base station;
means for detecting movement to a region that allows services to be received from another zone; and
means for changing a current wireless channel to a wireless channel corresponding saidanother zone that is acquired from the channel setting information in the event of movement to said region,

wherein the terminal receives a supply of services from the wireless channel.

30. The mobile terminal according to claim 29, comprising:

means for requesting stoppage of data transmission by a movement-source base station via a movement-destination base station of said zone after zone movement has completed.

31. A mobile communication system that transmits broadcast data or multicast data, comprising:

a base station that transmits the data to a terminal of each zone;
a wireless network control device that transmits channel setting information to the terminal of each zone via the base station; and
a terminal for receiving the data from the base station by changing a channel type to a new channel type when the terminal moves another zone;

wherein, the terminal requests anew channel type for receiving a supply of services when the terminal moves to another zone;

the wireless network control device communicates the channel setting information to the terminal in response to the channel type request; and
the terminal acquires the type of the wireless channel which supplies services in said another zone from the channel setting information and receives the data from the base station in said another zone by changing the current channel-type to the new channel type thus acquired.

32. A mobile terminal in a mobile communication system that transmits broadcast data or multicast data, comprising:

means for detecting movement to a region that allows services to be received from another zone;
means for requesting a channel type for receiving a supply of services in said another zone when the terminal moves to this zone;
means for receiving the channel type communicated by a wireless network control device in response to the channel type request; and
means for receiving the data from a base station in said another zone by changing a current channel type to the received channel type.

33. The mobile terminal according to claim 32, comprising:

means for performing zone movement by changing the current wireless channel to the channel type communicated by the wireless network control device.

**34.** The mobile terminal according to claim 32, comprising:

means for requesting stoppage of data transmission by a movement-source base station via the movement-destination base station in said another zone, after the zone movement has completed.

**35.** A mobile communication system that transmits broadcast data or multicast data comprising;

a terminal for performing zone movement by changing a current wireless channel to a channel type established by the system and;
a network device for detecting that the terminal has moved to other zone and communicating to the terminal a type of a wireless channel which supplies services to the terminal in the other zone; wherein the terminal receives the data from the base station by changing the current wireless channel to the communicated wireless channel type.

**36.** A mobile terminal in a mobile communication system that transmits broadcast data or multicast data, comprising:

means for receiving a type of a wireless channel for supplying services in other zone that is communicated by a network device when the terminal moves to the other zone; and
means for receiving the data from a base station by changing a current wireless channel type to the communicated wireless channel type.

**37.** The mobile terminal according to claim 36, comprising:

means for performing zone movement by changing the current wireless channel to the channel type communicated by the network device.

**38.** The mobile terminal according to claim 36, comprising:

means for requesting stoppage of data transmission by a movement-source base station via a movement-destination base station in the other zone, after the zone movement has completed.

**39.** A wireless network control device in a mobile communication system that transmits broadcast data or multicast data from a base station, comprising:

means for holding a judgment standard for determining a type of wireless channel for transmitting the data to each zone in a case where the service areas of one or more base stations are combined to establish one zone or in a case where the service areas are divided into a plurality of zones; and
means for determining the type of the wireless channel for transmitting the data in accordance with the judgment standard.

**40.** A base station in a mobile communication system that transmits broadcast data or multicast data, comprising:

means for holding a judgment standard for determining a type of wireless channel for transmitting the data to each zone in a case where the service area of the base station is divided into a plurality of zones; and
means for determining the type of the wireless channel for transmitting the data in accordance with the judgment standard.

FIG. 1

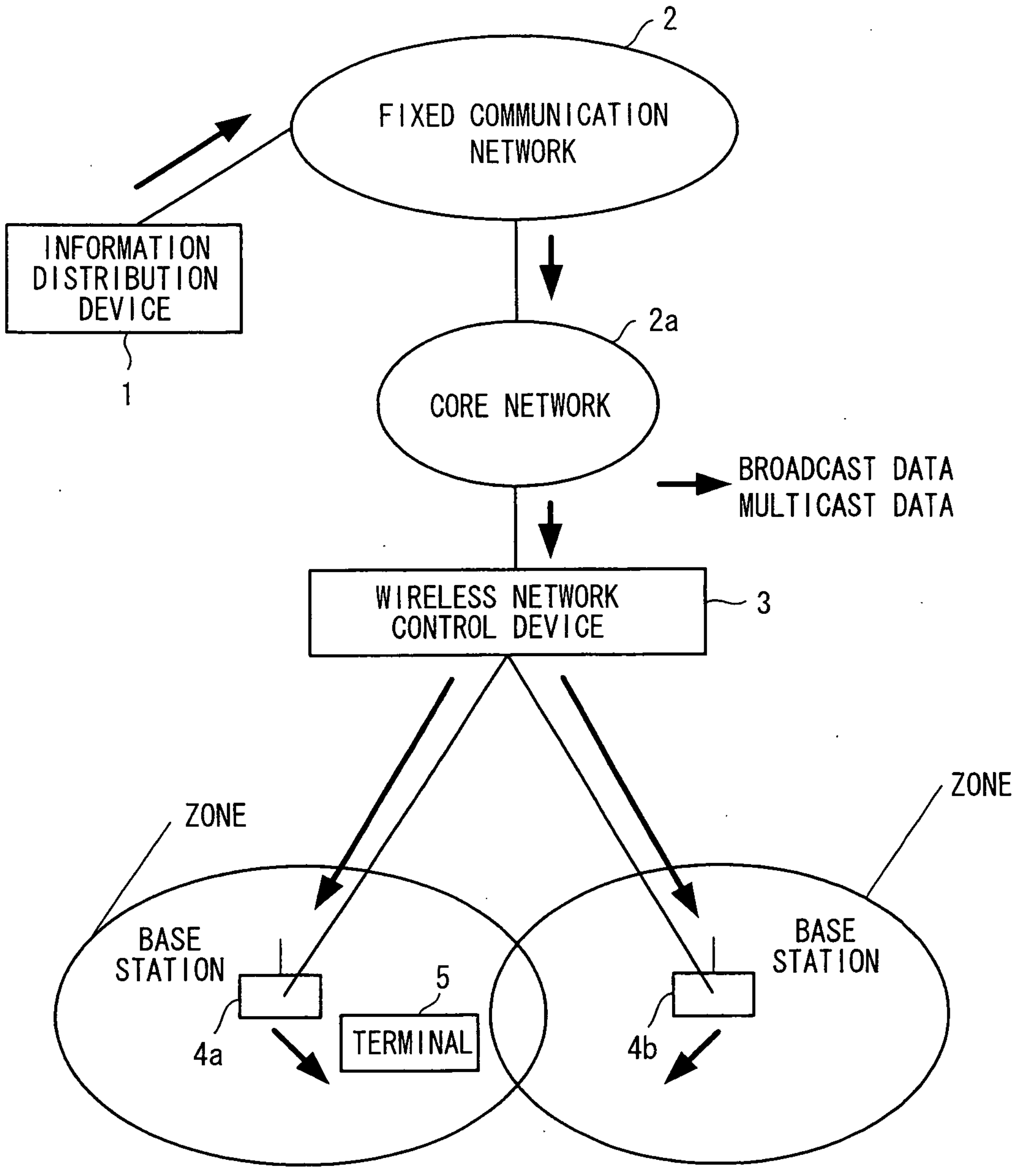
2
FIXED COMMUNICATION NETWORK
INFORMATION DISTRIBUTION DEVICE
1
2a
CORE NETWORK
BROADCAST DATA
MULTICAST DATA
WIRELESS NETWORK CONTROL DEVICE
3
ZONE
ZONE
BASE STATION
BASE STATION
5
TERMINAL
4a
4b

FIG. 2

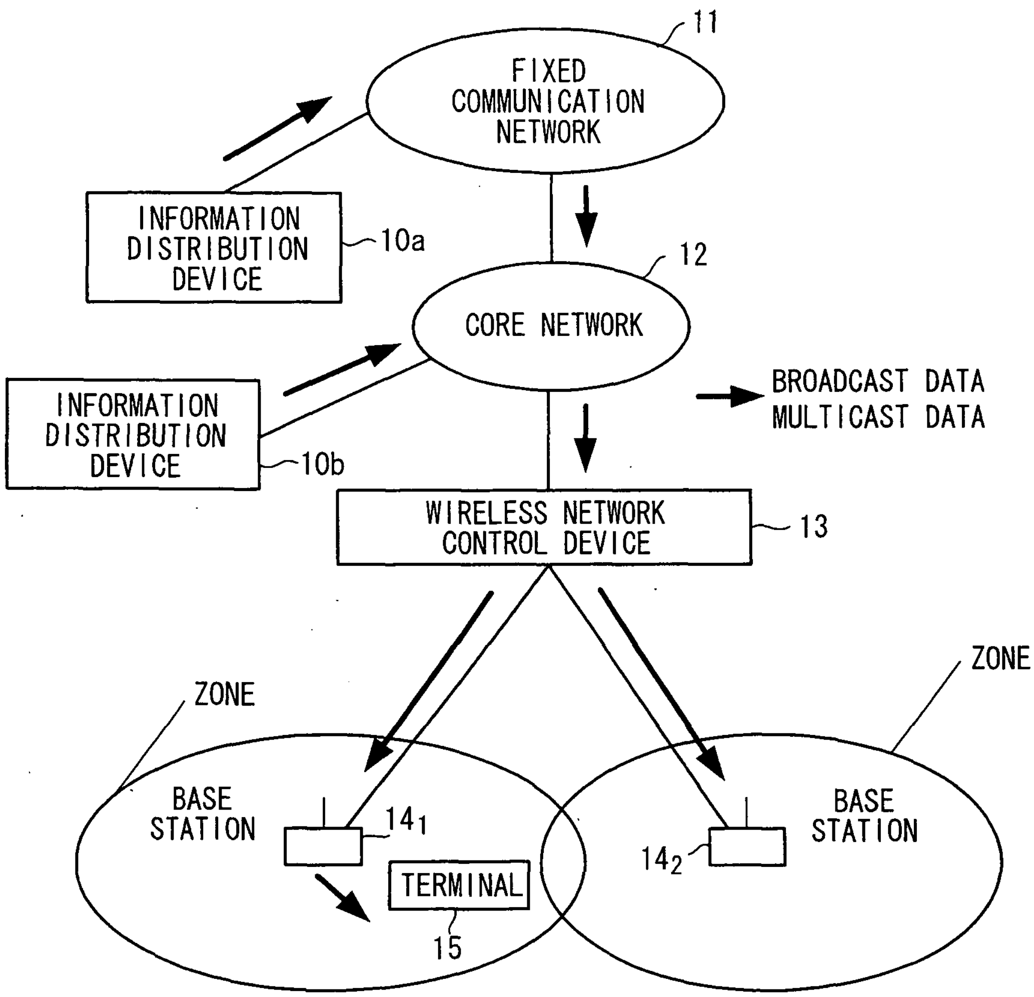
11
FIXED COMMUNICATION NETWORK
INFORMATION DISTRIBUTION DEVICE
10a
12
CORE NETWORK
INFORMATION DISTRIBUTION DEVICE
10b
BROADCAST DATA
MULTICAST DATA
WIRELESS NETWORK CONTROL DEVICE
13
ZONE
ZONE
BASE STATION
$14_1$
TERMINAL
15
$14_2$
BASE STATION

FIG. 3

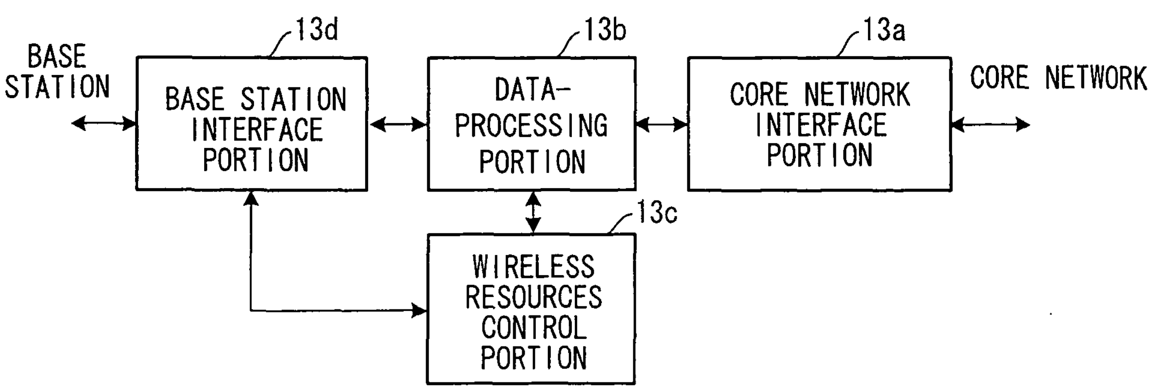
13d
13b
13a
BASE STATION
BASE STATION INTERFACE PORTION
DATA-PROCESSING PORTION
CORE NETWORK INTERFACE PORTION
CORE NETWORK
13c
WIRELESS RESOURCES CONTROL PORTION

FIG. 4

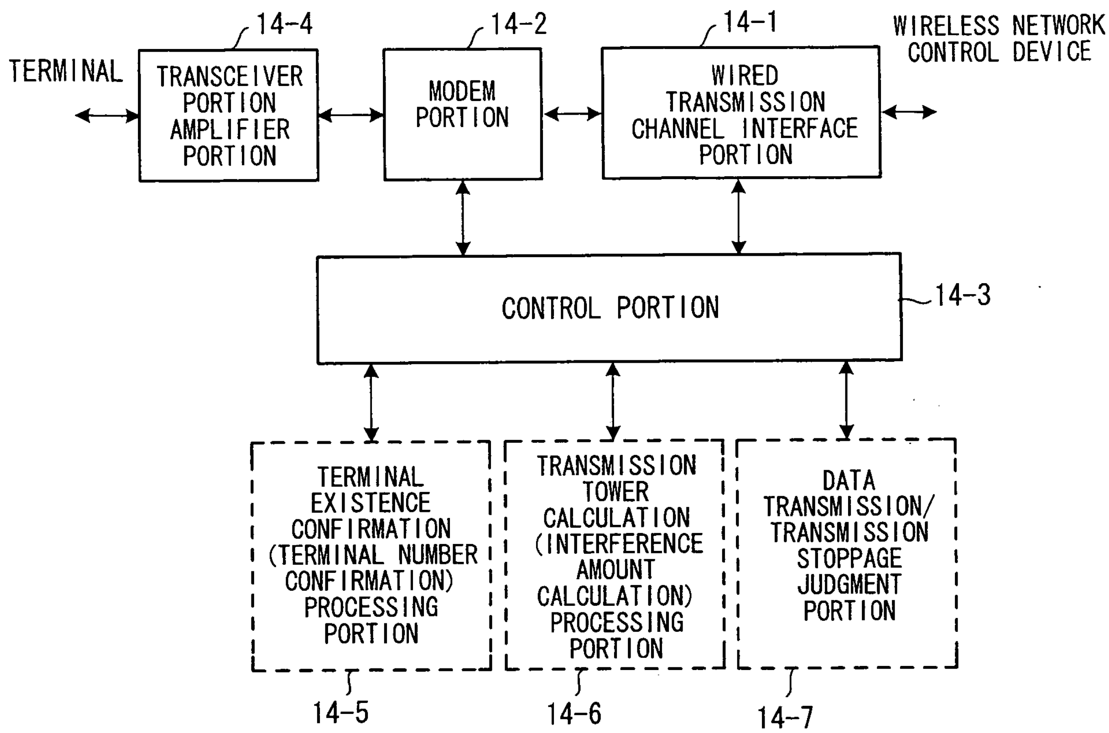
14-4
14-2
14-1
TERMINAL
TRANSCEIVER PORTION AMPLIFIER PORTION
MODEM PORTION
WIRED TRANSMISSION CHANNEL INTERFACE PORTION
WIRELESS NETWORK CONTROL DEVICE
CONTROL PORTION
14-3
TERMINAL EXISTENCE CONFIRMATION (TERMINAL NUMBER CONFIRMATION) PROCESSING PORTION
TRANSMISSION TOWER CALCULATION (INTERFERENCE AMOUNT CALCULATION) PROCESSING PORTION
DATA TRANSMISSION/ TRANSMISSION STOPPAGE JUDGMENT PORTION
14-5
14-6
14-7

FIG. 5

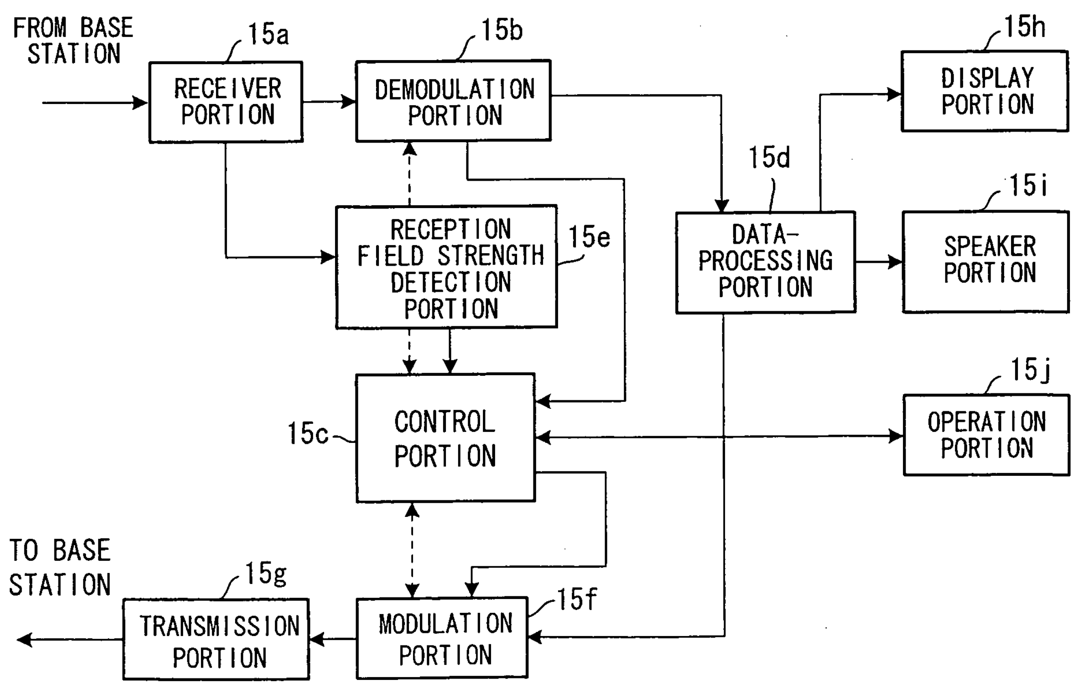
FROM BASE STATION
15a
RECEIVER PORTION
15b
DEMODULATION PORTION
15h
DISPLAY PORTION
15d
15i
RECEPTION FIELD STRENGTH DETECTION PORTION
15e
DATA-PROCESSING PORTION
SPEAKER PORTION
15j
CONTROL PORTION
15c
OPERATION PORTION
TO BASE STATION
15g
TRANSMISSION PORTION
MODULATION PORTION
15f

FIG. 6

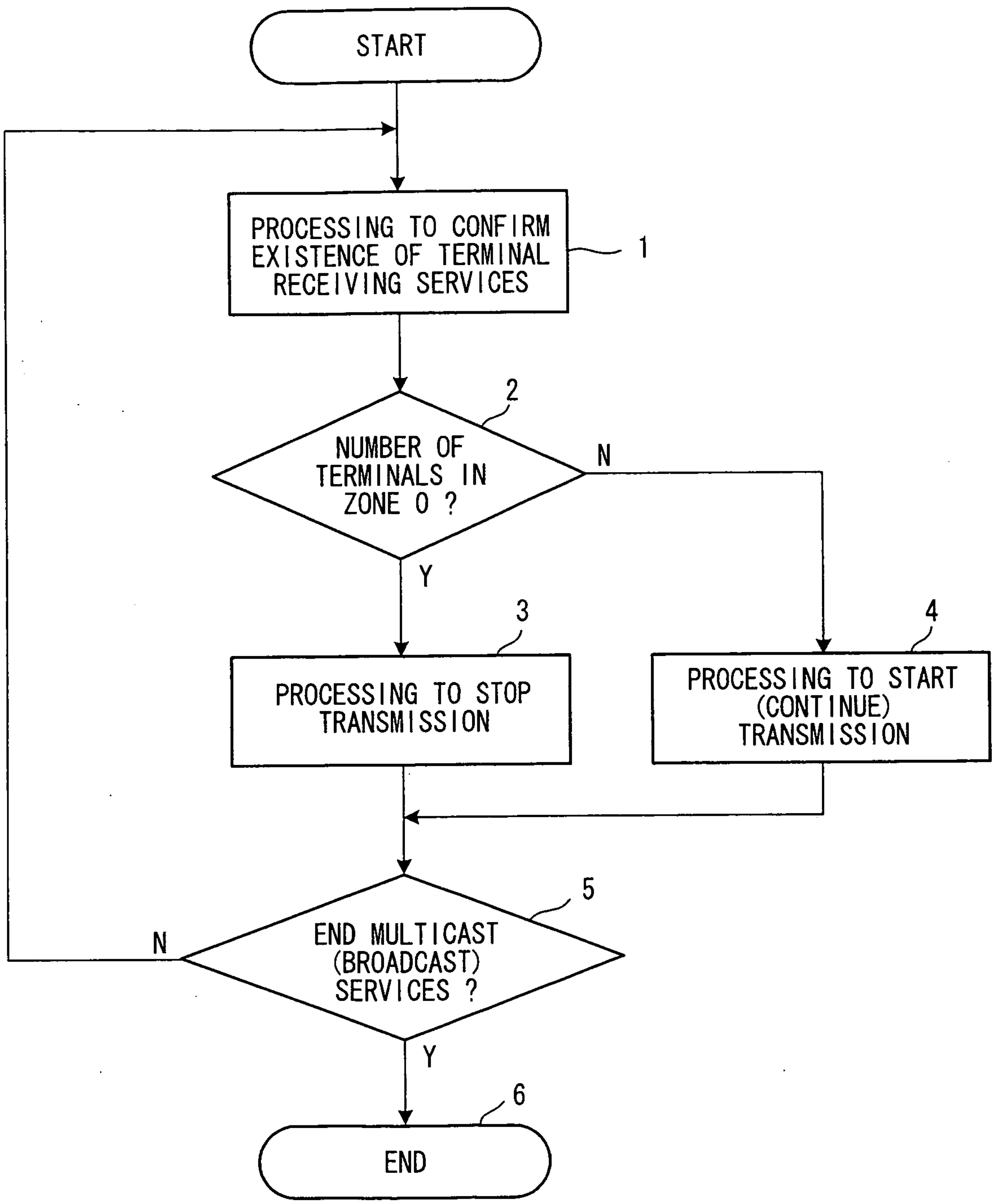
START
PROCESSING TO CONFIRM EXISTENCE OF TERMINAL RECEIVING SERVICES
1
2
NUMBER OF TERMINALS IN ZONE 0 ?
N
Y
3
4
PROCESSING TO STOP TRANSMISSION
PROCESSING TO START (CONTINUE) TRANSMISSION
5
END MULTICAST (BROADCAST) SERVICES ?
N
Y
6
END

FIG. 7

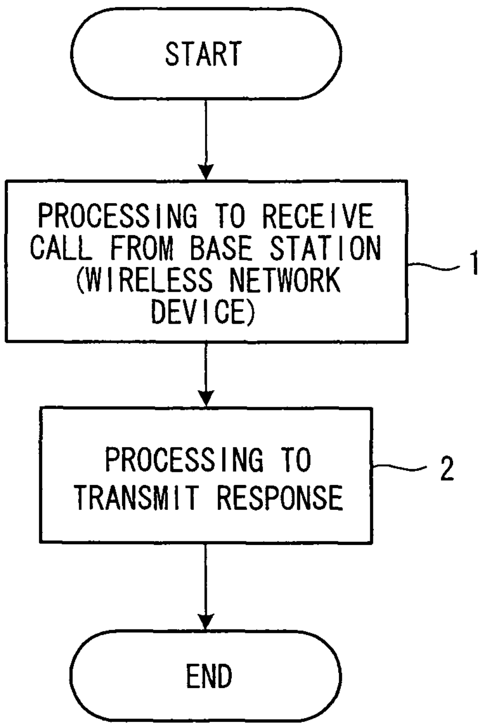
START
PROCESSING TO RECEIVE CALL FROM BASE STATION (WIRELESS NETWORK DEVICE)
1
PROCESSING TO TRANSMIT RESPONSE
2
END

FIG. 8

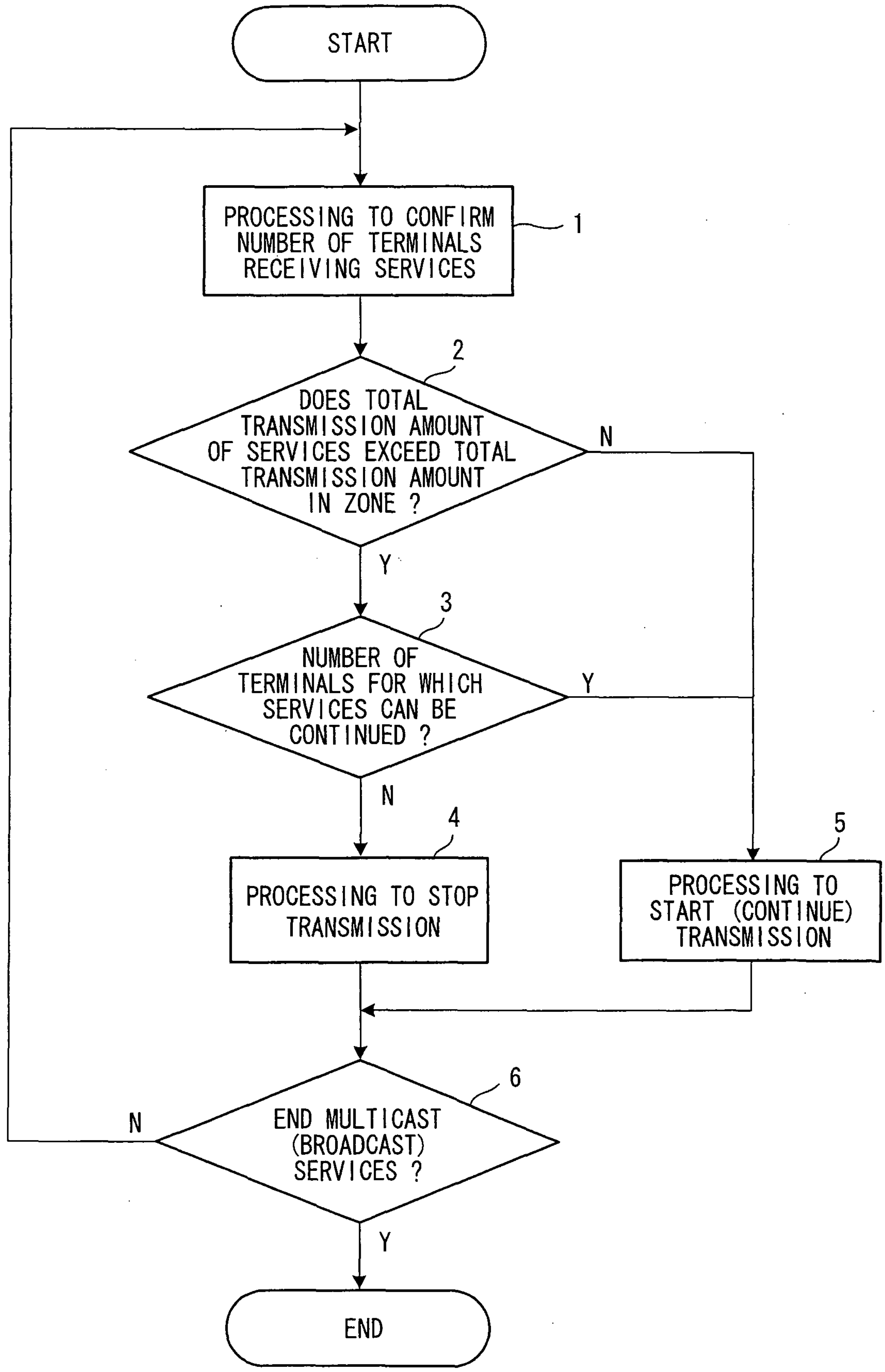
START
PROCESSING TO CONFIRM NUMBER OF TERMINALS RECEIVING SERVICES
1
DOES TOTAL TRANSMISSION AMOUNT OF SERVICES EXCEED TOTAL TRANSMISSION AMOUNT IN ZONE ?
2
N
Y
NUMBER OF TERMINALS FOR WHICH SERVICES CAN BE CONTINUED ?
3
Y
N
PROCESSING TO STOP TRANSMISSION
4
PROCESSING TO START (CONTINUE) TRANSMISSION
5
END MULTICAST (BROADCAST) SERVICES ?
6
N
Y
END

FIG. 9

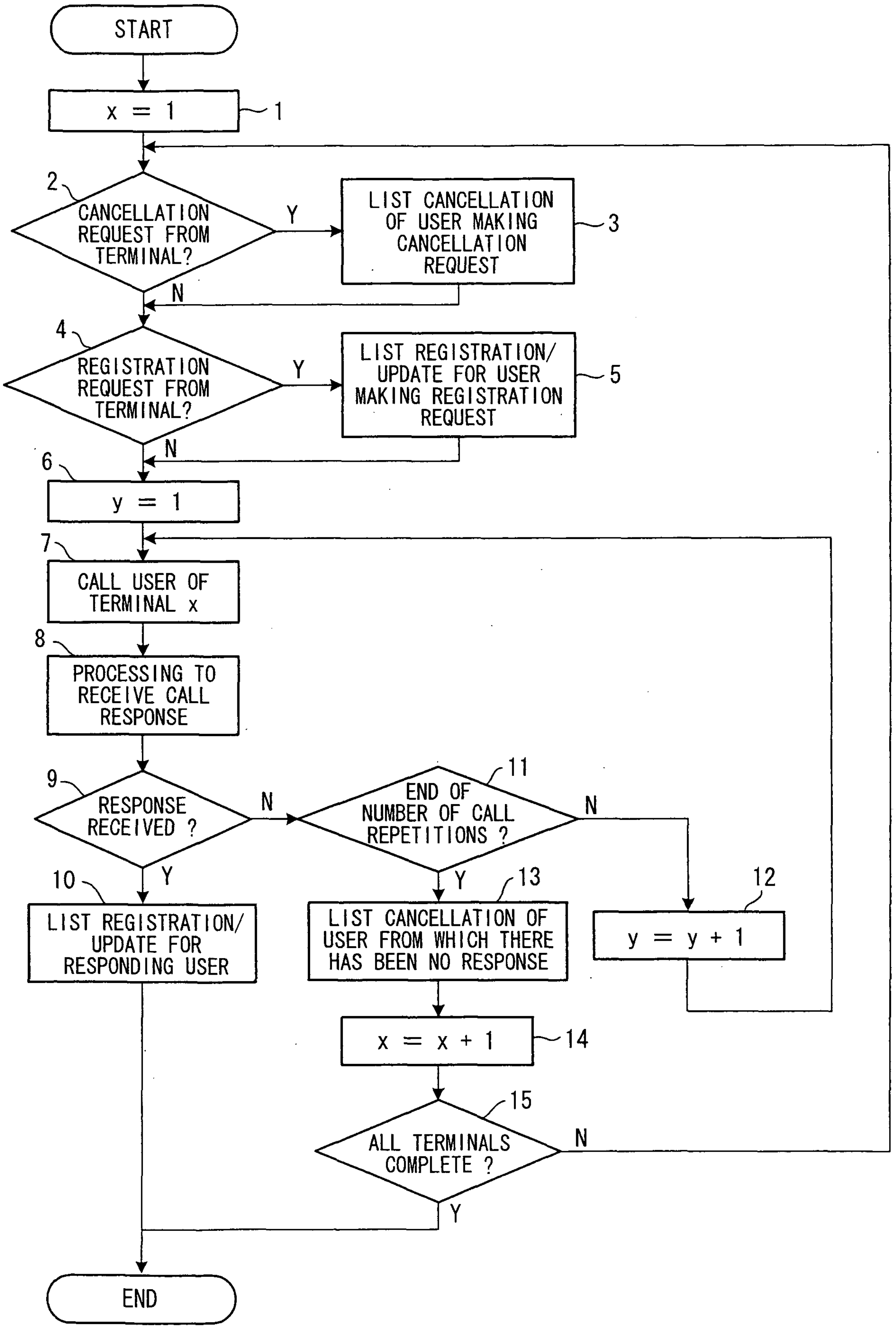
START
x = 1
1
2
CANCELLATION REQUEST FROM TERMINAL?
Y
N
LIST CANCELLATION OF USER MAKING CANCELLATION REQUEST
3
4
REGISTRATION REQUEST FROM TERMINAL?
Y
N
LIST REGISTRATION/ UPDATE FOR USER MAKING REGISTRATION REQUEST
5
6
y = 1
7
CALL USER OF TERMINAL x
8
PROCESSING TO RECEIVE CALL RESPONSE
9
RESPONSE RECEIVED ?
N
Y
11
END OF NUMBER OF CALL REPETITIONS ?
N
Y
10
LIST REGISTRATION/ UPDATE FOR RESPONDING USER
13
LIST CANCELLATION OF USER FROM WHICH THERE HAS BEEN NO RESPONSE
12
y = y + 1
x = x + 1
14
15
ALL TERMINALS COMPLETE ?
N
Y
END

FIG. 10

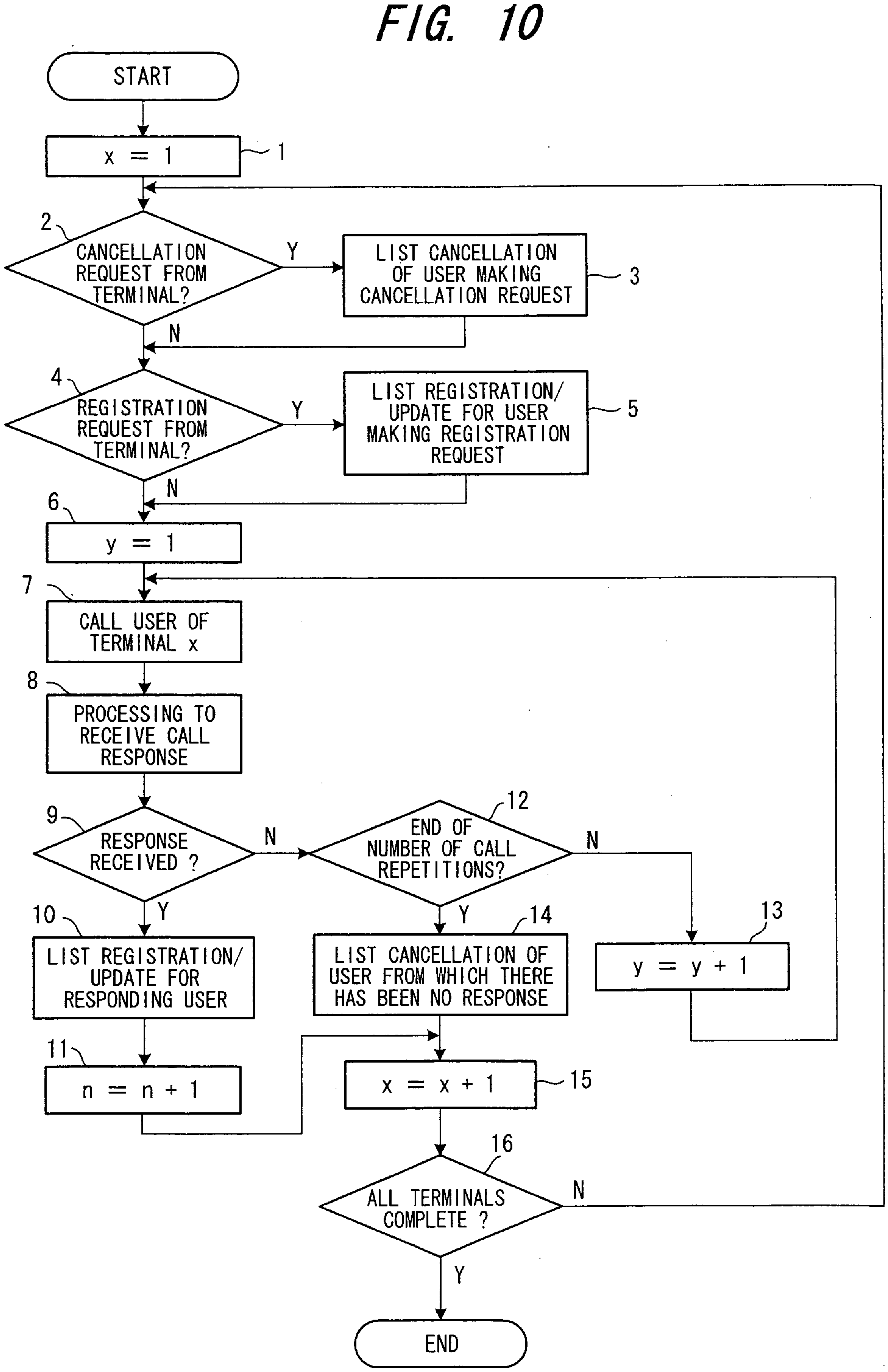
START
x = 1
1
2
CANCELLATION REQUEST FROM TERMINAL?
Y
LIST CANCELLATION OF USER MAKING CANCELLATION REQUEST
3
N
4
REGISTRATION REQUEST FROM TERMINAL?
Y
LIST REGISTRATION/ UPDATE FOR USER MAKING REGISTRATION REQUEST
5
N
6
y = 1
7
CALL USER OF TERMINAL x
8
PROCESSING TO RECEIVE CALL RESPONSE
9
RESPONSE RECEIVED ?
N
12
END OF NUMBER OF CALL REPETITIONS?
N
Y
10
LIST REGISTRATION/ UPDATE FOR RESPONDING USER
Y
14
LIST CANCELLATION OF USER FROM WHICH THERE HAS BEEN NO RESPONSE
13
y = y + 1
11
n = n + 1
x = x + 1
15
16
ALL TERMINALS COMPLETE ?
N
Y
END

FIG. 11

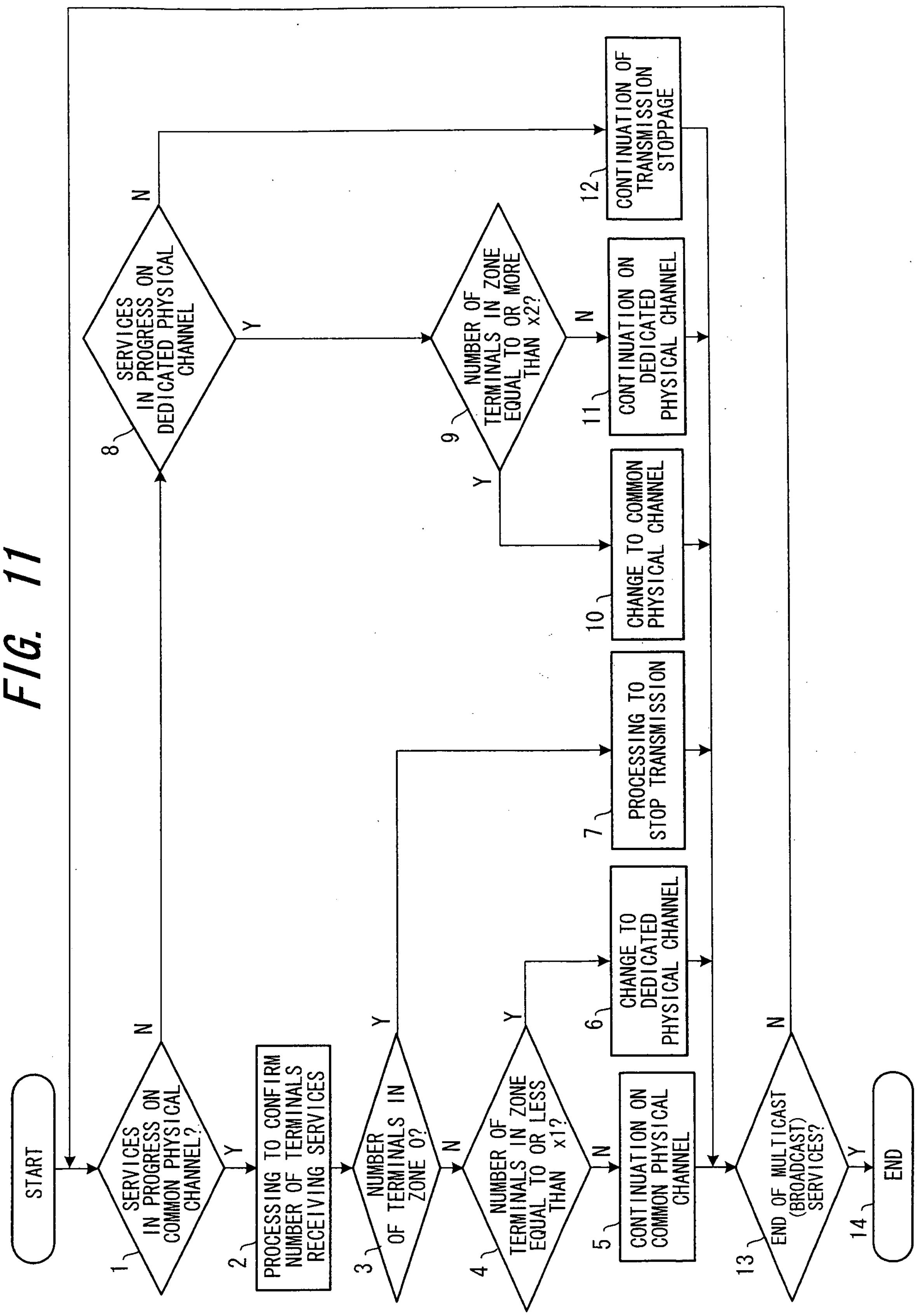
START
1 SERVICES IN PROGRESS ON COMMON PHYSICAL CHANNEL?
Y
N
2 PROCESSING TO CONFIRM NUMBER OF TERMINALS RECEIVING SERVICES
3 NUMBER OF TERMINALS IN ZONE 0?
Y
N
4 NUMBER OF TERMINALS IN ZONE EQUAL TO OR LESS THAN x1?
Y
N
5 CONTINUATION ON COMMON PHYSICAL CHANNEL
6 CHANGE TO DEDICATED PHYSICAL CHANNEL
7 PROCESSING TO STOP TRANSMISSION
8 SERVICES IN PROGRESS ON DEDICATED PHYSICAL CHANNEL
Y
N
9 NUMBER OF TERMINALS IN ZONE EQUAL TO OR MORE THAN x2?
Y
N
10 CHANGE TO COMMON PHYSICAL CHANNEL
11 CONTINUATION ON DEDICATED PHYSICAL CHANNEL
12 CONTINUATION OF TRANSMISSION STOPPAGE
13 END OF MULTICAST (BROADCAST) SERVICES?
Y
N
14 END

FIG. 12

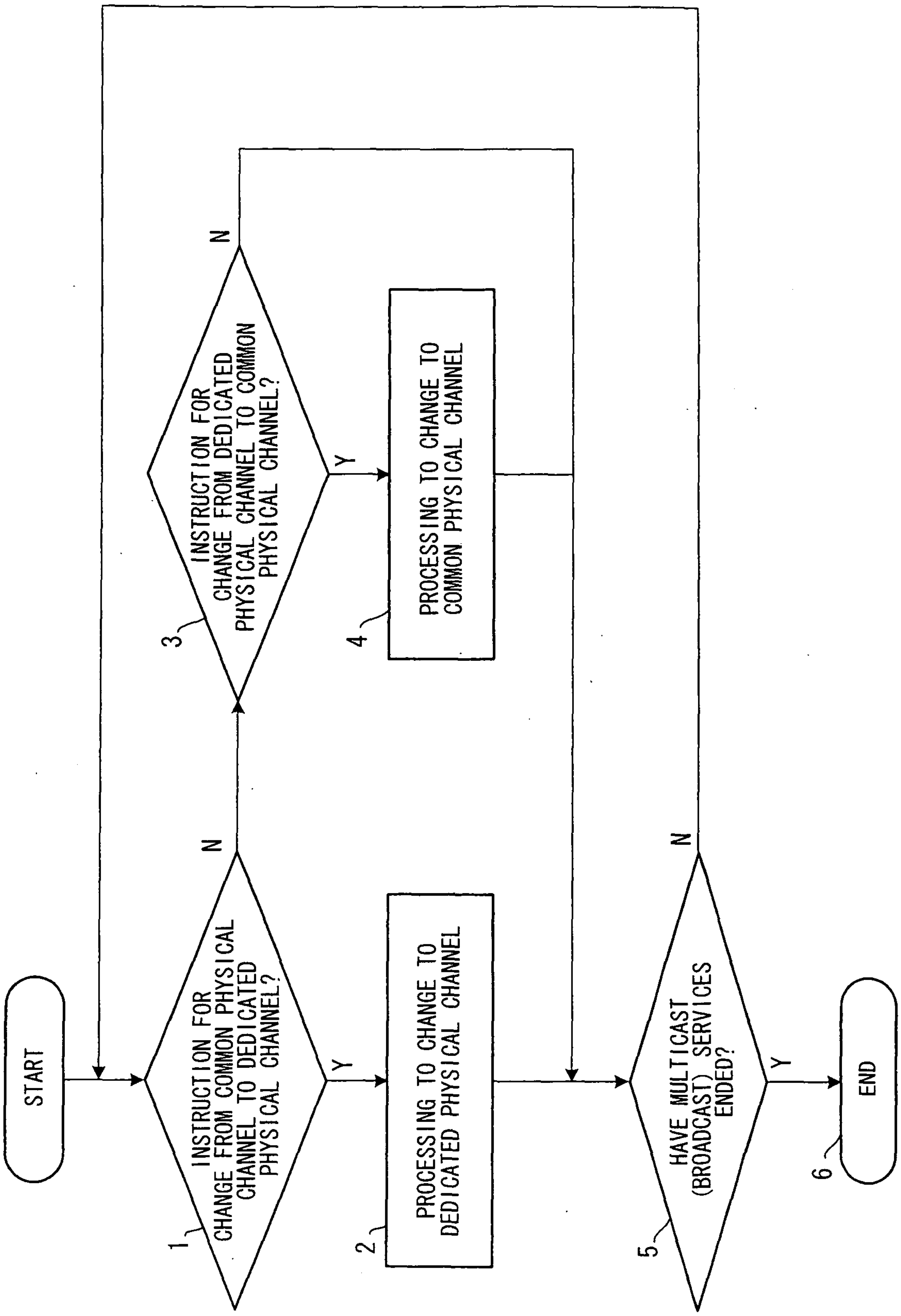
START
INSTRUCTION FOR CHANGE FROM COMMON PHYSICAL CHANNEL TO DEDICATED PHYSICAL CHANNEL?
1
Y
N
PROCESSING TO CHANGE TO DEDICATED PHYSICAL CHANNEL
2
INSTRUCTION FOR CHANGE FROM DEDICATED PHYSICAL CHANNEL TO COMMON PHYSICAL CHANNEL?
3
Y
N
PROCESSING TO CHANGE TO COMMON PHYSICAL CHANNEL
4
HAVE MULTICAST (BROADCAST) SERVICES ENDED?
5
Y
N
END
6

FIG. 13

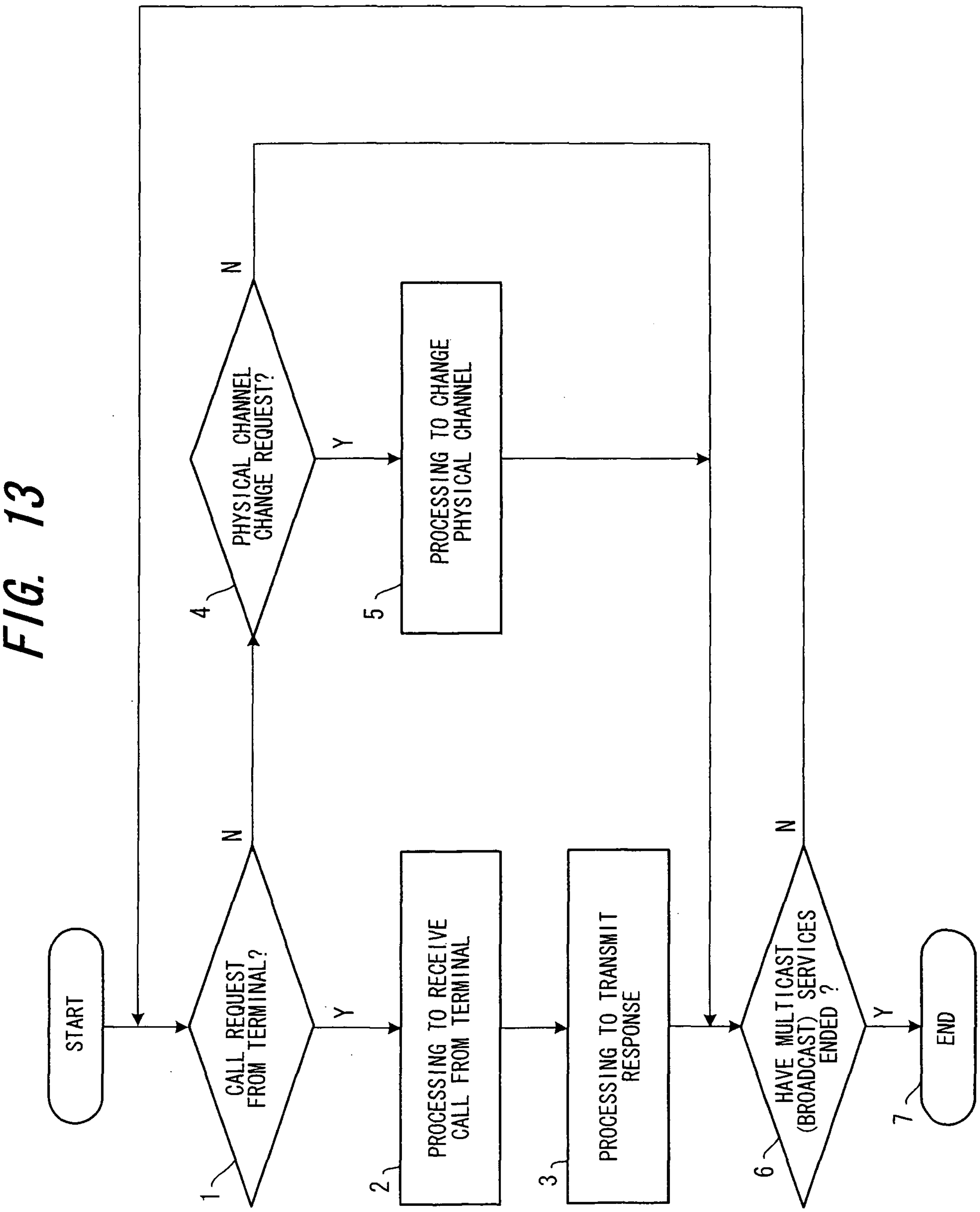
START
CALL REQUEST FROM TERMINAL?
1
Y
N
PROCESSING TO RECEIVE CALL FROM TERMINAL
2
PROCESSING TO TRANSMIT RESPONSE
3
PHYSICAL CHANNEL CHANGE REQUEST?
4
PROCESSING TO CHANGE PHYSICAL CHANNEL
5
HAVE MULTICAST (BROADCAST) SERVICES ENDED ?
6
END
7

FIG. 14

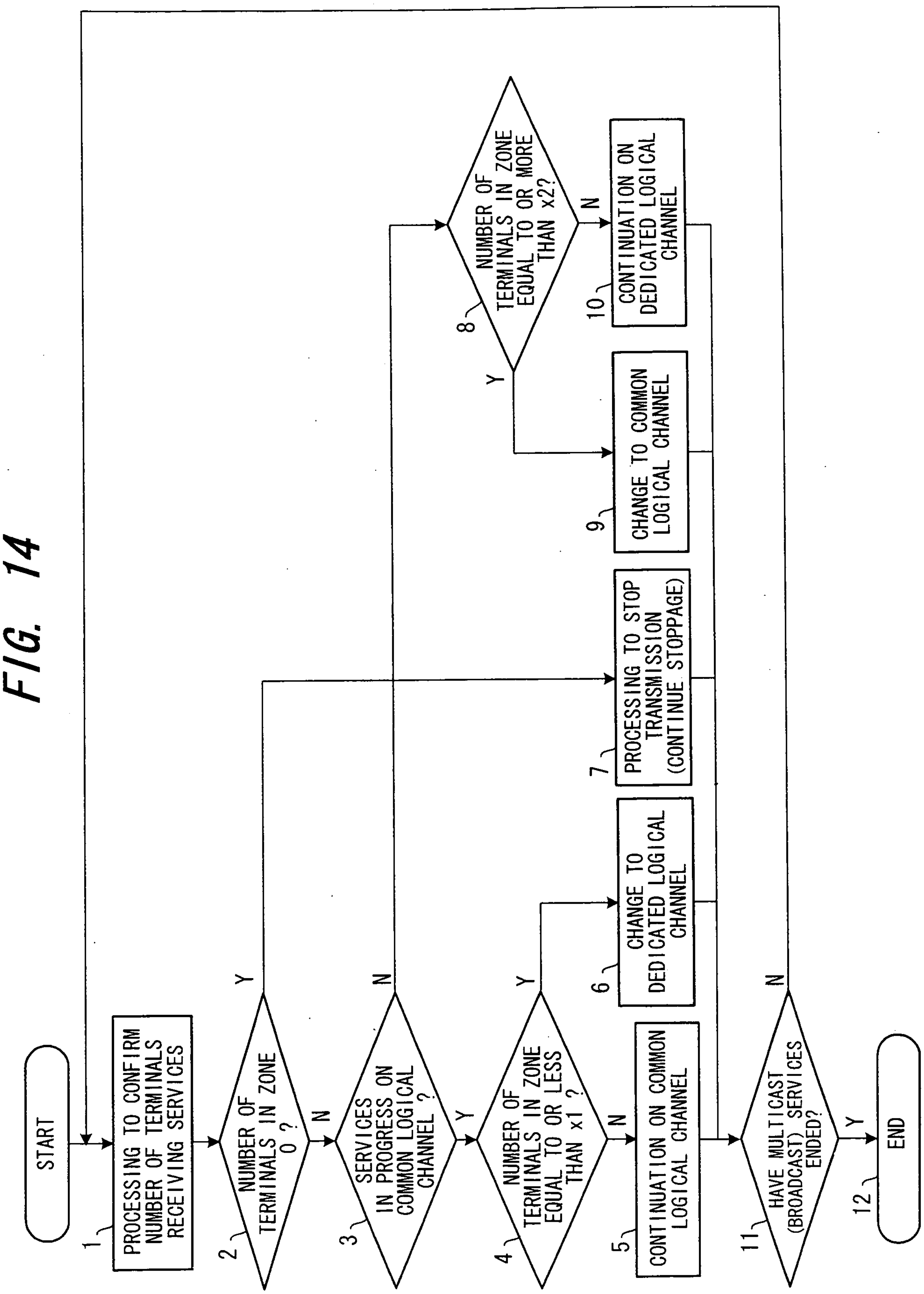
START
1
PROCESSING TO CONFIRM NUMBER OF TERMINALS RECEIVING SERVICES
2
NUMBER OF TERMINALS IN ZONE 0 ?
Y
N
3
SERVICES IN PROGRESS ON COMMON LOGICAL CHANNEL ?
N
Y
4
NUMBER OF TERMINALS IN ZONE EQUAL TO OR LESS THAN x1 ?
Y
N
5
CONTINUATION ON COMMON LOGICAL CHANNEL
6
CHANGE TO DEDICATED LOGICAL CHANNEL
7
PROCESSING TO STOP TRANSMISSION (CONTINUE STOPPAGE)
8
NUMBER OF TERMINALS IN ZONE EQUAL TO OR MORE THAN x2?
Y
N
9
CHANGE TO COMMON LOGICAL CHANNEL
10
CONTINUATION ON DEDICATED LOGICAL CHANNEL
11
HAVE MULTICAST (BROADCAST) SERVICES ENDED?
N
Y
12
END

FIG. 15

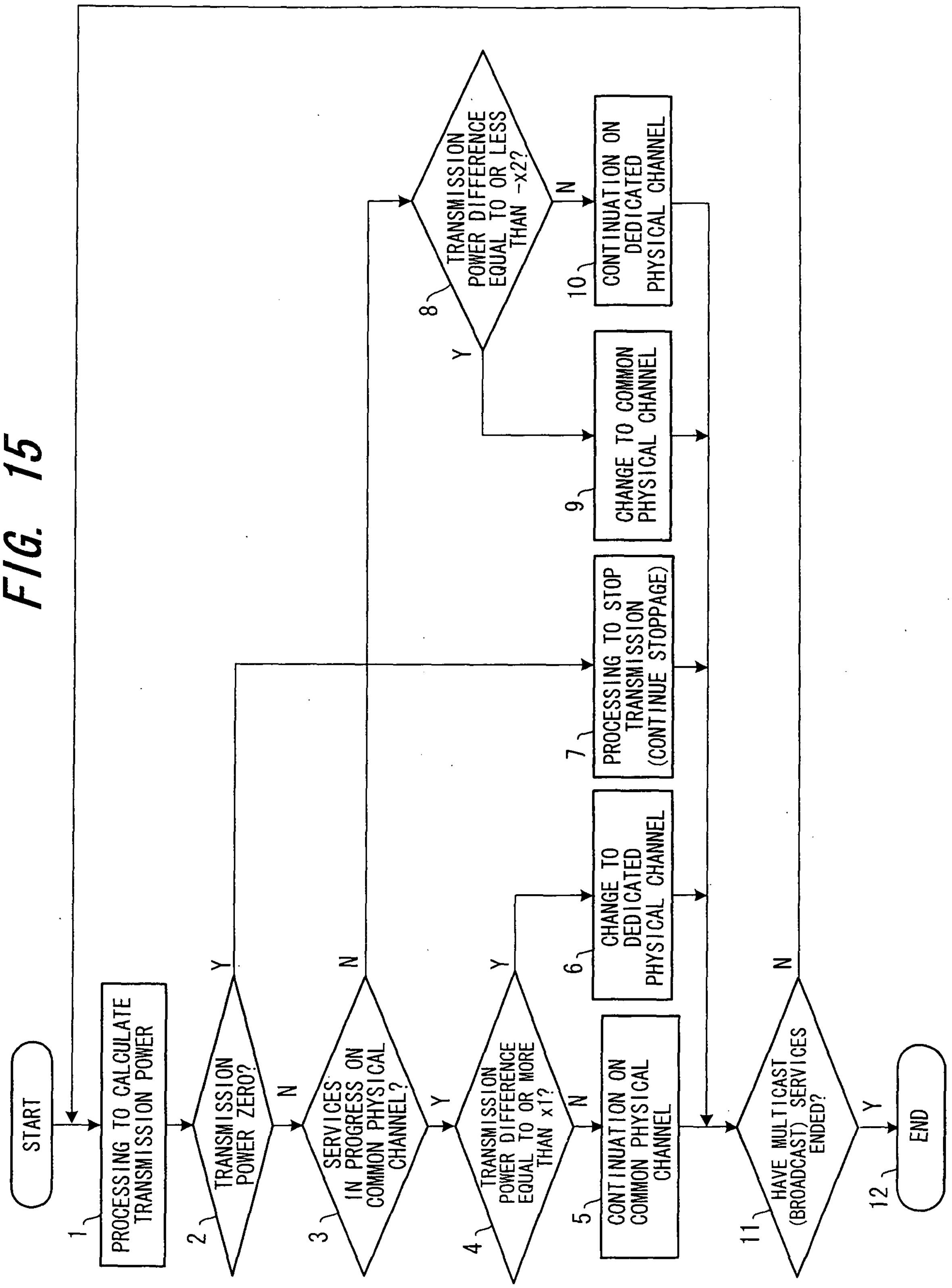
START
PROCESSING TO CALCULATE TRANSMISSION POWER
1
TRANSMISSION POWER ZERO?
2
Y
N
SERVICES IN PROGRESS ON COMMON PHYSICAL CHANNEL?
3
Y
N
TRANSMISSION POWER DIFFERENCE EQUAL TO OR MORE THAN x1?
4
Y
N
CONTINUATION ON COMMON PHYSICAL CHANNEL
5
CHANGE TO DEDICATED PHYSICAL CHANNEL
6
PROCESSING TO STOP TRANSMISSION (CONTINUE STOPPAGE)
7
TRANSMISSION POWER DIFFERENCE EQUAL TO OR LESS THAN −x2?
8
Y
N
CHANGE TO COMMON PHYSICAL CHANNEL
9
CONTINUATION ON DEDICATED PHYSICAL CHANNEL
10
HAVE MULTICAST (BROADCAST) SERVICES ENDED?
11
Y
N
END
12

FIG. 16

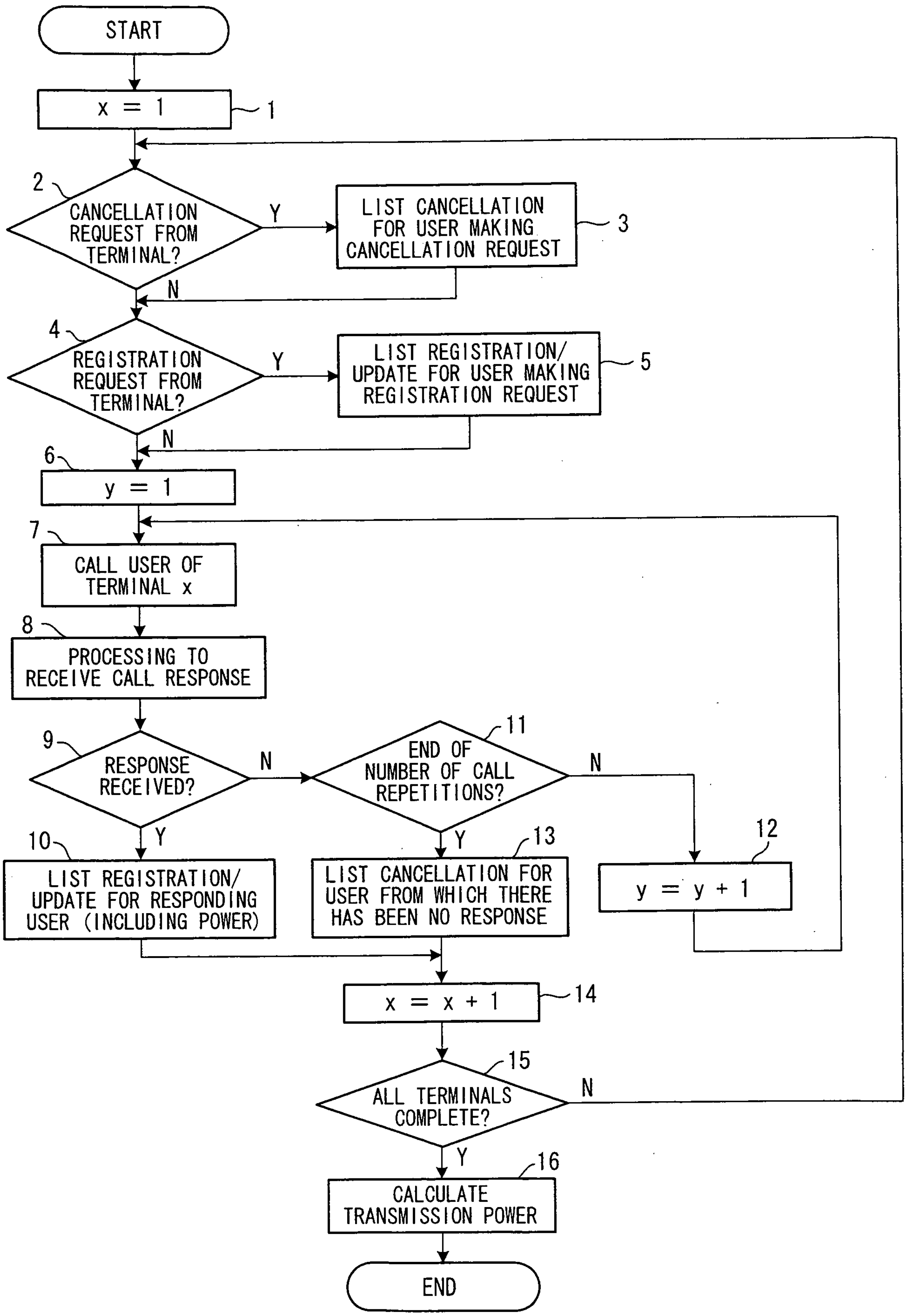
START
x = 1
1
2
CANCELLATION REQUEST FROM TERMINAL?
Y
N
LIST CANCELLATION FOR USER MAKING CANCELLATION REQUEST
3
4
REGISTRATION REQUEST FROM TERMINAL?
Y
N
LIST REGISTRATION/ UPDATE FOR USER MAKING REGISTRATION REQUEST
5
6
y = 1
7
CALL USER OF TERMINAL x
8
PROCESSING TO RECEIVE CALL RESPONSE
9
RESPONSE RECEIVED?
N
Y
11
END OF NUMBER OF CALL REPETITIONS?
N
Y
10
LIST REGISTRATION/ UPDATE FOR RESPONDING USER (INCLUDING POWER)
13
LIST CANCELLATION FOR USER FROM WHICH THERE HAS BEEN NO RESPONSE
12
y = y + 1
x = x + 1
14
15
ALL TERMINALS COMPLETE?
N
Y
16
CALCULATE TRANSMISSION POWER
END

FIG. 17

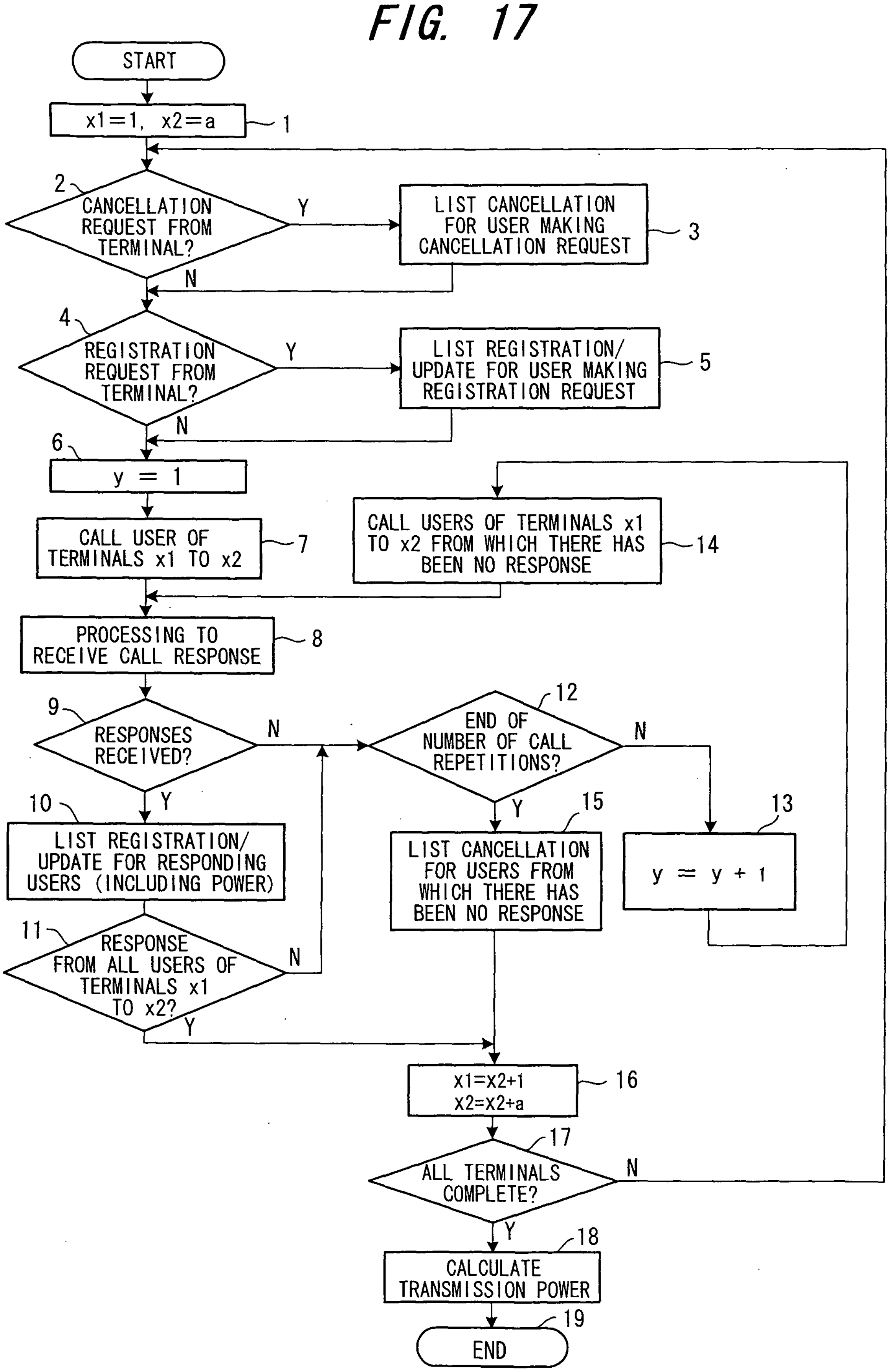
START
x1=1, x2=a
1
2
CANCELLATION REQUEST FROM TERMINAL?
Y
LIST CANCELLATION FOR USER MAKING CANCELLATION REQUEST
3
N
4
REGISTRATION REQUEST FROM TERMINAL?
Y
LIST REGISTRATION/ UPDATE FOR USER MAKING REGISTRATION REQUEST
5
N
6
y = 1
CALL USER OF TERMINALS x1 TO x2
7
CALL USERS OF TERMINALS x1 TO x2 FROM WHICH THERE HAS BEEN NO RESPONSE
14
PROCESSING TO RECEIVE CALL RESPONSE
8
9
RESPONSES RECEIVED?
N
12
END OF NUMBER OF CALL REPETITIONS?
N
Y
10
LIST REGISTRATION/ UPDATE FOR RESPONDING USERS (INCLUDING POWER)
Y
15
LIST CANCELLATION FOR USERS FROM WHICH THERE HAS BEEN NO RESPONSE
13
y = y + 1
11
RESPONSE FROM ALL USERS OF TERMINALS x1 TO x2?
N
Y
x1=x2+1
x2=x2+a
16
17
ALL TERMINALS COMPLETE?
N
Y
18
CALCULATE TRANSMISSION POWER
19
END

FIG. 18

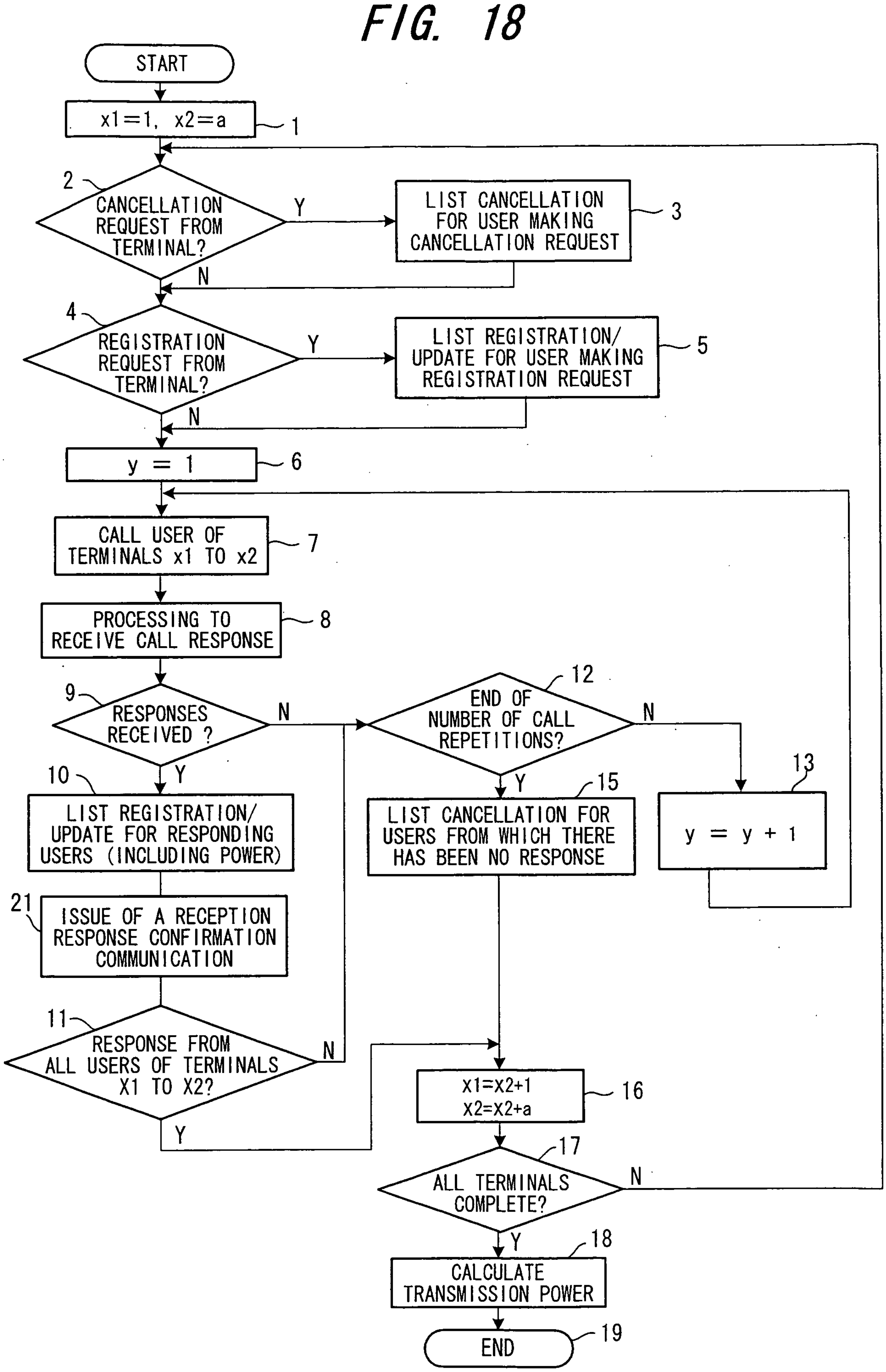
START
x1=1, x2=a
1
2
CANCELLATION REQUEST FROM TERMINAL?
Y
N
LIST CANCELLATION FOR USER MAKING CANCELLATION REQUEST
3
4
REGISTRATION REQUEST FROM TERMINAL?
Y
N
LIST REGISTRATION/ UPDATE FOR USER MAKING REGISTRATION REQUEST
5
y = 1
6
CALL USER OF TERMINALS x1 TO x2
7
PROCESSING TO RECEIVE CALL RESPONSE
8
9
RESPONSES RECEIVED ?
N
Y
12
END OF NUMBER OF CALL REPETITIONS?
N
Y
10
LIST REGISTRATION/ UPDATE FOR RESPONDING USERS (INCLUDING POWER)
15
LIST CANCELLATION FOR USERS FROM WHICH THERE HAS BEEN NO RESPONSE
13
y = y + 1
21
ISSUE OF A RECEPTION RESPONSE CONFIRMATION COMMUNICATION
11
RESPONSE FROM ALL USERS OF TERMINALS X1 TO X2?
N
Y
x1=x2+1
x2=x2+a
16
17
ALL TERMINALS COMPLETE?
N
Y
18
CALCULATE TRANSMISSION POWER
END
19

FIG. 19

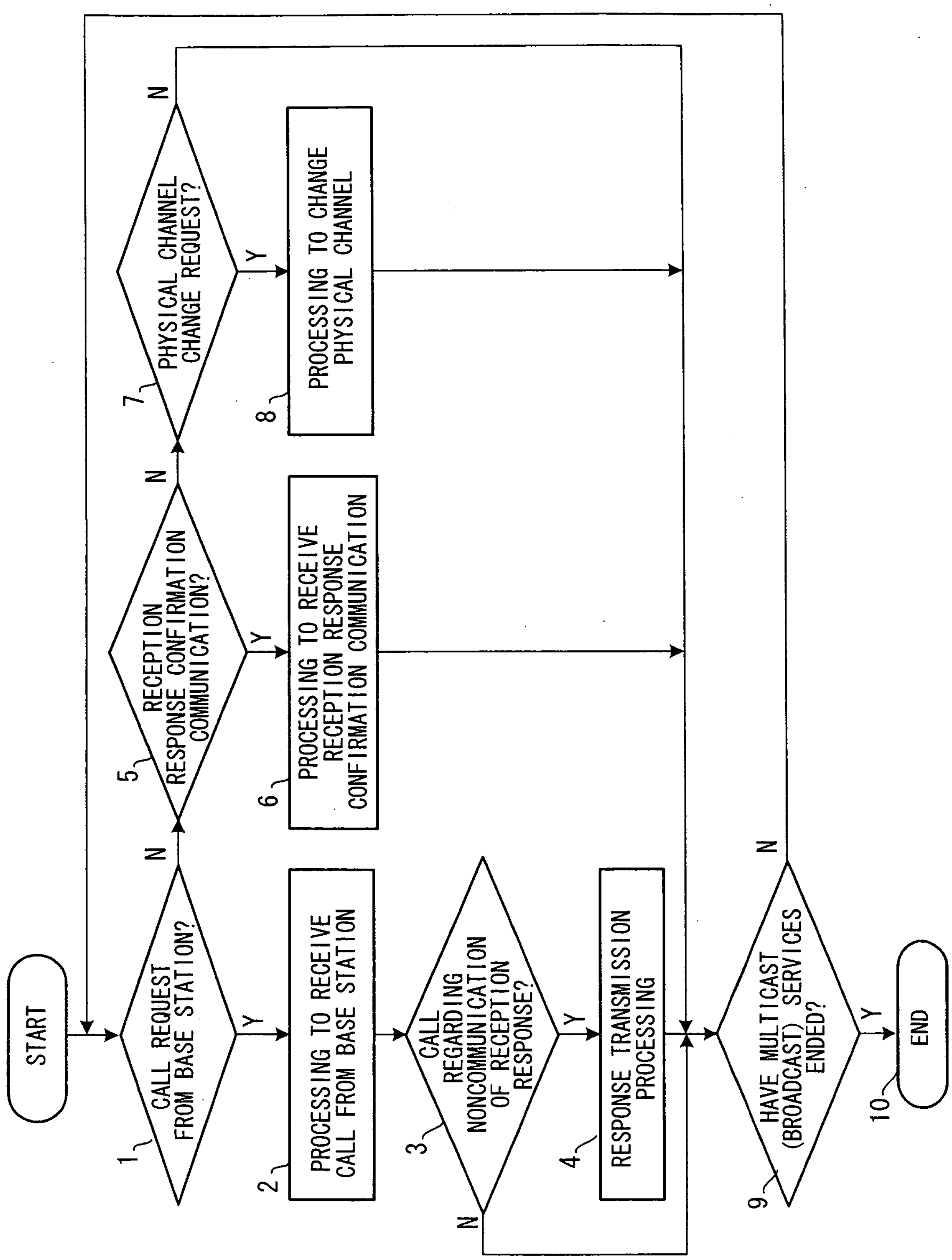
START
CALL REQUEST FROM BASE STATION?
1
Y
N
PROCESSING TO RECEIVE CALL FROM BASE STATION
2
CALL REGARDING NONCOMMUNICATION OF RECEPTION RESPONSE?
3
Y
N
RESPONSE TRANSMISSION PROCESSING
4
RECEPTION RESPONSE CONFIRMATION COMMUNICATION?
5
Y
N
PROCESSING TO RECEIVE RECEPTION RESPONSE CONFIRMATION COMMUNICATION
6
PHYSICAL CHANNEL CHANGE REQUEST?
7
Y
N
PROCESSING TO CHANGE PHYSICAL CHANNEL
8
HAVE MULTICAST (BROADCAST) SERVICES ENDED?
9
Y
N
END
10

FIG. 20

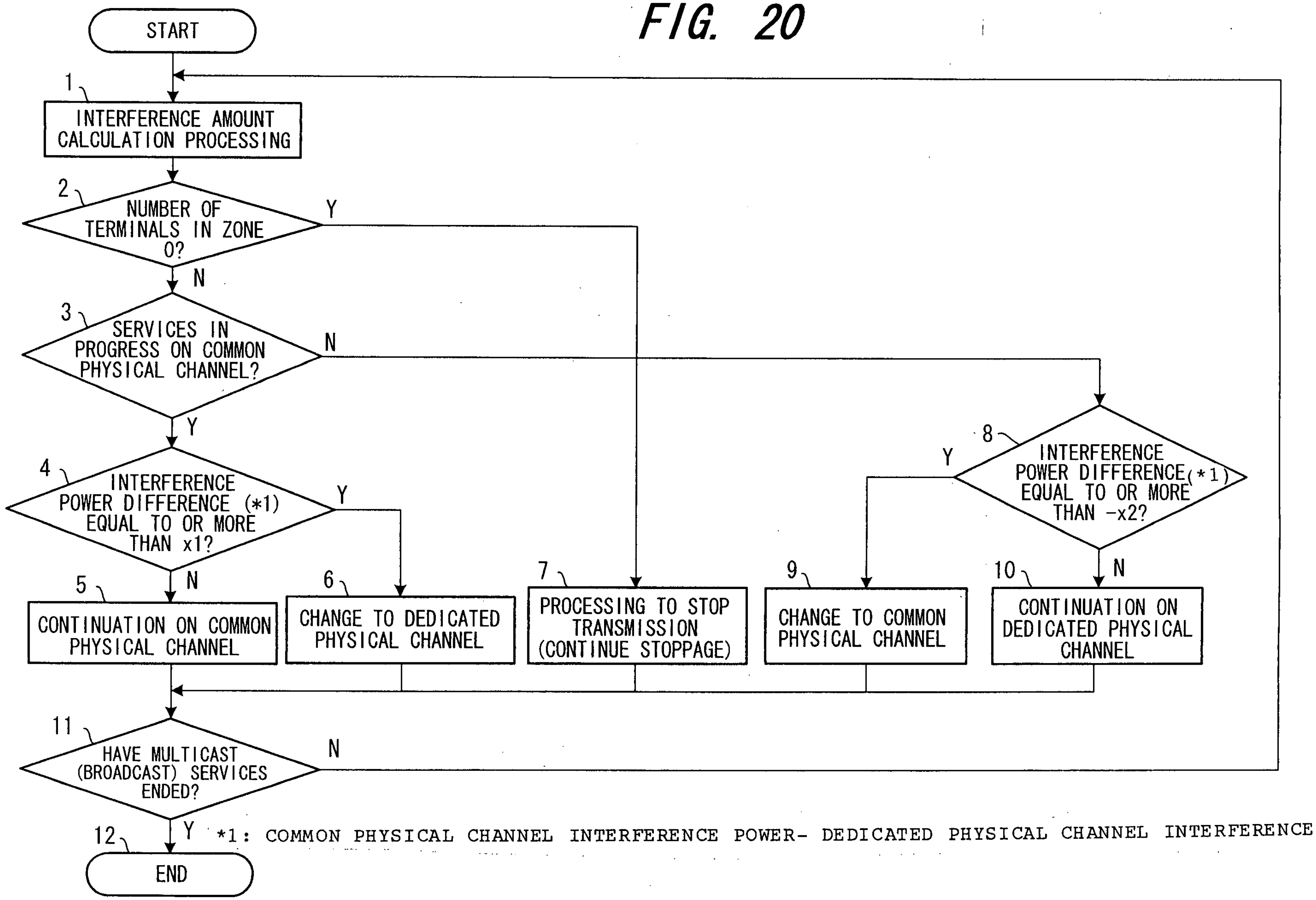


*1: COMMON PHYSICAL CHANNEL INTERFERENCE POWER- DEDICATED PHYSICAL CHANNEL INTERFERENCE POWER

FIG. 21

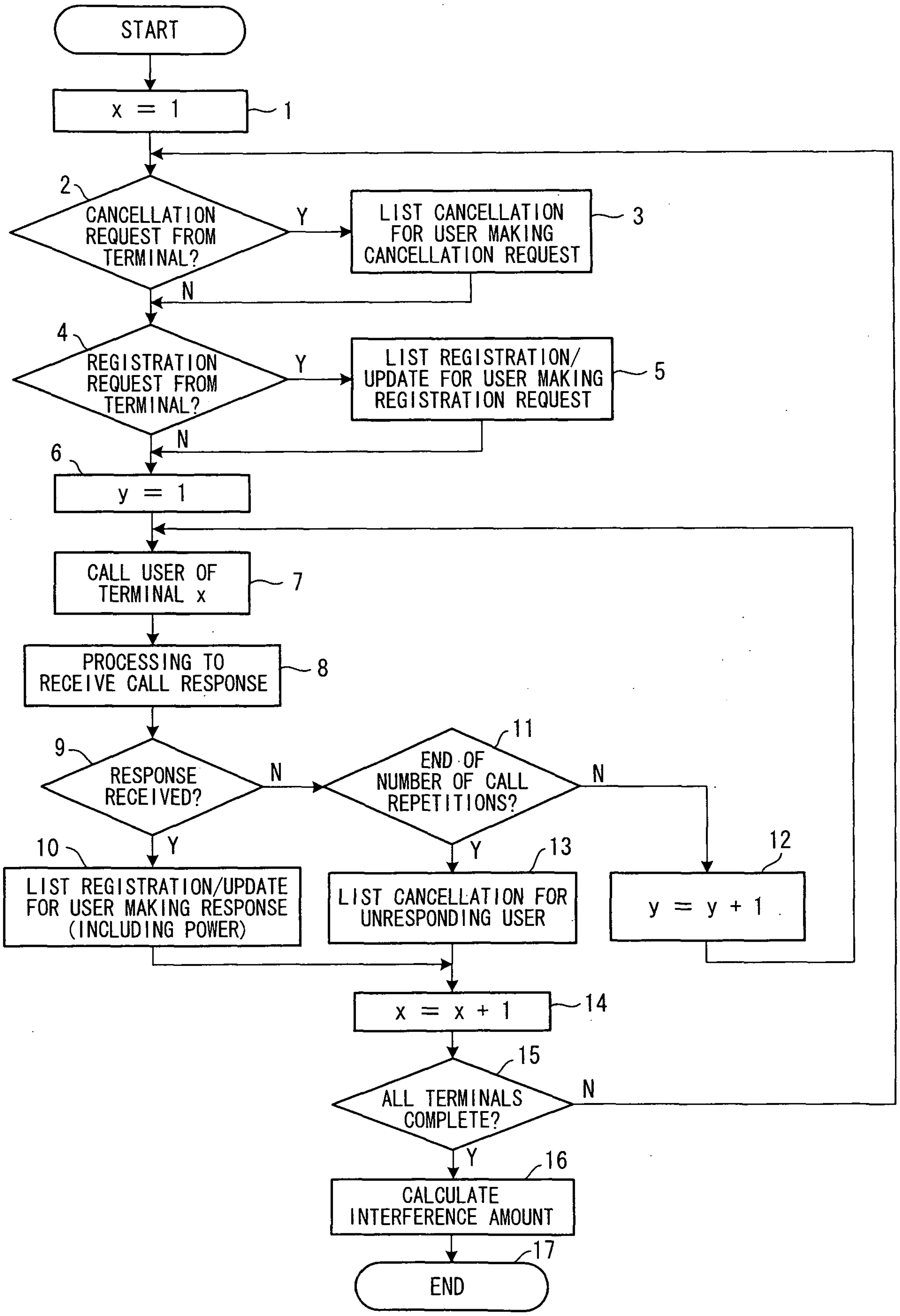
START
x = 1
1
2
CANCELLATION REQUEST FROM TERMINAL?
Y
LIST CANCELLATION FOR USER MAKING CANCELLATION REQUEST
3
N
4
REGISTRATION REQUEST FROM TERMINAL?
Y
LIST REGISTRATION/ UPDATE FOR USER MAKING REGISTRATION REQUEST
5
N
6
y = 1
CALL USER OF TERMINAL x
7
PROCESSING TO RECEIVE CALL RESPONSE
8
9
RESPONSE RECEIVED?
N
11
END OF NUMBER OF CALL REPETITIONS?
N
10
Y
LIST REGISTRATION/UPDATE FOR USER MAKING RESPONSE (INCLUDING POWER)
Y
13
LIST CANCELLATION FOR UNRESPONDING USER
12
y = y + 1
x = x + 1
14
15
ALL TERMINALS COMPLETE?
N
Y
16
CALCULATE INTERFERENCE AMOUNT
17
END

FIG. 22

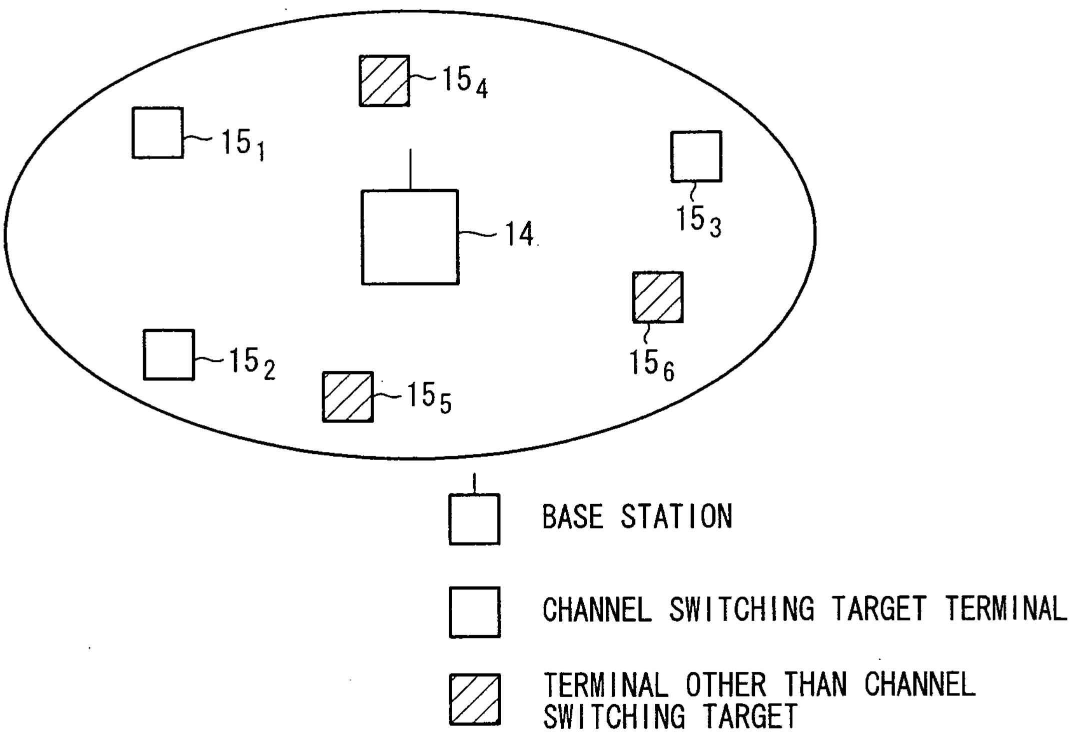

$15_4$
$15_1$
$15_3$
14
$15_2$
$15_5$
$15_6$
BASE STATION
CHANNEL SWITCHING TARGET TERMINAL
TERMINAL OTHER THAN CHANNEL SWITCHING TARGET

FIG. 23

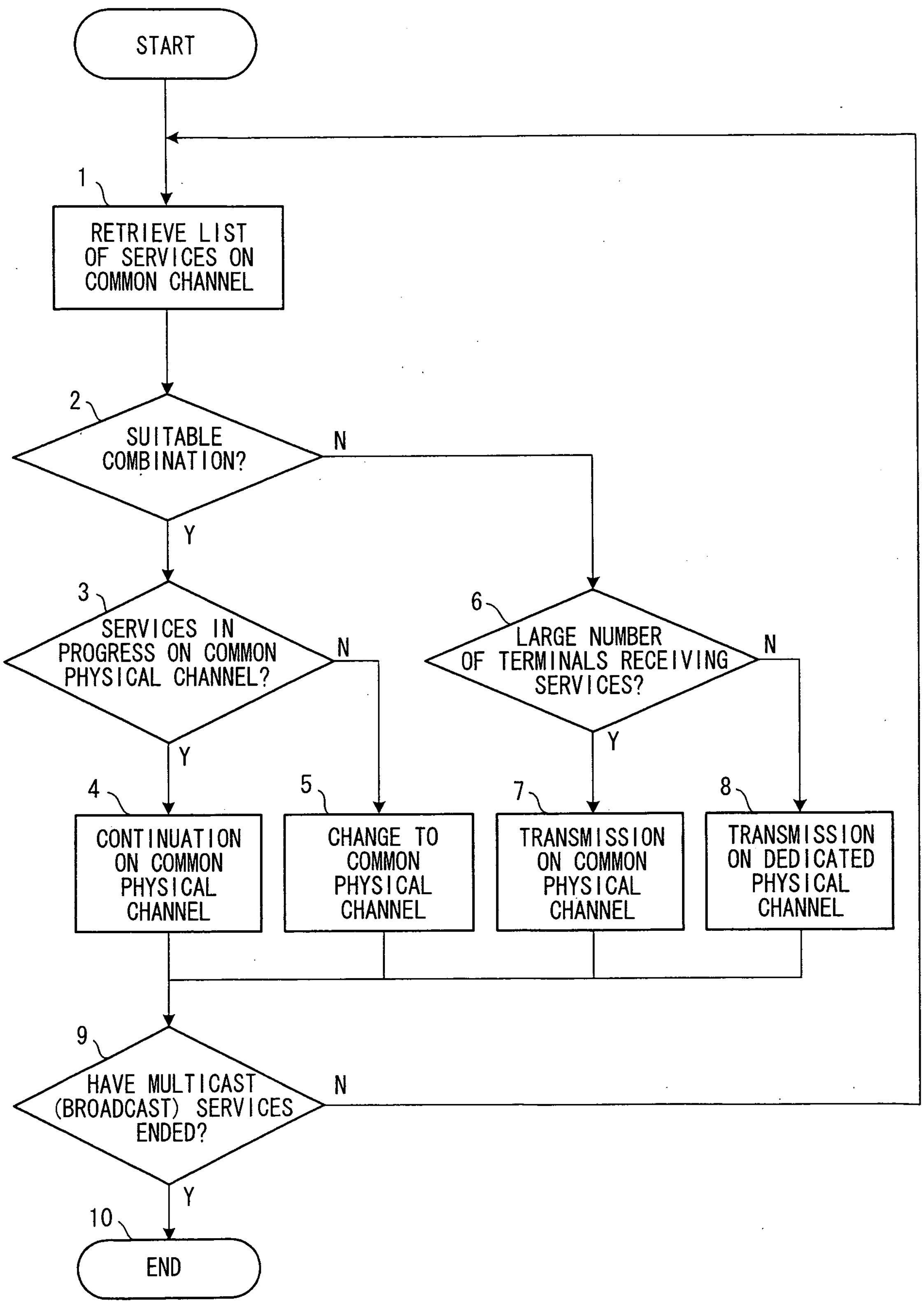
START
1
RETRIEVE LIST OF SERVICES ON COMMON CHANNEL
2
SUITABLE COMBINATION?
N
Y
3
SERVICES IN PROGRESS ON COMMON PHYSICAL CHANNEL?
N
Y
6
LARGE NUMBER OF TERMINALS RECEIVING SERVICES?
N
Y
4
CONTINUATION ON COMMON PHYSICAL CHANNEL
5
CHANGE TO COMMON PHYSICAL CHANNEL
7
TRANSMISSION ON COMMON PHYSICAL CHANNEL
8
TRANSMISSION ON DEDICATED PHYSICAL CHANNEL
9
HAVE MULTICAST (BROADCAST) SERVICES ENDED?
N
Y
10
END

FIG. 24

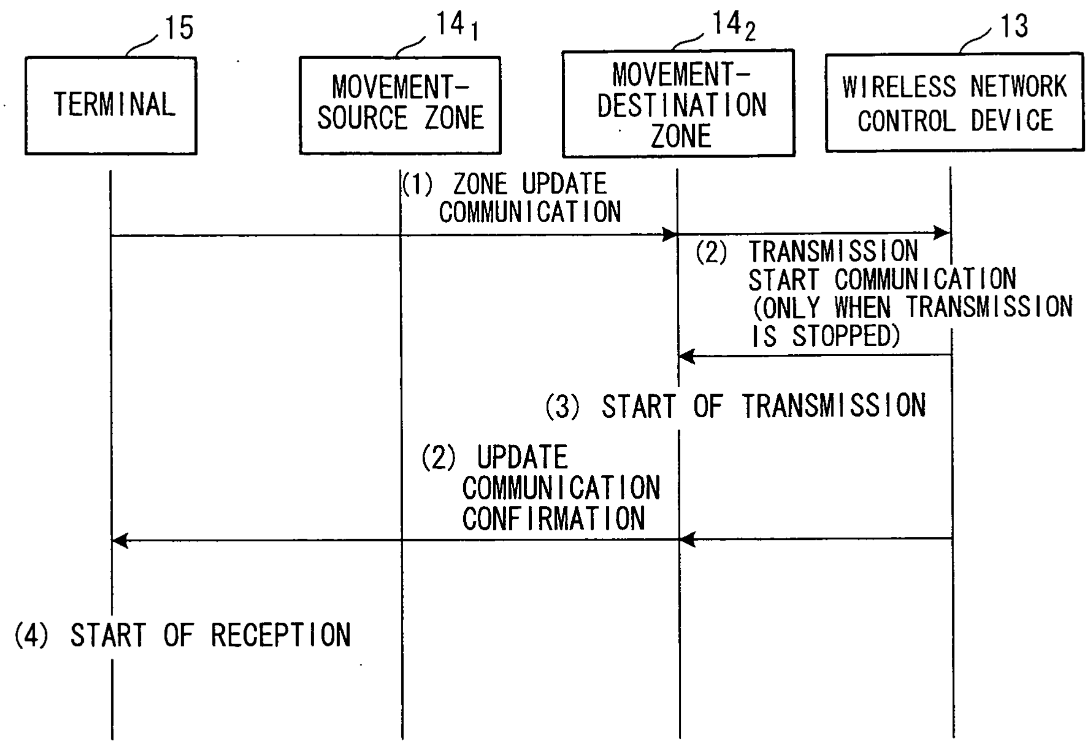
15
TERMINAL
14₁
MOVEMENT-SOURCE ZONE
14₂
MOVEMENT-DESTINATION ZONE
13
WIRELESS NETWORK CONTROL DEVICE
(1) ZONE UPDATE COMMUNICATION
(2) TRANSMISSION START COMMUNICATION (ONLY WHEN TRANSMISSION IS STOPPED)
(3) START OF TRANSMISSION
(2) UPDATE COMMUNICATION CONFIRMATION
(4) START OF RECEPTION

FIG. 25

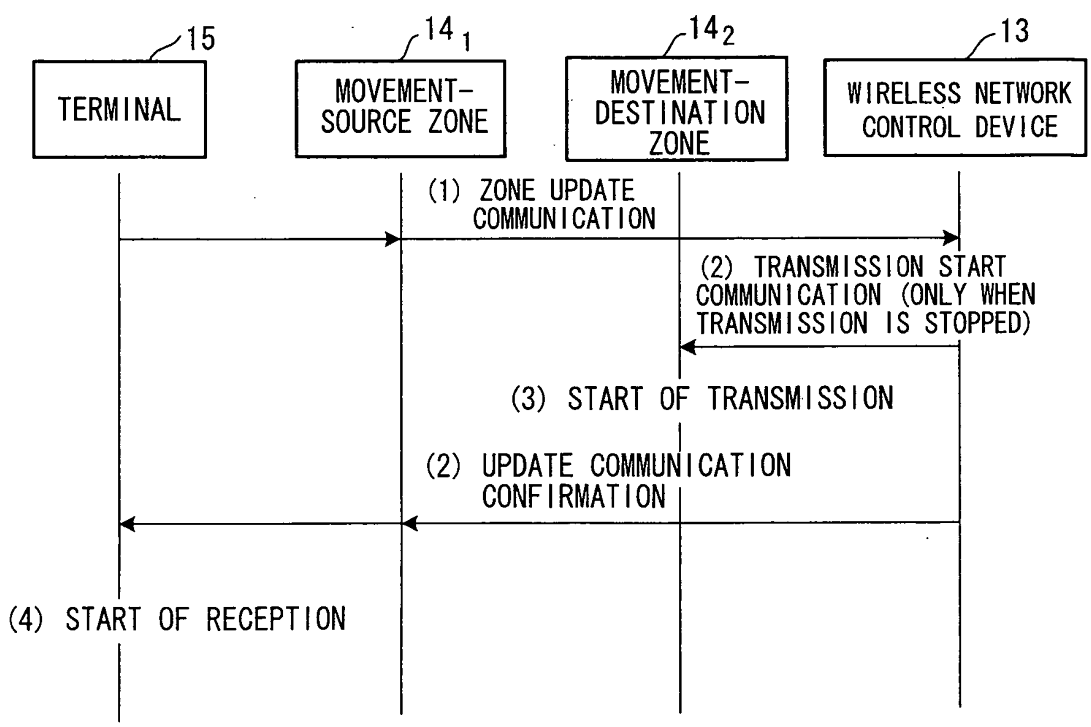
15
TERMINAL
14₁
MOVEMENT-SOURCE ZONE
14₂
MOVEMENT-DESTINATION ZONE
13
WIRELESS NETWORK CONTROL DEVICE
(1) ZONE UPDATE COMMUNICATION
(2) TRANSMISSION START COMMUNICATION (ONLY WHEN TRANSMISSION IS STOPPED)
(3) START OF TRANSMISSION
(2) UPDATE COMMUNICATION CONFIRMATION
(4) START OF RECEPTION

FIG. 26

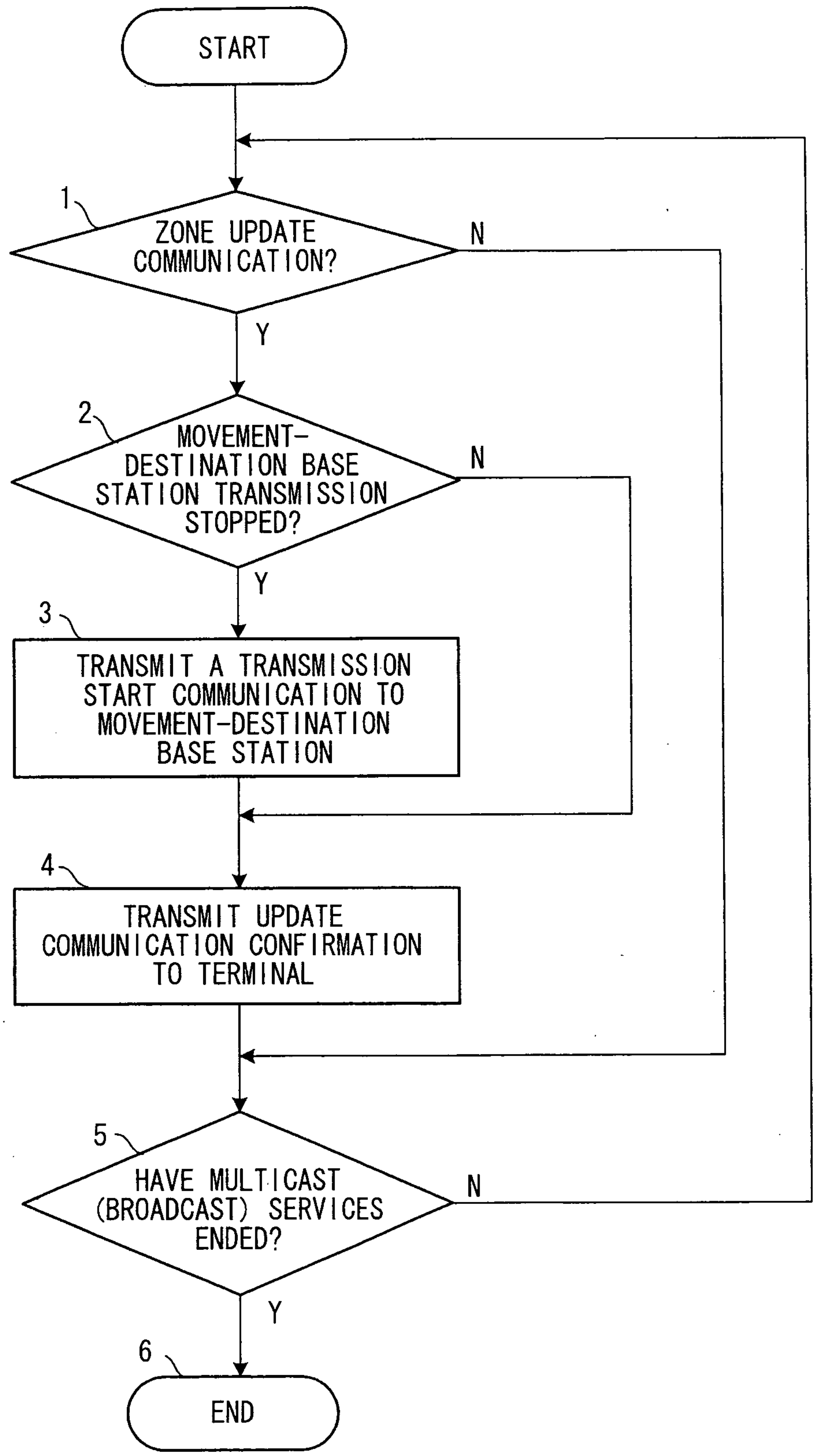
START
1
ZONE UPDATE COMMUNICATION?
N
Y
2
MOVEMENT-DESTINATION BASE STATION TRANSMISSION STOPPED?
N
Y
3
TRANSMIT A TRANSMISSION START COMMUNICATION TO MOVEMENT-DESTINATION BASE STATION
4
TRANSMIT UPDATE COMMUNICATION CONFIRMATION TO TERMINAL
5
HAVE MULTICAST (BROADCAST) SERVICES ENDED?
N
Y
6
END

FIG. 27

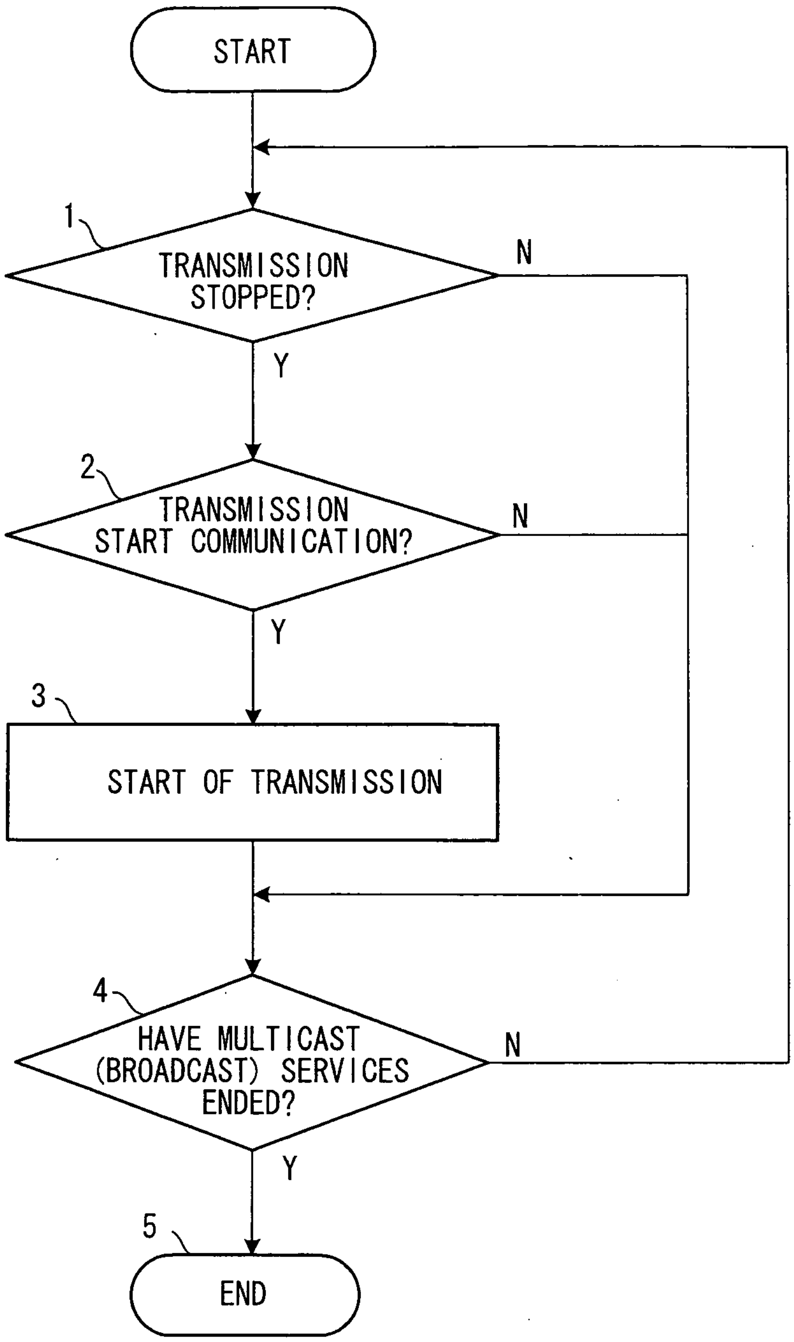
START
1
TRANSMISSION STOPPED?
N
Y
2
TRANSMISSION START COMMUNICATION?
N
Y
3
START OF TRANSMISSION
4
HAVE MULTICAST (BROADCAST) SERVICES ENDED?
N
Y
5
END

FIG. 28

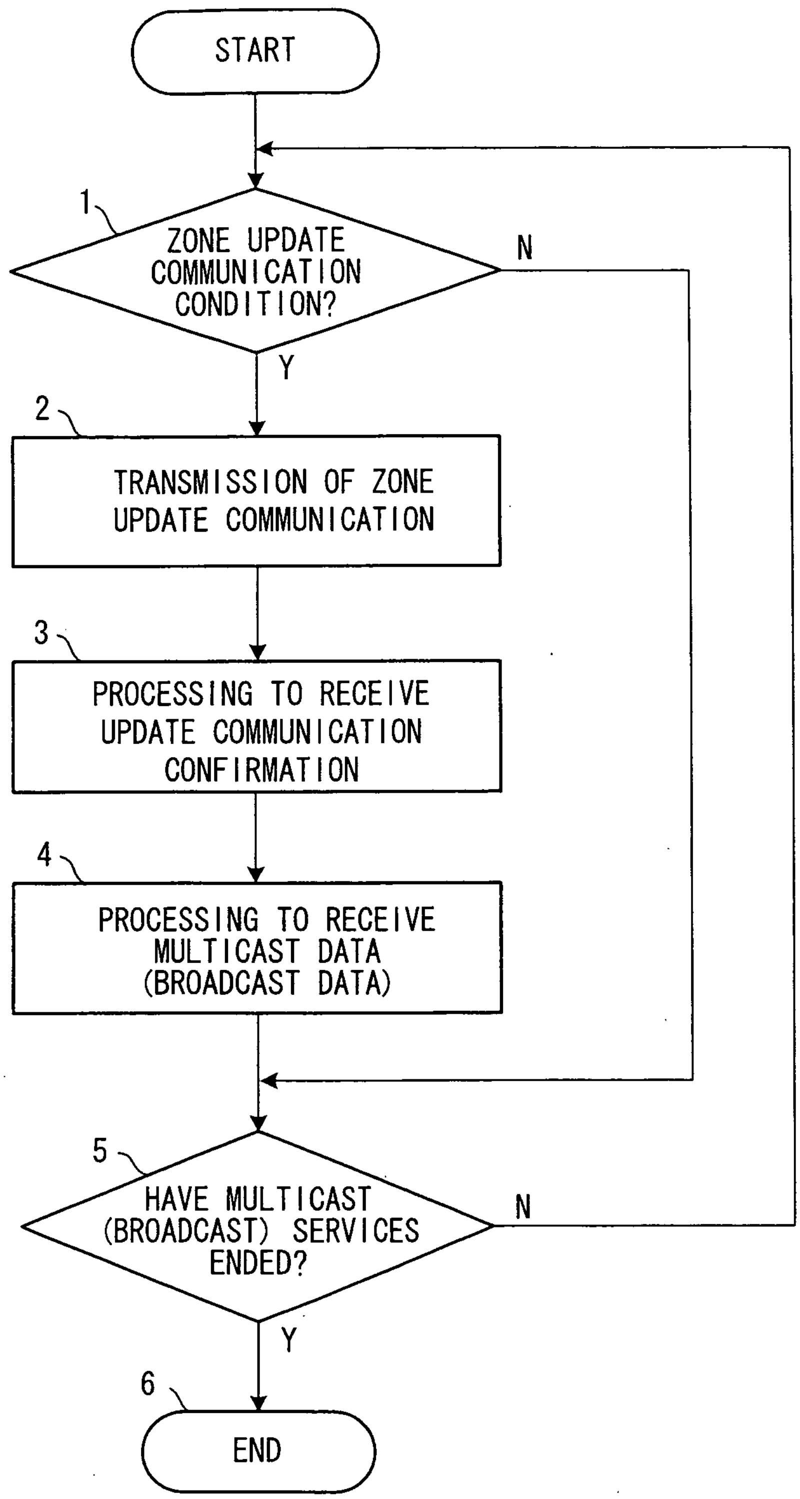
START
1
ZONE UPDATE COMMUNICATION CONDITION?
N
Y
2
TRANSMISSION OF ZONE UPDATE COMMUNICATION
3
PROCESSING TO RECEIVE UPDATE COMMUNICATION CONFIRMATION
4
PROCESSING TO RECEIVE MULTICAST DATA (BROADCAST DATA)
5
HAVE MULTICAST (BROADCAST) SERVICES ENDED?
N
Y
6
END

FIG. 29

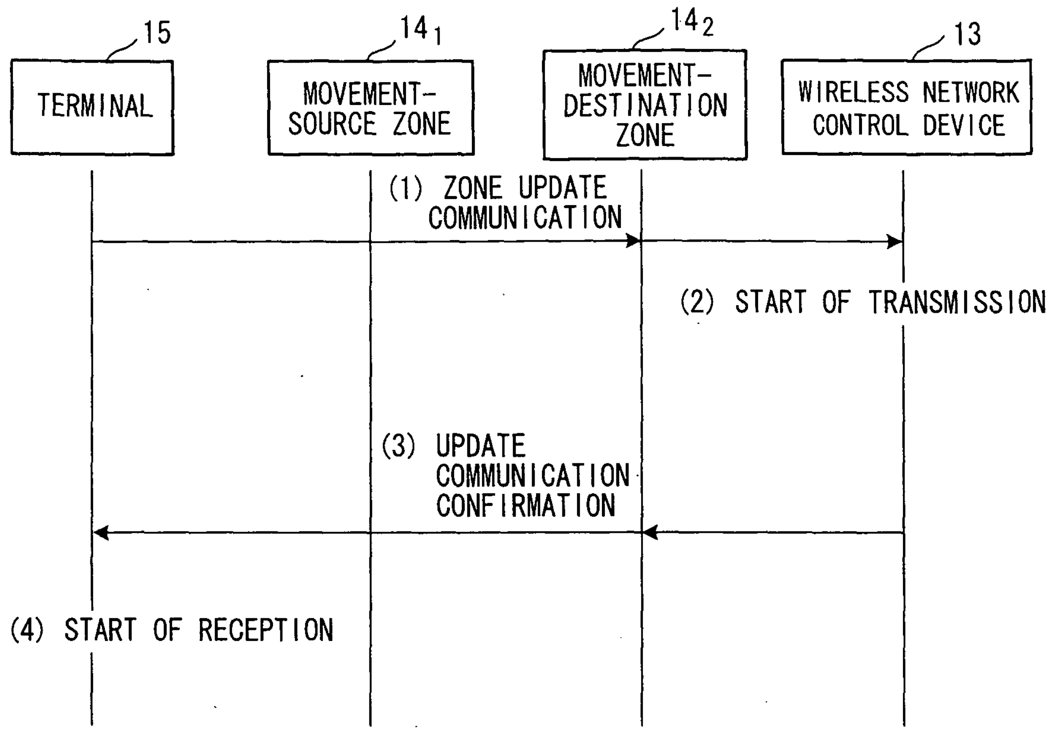
15
TERMINAL
14 1
MOVEMENT-SOURCE ZONE
14 2
MOVEMENT-DESTINATION ZONE
13
WIRELESS NETWORK CONTROL DEVICE
(1) ZONE UPDATE COMMUNICATION
(2) START OF TRANSMISSION
(3) UPDATE COMMUNICATION CONFIRMATION
(4) START OF RECEPTION

FIG. 30

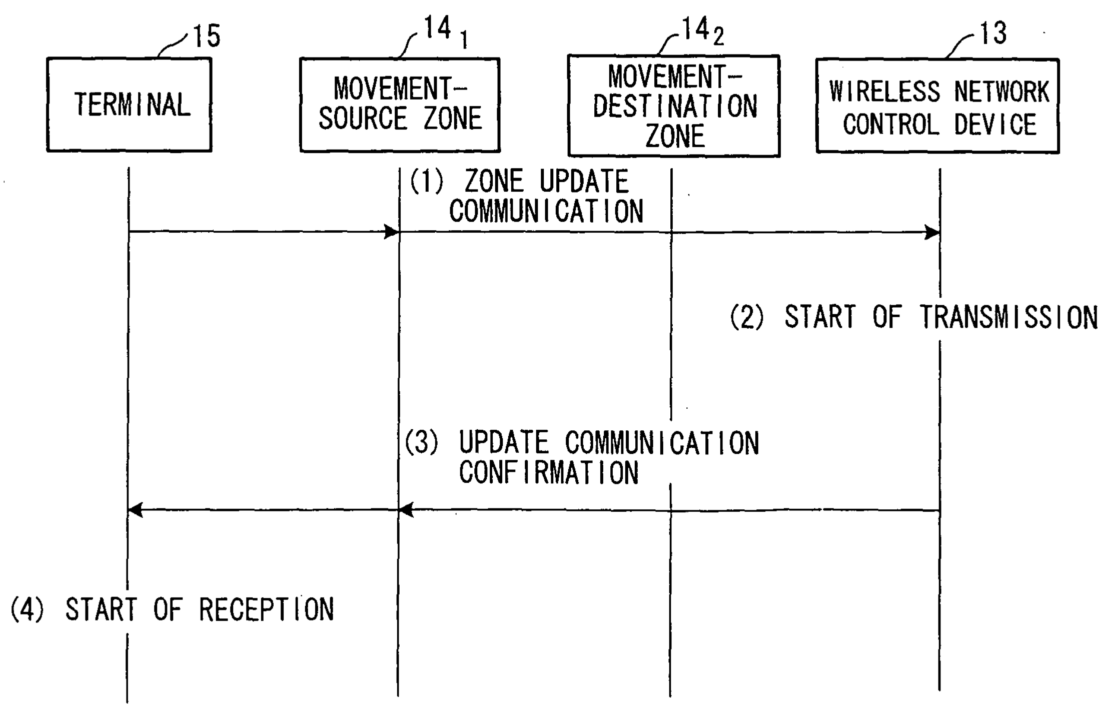
15
TERMINAL
14 1
MOVEMENT-SOURCE ZONE
14 2
MOVEMENT-DESTINATION ZONE
13
WIRELESS NETWORK CONTROL DEVICE
(1) ZONE UPDATE COMMUNICATION
(2) START OF TRANSMISSION
(3) UPDATE COMMUNICATION CONFIRMATION
(4) START OF RECEPTION

FIG. 31

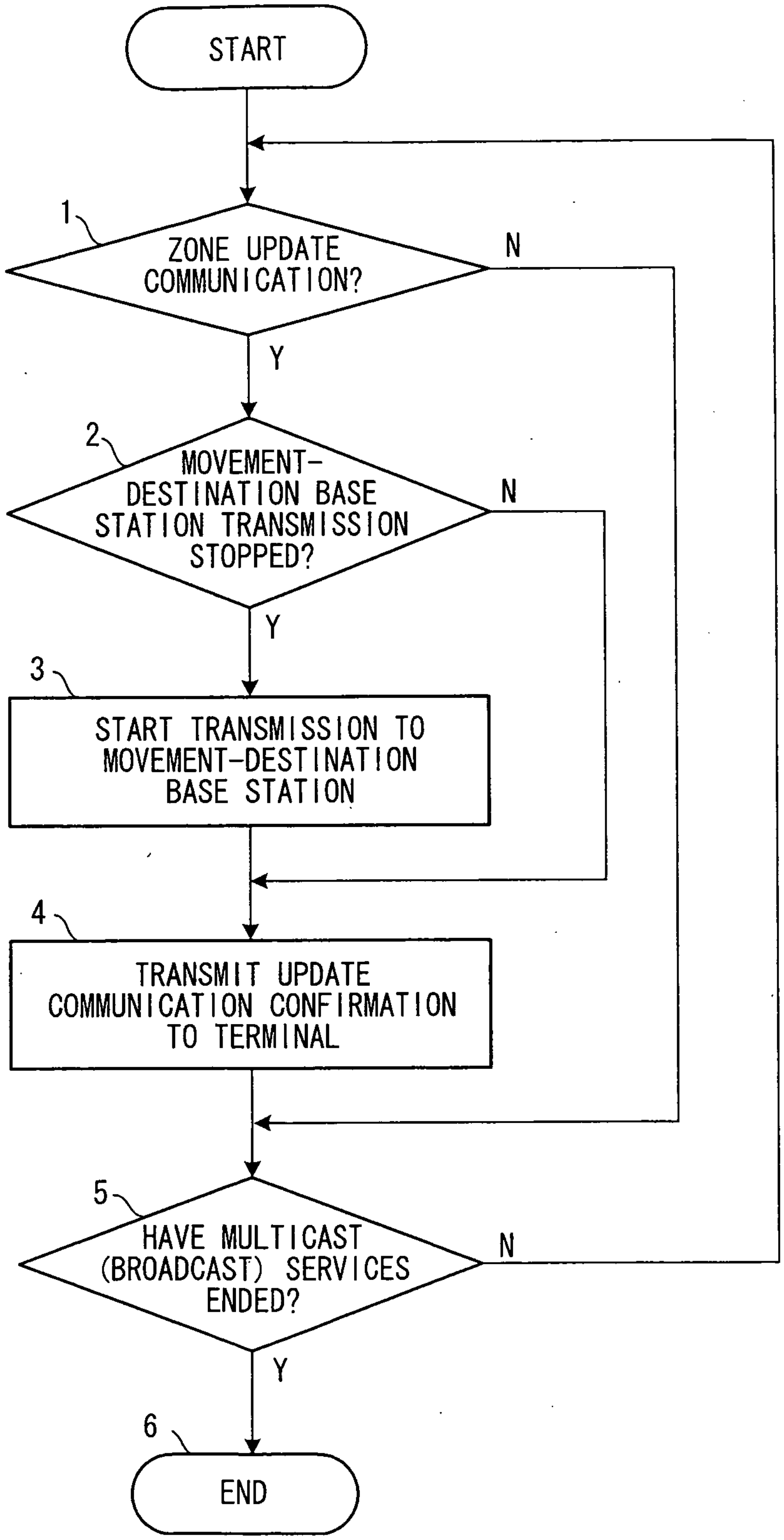
START
1
ZONE UPDATE COMMUNICATION?
N
Y
2
MOVEMENT-DESTINATION BASE STATION TRANSMISSION STOPPED?
N
Y
3
START TRANSMISSION TO MOVEMENT-DESTINATION BASE STATION
4
TRANSMIT UPDATE COMMUNICATION CONFIRMATION TO TERMINAL
5
HAVE MULTICAST (BROADCAST) SERVICES ENDED?
N
Y
6
END

FIG. 32

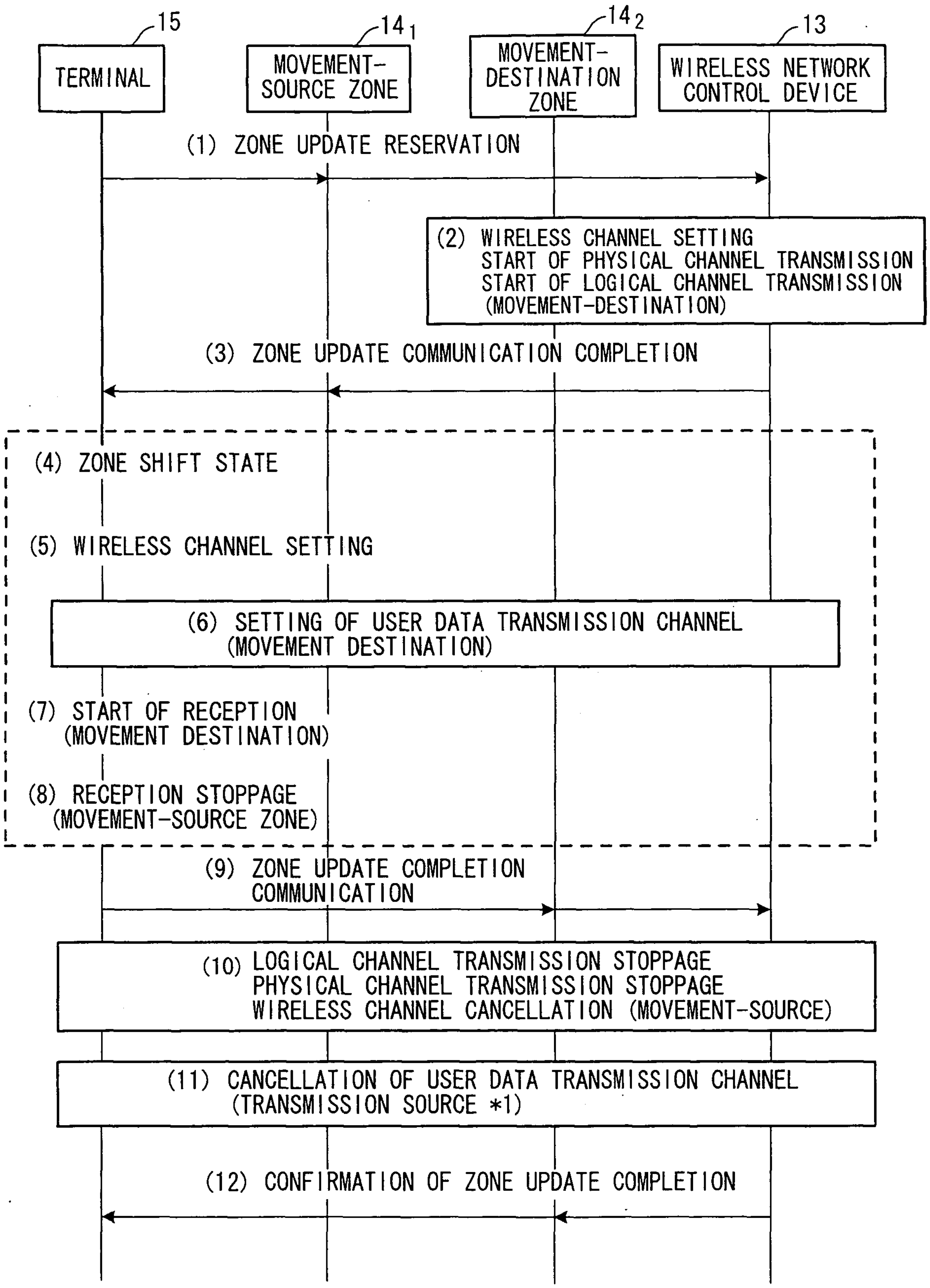
15
TERMINAL
14 1
MOVEMENT-SOURCE ZONE
14 2
MOVEMENT-DESTINATION ZONE
13
WIRELESS NETWORK CONTROL DEVICE
(1) ZONE UPDATE RESERVATION
(2) WIRELESS CHANNEL SETTING
START OF PHYSICAL CHANNEL TRANSMISSION
START OF LOGICAL CHANNEL TRANSMISSION
(MOVEMENT-DESTINATION)
(3) ZONE UPDATE COMMUNICATION COMPLETION
(4) ZONE SHIFT STATE
(5) WIRELESS CHANNEL SETTING
(6) SETTING OF USER DATA TRANSMISSION CHANNEL
(MOVEMENT DESTINATION)
(7) START OF RECEPTION
(MOVEMENT DESTINATION)
(8) RECEPTION STOPPAGE
(MOVEMENT-SOURCE ZONE)
(9) ZONE UPDATE COMPLETION
COMMUNICATION
(10) LOGICAL CHANNEL TRANSMISSION STOPPAGE
PHYSICAL CHANNEL TRANSMISSION STOPPAGE
WIRELESS CHANNEL CANCELLATION (MOVEMENT-SOURCE)
(11) CANCELLATION OF USER DATA TRANSMISSION CHANNEL
(TRANSMISSION SOURCE *1)
(12) CONFIRMATION OF ZONE UPDATE COMPLETION

FIG. 33

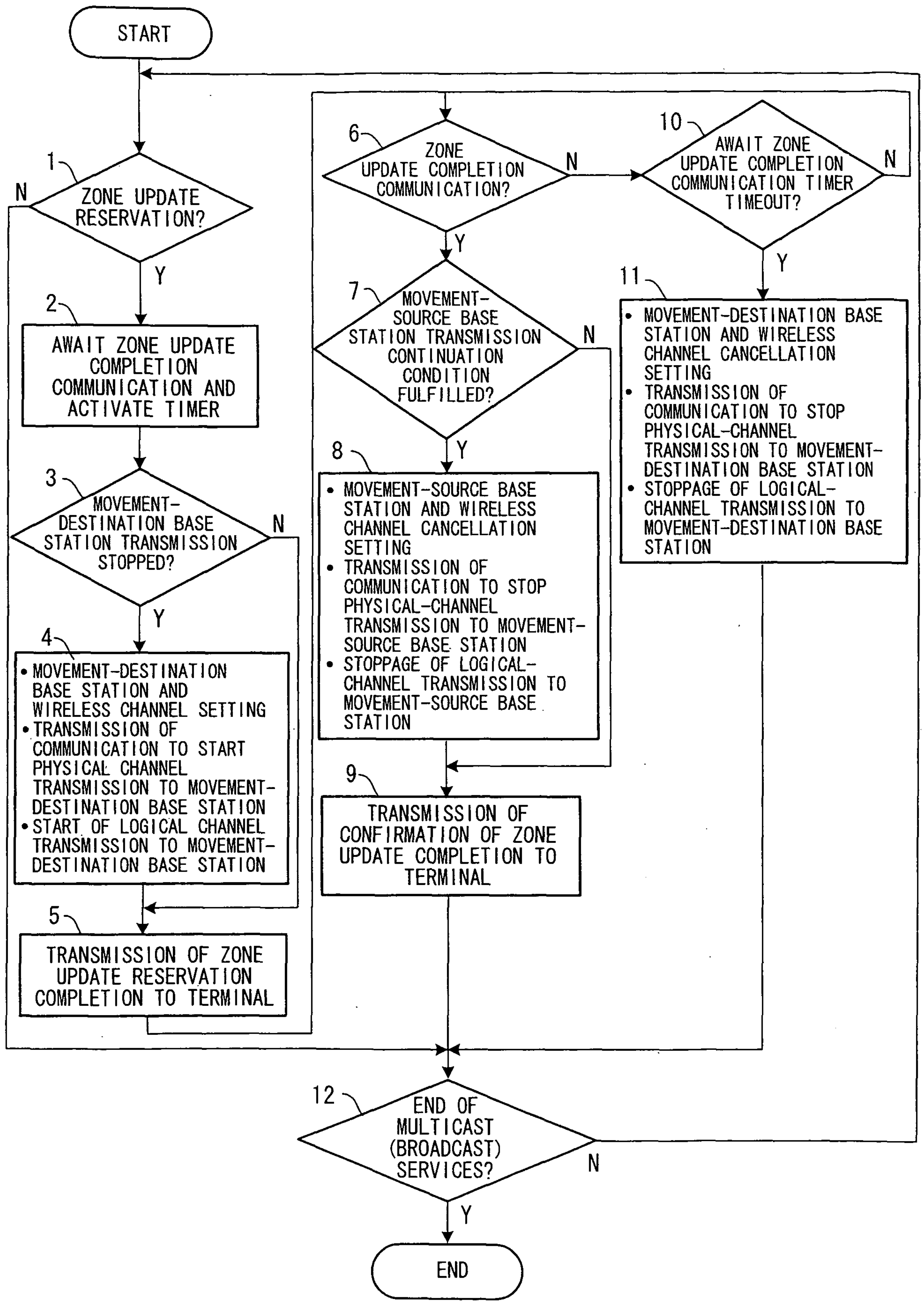
START
1 ZONE UPDATE RESERVATION?
N
Y
2 AWAIT ZONE UPDATE COMPLETION COMMUNICATION AND ACTIVATE TIMER
3 MOVEMENT-DESTINATION BASE STATION TRANSMISSION STOPPED?
N
Y
4 • MOVEMENT-DESTINATION BASE STATION AND WIRELESS CHANNEL SETTING • TRANSMISSION OF COMMUNICATION TO START PHYSICAL CHANNEL TRANSMISSION TO MOVEMENT-DESTINATION BASE STATION • START OF LOGICAL CHANNEL TRANSMISSION TO MOVEMENT-DESTINATION BASE STATION
5 TRANSMISSION OF ZONE UPDATE RESERVATION COMPLETION TO TERMINAL
6 ZONE UPDATE COMPLETION COMMUNICATION?
N
Y
7 MOVEMENT-SOURCE BASE STATION TRANSMISSION CONTINUATION CONDITION FULFILLED?
N
Y
8 • MOVEMENT-SOURCE BASE STATION AND WIRELESS CHANNEL CANCELLATION SETTING • TRANSMISSION OF COMMUNICATION TO STOP PHYSICAL-CHANNEL TRANSMISSION TO MOVEMENT-SOURCE BASE STATION • STOPPAGE OF LOGICAL-CHANNEL TRANSMISSION TO MOVEMENT-SOURCE BASE STATION
9 TRANSMISSION OF CONFIRMATION OF ZONE UPDATE COMPLETION TO TERMINAL
10 AWAIT ZONE UPDATE COMPLETION COMMUNICATION TIMER TIMEOUT?
N
Y
11 • MOVEMENT-DESTINATION BASE STATION AND WIRELESS CHANNEL CANCELLATION SETTING • TRANSMISSION OF COMMUNICATION TO STOP PHYSICAL-CHANNEL TRANSMISSION TO MOVEMENT-DESTINATION BASE STATION • STOPPAGE OF LOGICAL-CHANNEL TRANSMISSION TO MOVEMENT-DESTINATION BASE STATION
12 END OF MULTICAST (BROADCAST) SERVICES?
N
Y
END

FIG. 34

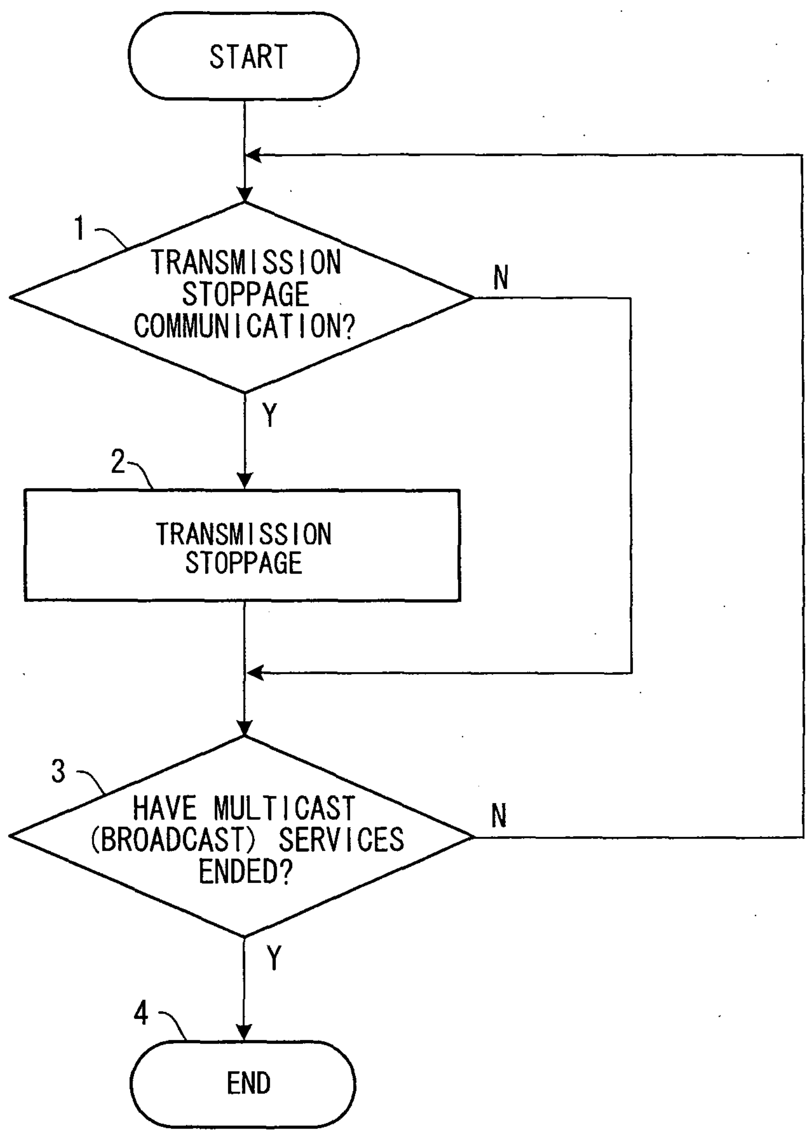
START
1
TRANSMISSION
STOPPAGE
COMMUNICATION?
N
Y
2
TRANSMISSION
STOPPAGE
3
HAVE MULTICAST
(BROADCAST) SERVICES
ENDED?
N
Y
4
END

FIG. 35

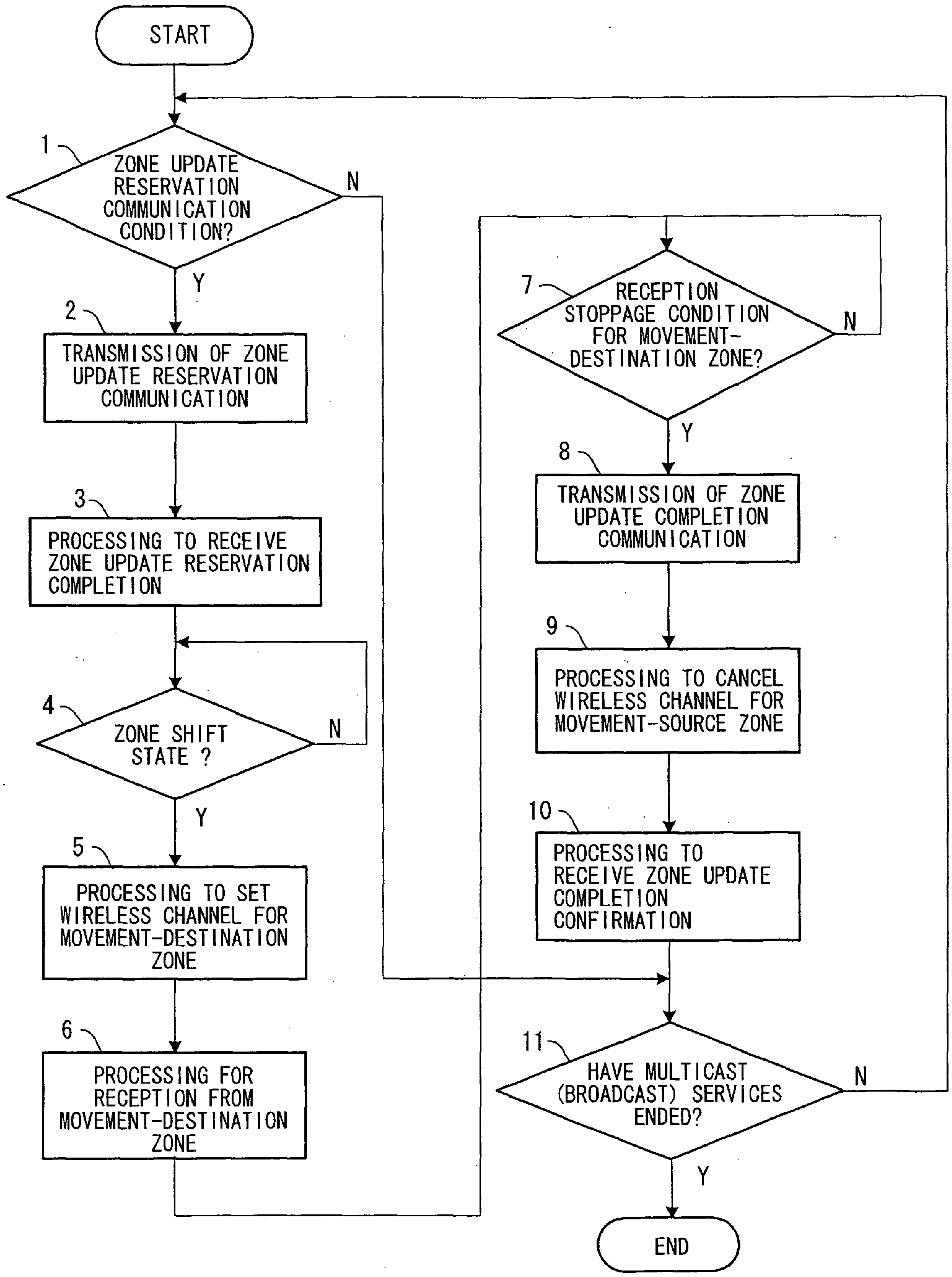
START
1
ZONE UPDATE RESERVATION COMMUNICATION CONDITION?
N
Y
2
TRANSMISSION OF ZONE UPDATE RESERVATION COMMUNICATION
3
PROCESSING TO RECEIVE ZONE UPDATE RESERVATION COMPLETION
4
ZONE SHIFT STATE ?
N
Y
5
PROCESSING TO SET WIRELESS CHANNEL FOR MOVEMENT-DESTINATION ZONE
6
PROCESSING FOR RECEPTION FROM MOVEMENT-DESTINATION ZONE
7
RECEPTION STOPPAGE CONDITION FOR MOVEMENT-DESTINATION ZONE?
N
Y
8
TRANSMISSION OF ZONE UPDATE COMPLETION COMMUNICATION
9
PROCESSING TO CANCEL WIRELESS CHANNEL FOR MOVEMENT-SOURCE ZONE
10
PROCESSING TO RECEIVE ZONE UPDATE COMPLETION CONFIRMATION
11
HAVE MULTICAST (BROADCAST) SERVICES ENDED?
N
Y
END

FIG. 36

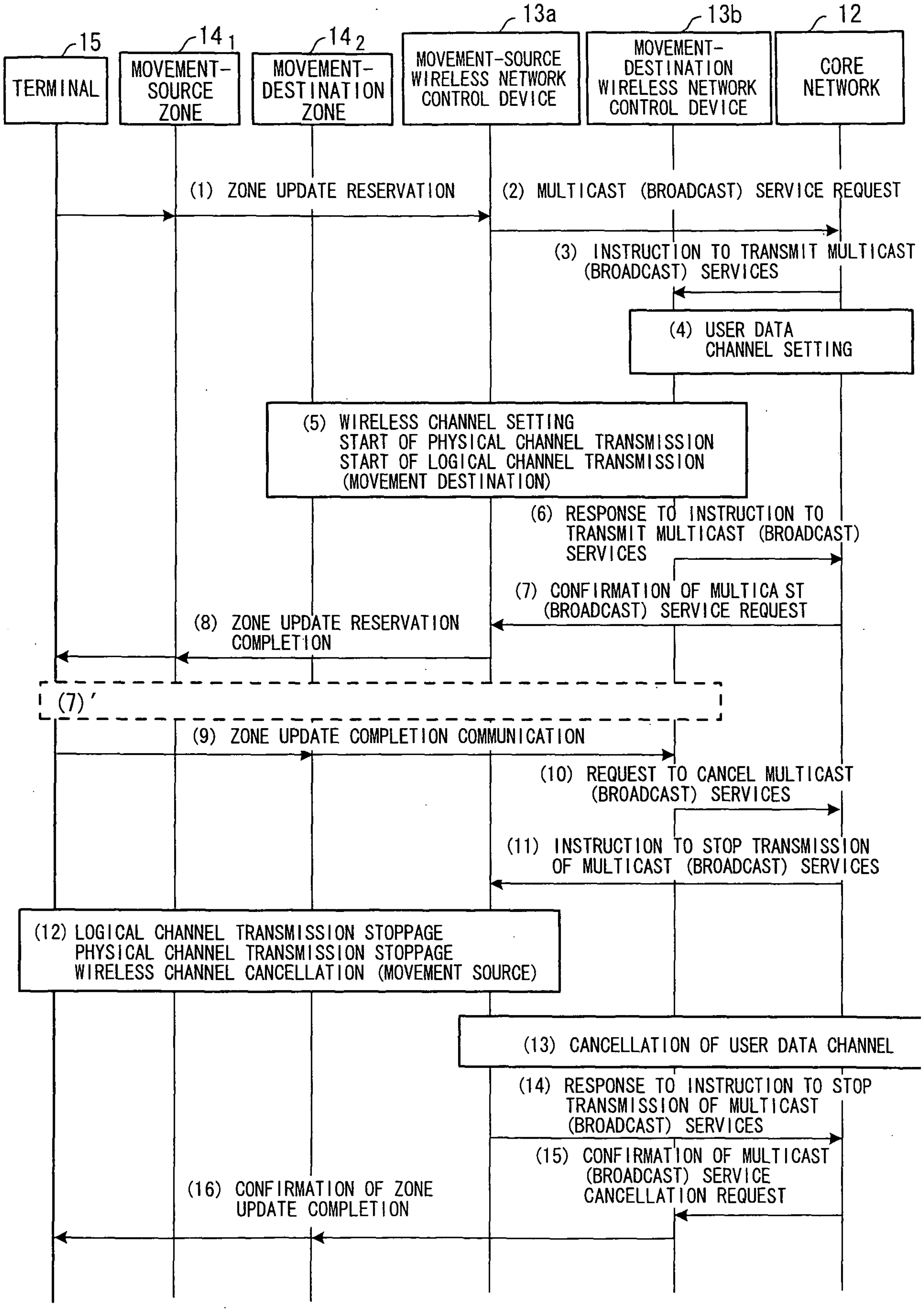
15
TERMINAL
14 1
MOVEMENT-SOURCE ZONE
14 2
MOVEMENT-DESTINATION ZONE
13a
MOVEMENT-SOURCE WIRELESS NETWORK CONTROL DEVICE
13b
MOVEMENT-DESTINATION WIRELESS NETWORK CONTROL DEVICE
12
CORE NETWORK
(1) ZONE UPDATE RESERVATION
(2) MULTICAST (BROADCAST) SERVICE REQUEST
(3) INSTRUCTION TO TRANSMIT MULTICAST (BROADCAST) SERVICES
(4) USER DATA CHANNEL SETTING
(5) WIRELESS CHANNEL SETTING START OF PHYSICAL CHANNEL TRANSMISSION START OF LOGICAL CHANNEL TRANSMISSION (MOVEMENT DESTINATION)
(6) RESPONSE TO INSTRUCTION TO TRANSMIT MULTICAST (BROADCAST) SERVICES
(7) CONFIRMATION OF MULTICA ST (BROADCAST) SERVICE REQUEST
(8) ZONE UPDATE RESERVATION COMPLETION
(7)′
(9) ZONE UPDATE COMPLETION COMMUNICATION
(10) REQUEST TO CANCEL MULTICAST (BROADCAST) SERVICES
(11) INSTRUCTION TO STOP TRANSMISSION OF MULTICAST (BROADCAST) SERVICES
(12) LOGICAL CHANNEL TRANSMISSION STOPPAGE PHYSICAL CHANNEL TRANSMISSION STOPPAGE WIRELESS CHANNEL CANCELLATION (MOVEMENT SOURCE)
(13) CANCELLATION OF USER DATA CHANNEL
(14) RESPONSE TO INSTRUCTION TO STOP TRANSMISSION OF MULTICAST (BROADCAST) SERVICES
(15) CONFIRMATION OF MULTICAST (BROADCAST) SERVICE CANCELLATION REQUEST
(16) CONFIRMATION OF ZONE UPDATE COMPLETION

FIG. 37

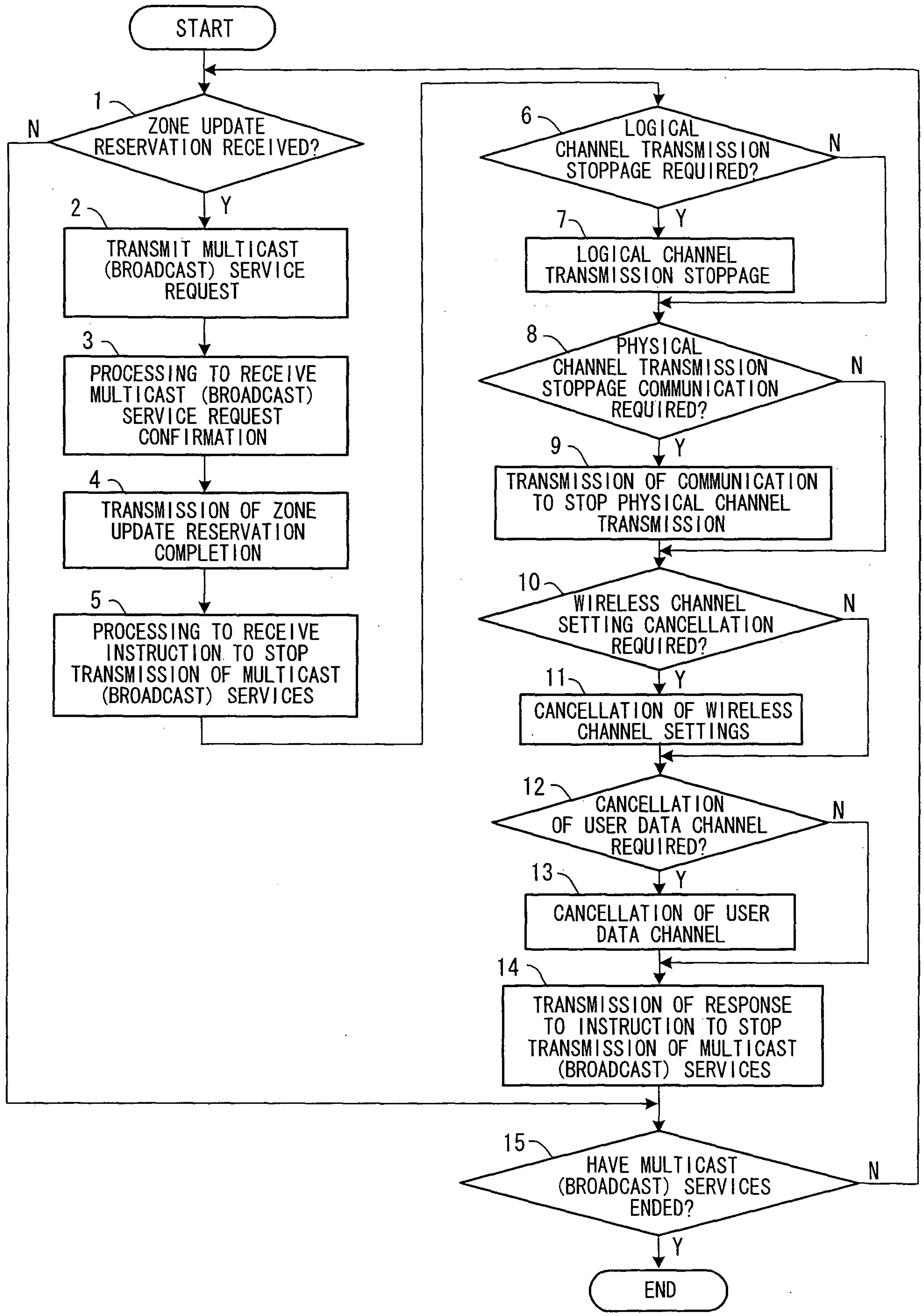
START
1
ZONE UPDATE RESERVATION RECEIVED?
N
Y
2
TRANSMIT MULTICAST (BROADCAST) SERVICE REQUEST
3
PROCESSING TO RECEIVE MULTICAST (BROADCAST) SERVICE REQUEST CONFIRMATION
4
TRANSMISSION OF ZONE UPDATE RESERVATION COMPLETION
5
PROCESSING TO RECEIVE INSTRUCTION TO STOP TRANSMISSION OF MULTICAST (BROADCAST) SERVICES
6
LOGICAL CHANNEL TRANSMISSION STOPPAGE REQUIRED?
N
Y
7
LOGICAL CHANNEL TRANSMISSION STOPPAGE
8
PHYSICAL CHANNEL TRANSMISSION STOPPAGE COMMUNICATION REQUIRED?
N
Y
9
TRANSMISSION OF COMMUNICATION TO STOP PHYSICAL CHANNEL TRANSMISSION
10
WIRELESS CHANNEL SETTING CANCELLATION REQUIRED?
N
Y
11
CANCELLATION OF WIRELESS CHANNEL SETTINGS
12
CANCELLATION OF USER DATA CHANNEL REQUIRED?
N
Y
13
CANCELLATION OF USER DATA CHANNEL
14
TRANSMISSION OF RESPONSE TO INSTRUCTION TO STOP TRANSMISSION OF MULTICAST (BROADCAST) SERVICES
15
HAVE MULTICAST (BROADCAST) SERVICES ENDED?
N
Y
END

FIG. 38

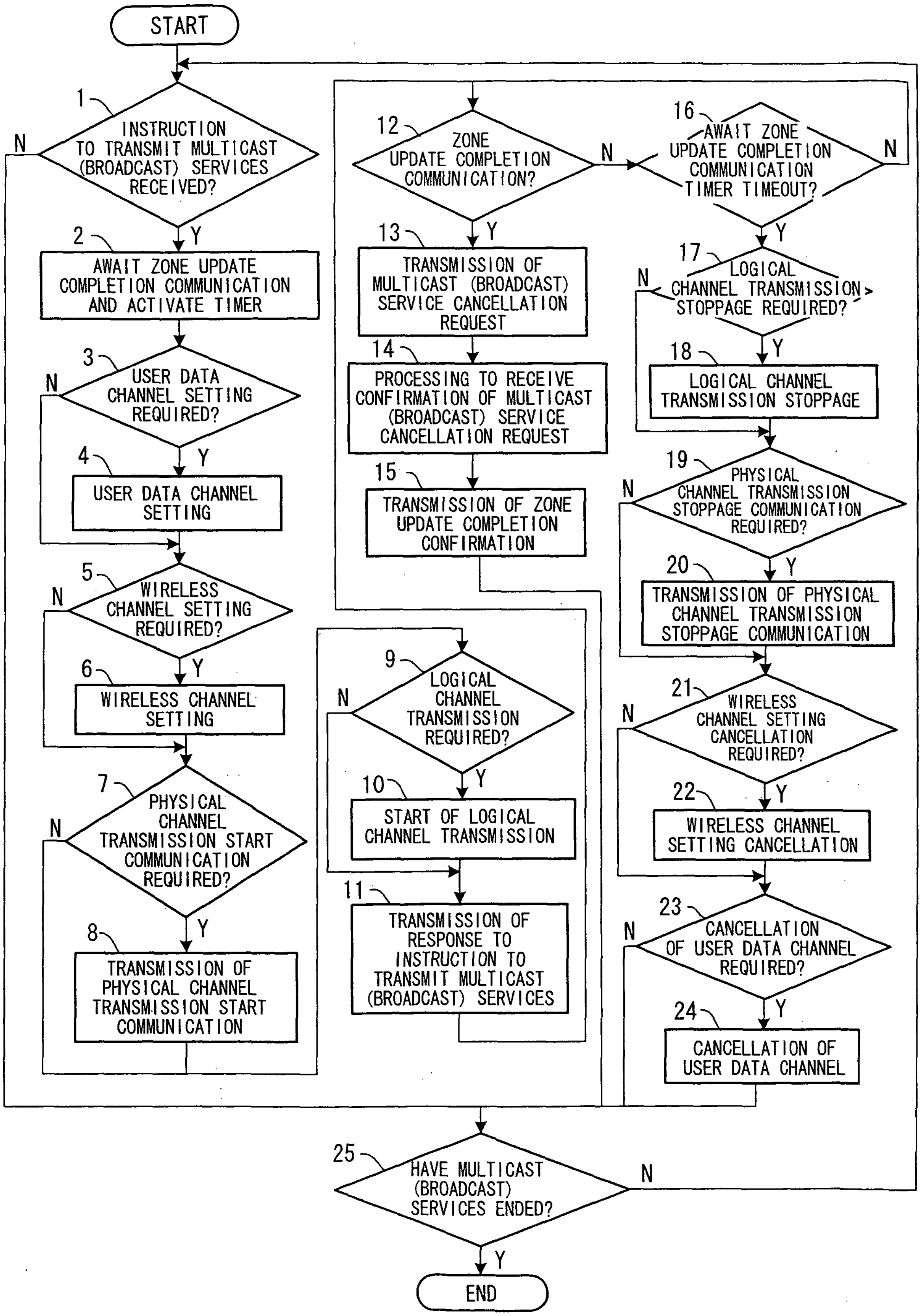

START
1 INSTRUCTION TO TRANSMIT MULTICAST (BROADCAST) SERVICES RECEIVED?
N
Y
2 AWAIT ZONE UPDATE COMPLETION COMMUNICATION AND ACTIVATE TIMER
3 USER DATA CHANNEL SETTING REQUIRED?
4 USER DATA CHANNEL SETTING
5 WIRELESS CHANNEL SETTING REQUIRED?
6 WIRELESS CHANNEL SETTING
7 PHYSICAL CHANNEL TRANSMISSION START COMMUNICATION REQUIRED?
8 TRANSMISSION OF PHYSICAL CHANNEL TRANSMISSION START COMMUNICATION
9 LOGICAL CHANNEL TRANSMISSION REQUIRED?
10 START OF LOGICAL CHANNEL TRANSMISSION
11 TRANSMISSION OF RESPONSE TO INSTRUCTION TO TRANSMIT MULTICAST (BROADCAST) SERVICES
12 ZONE UPDATE COMPLETION COMMUNICATION?
13 TRANSMISSION OF MULTICAST (BROADCAST) SERVICE CANCELLATION REQUEST
14 PROCESSING TO RECEIVE CONFIRMATION OF MULTICAST (BROADCAST) SERVICE CANCELLATION REQUEST
15 TRANSMISSION OF ZONE UPDATE COMPLETION CONFIRMATION
16 AWAIT ZONE UPDATE COMPLETION COMMUNICATION TIMER TIMEOUT?
17 LOGICAL CHANNEL TRANSMISSION STOPPAGE REQUIRED?
18 LOGICAL CHANNEL TRANSMISSION STOPPAGE
19 PHYSICAL CHANNEL TRANSMISSION STOPPAGE COMMUNICATION REQUIRED?
20 TRANSMISSION OF PHYSICAL CHANNEL TRANSMISSION STOPPAGE COMMUNICATION
21 WIRELESS CHANNEL SETTING CANCELLATION REQUIRED?
22 WIRELESS CHANNEL SETTING CANCELLATION
23 CANCELLATION OF USER DATA CHANNEL REQUIRED?
24 CANCELLATION OF USER DATA CHANNEL
25 HAVE MULTICAST (BROADCAST) SERVICES ENDED?
END

*FIG. 39*

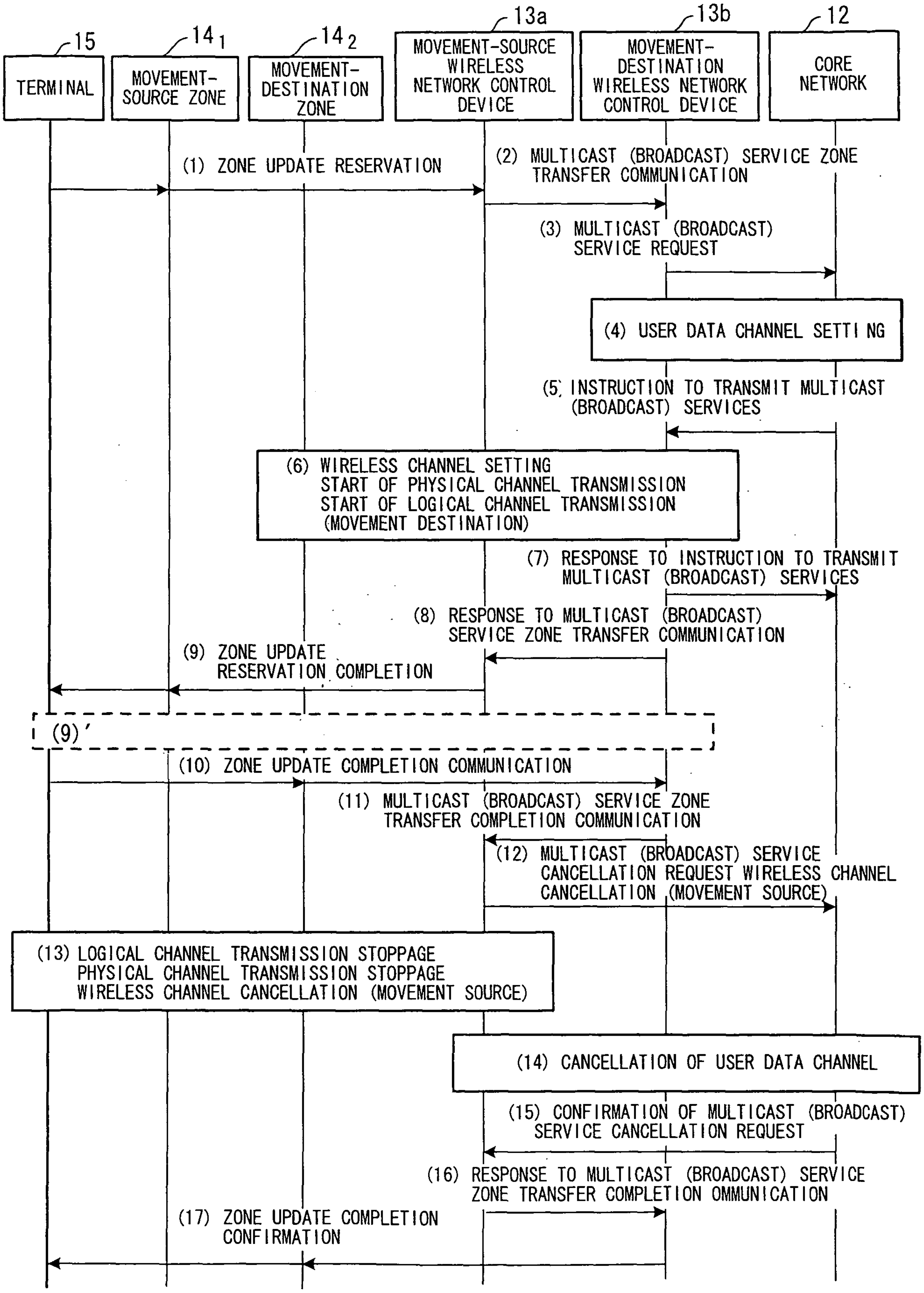
15
TERMINAL
14 1
MOVEMENT-SOURCE ZONE
14 2
MOVEMENT-DESTINATION ZONE
13a
MOVEMENT-SOURCE WIRELESS NETWORK CONTROL DEVICE
13b
MOVEMENT-DESTINATION WIRELESS NETWORK CONTROL DEVICE
12
CORE NETWORK
(1) ZONE UPDATE RESERVATION
(2) MULTICAST (BROADCAST) SERVICE ZONE TRANSFER COMMUNICATION
(3) MULTICAST (BROADCAST) SERVICE REQUEST
(4) USER DATA CHANNEL SETTI NG
(5) INSTRUCTION TO TRANSMIT MULTICAST (BROADCAST) SERVICES
(6) WIRELESS CHANNEL SETTING
START OF PHYSICAL CHANNEL TRANSMISSION
START OF LOGICAL CHANNEL TRANSMISSION
(MOVEMENT DESTINATION)
(7) RESPONSE TO INSTRUCTION TO TRANSMIT MULTICAST (BROADCAST) SERVICES
(8) RESPONSE TO MULTICAST (BROADCAST) SERVICE ZONE TRANSFER COMMUNICATION
(9) ZONE UPDATE RESERVATION COMPLETION
(9)′
(10) ZONE UPDATE COMPLETION COMMUNICATION
(11) MULTICAST (BROADCAST) SERVICE ZONE TRANSFER COMPLETION COMMUNICATION
(12) MULTICAST (BROADCAST) SERVICE CANCELLATION REQUEST WIRELESS CHANNEL CANCELLATION (MOVEMENT SOURCE)
(13) LOGICAL CHANNEL TRANSMISSION STOPPAGE
PHYSICAL CHANNEL TRANSMISSION STOPPAGE
WIRELESS CHANNEL CANCELLATION (MOVEMENT SOURCE)
(14) CANCELLATION OF USER DATA CHANNEL
(15) CONFIRMATION OF MULTICAST (BROADCAST) SERVICE CANCELLATION REQUEST
(16) RESPONSE TO MULTICAST (BROADCAST) SERVICE ZONE TRANSFER COMPLETION OMMUNICATION
(17) ZONE UPDATE COMPLETION CONFIRMATION

FIG. 40

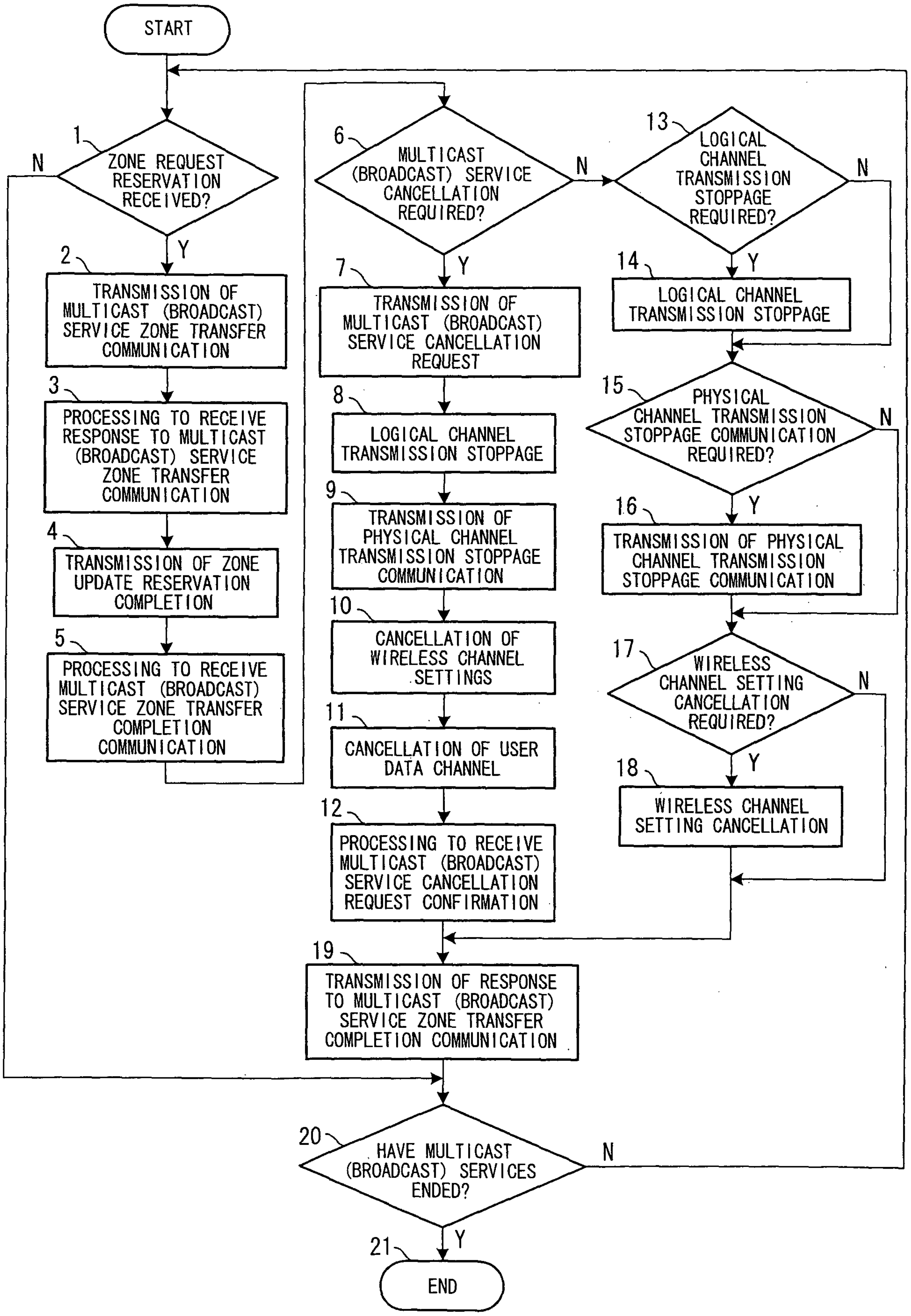
START
1 ZONE REQUEST RESERVATION RECEIVED?
N
Y
2 TRANSMISSION OF MULTICAST (BROADCAST) SERVICE ZONE TRANSFER COMMUNICATION
3 PROCESSING TO RECEIVE RESPONSE TO MULTICAST (BROADCAST) SERVICE ZONE TRANSFER COMMUNICATION
4 TRANSMISSION OF ZONE UPDATE RESERVATION COMPLETION
5 PROCESSING TO RECEIVE MULTICAST (BROADCAST) SERVICE ZONE TRANSFER COMPLETION COMMUNICATION
6 MULTICAST (BROADCAST) SERVICE CANCELLATION REQUIRED?
N
Y
7 TRANSMISSION OF MULTICAST (BROADCAST) SERVICE CANCELLATION REQUEST
8 LOGICAL CHANNEL TRANSMISSION STOPPAGE
9 TRANSMISSION OF PHYSICAL CHANNEL TRANSMISSION STOPPAGE COMMUNICATION
10 CANCELLATION OF WIRELESS CHANNEL SETTINGS
11 CANCELLATION OF USER DATA CHANNEL
12 PROCESSING TO RECEIVE MULTICAST (BROADCAST) SERVICE CANCELLATION REQUEST CONFIRMATION
13 LOGICAL CHANNEL TRANSMISSION STOPPAGE REQUIRED?
N
Y
14 LOGICAL CHANNEL TRANSMISSION STOPPAGE
15 PHYSICAL CHANNEL TRANSMISSION STOPPAGE COMMUNICATION REQUIRED?
N
Y
16 TRANSMISSION OF PHYSICAL CHANNEL TRANSMISSION STOPPAGE COMMUNICATION
17 WIRELESS CHANNEL SETTING CANCELLATION REQUIRED?
N
Y
18 WIRELESS CHANNEL SETTING CANCELLATION
19 TRANSMISSION OF RESPONSE TO MULTICAST (BROADCAST) SERVICE ZONE TRANSFER COMPLETION COMMUNICATION
20 HAVE MULTICAST (BROADCAST) SERVICES ENDED?
N
Y
21 END

FIG. 41

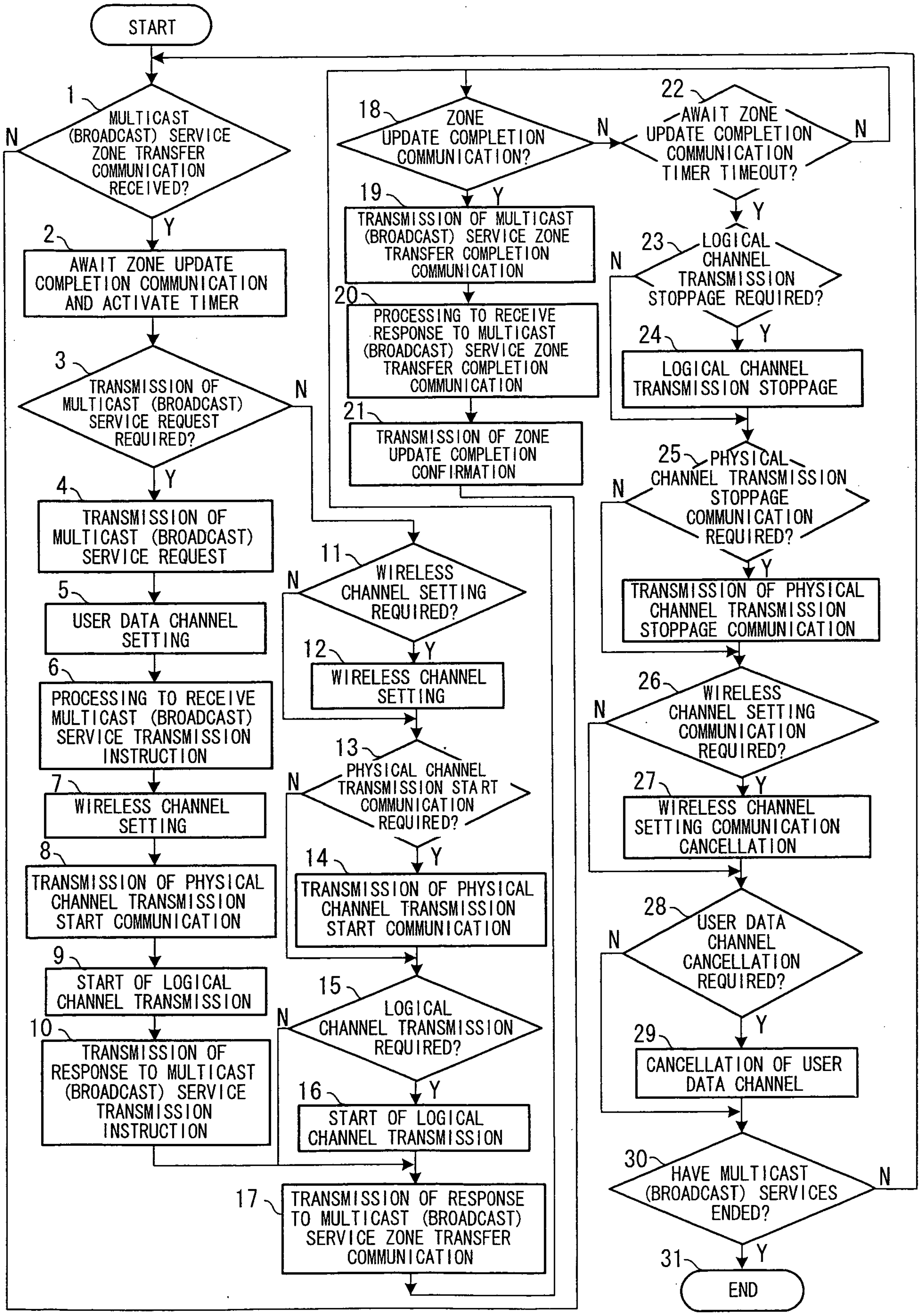
START
1 MULTICAST (BROADCAST) SERVICE ZONE TRANSFER COMMUNICATION RECEIVED?
2 AWAIT ZONE UPDATE COMPLETION COMMUNICATION AND ACTIVATE TIMER
3 TRANSMISSION OF MULTICAST (BROADCAST) SERVICE REQUEST REQUIRED?
4 TRANSMISSION OF MULTICAST (BROADCAST) SERVICE REQUEST
5 USER DATA CHANNEL SETTING
6 PROCESSING TO RECEIVE MULTICAST (BROADCAST) SERVICE TRANSMISSION INSTRUCTION
7 WIRELESS CHANNEL SETTING
8 TRANSMISSION OF PHYSICAL CHANNEL TRANSMISSION START COMMUNICATION
9 START OF LOGICAL CHANNEL TRANSMISSION
10 TRANSMISSION OF RESPONSE TO MULTICAST (BROADCAST) SERVICE TRANSMISSION INSTRUCTION
11 WIRELESS CHANNEL SETTING REQUIRED?
12 WIRELESS CHANNEL SETTING
13 PHYSICAL CHANNEL TRANSMISSION START COMMUNICATION REQUIRED?
14 TRANSMISSION OF PHYSICAL CHANNEL TRANSMISSION START COMMUNICATION
15 LOGICAL CHANNEL TRANSMISSION REQUIRED?
16 START OF LOGICAL CHANNEL TRANSMISSION
17 TRANSMISSION OF RESPONSE TO MULTICAST (BROADCAST) SERVICE ZONE TRANSFER COMMUNICATION
18 ZONE UPDATE COMPLETION COMMUNICATION?
19 TRANSMISSION OF MULTICAST (BROADCAST) SERVICE ZONE TRANSFER COMPLETION COMMUNICATION
20 PROCESSING TO RECEIVE RESPONSE TO MULTICAST (BROADCAST) SERVICE ZONE TRANSFER COMPLETION COMMUNICATION
21 TRANSMISSION OF ZONE UPDATE COMPLETION CONFIRMATION
22 AWAIT ZONE UPDATE COMPLETION COMMUNICATION TIMER TIMEOUT?
23 LOGICAL CHANNEL TRANSMISSION STOPPAGE REQUIRED?
24 LOGICAL CHANNEL TRANSMISSION STOPPAGE
25 PHYSICAL CHANNEL TRANSMISSION STOPPAGE COMMUNICATION REQUIRED?
TRANSMISSION OF PHYSICAL CHANNEL TRANSMISSION STOPPAGE COMMUNICATION
26 WIRELESS CHANNEL SETTING COMMUNICATION REQUIRED?
27 WIRELESS CHANNEL SETTING COMMUNICATION CANCELLATION
28 USER DATA CHANNEL CANCELLATION REQUIRED?
29 CANCELLATION OF USER DATA CHANNEL
30 HAVE MULTICAST (BROADCAST) SERVICES ENDED?
31 END
Y
N

FIG. 42

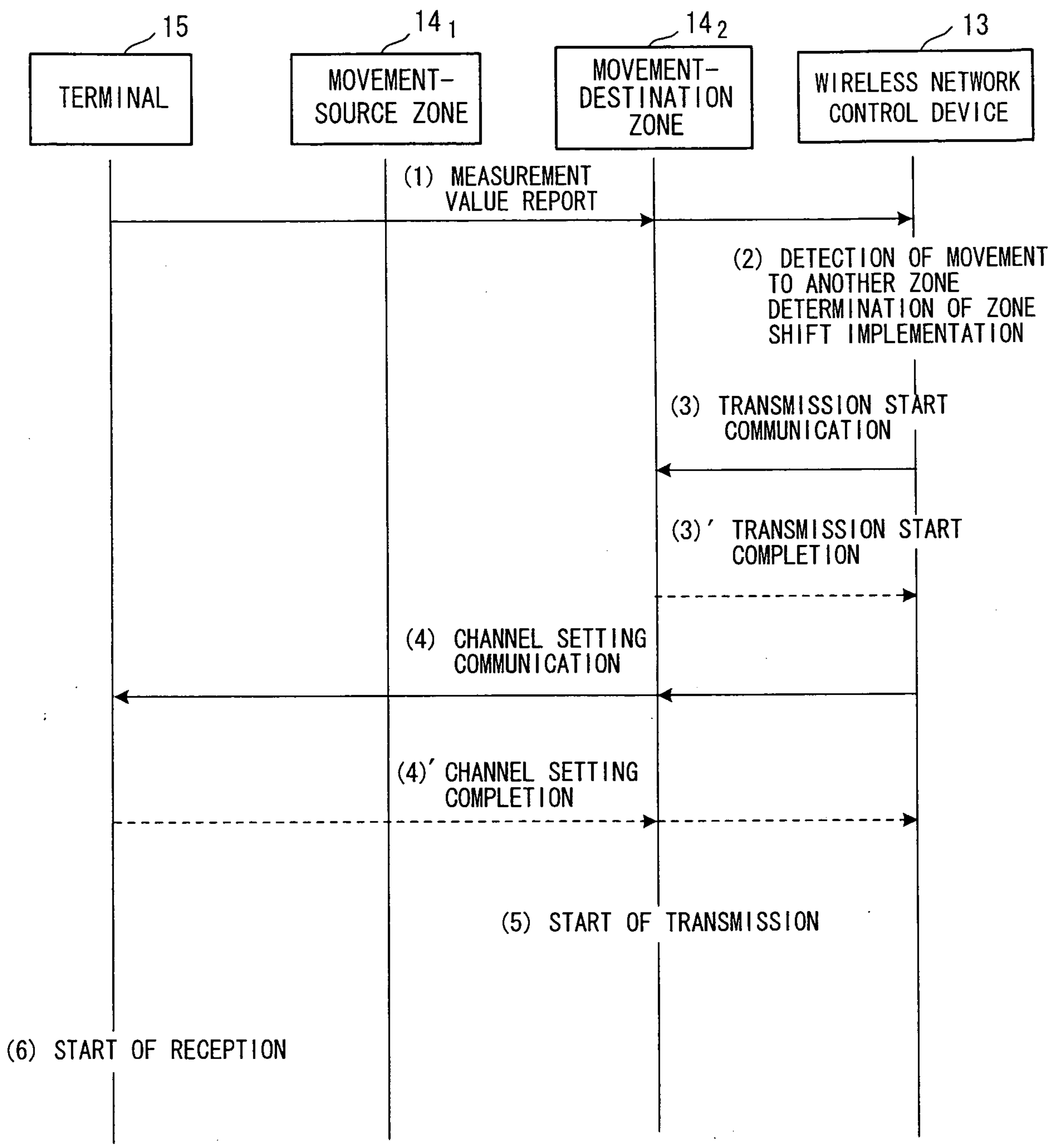
15
TERMINAL
14 1
MOVEMENT-SOURCE ZONE
14 2
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) TRANSMISSION START COMMUNICATION
(3)' TRANSMISSION START COMPLETION
(4) CHANNEL SETTING COMMUNICATION
(4)' CHANNEL SETTING COMPLETION
(5) START OF TRANSMISSION
(6) START OF RECEPTION

FIG. 43

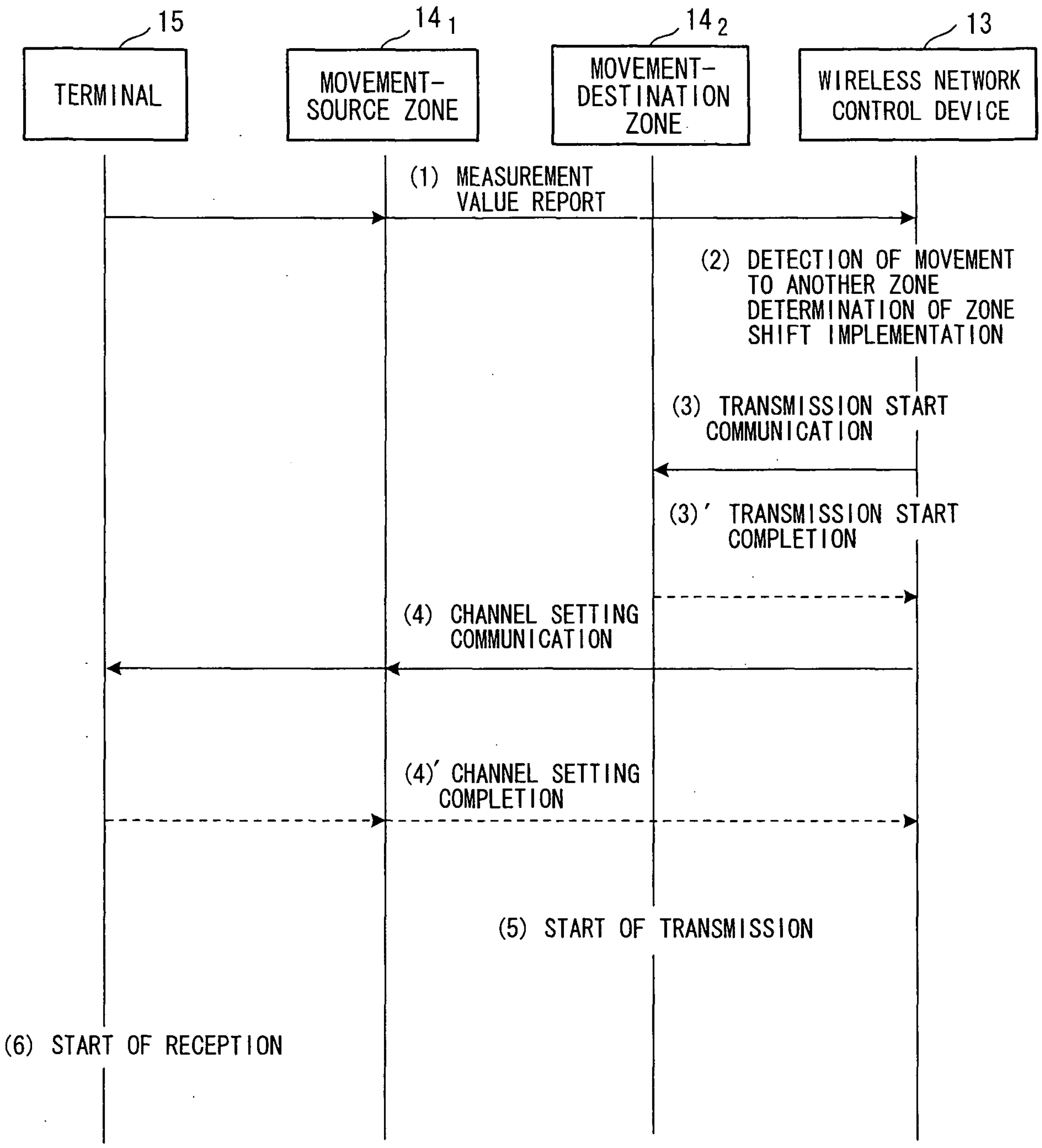
15
14 1
14 2
13
TERMINAL
MOVEMENT-SOURCE ZONE
MOVEMENT-DESTINATION ZONE
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) TRANSMISSION START COMMUNICATION
(3)′ TRANSMISSION START COMPLETION
(4) CHANNEL SETTING COMMUNICATION
(4)′ CHANNEL SETTING COMPLETION
(5) START OF TRANSMISSION
(6) START OF RECEPTION

FIG. 44

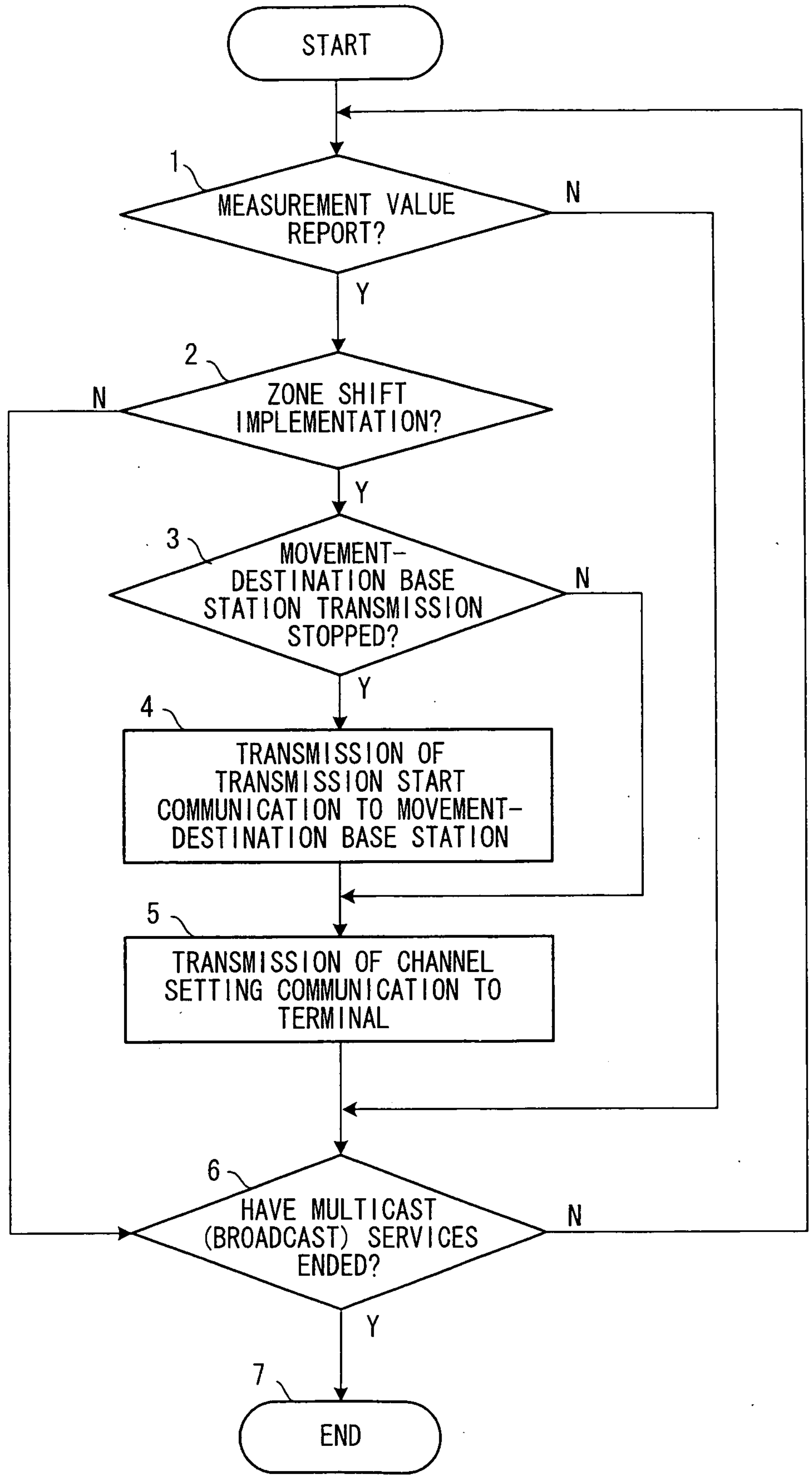
START
1
MEASUREMENT VALUE REPORT?
N
Y
2
ZONE SHIFT IMPLEMENTATION?
N
Y
3
MOVEMENT-DESTINATION BASE STATION TRANSMISSION STOPPED?
N
Y
4
TRANSMISSION OF TRANSMISSION START COMMUNICATION TO MOVEMENT-DESTINATION BASE STATION
5
TRANSMISSION OF CHANNEL SETTING COMMUNICATION TO TERMINAL
6
HAVE MULTICAST (BROADCAST) SERVICES ENDED?
N
Y
7
END

FIG. 45

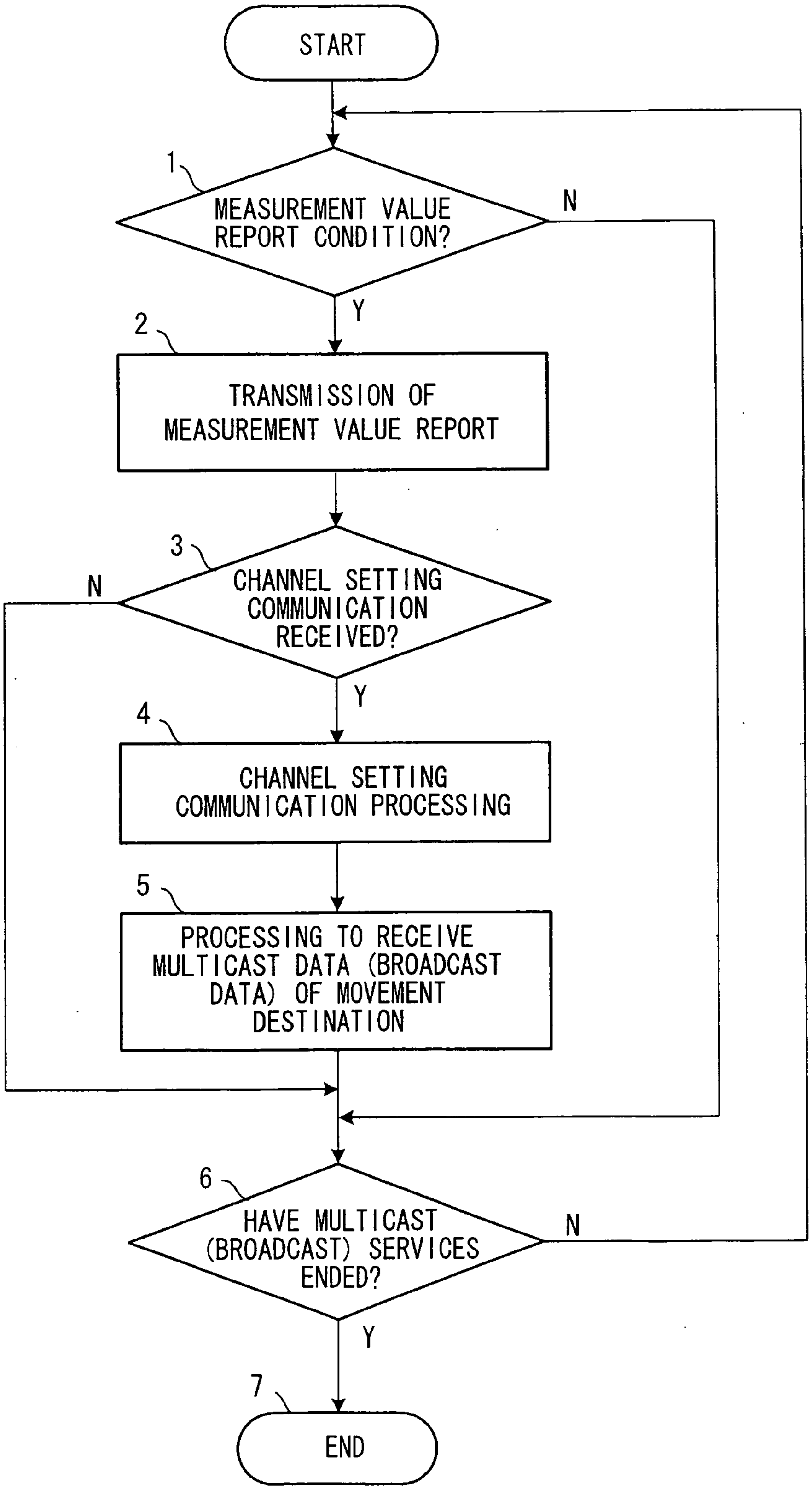
START
1
MEASUREMENT VALUE REPORT CONDITION?
N
Y
2
TRANSMISSION OF MEASUREMENT VALUE REPORT
3
CHANNEL SETTING COMMUNICATION RECEIVED?
N
Y
4
CHANNEL SETTING COMMUNICATION PROCESSING
5
PROCESSING TO RECEIVE MULTICAST DATA (BROADCAST DATA) OF MOVEMENT DESTINATION
6
HAVE MULTICAST (BROADCAST) SERVICES ENDED?
N
Y
7
END

FIG. 46

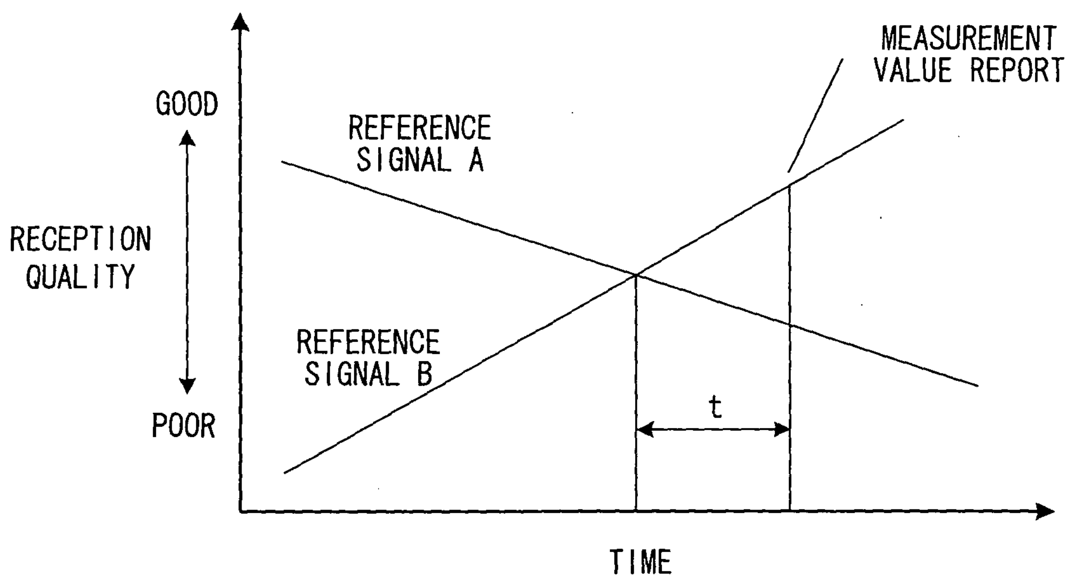
MEASUREMENT
VALUE REPORT
GOOD
REFERENCE
SIGNAL A
RECEPTION
QUALITY
REFERENCE
SIGNAL B
t
POOR
TIME

FIG. 47

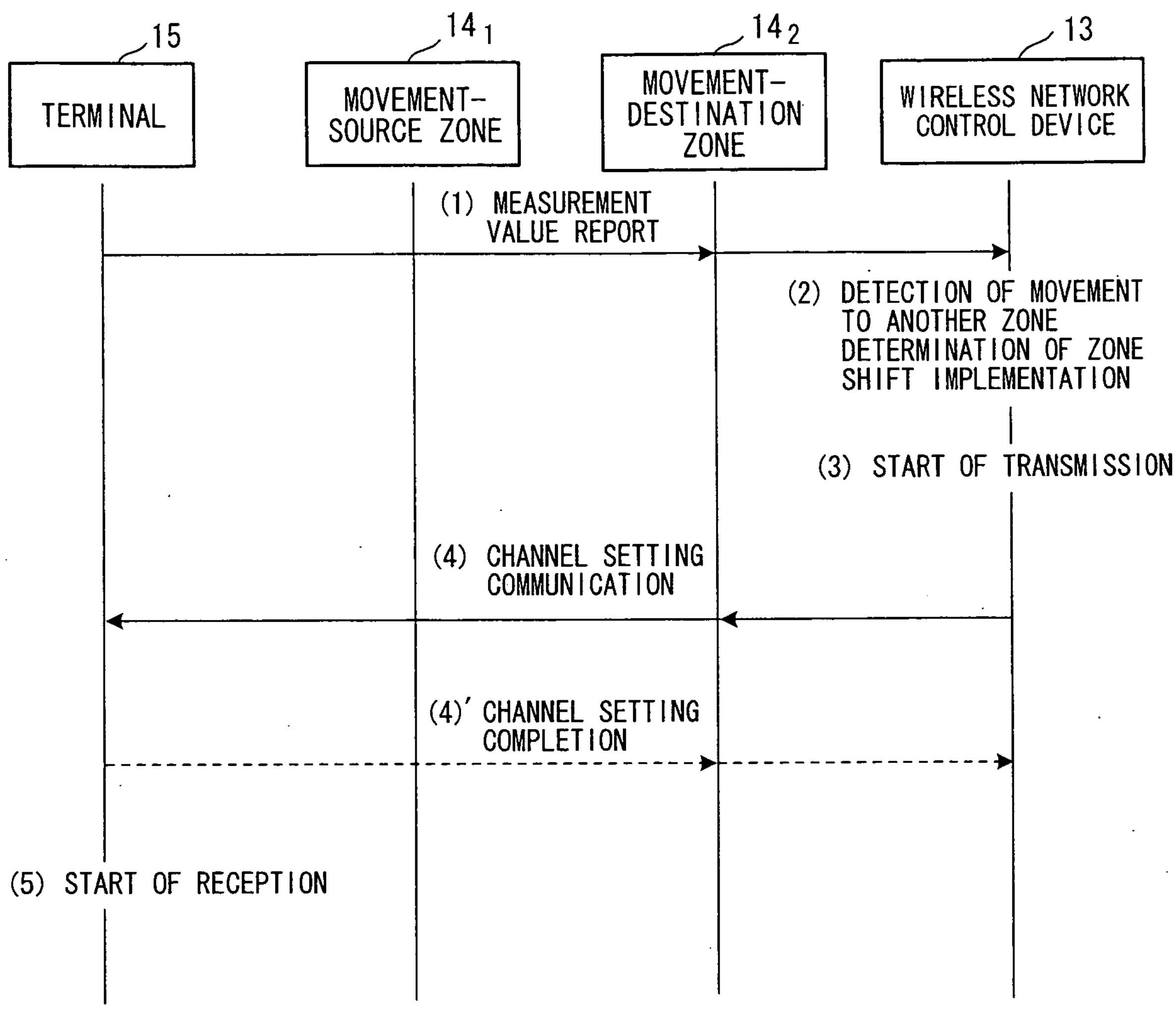
15
TERMINAL
14 1
MOVEMENT-SOURCE ZONE
14 2
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) START OF TRANSMISSION
(4) CHANNEL SETTING COMMUNICATION
(4)' CHANNEL SETTING COMPLETION
(5) START OF RECEPTION

FIG. 48

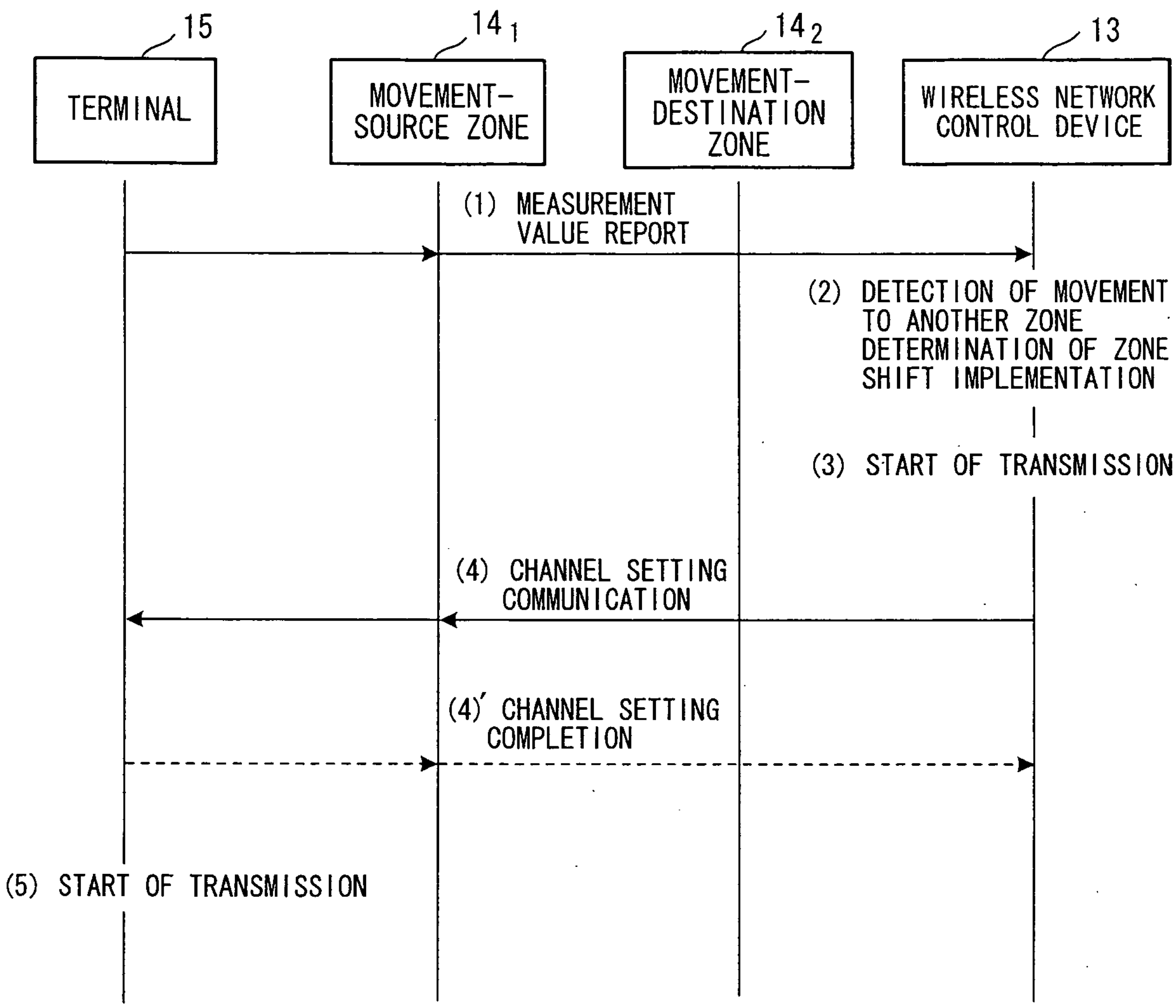
15
TERMINAL
14 1
MOVEMENT-SOURCE ZONE
14 2
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) START OF TRANSMISSION
(4) CHANNEL SETTING COMMUNICATION
(4)' CHANNEL SETTING COMPLETION
(5) START OF TRANSMISSION

FIG. 49

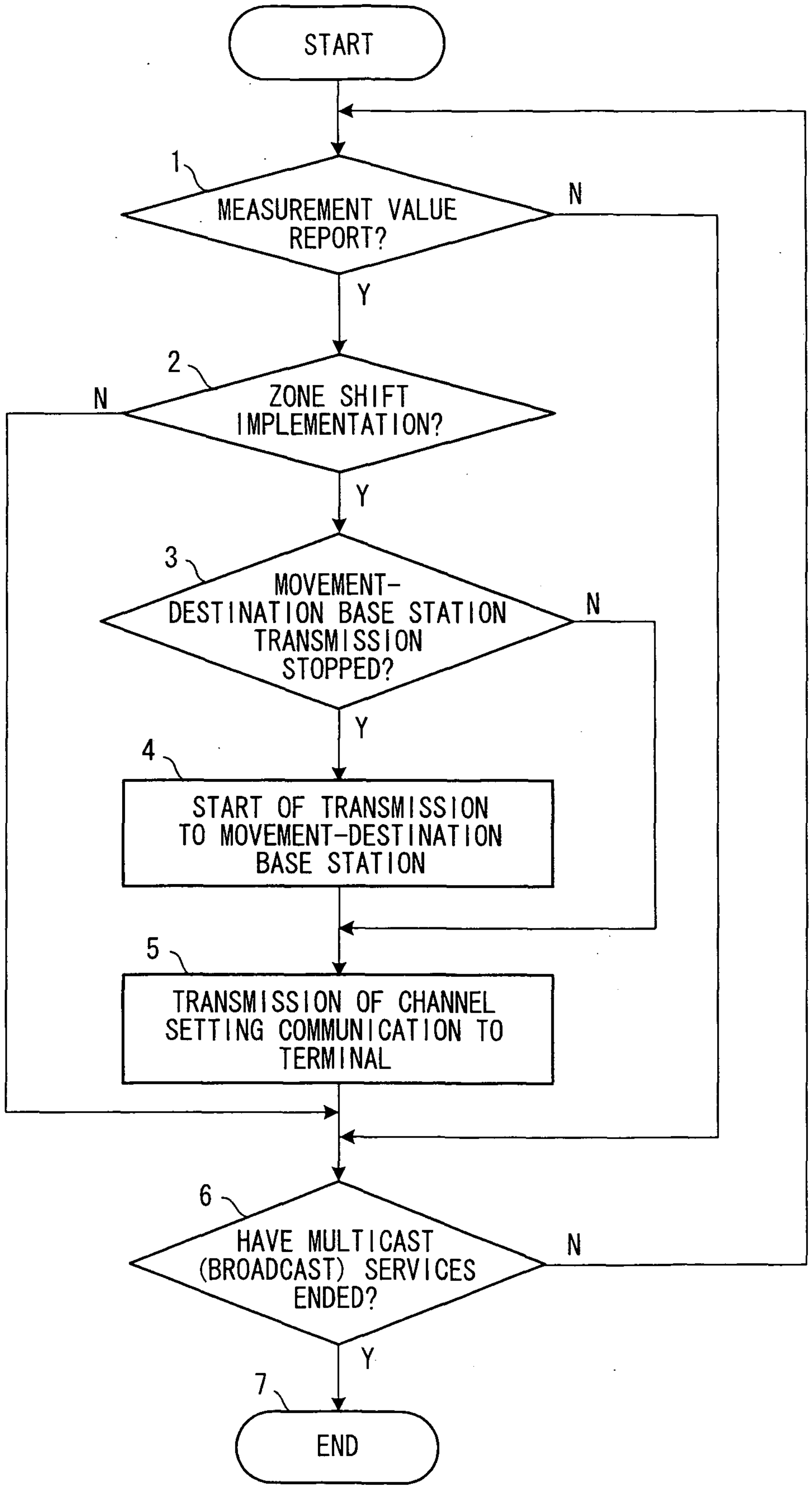
START
1
MEASUREMENT VALUE REPORT?
N
Y
2
ZONE SHIFT IMPLEMENTATION?
N
Y
3
MOVEMENT-DESTINATION BASE STATION TRANSMISSION STOPPED?
N
Y
4
START OF TRANSMISSION TO MOVEMENT-DESTINATION BASE STATION
5
TRANSMISSION OF CHANNEL SETTING COMMUNICATION TO TERMINAL
6
HAVE MULTICAST (BROADCAST) SERVICES ENDED?
N
Y
7
END

FIG. 50

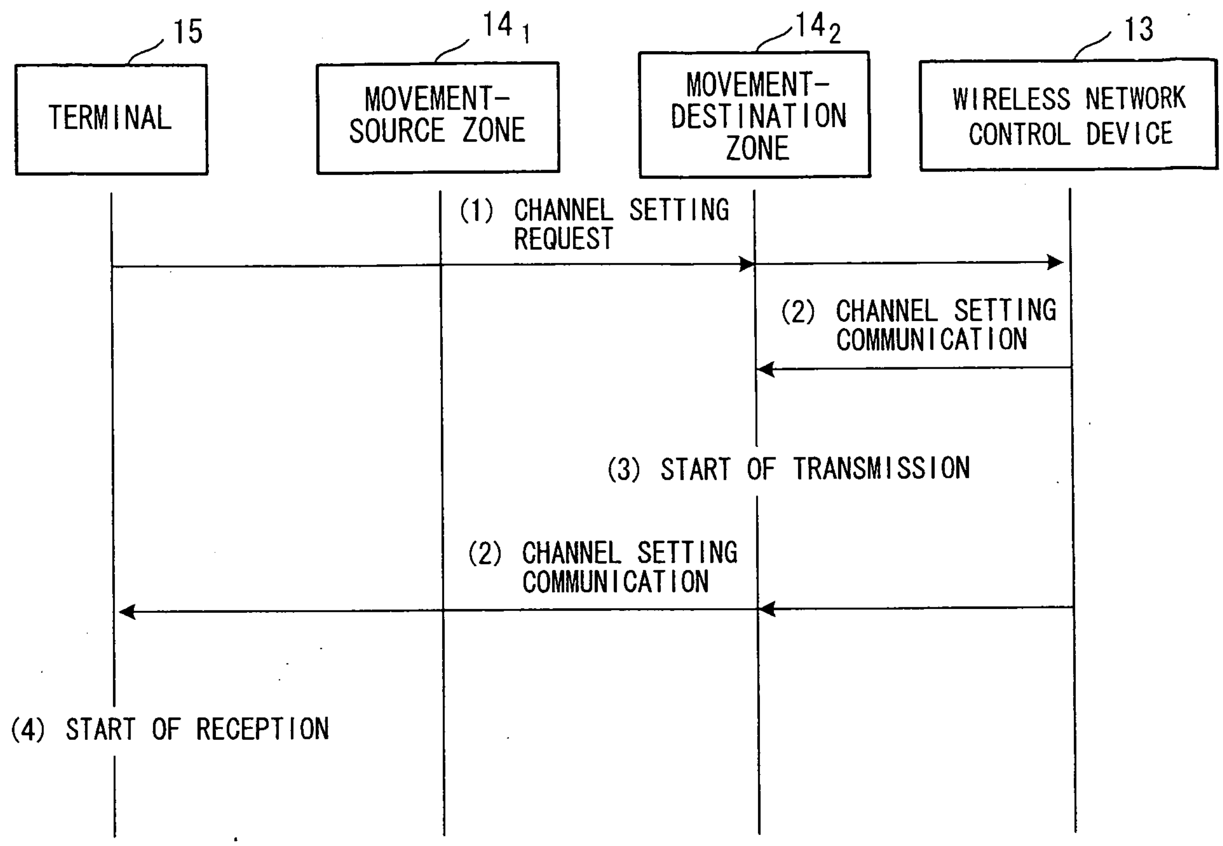
15
$14_1$
$14_2$
13
TERMINAL
MOVEMENT-SOURCE ZONE
MOVEMENT-DESTINATION ZONE
WIRELESS NETWORK CONTROL DEVICE
(1) CHANNEL SETTING REQUEST
(2) CHANNEL SETTING COMMUNICATION
(3) START OF TRANSMISSION
(2) CHANNEL SETTING COMMUNICATION
(4) START OF RECEPTION

FIG. 51

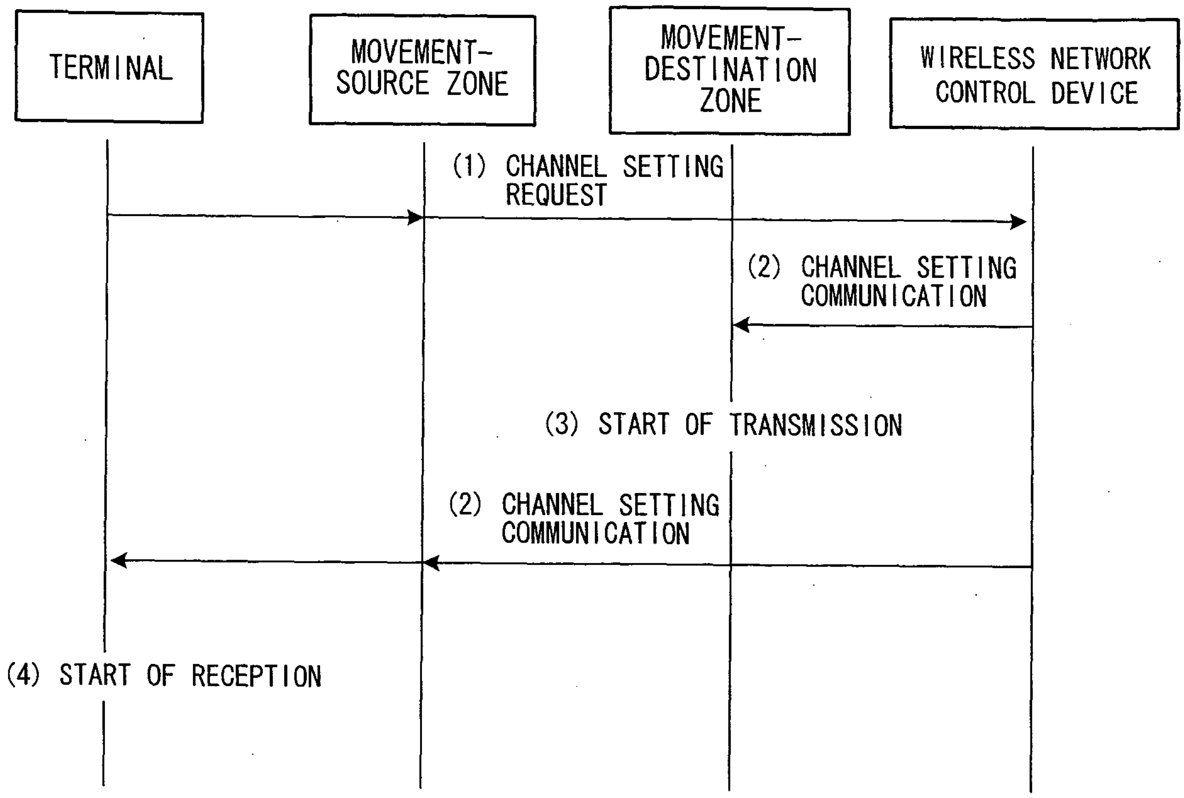
TERMINAL
MOVEMENT-SOURCE ZONE
MOVEMENT-DESTINATION ZONE
WIRELESS NETWORK CONTROL DEVICE
(1) CHANNEL SETTING REQUEST
(2) CHANNEL SETTING COMMUNICATION
(3) START OF TRANSMISSION
(2) CHANNEL SETTING COMMUNICATION
(4) START OF RECEPTION

FIG. 52

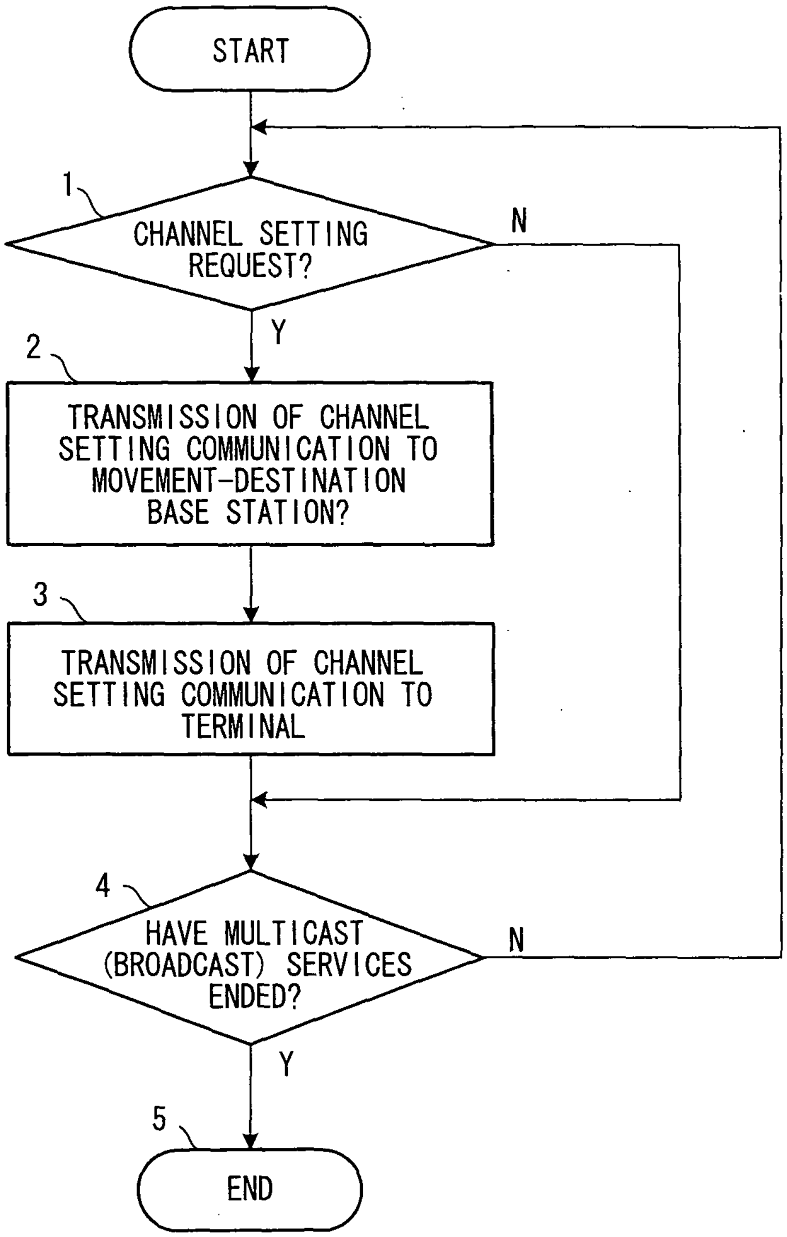
START
1
CHANNEL SETTING REQUEST?
N
Y
2
TRANSMISSION OF CHANNEL SETTING COMMUNICATION TO MOVEMENT-DESTINATION BASE STATION?
3
TRANSMISSION OF CHANNEL SETTING COMMUNICATION TO TERMINAL
4
HAVE MULTICAST (BROADCAST) SERVICES ENDED?
N
Y
5
END

FIG. 53

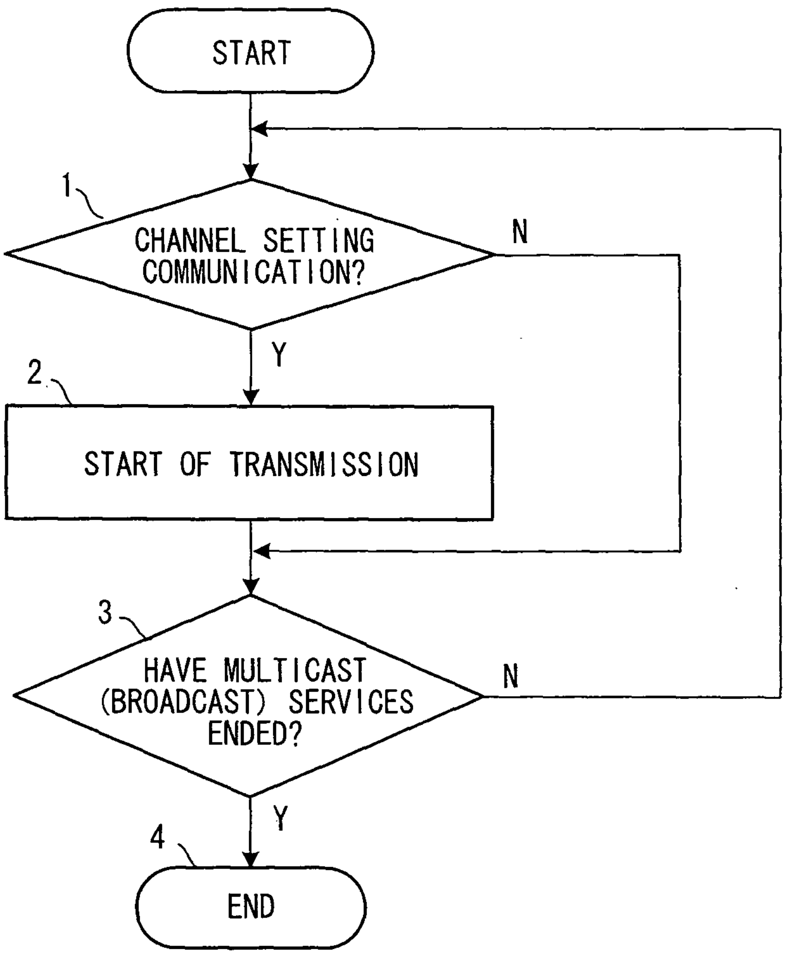
START
1
CHANNEL SETTING COMMUNICATION?
N
Y
2
START OF TRANSMISSION
3
HAVE MULTICAST (BROADCAST) SERVICES ENDED?
N
Y
4
END

FIG. 54

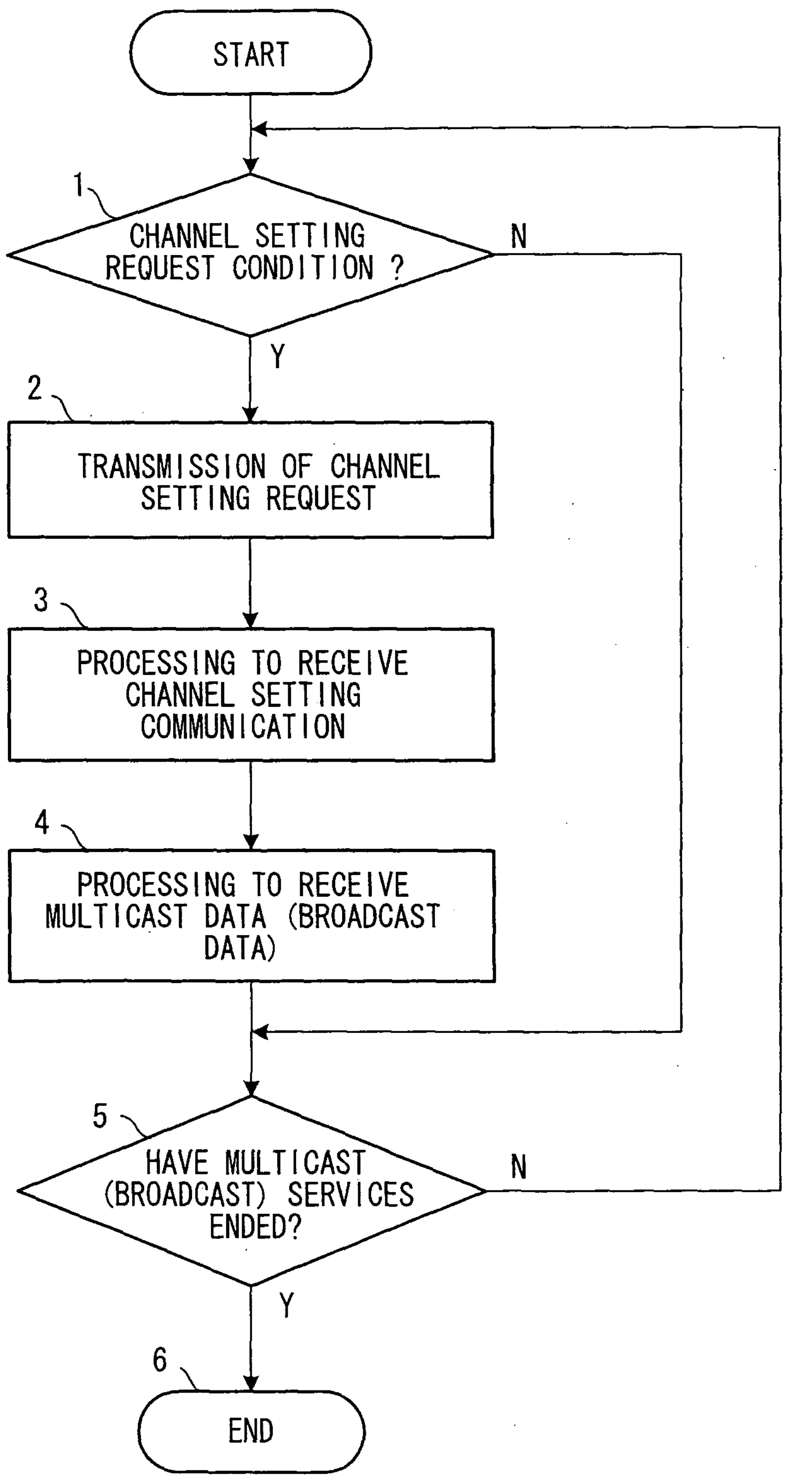
START
1
CHANNEL SETTING REQUEST CONDITION ?
N
Y
2
TRANSMISSION OF CHANNEL SETTING REQUEST
3
PROCESSING TO RECEIVE CHANNEL SETTING COMMUNICATION
4
PROCESSING TO RECEIVE MULTICAST DATA (BROADCAST DATA)
5
HAVE MULTICAST (BROADCAST) SERVICES ENDED?
N
Y
6
END

FIG. 55

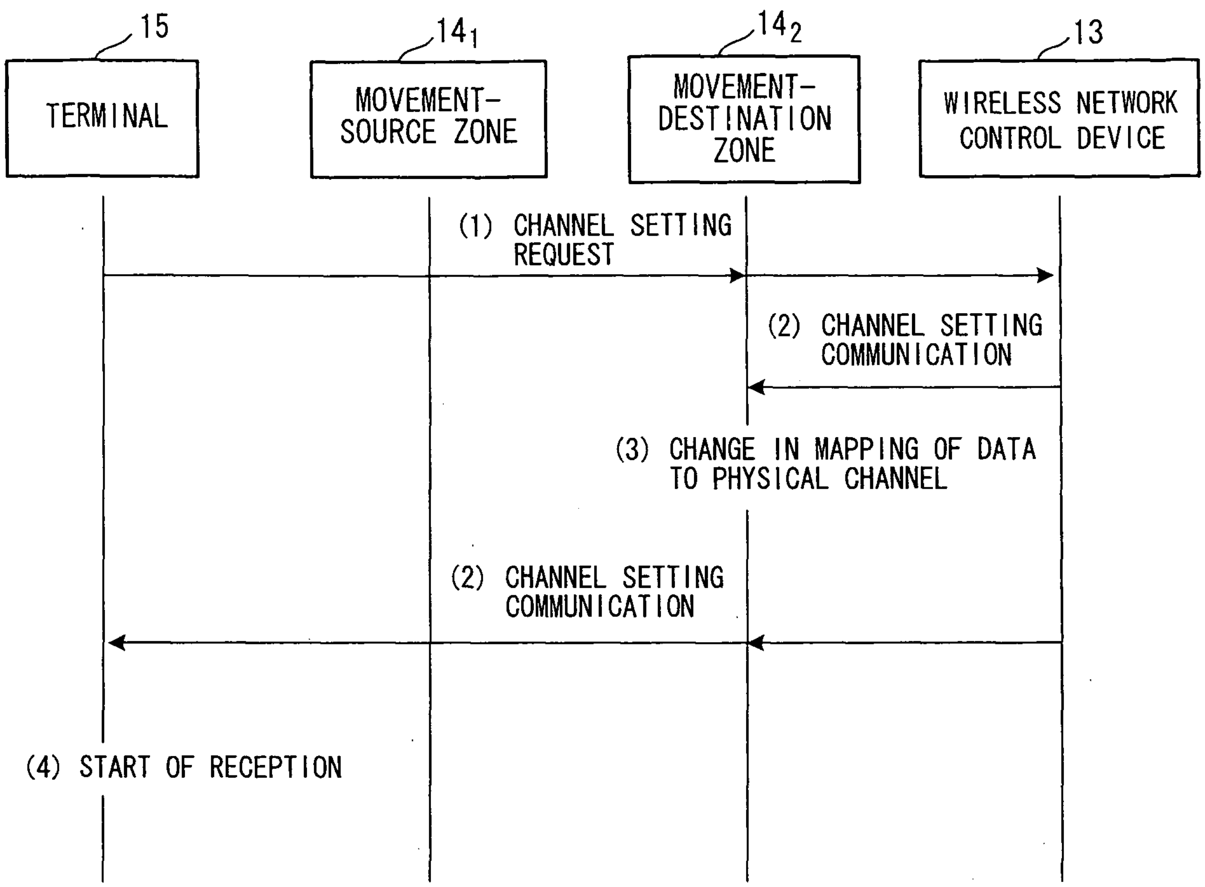
15
TERMINAL
$14_1$
MOVEMENT-SOURCE ZONE
$14_2$
MOVEMENT-DESTINATION ZONE
13
WIRELESS NETWORK CONTROL DEVICE
(1) CHANNEL SETTING REQUEST
(2) CHANNEL SETTING COMMUNICATION
(3) CHANGE IN MAPPING OF DATA TO PHYSICAL CHANNEL
(2) CHANNEL SETTING COMMUNICATION
(4) START OF RECEPTION

FIG. 56

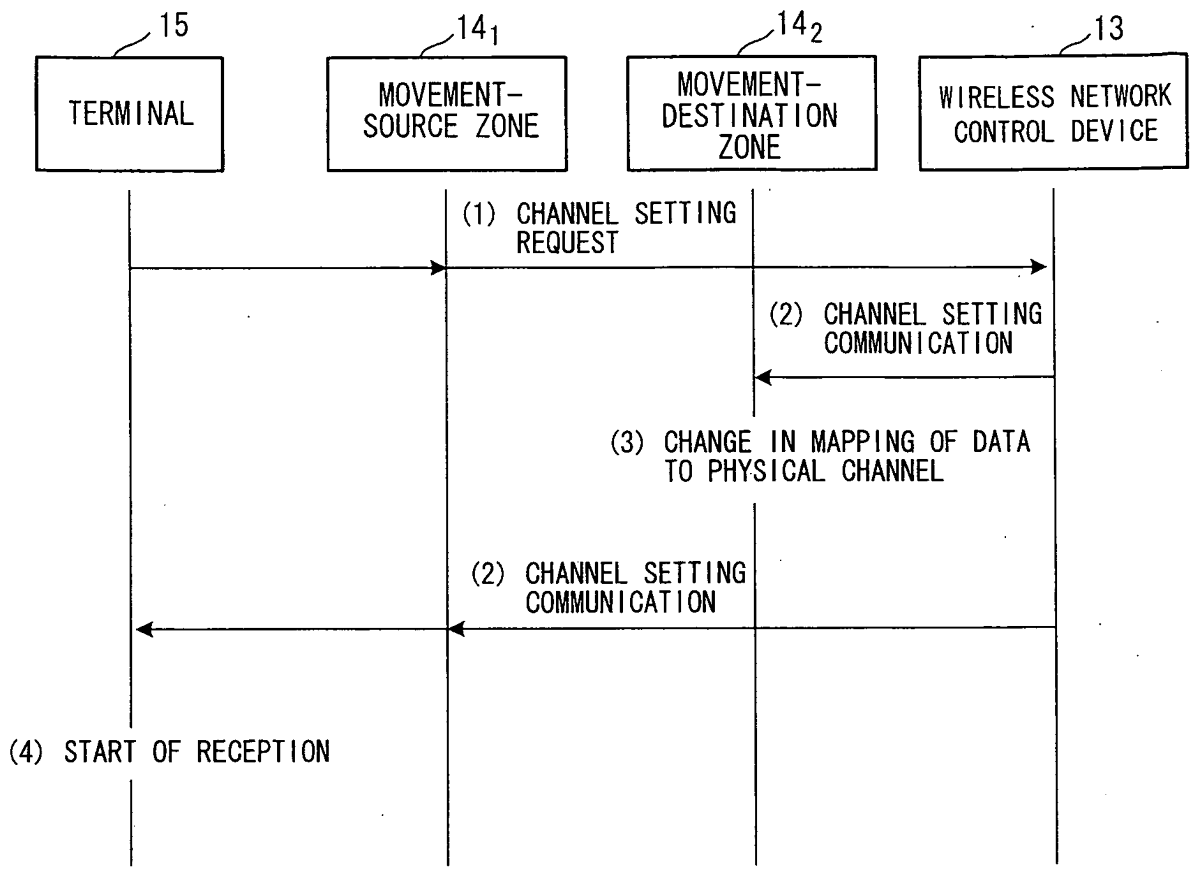
15
TERMINAL
14₁
MOVEMENT-SOURCE ZONE
14₂
MOVEMENT-DESTINATION ZONE
13
WIRELESS NETWORK CONTROL DEVICE
(1) CHANNEL SETTING REQUEST
(2) CHANNEL SETTING COMMUNICATION
(3) CHANGE IN MAPPING OF DATA TO PHYSICAL CHANNEL
(2) CHANNEL SETTING COMMUNICATION
(4) START OF RECEPTION

FIG. 57

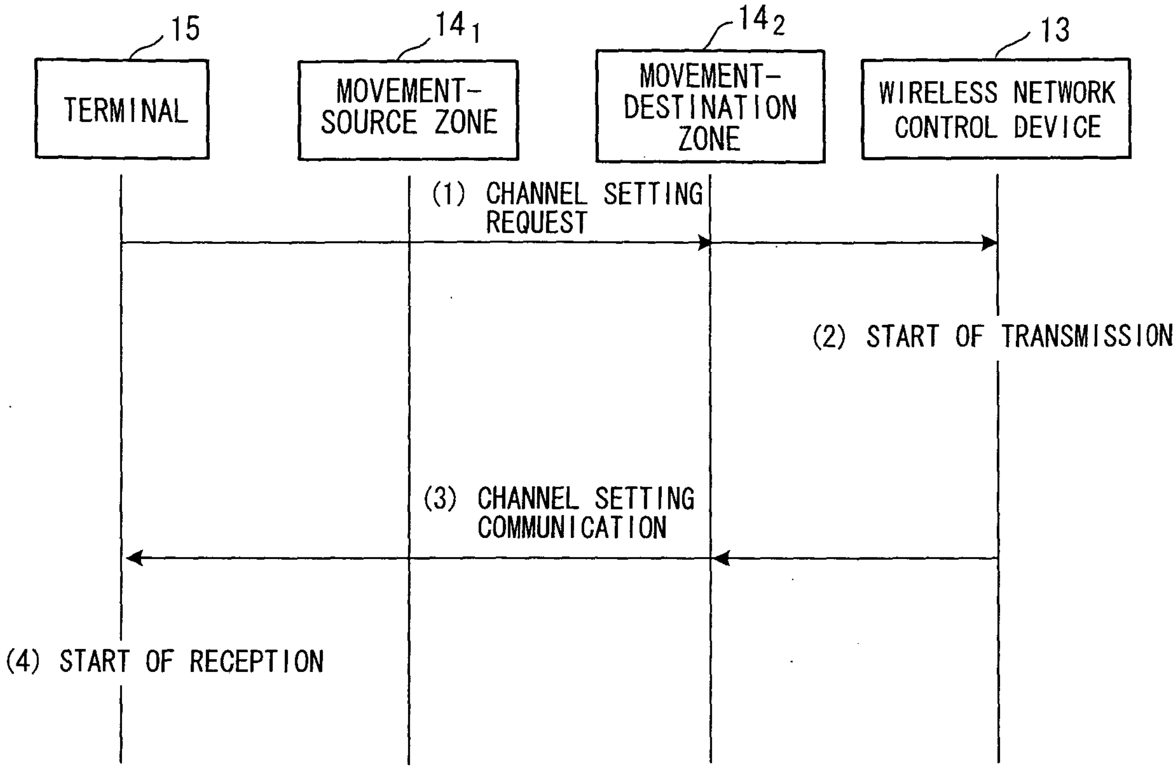
15
TERMINAL
14₁
MOVEMENT-SOURCE ZONE
14₂
MOVEMENT-DESTINATION ZONE
13
WIRELESS NETWORK CONTROL DEVICE
(1) CHANNEL SETTING REQUEST
(2) START OF TRANSMISSION
(3) CHANNEL SETTING COMMUNICATION
(4) START OF RECEPTION

FIG. 58

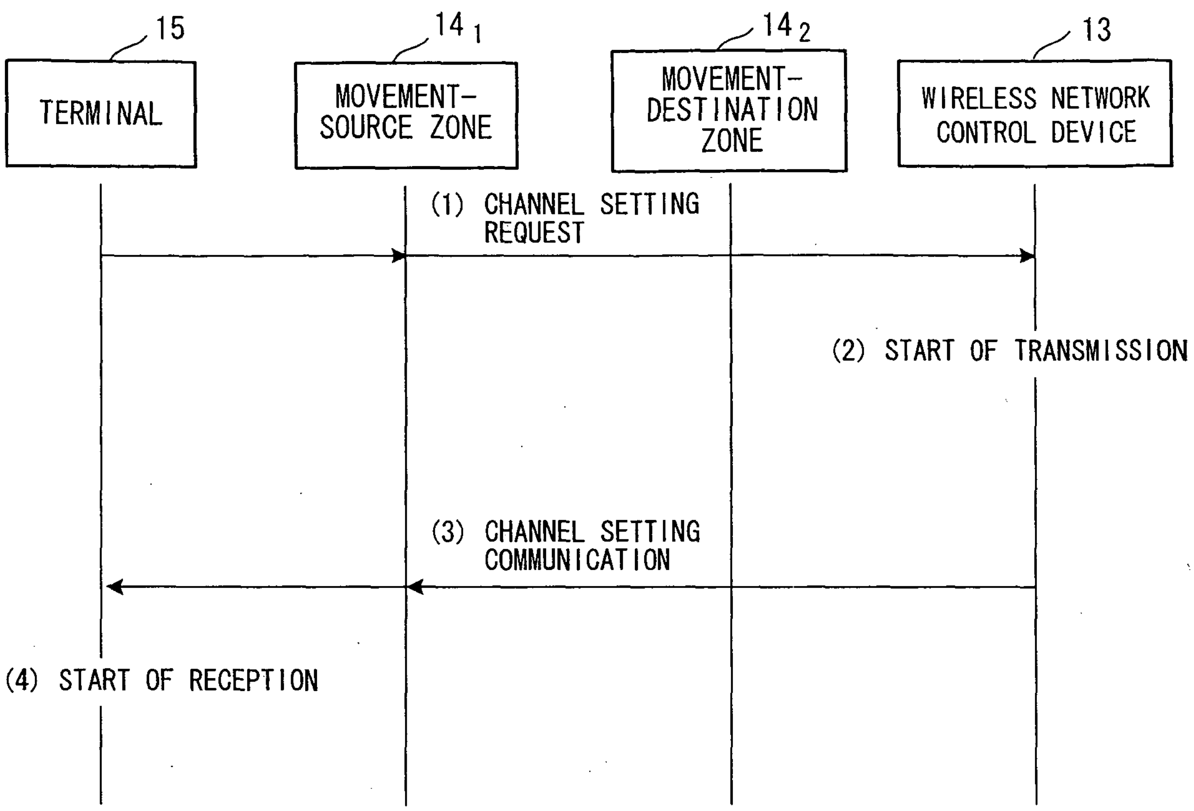
15
TERMINAL
14 1
MOVEMENT-SOURCE ZONE
14 2
MOVEMENT-DESTINATION ZONE
13
WIRELESS NETWORK CONTROL DEVICE
(1) CHANNEL SETTING REQUEST
(2) START OF TRANSMISSION
(3) CHANNEL SETTING COMMUNICATION
(4) START OF RECEPTION

FIG. 59

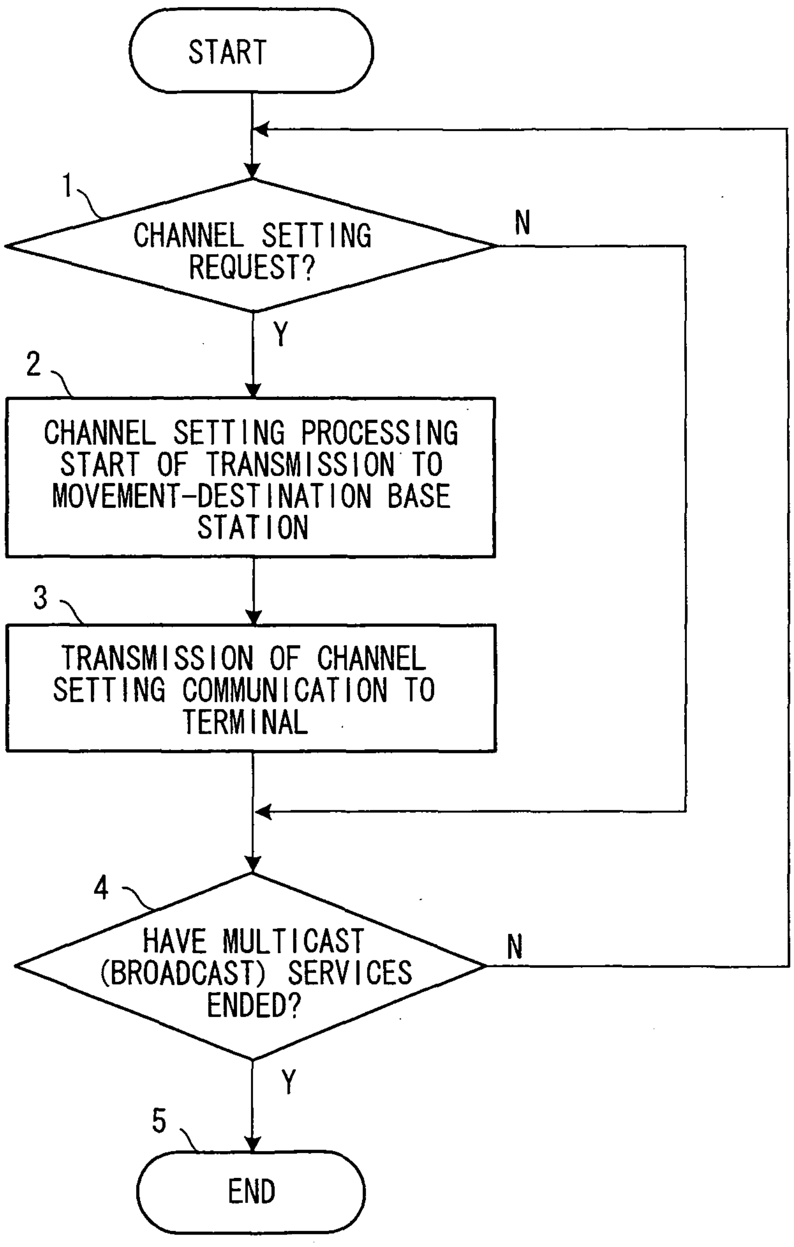
START
1
CHANNEL SETTING REQUEST?
N
Y
2
CHANNEL SETTING PROCESSING START OF TRANSMISSION TO MOVEMENT-DESTINATION BASE STATION
3
TRANSMISSION OF CHANNEL SETTING COMMUNICATION TO TERMINAL
4
HAVE MULTICAST (BROADCAST) SERVICES ENDED?
N
Y
5
END

FIG. 60

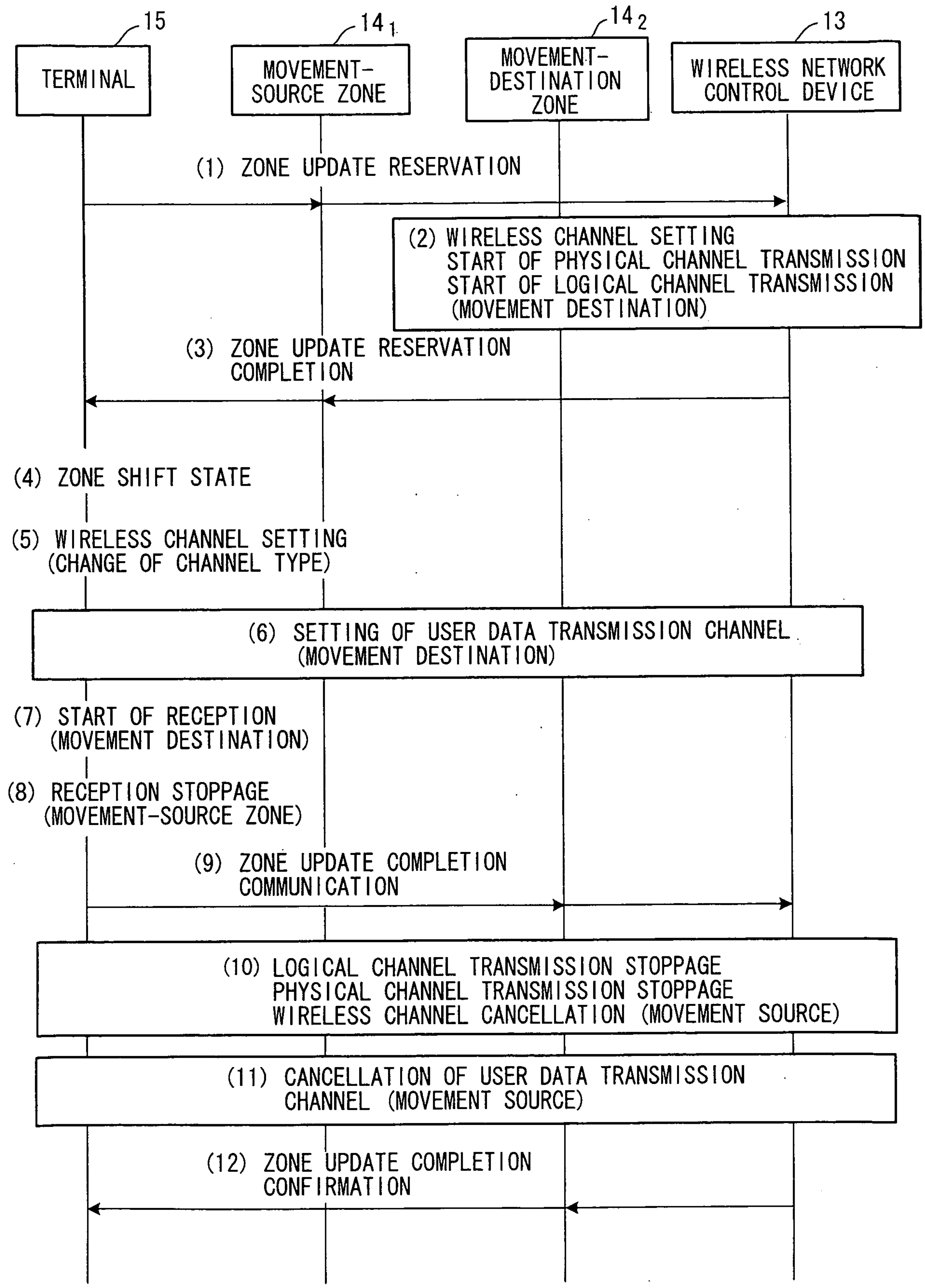
15
TERMINAL
14 1
MOVEMENT-SOURCE ZONE
14 2
MOVEMENT-DESTINATION ZONE
13
WIRELESS NETWORK CONTROL DEVICE
(1) ZONE UPDATE RESERVATION
(2) WIRELESS CHANNEL SETTING
START OF PHYSICAL CHANNEL TRANSMISSION
START OF LOGICAL CHANNEL TRANSMISSION
(MOVEMENT DESTINATION)
(3) ZONE UPDATE RESERVATION COMPLETION
(4) ZONE SHIFT STATE
(5) WIRELESS CHANNEL SETTING
(CHANGE OF CHANNEL TYPE)
(6) SETTING OF USER DATA TRANSMISSION CHANNEL
(MOVEMENT DESTINATION)
(7) START OF RECEPTION
(MOVEMENT DESTINATION)
(8) RECEPTION STOPPAGE
(MOVEMENT-SOURCE ZONE)
(9) ZONE UPDATE COMPLETION COMMUNICATION
(10) LOGICAL CHANNEL TRANSMISSION STOPPAGE
PHYSICAL CHANNEL TRANSMISSION STOPPAGE
WIRELESS CHANNEL CANCELLATION (MOVEMENT SOURCE)
(11) CANCELLATION OF USER DATA TRANSMISSION CHANNEL (MOVEMENT SOURCE)
(12) ZONE UPDATE COMPLETION CONFIRMATION

FIG. 61

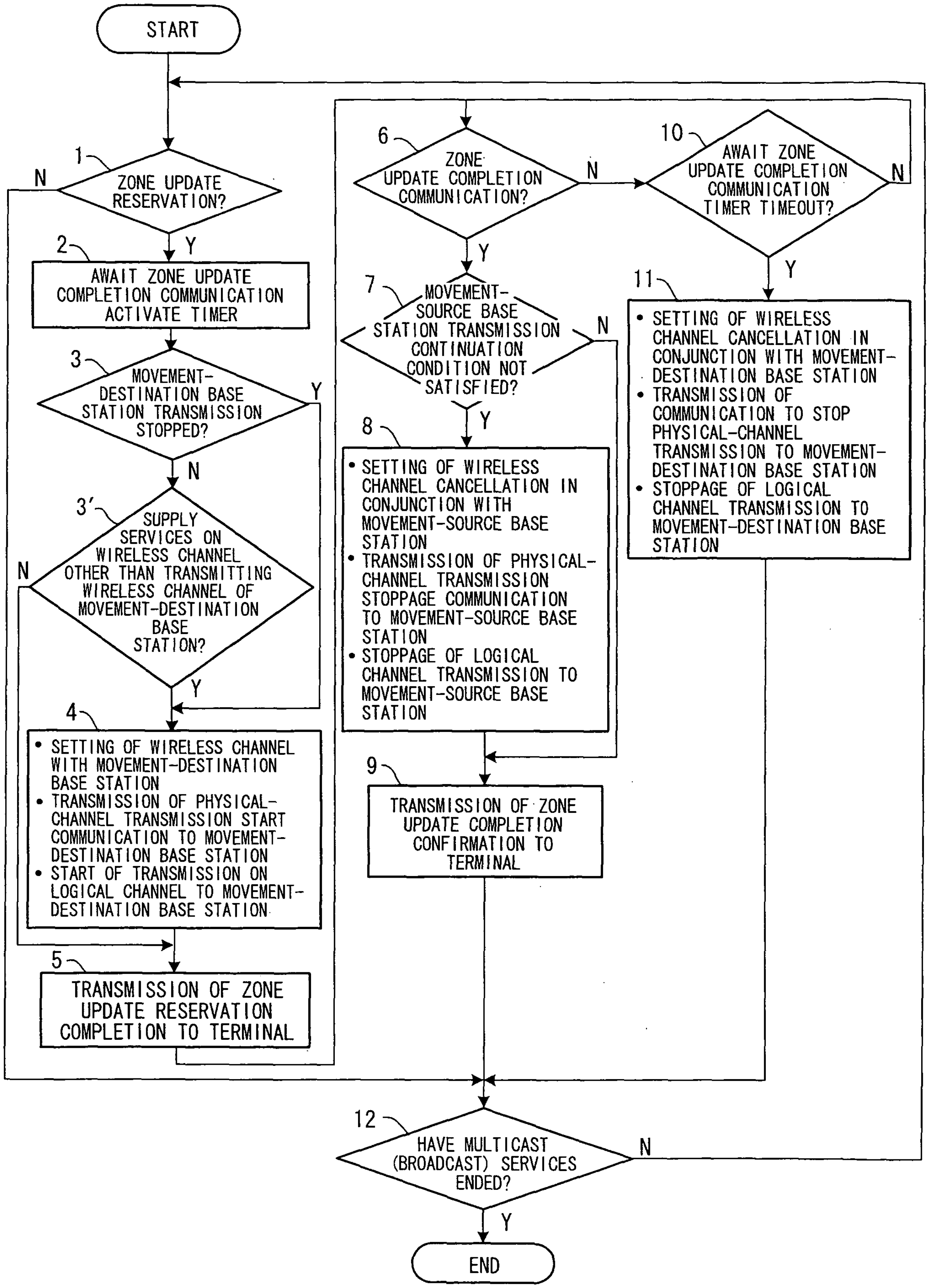
START
1 ZONE UPDATE RESERVATION?
N
Y
2 AWAIT ZONE UPDATE COMPLETION COMMUNICATION ACTIVATE TIMER
3 MOVEMENT-DESTINATION BASE STATION TRANSMISSION STOPPED?
Y
N
3′ SUPPLY SERVICES ON WIRELESS CHANNEL OTHER THAN TRANSMITTING WIRELESS CHANNEL OF MOVEMENT-DESTINATION BASE STATION?
N
Y
4 • SETTING OF WIRELESS CHANNEL WITH MOVEMENT-DESTINATION BASE STATION • TRANSMISSION OF PHYSICAL-CHANNEL TRANSMISSION START COMMUNICATION TO MOVEMENT-DESTINATION BASE STATION • START OF TRANSMISSION ON LOGICAL CHANNEL TO MOVEMENT-DESTINATION BASE STATION
5 TRANSMISSION OF ZONE UPDATE RESERVATION COMPLETION TO TERMINAL
6 ZONE UPDATE COMPLETION COMMUNICATION?
N
Y
7 MOVEMENT-SOURCE BASE STATION TRANSMISSION CONTINUATION CONDITION NOT SATISFIED?
N
Y
8 • SETTING OF WIRELESS CHANNEL CANCELLATION IN CONJUNCTION WITH MOVEMENT-SOURCE BASE STATION • TRANSMISSION OF PHYSICAL-CHANNEL TRANSMISSION STOPPAGE COMMUNICATION TO MOVEMENT-SOURCE BASE STATION • STOPPAGE OF LOGICAL CHANNEL TRANSMISSION TO MOVEMENT-SOURCE BASE STATION
9 TRANSMISSION OF ZONE UPDATE COMPLETION CONFIRMATION TO TERMINAL
10 AWAIT ZONE UPDATE COMPLETION COMMUNICATION TIMER TIMEOUT?
N
Y
11 • SETTING OF WIRELESS CHANNEL CANCELLATION IN CONJUNCTION WITH MOVEMENT-DESTINATION BASE STATION • TRANSMISSION OF COMMUNICATION TO STOP PHYSICAL-CHANNEL TRANSMISSION TO MOVEMENT-DESTINATION BASE STATION • STOPPAGE OF LOGICAL CHANNEL TRANSMISSION TO MOVEMENT-DESTINATION BASE STATION
12 HAVE MULTICAST (BROADCAST) SERVICES ENDED?
N
Y
END

FIG. 62

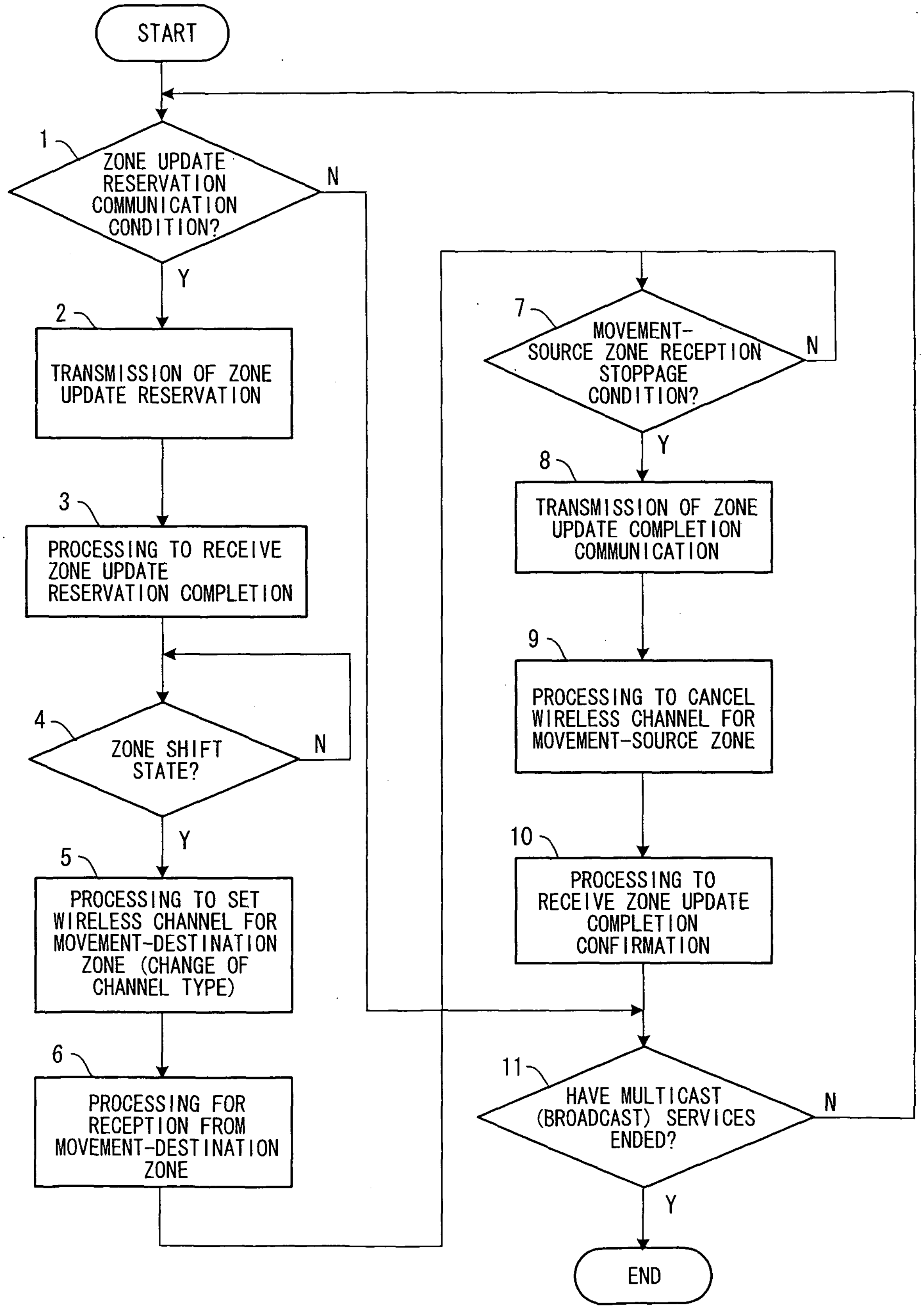
START
1
ZONE UPDATE RESERVATION COMMUNICATION CONDITION?
N
Y
2
TRANSMISSION OF ZONE UPDATE RESERVATION
3
PROCESSING TO RECEIVE ZONE UPDATE RESERVATION COMPLETION
4
ZONE SHIFT STATE?
N
Y
5
PROCESSING TO SET WIRELESS CHANNEL FOR MOVEMENT-DESTINATION ZONE (CHANGE OF CHANNEL TYPE)
6
PROCESSING FOR RECEPTION FROM MOVEMENT-DESTINATION ZONE
7
MOVEMENT-SOURCE ZONE RECEPTION STOPPAGE CONDITION?
N
Y
8
TRANSMISSION OF ZONE UPDATE COMPLETION COMMUNICATION
9
PROCESSING TO CANCEL WIRELESS CHANNEL FOR MOVEMENT-SOURCE ZONE
10
PROCESSING TO RECEIVE ZONE UPDATE COMPLETION CONFIRMATION
11
HAVE MULTICAST (BROADCAST) SERVICES ENDED?
N
Y
END

FIG. 63

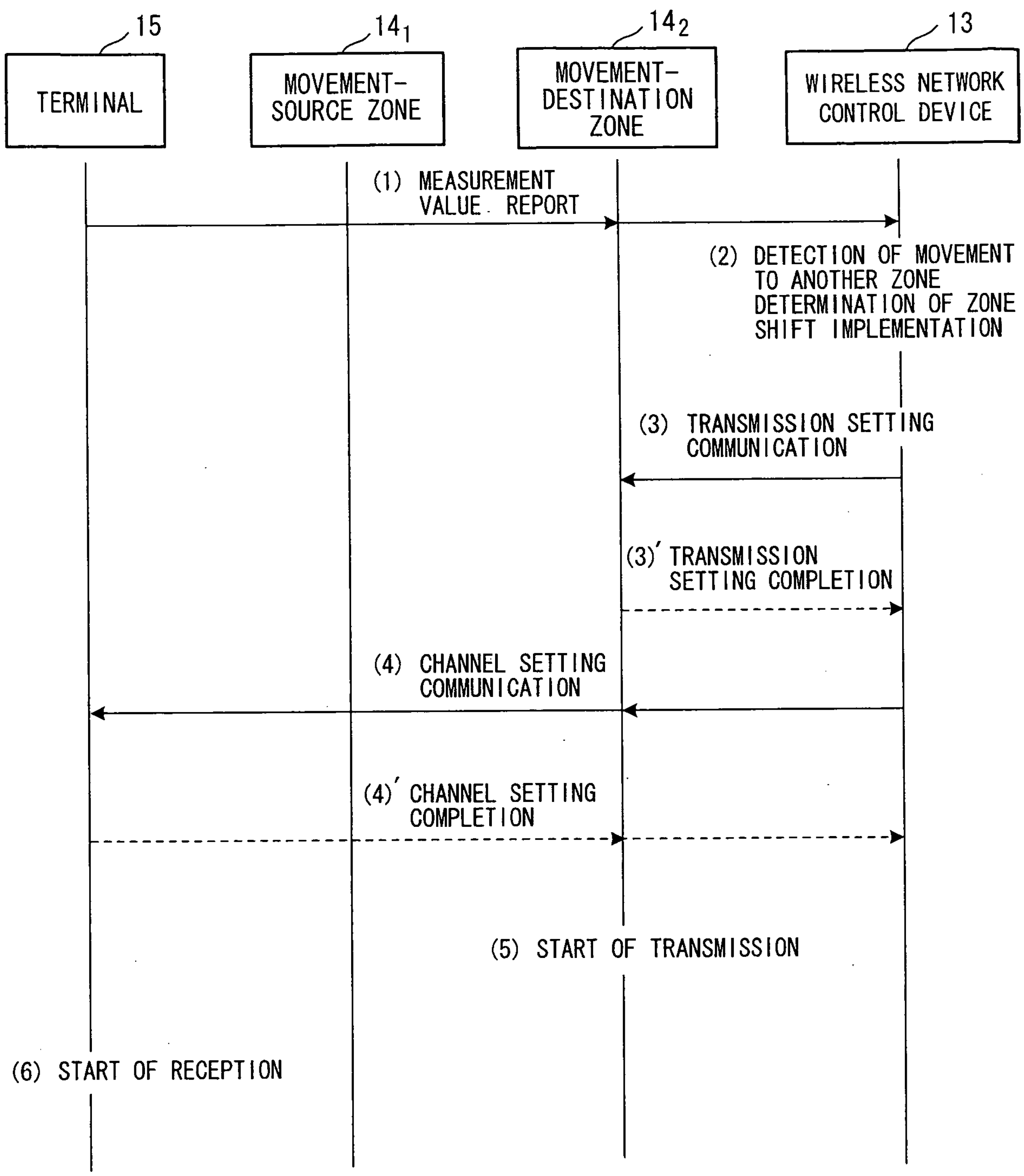
15
$14_1$
$14_2$
13
TERMINAL
MOVEMENT-SOURCE ZONE
MOVEMENT-DESTINATION ZONE
WIRELESS NETWORK CONTROL DEVICE
(1) MEASUREMENT VALUE REPORT
(2) DETECTION OF MOVEMENT TO ANOTHER ZONE
DETERMINATION OF ZONE SHIFT IMPLEMENTATION
(3) TRANSMISSION SETTING COMMUNICATION
(3)' TRANSMISSION SETTING COMPLETION
(4) CHANNEL SETTING COMMUNICATION
(4)' CHANNEL SETTING COMPLETION
(5) START OF TRANSMISSION
(6) START OF RECEPTION

FIG. 64

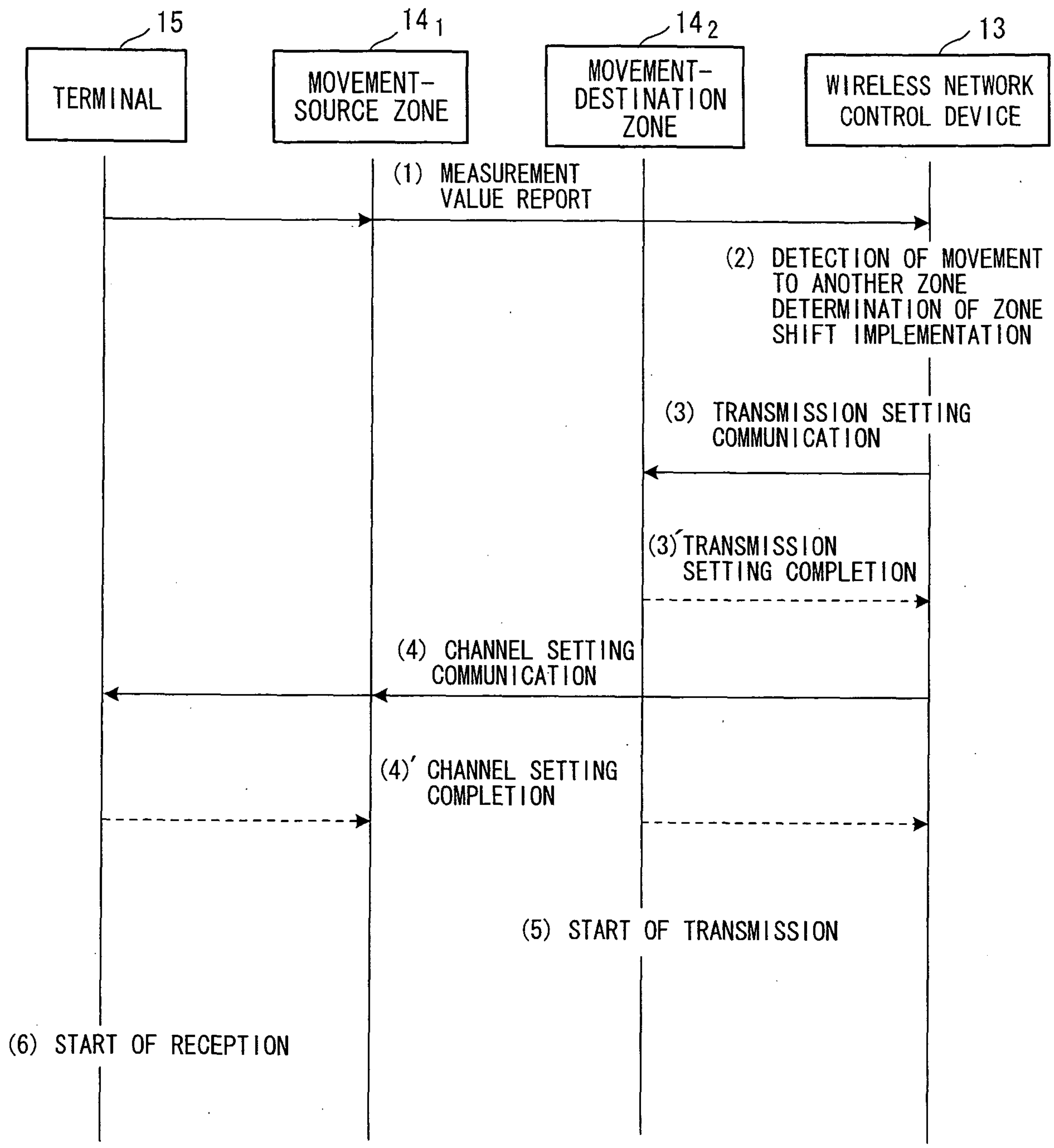
15
14 1
14 2
13
TERMINAL
MOVEMENT-SOURCE ZONE
MOVEMENT-DESTINATION ZONE
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) TRANSMISSION SETTING COMMUNICATION
(3)' TRANSMISSION SETTING COMPLETION
(4) CHANNEL SETTING COMMUNICATION
(4)' CHANNEL SETTING COMPLETION
(5) START OF TRANSMISSION
(6) START OF RECEPTION

FIG. 65

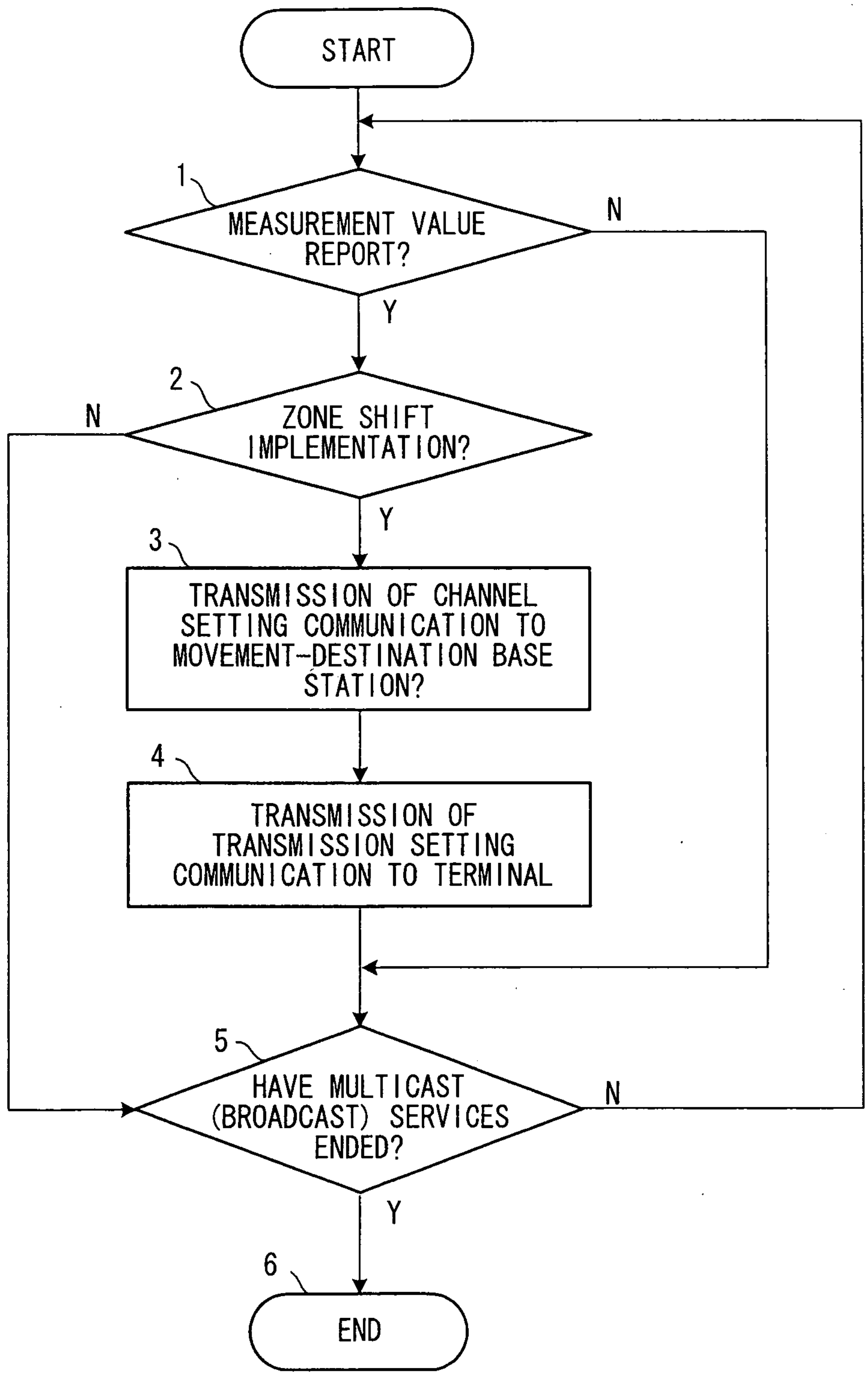
START
1
MEASUREMENT VALUE REPORT?
N
Y
2
ZONE SHIFT IMPLEMENTATION?
N
Y
3
TRANSMISSION OF CHANNEL SETTING COMMUNICATION TO MOVEMENT-DESTINATION BASE STATION?
4
TRANSMISSION OF TRANSMISSION SETTING COMMUNICATION TO TERMINAL
5
HAVE MULTICAST (BROADCAST) SERVICES ENDED?
N
Y
6
END

FIG. 66

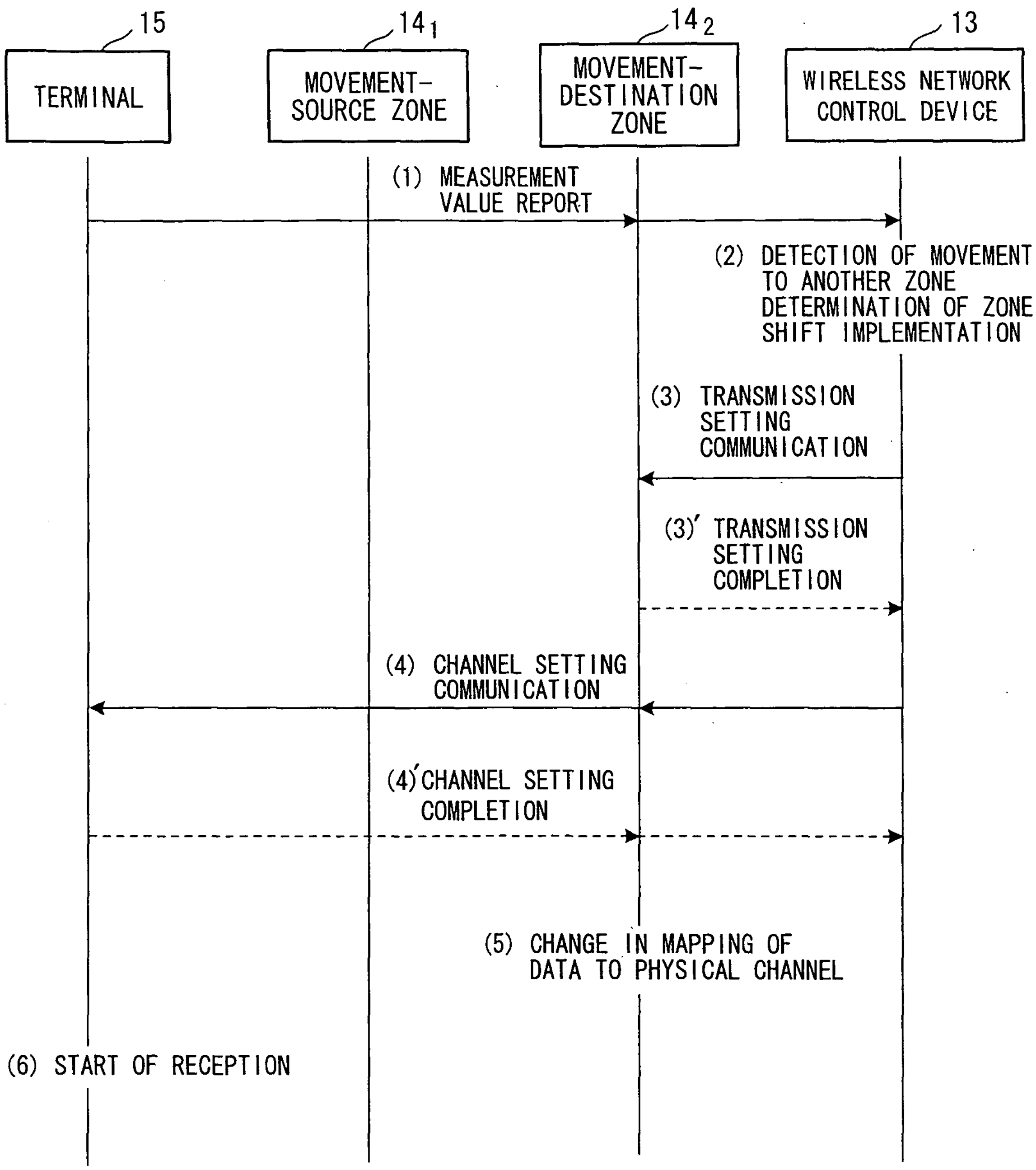
15
TERMINAL
14₁
MOVEMENT-SOURCE ZONE
14₂
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) TRANSMISSION SETTING COMMUNICATION
(3)' TRANSMISSION SETTING COMPLETION
(4) CHANNEL SETTING COMMUNICATION
(4)' CHANNEL SETTING COMPLETION
(5) CHANGE IN MAPPING OF DATA TO PHYSICAL CHANNEL
(6) START OF RECEPTION

FIG. 67

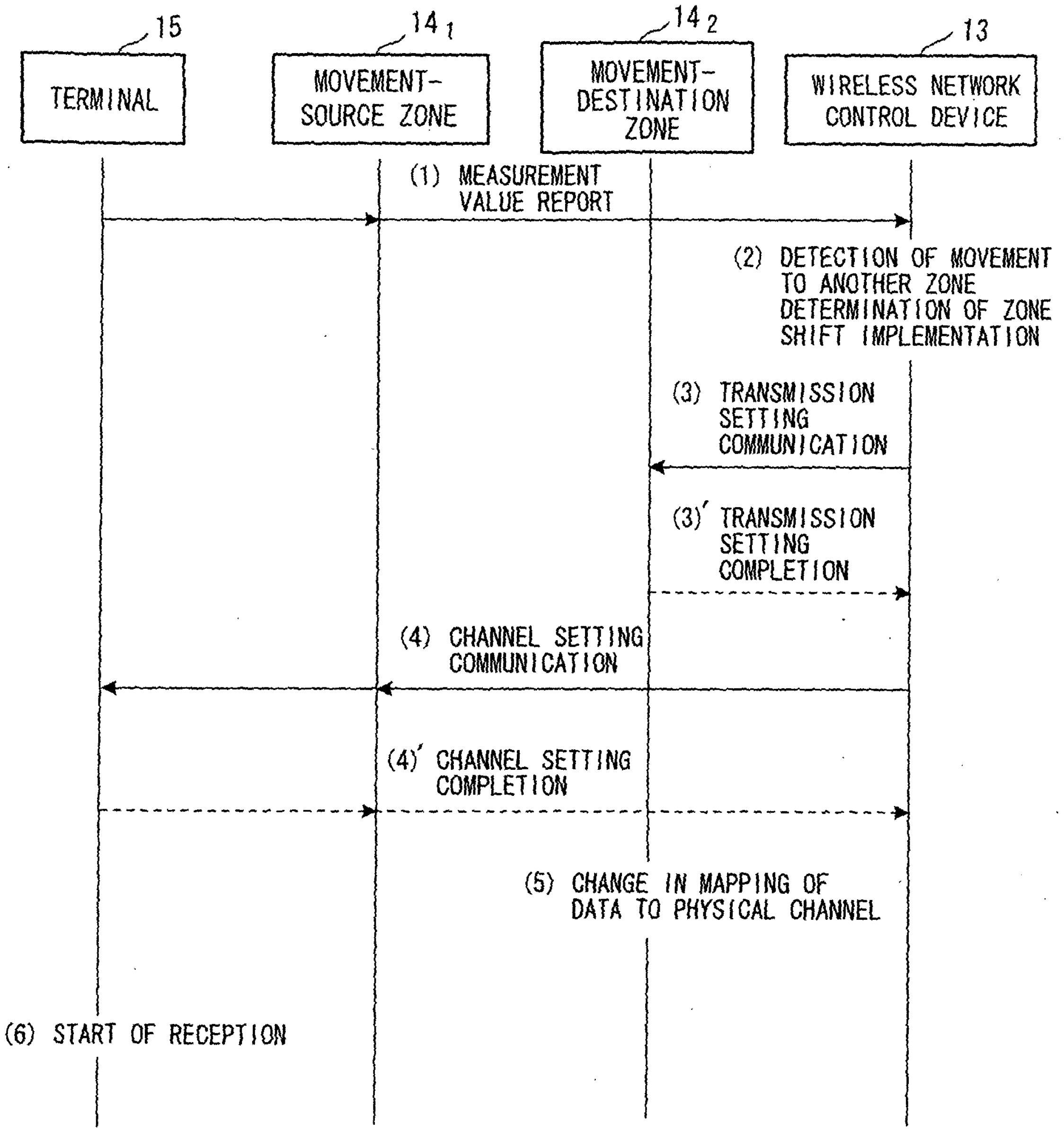
15
14 1
14 2
13
TERMINAL
MOVEMENT-SOURCE ZONE
MOVEMENT-DESTINATION ZONE
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) TRANSMISSION SETTING COMMUNICATION
(3)' TRANSMISSION SETTING COMPLETION
(4) CHANNEL SETTING COMMUNICATION
(4)' CHANNEL SETTING COMPLETION
(5) CHANGE IN MAPPING OF DATA TO PHYSICAL CHANNEL
(6) START OF RECEPTION

FIG. 68

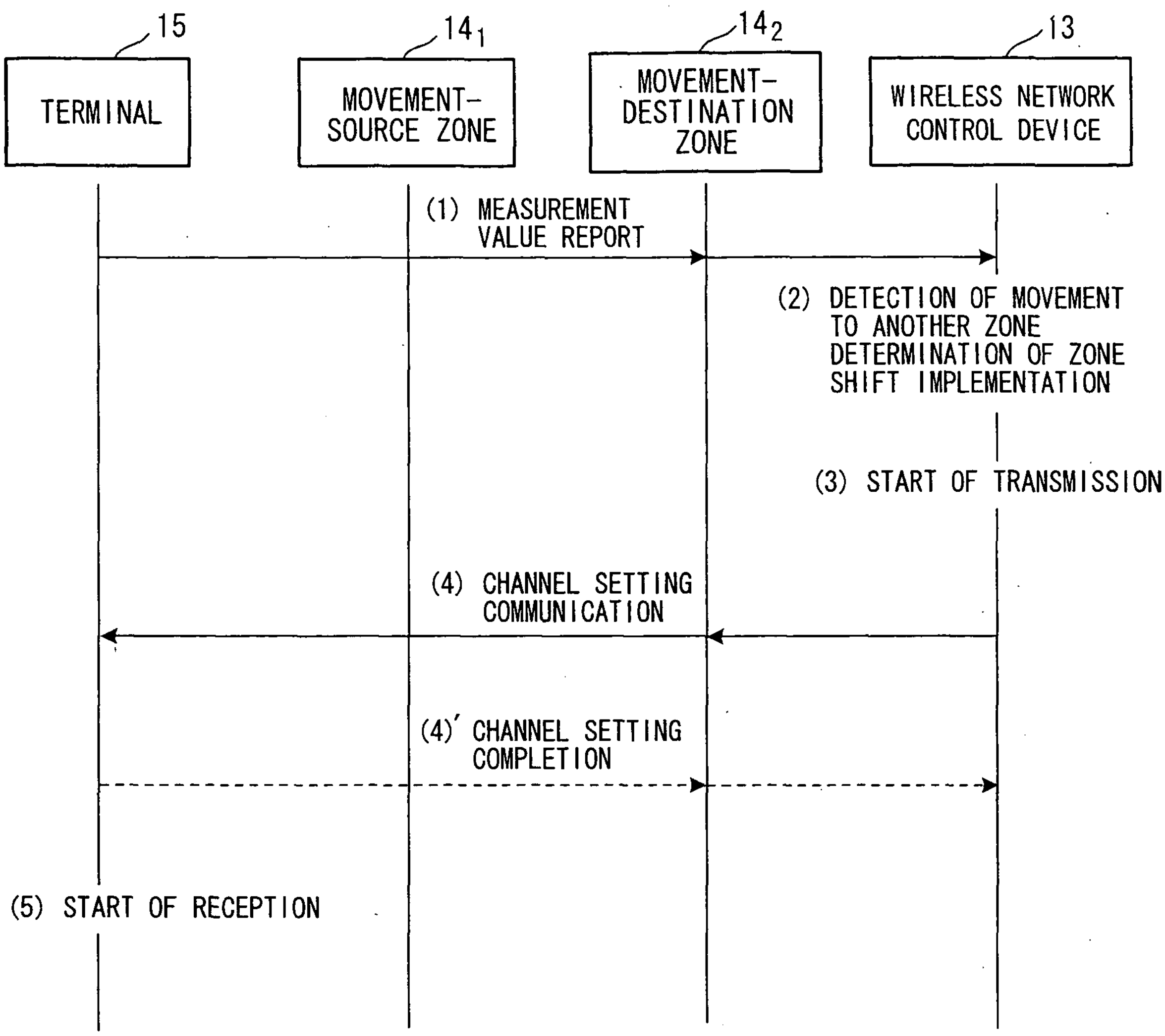
15
TERMINAL
$14_1$
MOVEMENT-SOURCE ZONE
$14_2$
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) START OF TRANSMISSION
(4) CHANNEL SETTING COMMUNICATION
(4)' CHANNEL SETTING COMPLETION
(5) START OF RECEPTION

FIG. 69

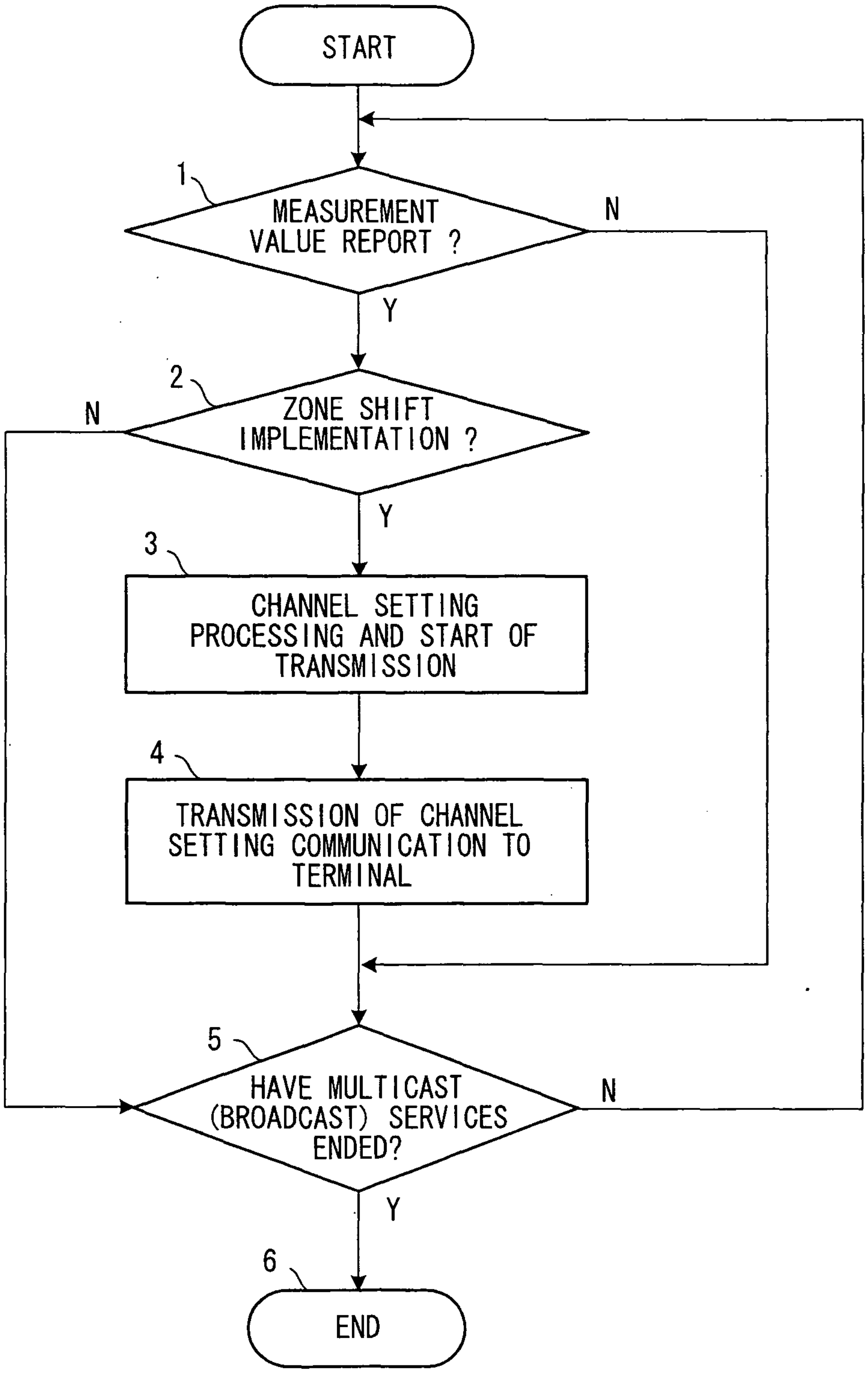
START
1
MEASUREMENT VALUE REPORT ?
N
Y
2
ZONE SHIFT IMPLEMENTATION ?
N
Y
3
CHANNEL SETTING PROCESSING AND START OF TRANSMISSION
4
TRANSMISSION OF CHANNEL SETTING COMMUNICATION TO TERMINAL
5
HAVE MULTICAST (BROADCAST) SERVICES ENDED?
N
Y
6
END

FIG. 70

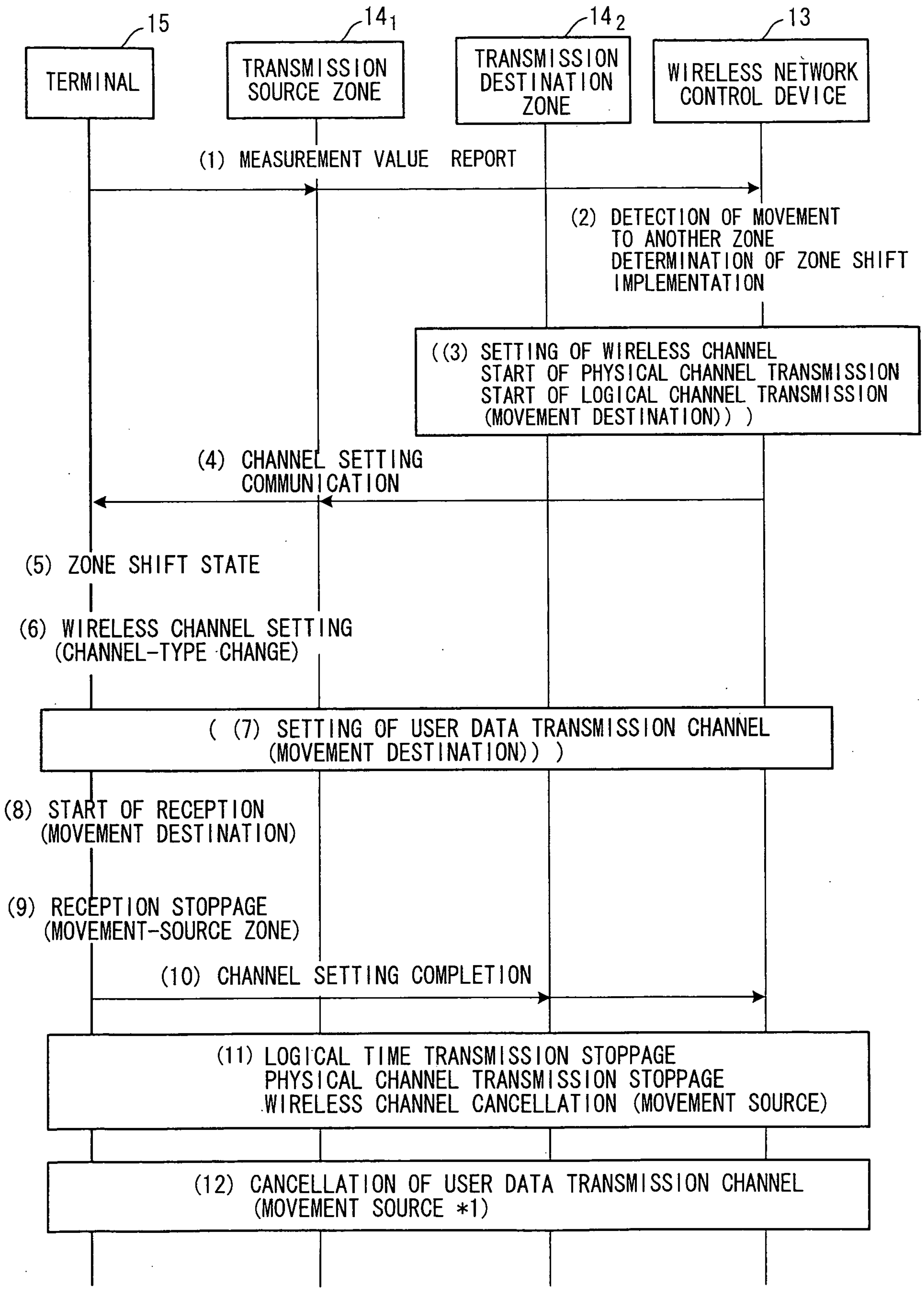
15
14₁
14₂
13
TERMINAL
TRANSMISSION SOURCE ZONE
TRANSMISSION DESTINATION ZONE
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
((3) SETTING OF WIRELESS CHANNEL START OF PHYSICAL CHANNEL TRANSMISSION START OF LOGICAL CHANNEL TRANSMISSION (MOVEMENT DESTINATION)) )
(4) CHANNEL SETTING COMMUNICATION
(5) ZONE SHIFT STATE
(6) WIRELESS CHANNEL SETTING (CHANNEL-TYPE CHANGE)
( (7) SETTING OF USER DATA TRANSMISSION CHANNEL (MOVEMENT DESTINATION)) )
(8) START OF RECEPTION (MOVEMENT DESTINATION)
(9) RECEPTION STOPPAGE (MOVEMENT-SOURCE ZONE)
(10) CHANNEL SETTING COMPLETION
(11) LOGICAL TIME TRANSMISSION STOPPAGE PHYSICAL CHANNEL TRANSMISSION STOPPAGE WIRELESS CHANNEL CANCELLATION (MOVEMENT SOURCE)
(12) CANCELLATION OF USER DATA TRANSMISSION CHANNEL (MOVEMENT SOURCE *1)

FIG. 71

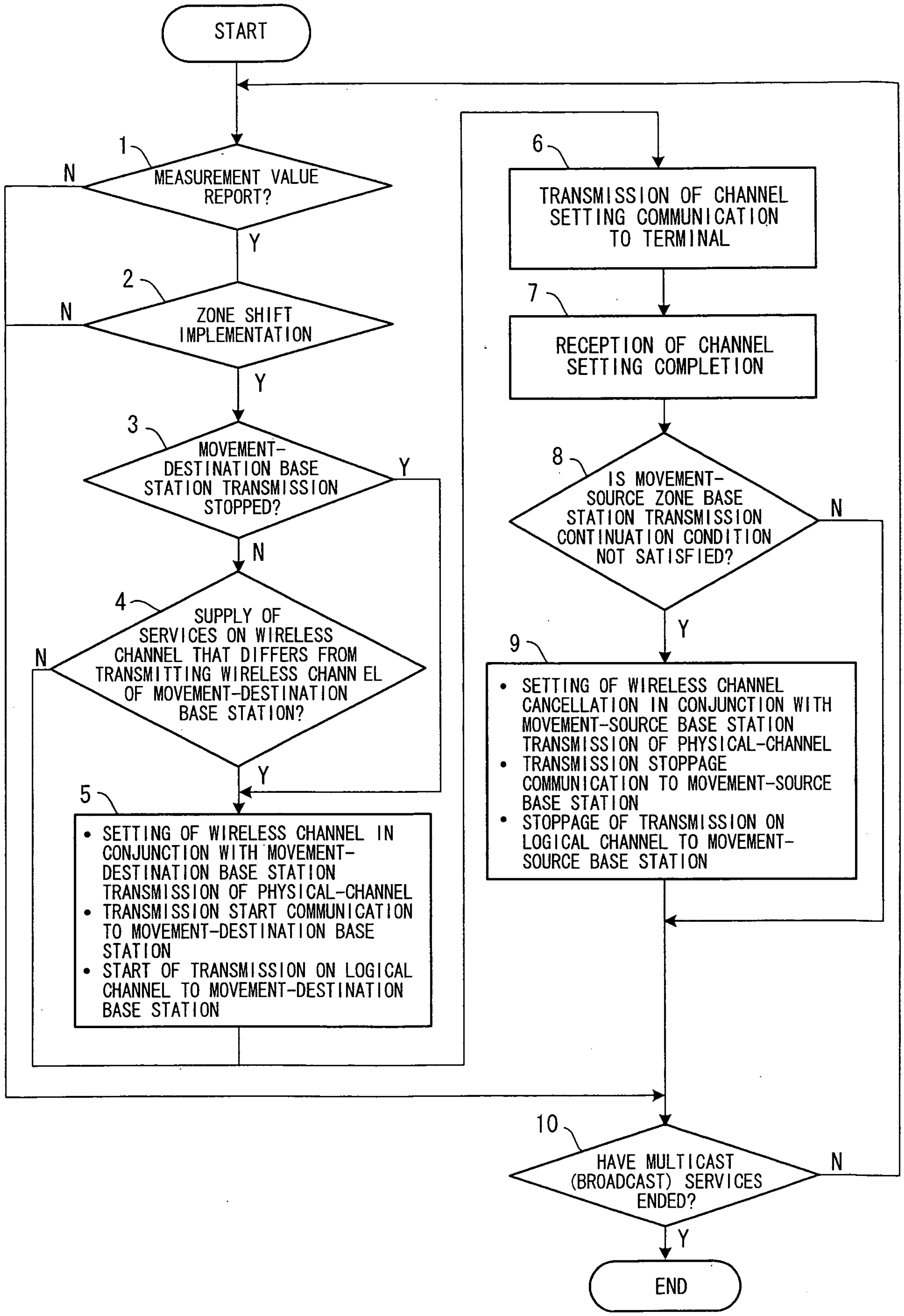
START
1
MEASUREMENT VALUE REPORT?
N
Y
2
ZONE SHIFT IMPLEMENTATION
N
Y
3
MOVEMENT-DESTINATION BASE STATION TRANSMISSION STOPPED?
Y
N
4
SUPPLY OF SERVICES ON WIRELESS CHANNEL THAT DIFFERS FROM TRANSMITTING WIRELESS CHANN EL OF MOVEMENT-DESTINATION BASE STATION?
N
Y
5
• SETTING OF WIRELESS CHANNEL IN CONJUNCTION WITH MOVEMENT-DESTINATION BASE STATION TRANSMISSION OF PHYSICAL-CHANNEL
• TRANSMISSION START COMMUNICATION TO MOVEMENT-DESTINATION BASE STATION
• START OF TRANSMISSION ON LOGICAL CHANNEL TO MOVEMENT-DESTINATION BASE STATION
6
TRANSMISSION OF CHANNEL SETTING COMMUNICATION TO TERMINAL
7
RECEPTION OF CHANNEL SETTING COMPLETION
8
IS MOVEMENT-SOURCE ZONE BASE STATION TRANSMISSION CONTINUATION CONDITION NOT SATISFIED?
N
Y
9
• SETTING OF WIRELESS CHANNEL CANCELLATION IN CONJUNCTION WITH MOVEMENT-SOURCE BASE STATION TRANSMISSION OF PHYSICAL-CHANNEL
• TRANSMISSION STOPPAGE COMMUNICATION TO MOVEMENT-SOURCE BASE STATION
• STOPPAGE OF TRANSMISSION ON LOGICAL CHANNEL TO MOVEMENT-SOURCE BASE STATION
10
HAVE MULTICAST (BROADCAST) SERVICES ENDED?
N
Y
END

FIG. 72

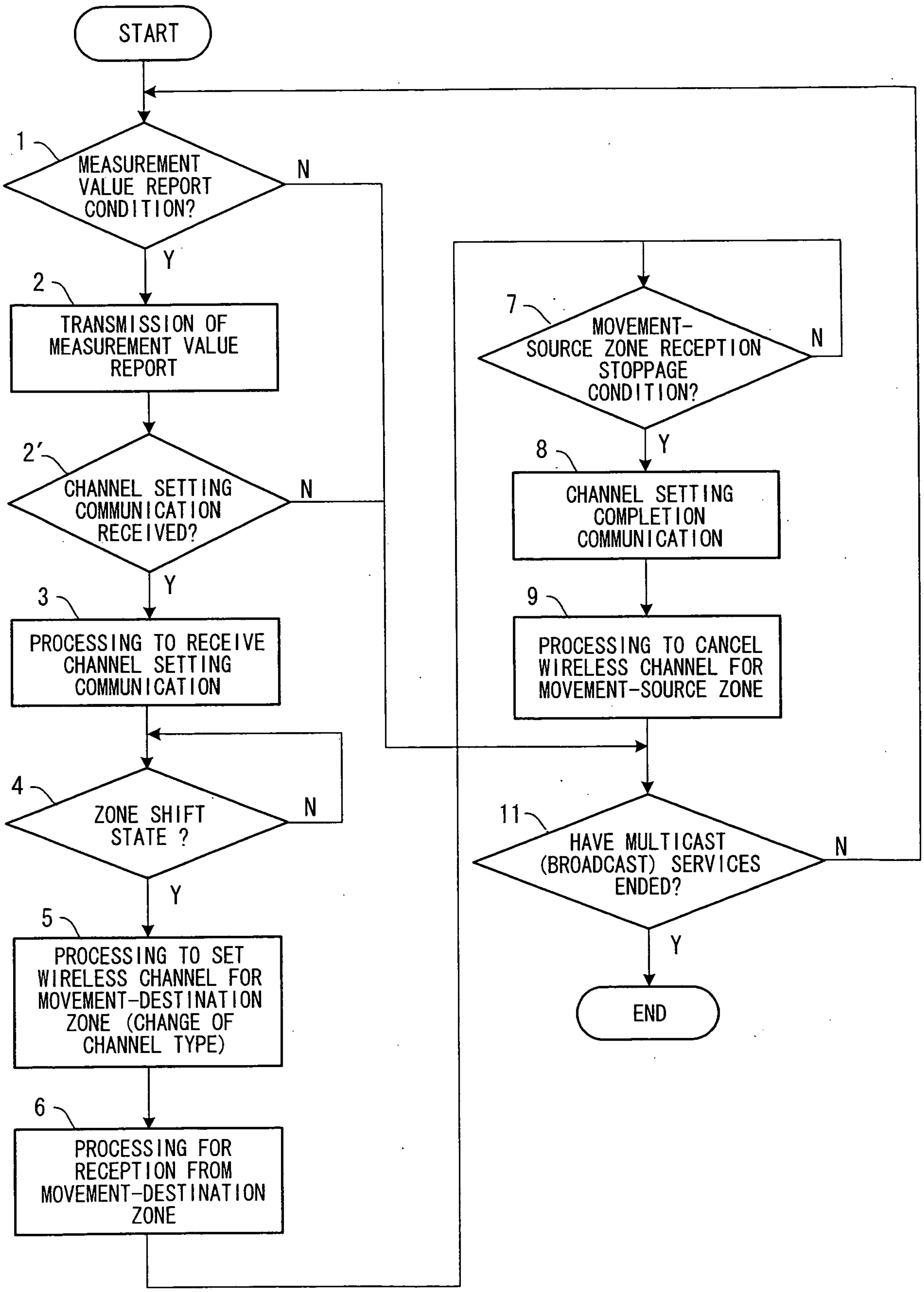
START
1
MEASUREMENT VALUE REPORT CONDITION?
N
Y
2
TRANSMISSION OF MEASUREMENT VALUE REPORT
2′
CHANNEL SETTING COMMUNICATION RECEIVED?
N
Y
3
PROCESSING TO RECEIVE CHANNEL SETTING COMMUNICATION
4
ZONE SHIFT STATE ?
N
Y
5
PROCESSING TO SET WIRELESS CHANNEL FOR MOVEMENT-DESTINATION ZONE (CHANGE OF CHANNEL TYPE)
6
PROCESSING FOR RECEPTION FROM MOVEMENT-DESTINATION ZONE
7
MOVEMENT-SOURCE ZONE RECEPTION STOPPAGE CONDITION?
N
Y
8
CHANNEL SETTING COMPLETION COMMUNICATION
9
PROCESSING TO CANCEL WIRELESS CHANNEL FOR MOVEMENT-SOURCE ZONE
11
HAVE MULTICAST (BROADCAST) SERVICES ENDED?
N
Y
END

FIG. 73

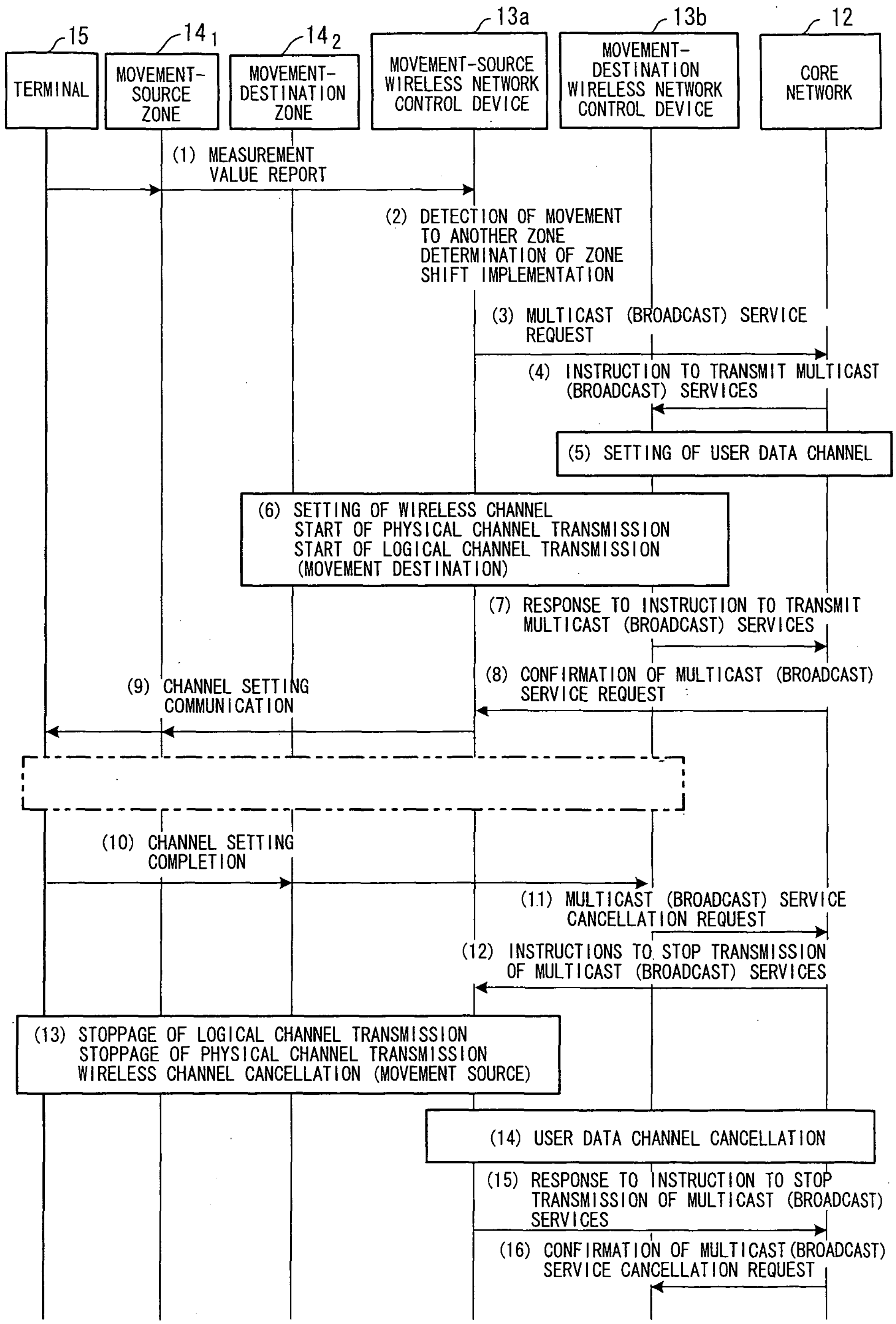
15
TERMINAL
14 1
MOVEMENT-SOURCE ZONE
14 2
MOVEMENT-DESTINATION ZONE
13a
MOVEMENT-SOURCE WIRELESS NETWORK CONTROL DEVICE
13b
MOVEMENT-DESTINATION WIRELESS NETWORK CONTROL DEVICE
12
CORE NETWORK
(1) MEASUREMENT VALUE REPORT
(2) DETECTION OF MOVEMENT TO ANOTHER ZONE DETERMINATION OF ZONE SHIFT IMPLEMENTATION
(3) MULTICAST (BROADCAST) SERVICE REQUEST
(4) INSTRUCTION TO TRANSMIT MULTICAST (BROADCAST) SERVICES
(5) SETTING OF USER DATA CHANNEL
(6) SETTING OF WIRELESS CHANNEL START OF PHYSICAL CHANNEL TRANSMISSION START OF LOGICAL CHANNEL TRANSMISSION (MOVEMENT DESTINATION)
(7) RESPONSE TO INSTRUCTION TO TRANSMIT MULTICAST (BROADCAST) SERVICES
(8) CONFIRMATION OF MULTICAST (BROADCAST) SERVICE REQUEST
(9) CHANNEL SETTING COMMUNICATION
(10) CHANNEL SETTING COMPLETION
(11) MULTICAST (BROADCAST) SERVICE CANCELLATION REQUEST
(12) INSTRUCTIONS TO STOP TRANSMISSION OF MULTICAST (BROADCAST) SERVICES
(13) STOPPAGE OF LOGICAL CHANNEL TRANSMISSION STOPPAGE OF PHYSICAL CHANNEL TRANSMISSION WIRELESS CHANNEL CANCELLATION (MOVEMENT SOURCE)
(14) USER DATA CHANNEL CANCELLATION
(15) RESPONSE TO INSTRUCTION TO STOP TRANSMISSION OF MULTICAST (BROADCAST) SERVICES
(16) CONFIRMATION OF MULTICAST (BROADCAST) SERVICE CANCELLATION REQUEST

FIG. 74

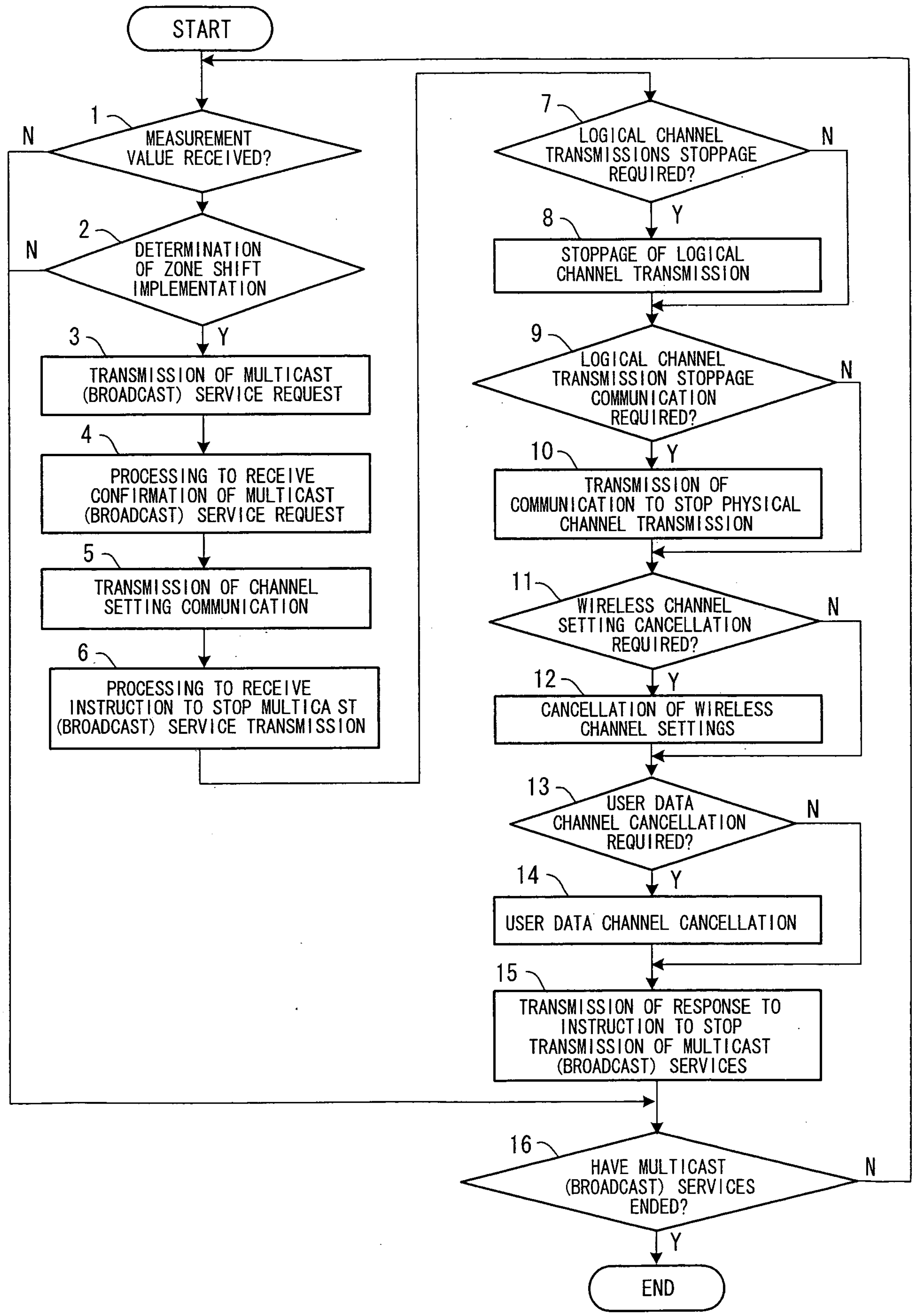
START
1 MEASUREMENT VALUE RECEIVED?
N
2 DETERMINATION OF ZONE SHIFT IMPLEMENTATION
N
Y
3 TRANSMISSION OF MULTICAST (BROADCAST) SERVICE REQUEST
4 PROCESSING TO RECEIVE CONFIRMATION OF MULTICAST (BROADCAST) SERVICE REQUEST
5 TRANSMISSION OF CHANNEL SETTING COMMUNICATION
6 PROCESSING TO RECEIVE INSTRUCTION TO STOP MULTICA ST (BROADCAST) SERVICE TRANSMISSION
7 LOGICAL CHANNEL TRANSMISSIONS STOPPAGE REQUIRED?
N
Y
8 STOPPAGE OF LOGICAL CHANNEL TRANSMISSION
9 LOGICAL CHANNEL TRANSMISSION STOPPAGE COMMUNICATION REQUIRED?
N
Y
10 TRANSMISSION OF COMMUNICATION TO STOP PHYSICAL CHANNEL TRANSMISSION
11 WIRELESS CHANNEL SETTING CANCELLATION REQUIRED?
N
Y
12 CANCELLATION OF WIRELESS CHANNEL SETTINGS
13 USER DATA CHANNEL CANCELLATION REQUIRED?
N
Y
14 USER DATA CHANNEL CANCELLATION
15 TRANSMISSION OF RESPONSE TO INSTRUCTION TO STOP TRANSMISSION OF MULTICAST (BROADCAST) SERVICES
16 HAVE MULTICAST (BROADCAST) SERVICES ENDED?
N
Y
END

FIG. 75

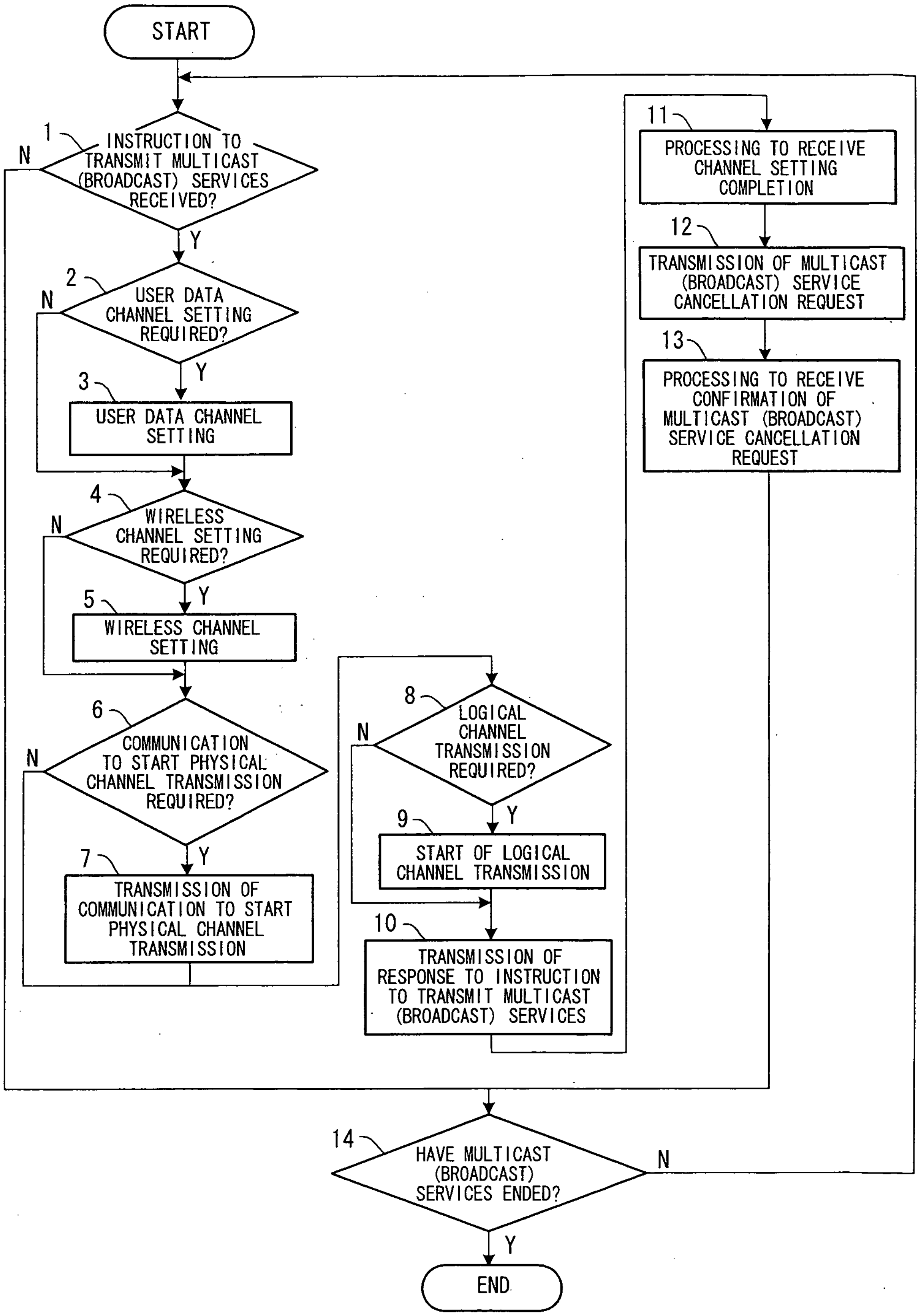
START
1
INSTRUCTION TO TRANSMIT MULTICAST (BROADCAST) SERVICES RECEIVED?
N
Y
2
USER DATA CHANNEL SETTING REQUIRED?
N
Y
3
USER DATA CHANNEL SETTING
4
WIRELESS CHANNEL SETTING REQUIRED?
N
Y
5
WIRELESS CHANNEL SETTING
6
COMMUNICATION TO START PHYSICAL CHANNEL TRANSMISSION REQUIRED?
N
Y
7
TRANSMISSION OF COMMUNICATION TO START PHYSICAL CHANNEL TRANSMISSION
8
LOGICAL CHANNEL TRANSMISSION REQUIRED?
N
Y
9
START OF LOGICAL CHANNEL TRANSMISSION
10
TRANSMISSION OF RESPONSE TO INSTRUCTION TO TRANSMIT MULTICAST (BROADCAST) SERVICES
11
PROCESSING TO RECEIVE CHANNEL SETTING COMPLETION
12
TRANSMISSION OF MULTICAST (BROADCAST) SERVICE CANCELLATION REQUEST
13
PROCESSING TO RECEIVE CONFIRMATION OF MULTICAST (BROADCAST) SERVICE CANCELLATION REQUEST
14
HAVE MULTICAST (BROADCAST) SERVICES ENDED?
N
Y
END

FIG. 76

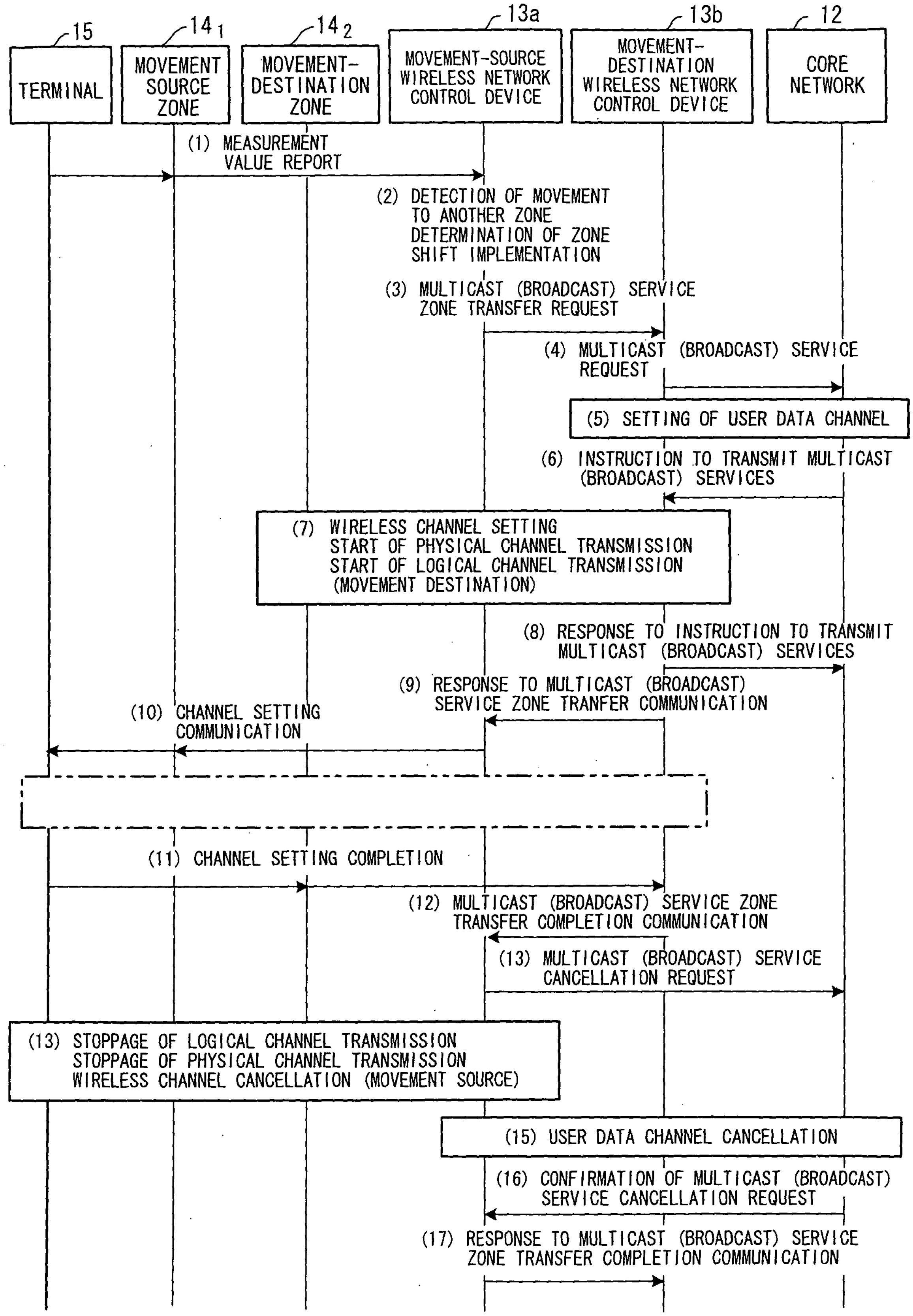
15
TERMINAL
14 1
MOVEMENT SOURCE ZONE
14 2
MOVEMENT-DESTINATION ZONE
13a
MOVEMENT-SOURCE WIRELESS NETWORK CONTROL DEVICE
13b
MOVEMENT-DESTINATION WIRELESS NETWORK CONTROL DEVICE
12
CORE NETWORK
(1) MEASUREMENT VALUE REPORT
(2) DETECTION OF MOVEMENT TO ANOTHER ZONE DETERMINATION OF ZONE SHIFT IMPLEMENTATION
(3) MULTICAST (BROADCAST) SERVICE ZONE TRANSFER REQUEST
(4) MULTICAST (BROADCAST) SERVICE REQUEST
(5) SETTING OF USER DATA CHANNEL
(6) INSTRUCTION TO TRANSMIT MULTICAST (BROADCAST) SERVICES
(7) WIRELESS CHANNEL SETTING
START OF PHYSICAL CHANNEL TRANSMISSION
START OF LOGICAL CHANNEL TRANSMISSION
(MOVEMENT DESTINATION)
(8) RESPONSE TO INSTRUCTION TO TRANSMIT MULTICAST (BROADCAST) SERVICES
(9) RESPONSE TO MULTICAST (BROADCAST) SERVICE ZONE TRANFER COMMUNICATION
(10) CHANNEL SETTING COMMUNICATION
(11) CHANNEL SETTING COMPLETION
(12) MULTICAST (BROADCAST) SERVICE ZONE TRANSFER COMPLETION COMMUNICATION
(13) MULTICAST (BROADCAST) SERVICE CANCELLATION REQUEST
(13) STOPPAGE OF LOGICAL CHANNEL TRANSMISSION
STOPPAGE OF PHYSICAL CHANNEL TRANSMISSION
WIRELESS CHANNEL CANCELLATION (MOVEMENT SOURCE)
(15) USER DATA CHANNEL CANCELLATION
(16) CONFIRMATION OF MULTICAST (BROADCAST) SERVICE CANCELLATION REQUEST
(17) RESPONSE TO MULTICAST (BROADCAST) SERVICE ZONE TRANSFER COMPLETION COMMUNICATION

FIG. 77

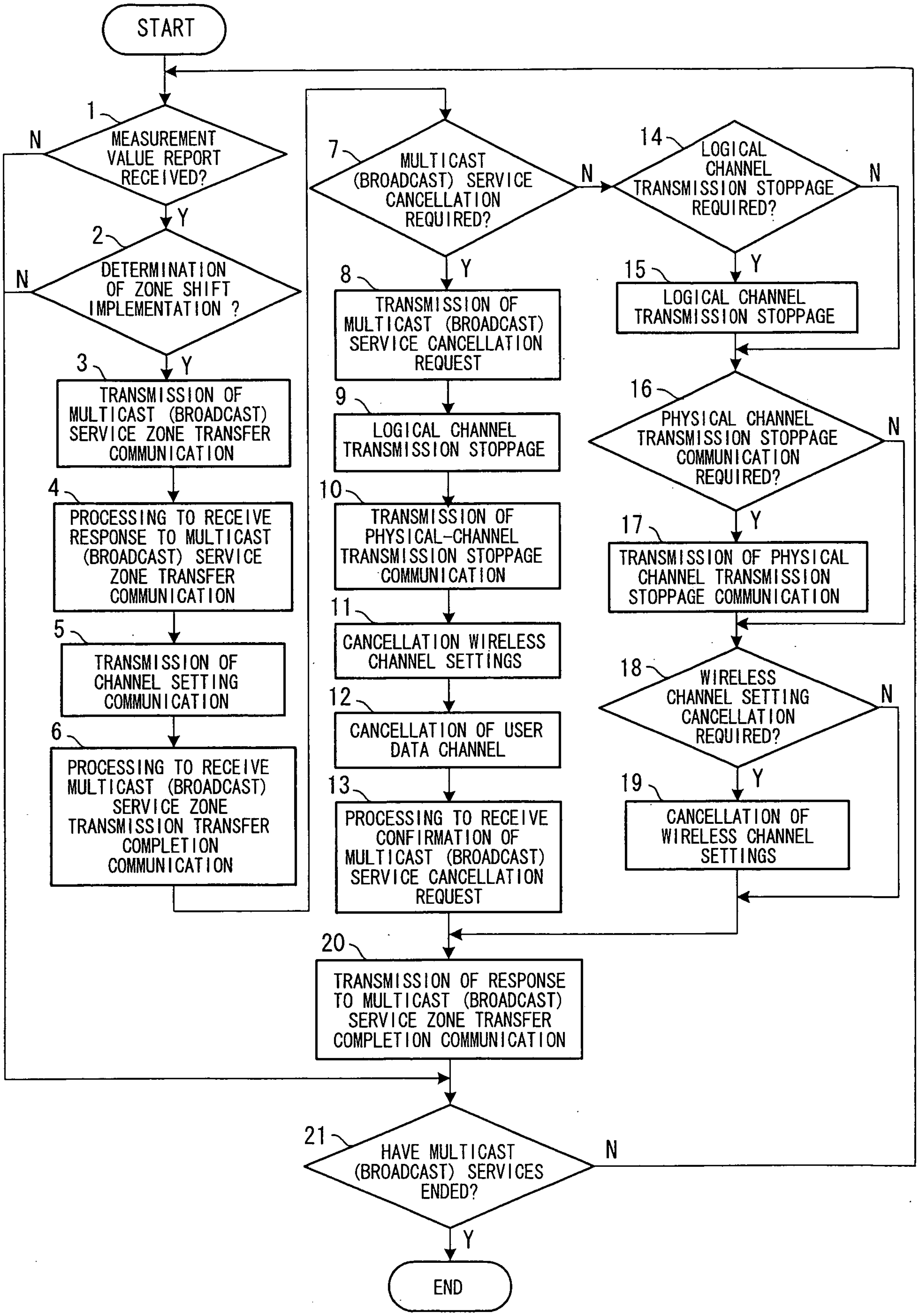
START
1
MEASUREMENT VALUE REPORT RECEIVED?
N
Y
2
DETERMINATION OF ZONE SHIFT IMPLEMENTATION ?
N
Y
3
TRANSMISSION OF MULTICAST (BROADCAST) SERVICE ZONE TRANSFER COMMUNICATION
4
PROCESSING TO RECEIVE RESPONSE TO MULTICAST (BROADCAST) SERVICE ZONE TRANSFER COMMUNICATION
5
TRANSMISSION OF CHANNEL SETTING COMMUNICATION
6
PROCESSING TO RECEIVE MULTICAST (BROADCAST) SERVICE ZONE TRANSMISSION TRANSFER COMPLETION COMMUNICATION
7
MULTICAST (BROADCAST) SERVICE CANCELLATION REQUIRED?
N
Y
8
TRANSMISSION OF MULTICAST (BROADCAST) SERVICE CANCELLATION REQUEST
9
LOGICAL CHANNEL TRANSMISSION STOPPAGE
10
TRANSMISSION OF PHYSICAL-CHANNEL TRANSMISSION STOPPAGE COMMUNICATION
11
CANCELLATION WIRELESS CHANNEL SETTINGS
12
CANCELLATION OF USER DATA CHANNEL
13
PROCESSING TO RECEIVE CONFIRMATION OF MULTICAST (BROADCAST) SERVICE CANCELLATION REQUEST
14
LOGICAL CHANNEL TRANSMISSION STOPPAGE REQUIRED?
N
Y
15
LOGICAL CHANNEL TRANSMISSION STOPPAGE
16
PHYSICAL CHANNEL TRANSMISSION STOPPAGE COMMUNICATION REQUIRED?
N
Y
17
TRANSMISSION OF PHYSICAL CHANNEL TRANSMISSION STOPPAGE COMMUNICATION
18
WIRELESS CHANNEL SETTING CANCELLATION REQUIRED?
N
Y
19
CANCELLATION OF WIRELESS CHANNEL SETTINGS
20
TRANSMISSION OF RESPONSE TO MULTICAST (BROADCAST) SERVICE ZONE TRANSFER COMPLETION COMMUNICATION
21
HAVE MULTICAST (BROADCAST) SERVICES ENDED?
N
Y
END

FIG. 78

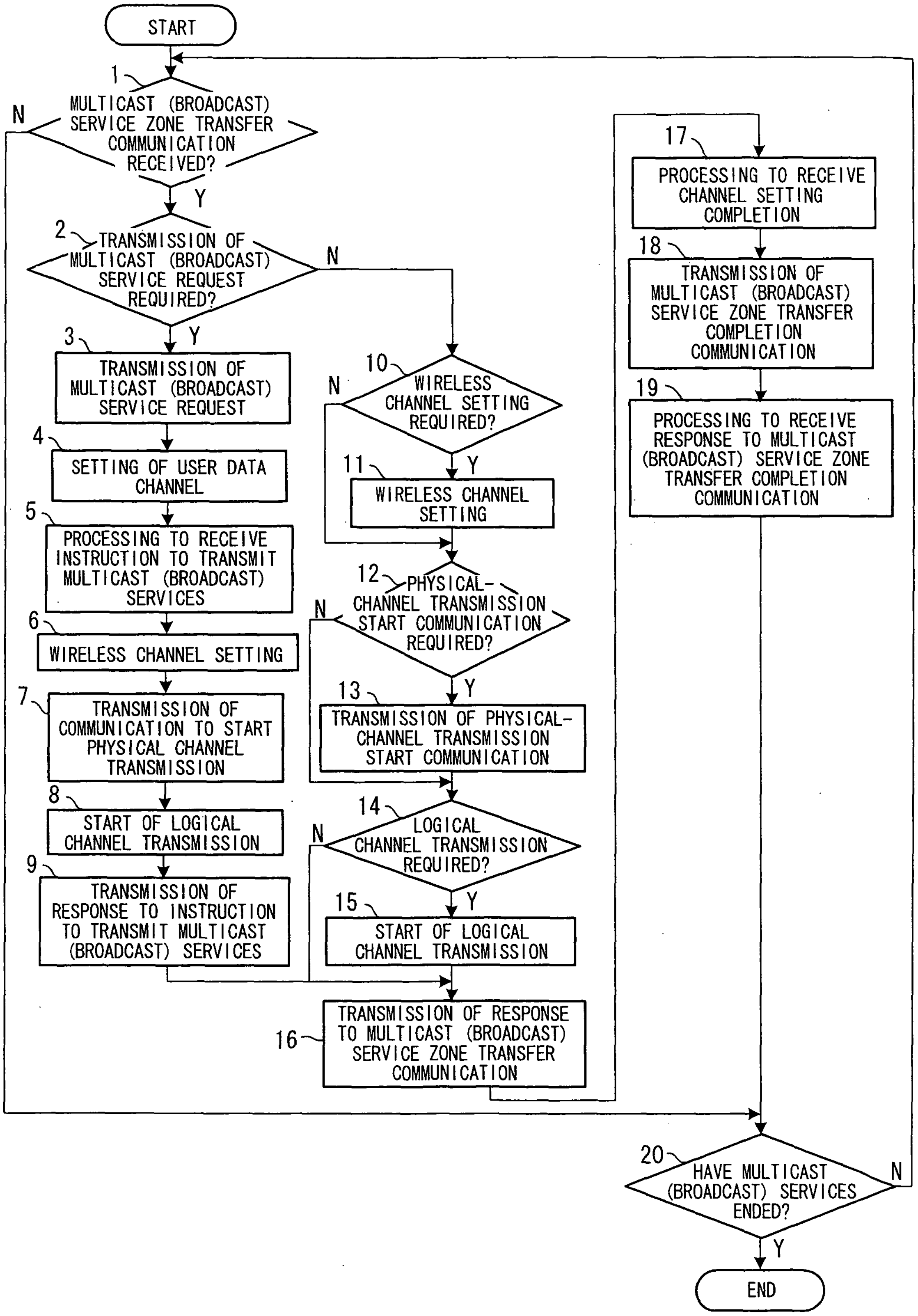
START
1 MULTICAST (BROADCAST) SERVICE ZONE TRANSFER COMMUNICATION RECEIVED?
N
Y
2 TRANSMISSION OF MULTICAST (BROADCAST) SERVICE REQUEST REQUIRED?
3 TRANSMISSION OF MULTICAST (BROADCAST) SERVICE REQUEST
4 SETTING OF USER DATA CHANNEL
5 PROCESSING TO RECEIVE INSTRUCTION TO TRANSMIT MULTICAST (BROADCAST) SERVICES
6 WIRELESS CHANNEL SETTING
7 TRANSMISSION OF COMMUNICATION TO START PHYSICAL CHANNEL TRANSMISSION
8 START OF LOGICAL CHANNEL TRANSMISSION
9 TRANSMISSION OF RESPONSE TO INSTRUCTION TO TRANSMIT MULTICAST (BROADCAST) SERVICES
10 WIRELESS CHANNEL SETTING REQUIRED?
11 WIRELESS CHANNEL SETTING
12 PHYSICAL-CHANNEL TRANSMISSION START COMMUNICATION REQUIRED?
13 TRANSMISSION OF PHYSICAL-CHANNEL TRANSMISSION START COMMUNICATION
14 LOGICAL CHANNEL TRANSMISSION REQUIRED?
15 START OF LOGICAL CHANNEL TRANSMISSION
16 TRANSMISSION OF RESPONSE TO MULTICAST (BROADCAST) SERVICE ZONE TRANSFER COMMUNICATION
17 PROCESSING TO RECEIVE CHANNEL SETTING COMPLETION
18 TRANSMISSION OF MULTICAST (BROADCAST) SERVICE ZONE TRANSFER COMPLETION COMMUNICATION
19 PROCESSING TO RECEIVE RESPONSE TO MULTICAST (BROADCAST) SERVICE ZONE TRANSFER COMPLETION COMMUNICATION
20 HAVE MULTICAST (BROADCAST) SERVICES ENDED?
END

FIG. 79

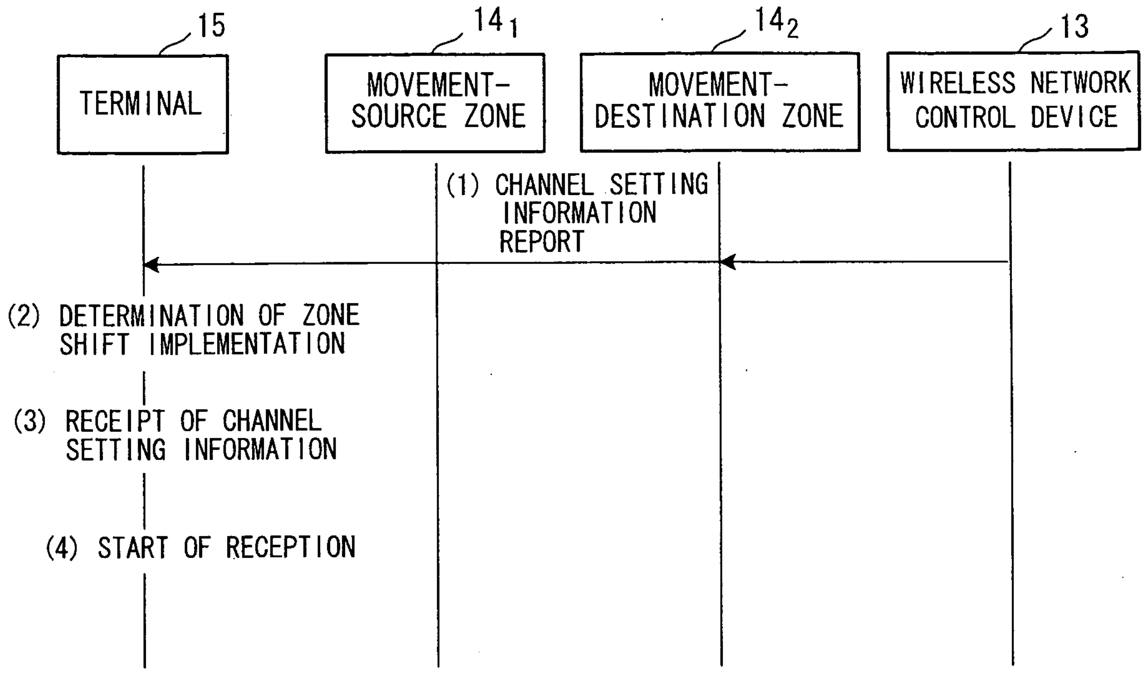
15
TERMINAL
14₁
MOVEMENT-SOURCE ZONE
14₂
MOVEMENT-DESTINATION ZONE
13
WIRELESS NETWORK CONTROL DEVICE
(1) CHANNEL SETTING INFORMATION REPORT
(2) DETERMINATION OF ZONE SHIFT IMPLEMENTATION
(3) RECEIPT OF CHANNEL SETTING INFORMATION
(4) START OF RECEPTION

FIG. 80

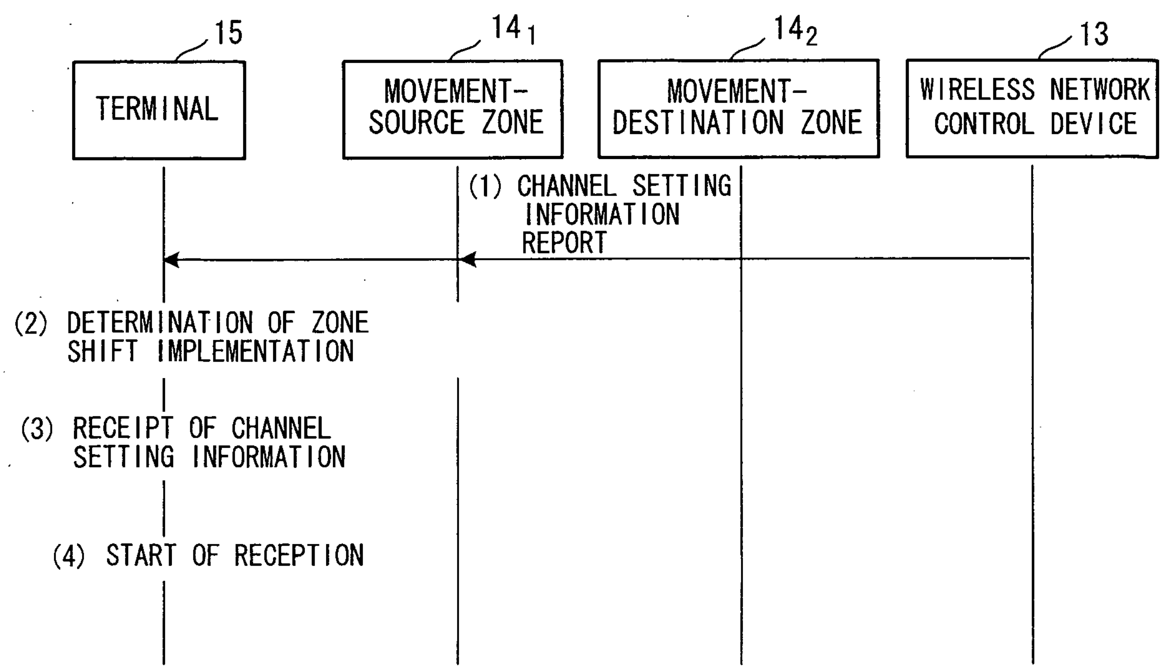
15
TERMINAL
14₁
MOVEMENT-SOURCE ZONE
14₂
MOVEMENT-DESTINATION ZONE
13
WIRELESS NETWORK CONTROL DEVICE
(1) CHANNEL SETTING INFORMATION REPORT
(2) DETERMINATION OF ZONE SHIFT IMPLEMENTATION
(3) RECEIPT OF CHANNEL SETTING INFORMATION
(4) START OF RECEPTION

FIG. 81

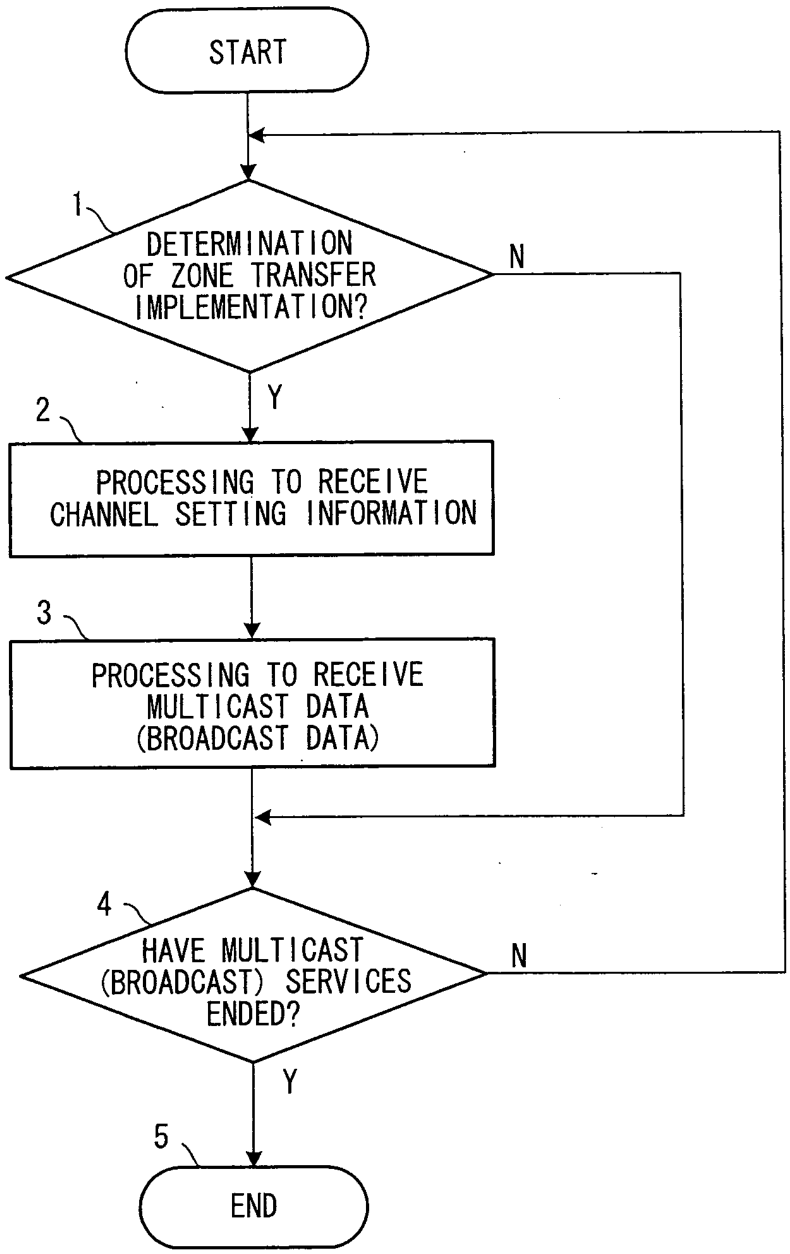
START
1
DETERMINATION OF ZONE TRANSFER IMPLEMENTATION?
N
Y
2
PROCESSING TO RECEIVE CHANNEL SETTING INFORMATION
3
PROCESSING TO RECEIVE MULTICAST DATA (BROADCAST DATA)
4
HAVE MULTICAST (BROADCAST) SERVICES ENDED?
N
Y
5
END

FIG. 82

| MOVEMENT-SOURCE TERMINAL | MOVEMENT-DESTINATION BASE STATION | ZONE-SWITCHING CHANNEL |
|---|---|---|
| DEDICATED PHYSICAL CHANNEL | STOPPED | DEDICATED PHYSICAL CHANNEL |
| DEDICATED PHYSICAL CHANNEL | DEDICATED PHYSICAL CHANNEL | DEDICATED PHYSICAL CHANNEL |
| DEDICATED PHYSICAL CHANNEL | COMMON PHYSICAL CHANNEL | DEDICATED PHYSICAL CHANNEL |
| COMMON PHYSICAL CHANNEL | STOPPED | DEDICATED PHYSICAL CHANNEL |
| COMMON PHYSICAL CHANNEL | DEDICATED PHYSICAL CHANNEL | DEDICATED PHYSICAL CHANNEL |
| COMMON PHYSICAL CHANNEL | COMMON PHYSICAL CHANNEL | DEDICATED PHYSICAL CHANNEL |

FIG. 83

| CHANNEL OF MOVEMENT-DESTINATION BASE STATION | MOVEMENT-DESTINATION OPERATION |
|---|---|
| STOPPED | CONTINUED COMMUNICATION ON DEDICATED PHYSICAL CHANNEL |
| DEDICATED PHYSICAL CHANNEL | CONTINUED COMMUNICATION ON DEDICATED PHYSICAL CHANNEL |
| COMMON PHYSICAL CHANNEL | SWITCH FROM DEDICATED PHYSICAL CHANNEL TO COMMON PHYSICAL CHANNEL |

FIG. 84

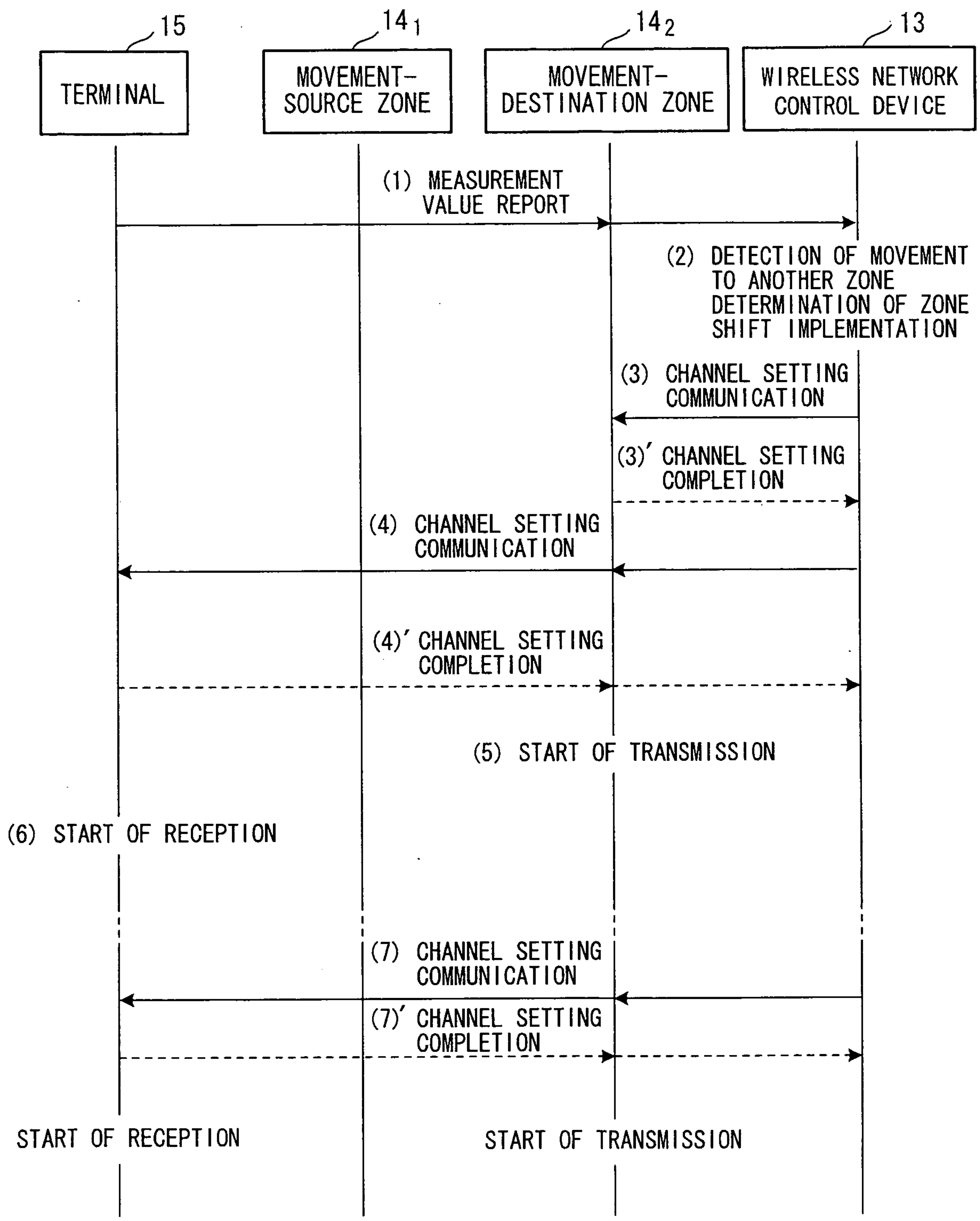
15
TERMINAL
14₁
MOVEMENT-SOURCE ZONE
14₂
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE DETERMINATION OF ZONE SHIFT IMPLEMENTATION
(3) CHANNEL SETTING COMMUNICATION
(3)′ CHANNEL SETTING COMPLETION
(4) CHANNEL SETTING COMMUNICATION
(4)′ CHANNEL SETTING COMPLETION
(5) START OF TRANSMISSION
(6) START OF RECEPTION
(7) CHANNEL SETTING COMMUNICATION
(7)′ CHANNEL SETTING COMPLETION
START OF RECEPTION
START OF TRANSMISSION

FIG. 85

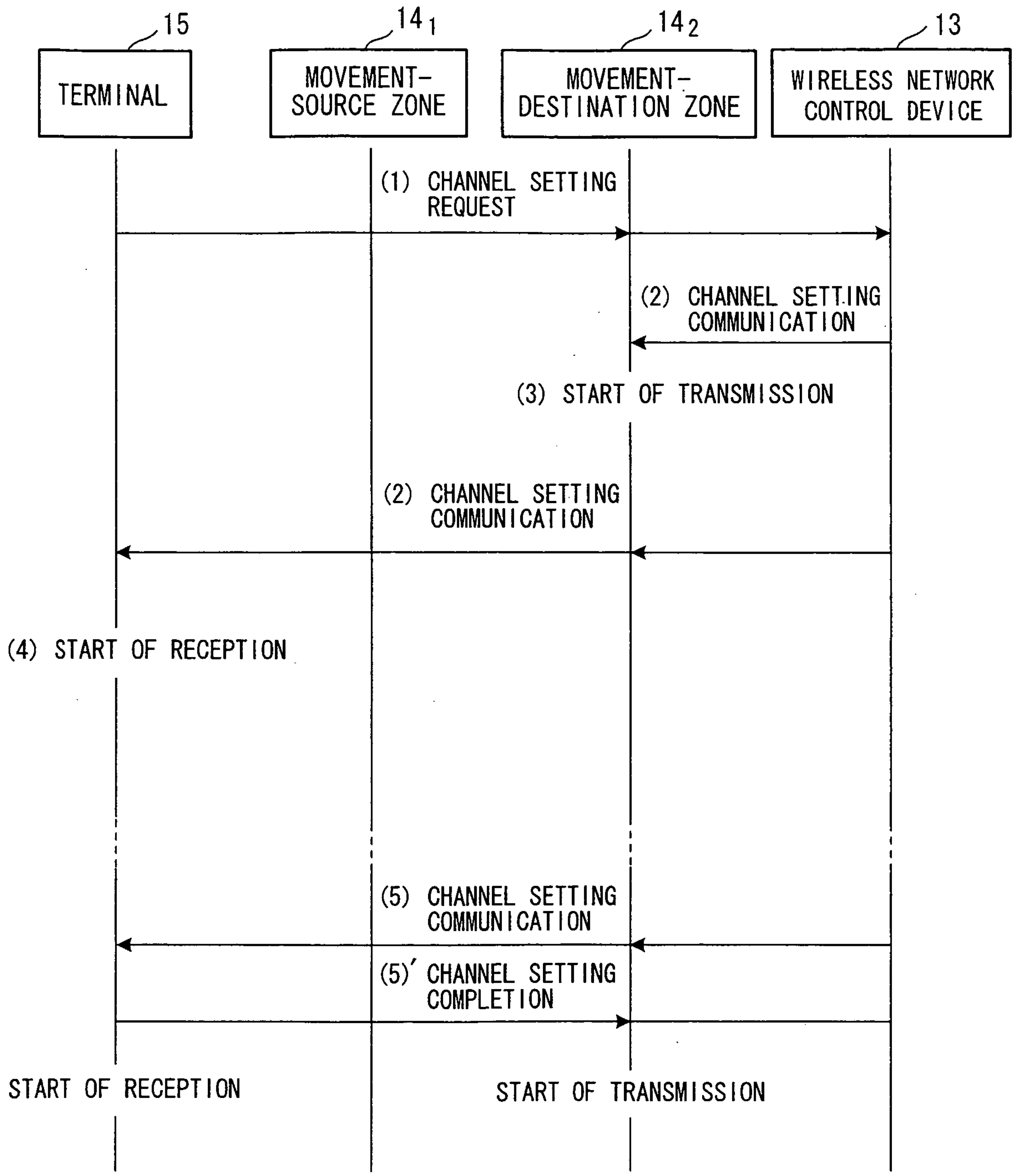
15
$14_1$
$14_2$
13
TERMINAL
MOVEMENT-SOURCE ZONE
MOVEMENT-DESTINATION ZONE
WIRELESS NETWORK CONTROL DEVICE
(1) CHANNEL SETTING REQUEST
(2) CHANNEL SETTING COMMUNICATION
(3) START OF TRANSMISSION
(2) CHANNEL SETTING COMMUNICATION
(4) START OF RECEPTION
(5) CHANNEL SETTING COMMUNICATION
(5)′ CHANNEL SETTING COMPLETION
START OF RECEPTION
START OF TRANSMISSION

FIG. 86

| CHANNEL OF MOVEMENT-SOURCE TERMINAL | CHANNEL OF MOVEMENT-DESTINATION BASE STATION | ZONE-SWITCHING CHANNEL |
|---|---|---|
| DEDICATED LOGICAL CHANNEL | STOPPED | DEDICATED LOGICAL CHANNEL |
| DEDICATED LOGICAL CHANNEL | DEDICATED LOGICAL CHANNEL | DEDICATED LOGICAL CHANNEL |
| DEDICATED LOGICAL CHANNEL | COMMON LOGICAL CHANNEL | DEDICATED LOGICAL CHANNEL |
| COMMON LOGICAL CHANNEL | STOPPED | DEDICATED LOGICAL CHANNEL |
| COMMON LOGICAL CHANNEL | DEDICATED LOGICAL CHANNEL | DEDICATED LOGICAL CHANNEL |
| COMMON LOGICAL CHANNEL | COMMON LOGICAL CHANNEL | DEDICATED LOGICAL CHANNEL |

FIG. 87

| CHANNEL OF MOVEMENT-DESTINATION BASE STATION | MOVEMENT-DESTINATION OPERATION |
|---|---|
| STOPPED | CONTINUED COMMUNICATION ON DEDICATED LOGICAL CHANNEL |
| DEDICATED LOGICAL CHANNEL | CONTINUED COMMUNICATION ON DEDICATED LOGICAL CHANNEL |
| COMMON LOGICAL CHANNEL | SWITCH FROM DEDICATED LOGICAL CHANNEL TO COMMON PHYSICAL CHANNEL |

FIG. 88

| CHANNEL OF MOVEMENT-SOURCE TERMINAL | CHANNEL OF MOVEMENT-DESTINATION BASE STATION | ZONE-SWITCHING CHANNEL | MOVEMENT-DESTINATION OPERATION |
|---|---|---|---|
| DEDICATED PHYSICAL CHANNEL | STOPPED | DEDICATED PHYSICAL CHANNEL | CONTINUED COMMUNICATION ON DEDICATED PHYSICAL CHANNEL |
| DEDICATED PHYSICAL CHANNEL | DEDICATED PHYSICAL CHANNEL | DEDICATED PHYSICAL CHANNEL | CONTINUED COMMUNICATION ON DEDICATED PHYSICAL CHANNEL |
| DEDICATED PHYSICAL CHANNEL | COMMON PHYSICAL CHANNEL | DEDICATED PHYSICAL CHANNEL | SWITCH FROM DEDICATED PHYSICAL CHANNEL TO COMMON PHYSICAL CHANNEL |
| COMMON PHYSICAL CHANNEL | STOPPED | DEDICATED PHYSICAL CHANNEL | CONTINUED COMMUNICATION ON DEDICATED PHYSICAL CHANNEL |
| COMMON PHYSICAL CHANNEL | DEDICATED PHYSICAL CHANNEL | DEDICATED PHYSICAL CHANNEL | CONTINUED COMMUNICATION ON DEDICATED PHYSICAL CHANNEL |
| COMMON PHYSICAL CHANNEL | COMMON PHYSICAL CHANNEL | COMMON PHYSICAL CHANNEL | CONTINUED COMMUNICATION ON COMMON PHYSICAL CHANNEL |

FIG. 89

| CHANNEL OF MOVEMENT-SOURCE TERMINAL | CHANNEL OF MOVEMENT-DESTINATION BASE STATION | ZONE-SWITCHING CHANNEL | MOVEMENT-DESTINATION OPERATION |
|---|---|---|---|
| DEDICATED LOGICAL CHANNEL | STOPPED | DEDICATED LOGICAL CHANNEL | CONTINUED COMMUNICATION ON DEDICATED LOGICAL CHANNEL |
| DEDICATED LOGICAL CHANNEL | DEDICATED LOGICAL CHANNEL | DEDICATED LOGICAL CHANNEL | CONTINUED COMMUNICATION ON DEDICATED LOGICAL CHANNEL |
| DEDICATED LOGICAL CHANNEL | COMMON LOGICAL CHANNEL | DEDICATED LOGICAL CHANNEL | SWITCH FROM DEDICATED LOGICAL CHANNEL TO COMMON LOGICAL CHANNEL |
| COMMON LOGICAL CHANNEL | STOPPED | DEDICATED LOGICAL CHANNEL | CONTINUED COMMUNICATION ON DEDICATED LOGICAL CHANNEL |
| COMMON LOGICAL CHANNEL | DEDICATED LOGICAL CHANNEL | DEDICATED LOGICAL CHANNEL | CONTINUED COMMUNICATION ON DEDICATED LOGICAL CHANNEL |
| COMMON LOGICAL CHANNEL | COMMON LOGICAL CHANNEL | COMMON LOGICAL CHANNEL | CONTINUED COMMUNICATION ON COMMON LOGICAL CHANNEL |

FIG. 90

| CHANNEL OF MOVEMENT-SOURCE TERMINAL | CHANNEL OF MOVEMENT-DESTINATION BASE STATION | ZONE-SWITCHING CHANNEL | MOVEMENT-DESTINATION OPERATION |
|---|---|---|---|
| DEDICATED PHYSICAL CHANNEL | STOPPED | DEDICATED PHYSICAL CHANNEL | CONTINUED COMMUNICATION ON DEDICATED PHYSICAL CHANNEL |
| DEDICATED PHYSICAL CHANNEL | DEDICATED PHYSICAL CHANNEL | DEDICATED PHYSICAL CHANNEL | CONTINUED COMMUNICATION ON DEDICATED PHYSICAL CHANNEL |
| DEDICATED PHYSICAL CHANNEL | COMMON PHYSICAL CHANNEL | DEDICATED PHYSICAL CHANNEL | SWITCH FROM DEDICATED PHYSICAL CHANNEL TO COMMON PHYSICAL CHANNEL |
| COMMON PHYSICAL CHANNEL | STOPPED | COMMON PHYSICAL CHANNEL | SWITCH FROM COMMON PHYSICAL CHANNEL TO DEDICATED PHYSICAL CHANNEL |
| COMMON PHYSICAL CHANNEL | DEDICATED PHYSICAL CHANNEL | COMMON PHYSICAL CHANNEL | SWITCH FROM COMMON PHYSICAL CHANNEL TO DEDICATED PHYSICAL CHANNEL |
| COMMON PHYSICAL CHANNEL | COMMON PHYSICAL CHANNEL | COMMON PHYSICAL CHANNEL | CONTINUED COMMUNICATION ON COMMON PHYSICAL CHANNEL |

FIG. 91

| CHANNEL OF MOVEMENT-SOURCE TERMINAL | CHANNEL OF MOVEMENT-DESTINATION BASE STATION | ZONE-SWITCHING CHANNEL | MOVEMENT-DESTINATION OPERATION |
|---|---|---|---|
| DEDICATED LOGICAL CHANNEL | STOPPED | DEDICATED LOGICAL CHANNEL | CONTINUED COMMUNICATION ON DEDICATED LOGICAL CHANNEL |
| DEDICATED LOGICAL CHANNEL | DEDICATED LOGICAL CHANNEL | DEDICATED LOGICAL CHANNEL | CONTINUED COMMUNICATION ON DEDICATED LOGICAL CHANNEL |
| DEDICATED LOGICAL CHANNEL | COMMON LOGICAL CHANNEL | DEDICATED LOGICAL CHANNEL | SWITCH FROM DEDICATED LOGICAL CHANNEL TO COMMON LOGICAL CHANNEL |
| COMMON LOGICAL CHANNEL | STOPPED | COMMON LOGICAL CHANNEL | SWITCH FROM COMMON LOGICAL CHANNEL TO DEDICATED LOGICAL CHANNEL |
| COMMON LOGICAL CHANNEL | DEDICATED LOGICAL CHANNEL | COMMON LOGICAL CHANNEL | SWITCH FROM COMMON LOGICAL CHANNEL TO DEDICATED LOGICAL CHANNEL |
| COMMON LOGICAL CHANNEL | COMMON LOGICAL CHANNEL | COMMON LOGICAL CHANNEL | CONTINUED COMMUNICATION ON COMMON LOGICAL CHANNEL |

FIG. 92

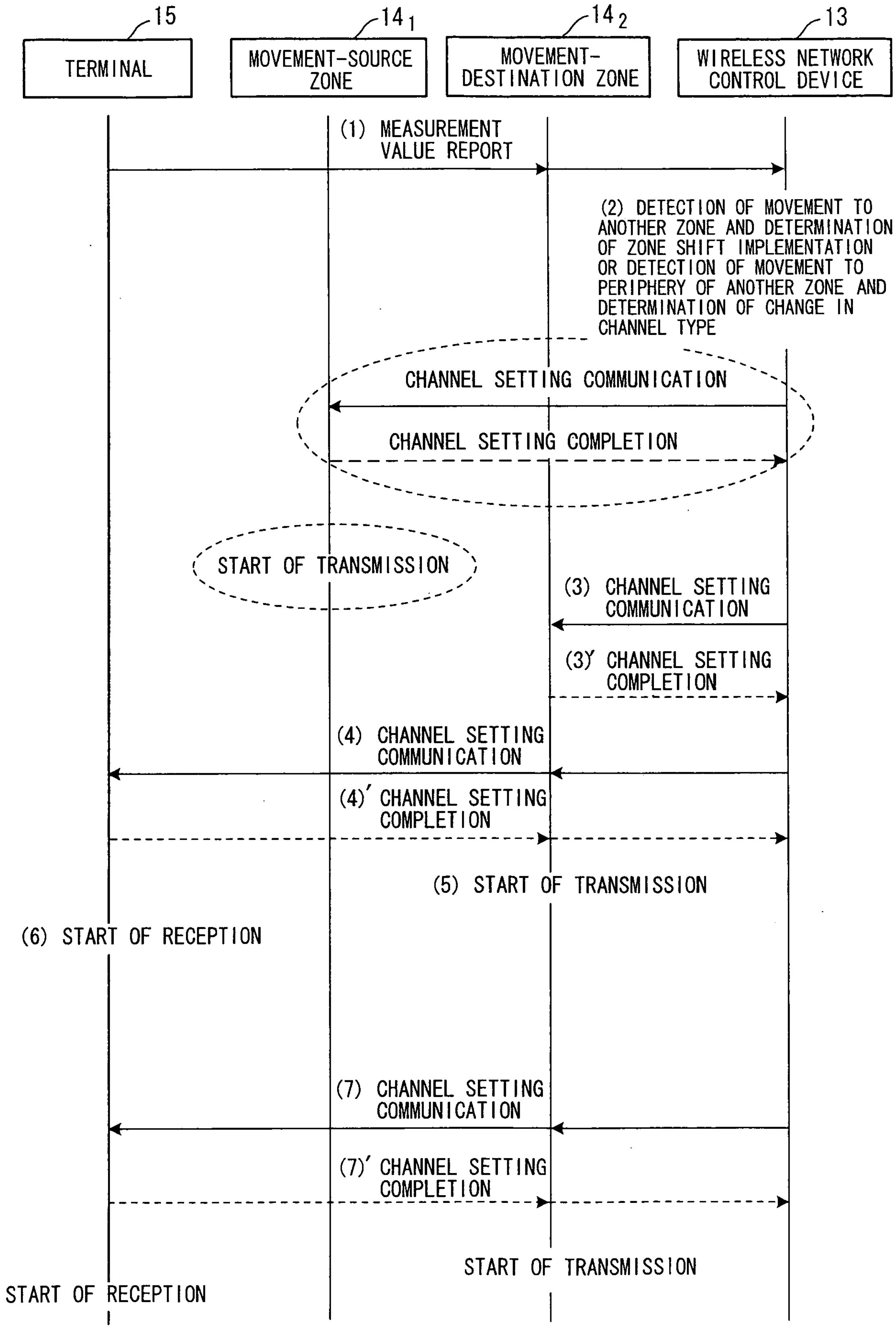
15
14₁
14₂
13
TERMINAL
MOVEMENT-SOURCE ZONE
MOVEMENT-DESTINATION ZONE
WIRELESS NETWORK CONTROL DEVICE
(1) MEASUREMENT VALUE REPORT
(2) DETECTION OF MOVEMENT TO ANOTHER ZONE AND DETERMINATION OF ZONE SHIFT IMPLEMENTATION OR DETECTION OF MOVEMENT TO PERIPHERY OF ANOTHER ZONE AND DETERMINATION OF CHANGE IN CHANNEL TYPE
CHANNEL SETTING COMMUNICATION
CHANNEL SETTING COMPLETION
START OF TRANSMISSION
(3) CHANNEL SETTING COMMUNICATION
(3)' CHANNEL SETTING COMPLETION
(4) CHANNEL SETTING COMMUNICATION
(4)' CHANNEL SETTING COMPLETION
(5) START OF TRANSMISSION
(6) START OF RECEPTION
(7) CHANNEL SETTING COMMUNICATION
(7)' CHANNEL SETTING COMPLETION
START OF TRANSMISSION
START OF RECEPTION

FIG. 93

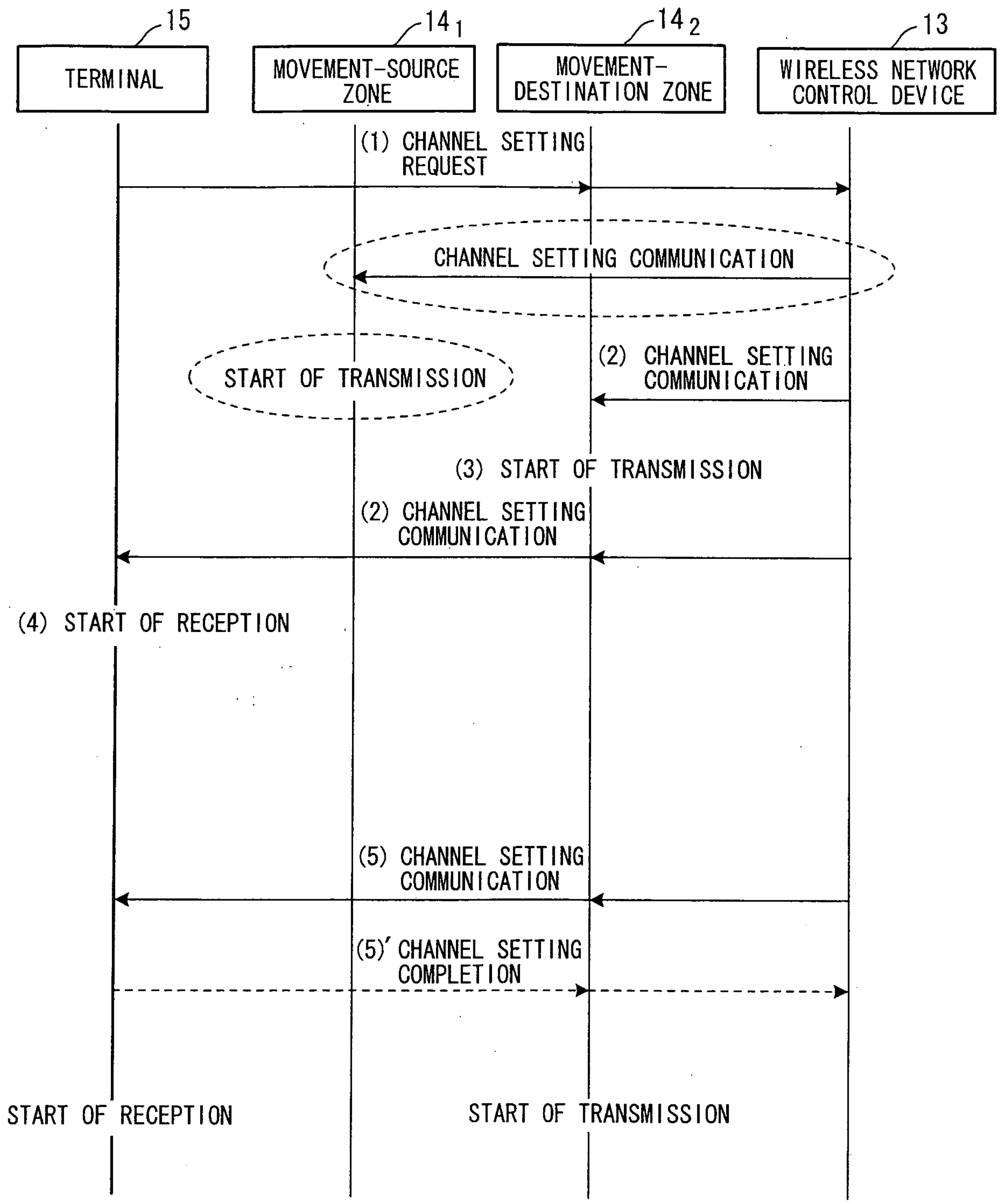
15
TERMINAL
14 1
MOVEMENT-SOURCE ZONE
14 2
MOVEMENT-DESTINATION ZONE
13
WIRELESS NETWORK CONTROL DEVICE
(1) CHANNEL SETTING REQUEST
CHANNEL SETTING COMMUNICATION
START OF TRANSMISSION
(2) CHANNEL SETTING COMMUNICATION
(3) START OF TRANSMISSION
(2) CHANNEL SETTING COMMUNICATION
(4) START OF RECEPTION
(5) CHANNEL SETTING COMMUNICATION
(5)' CHANNEL SETTING COMPLETION
START OF RECEPTION
START OF TRANSMISSION

FIG. 94

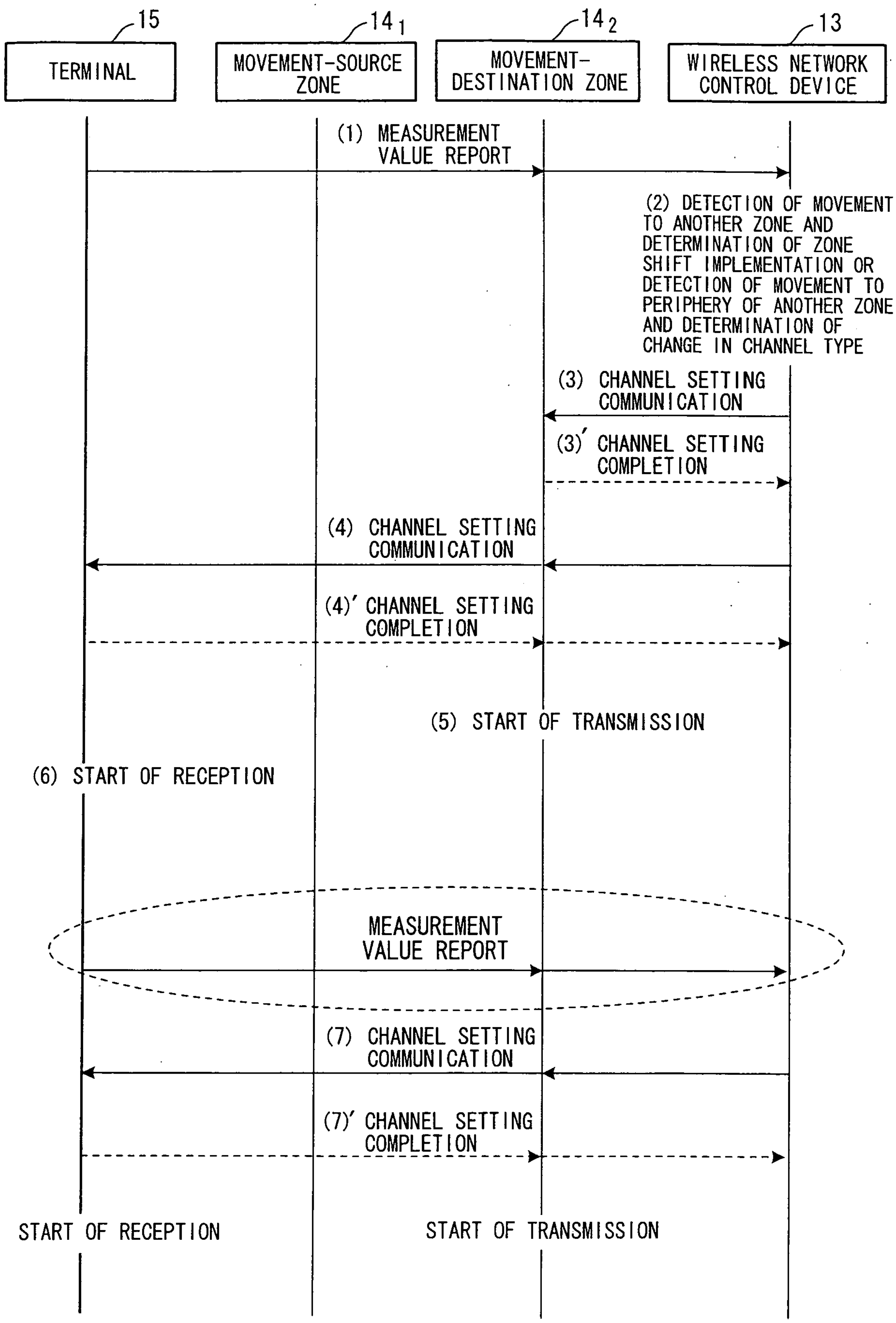
15
TERMINAL
14 1
MOVEMENT-SOURCE ZONE
14 2
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE AND DETERMINATION OF ZONE SHIFT IMPLEMENTATION OR DETECTION OF MOVEMENT TO PERIPHERY OF ANOTHER ZONE AND DETERMINATION OF CHANGE IN CHANNEL TYPE
(3) CHANNEL SETTING COMMUNICATION
(3)′ CHANNEL SETTING COMPLETION
(4) CHANNEL SETTING COMMUNICATION
(4)′ CHANNEL SETTING COMPLETION
(5) START OF TRANSMISSION
(6) START OF RECEPTION
MEASUREMENT VALUE REPORT
(7) CHANNEL SETTING COMMUNICATION
(7)′ CHANNEL SETTING COMPLETION
START OF RECEPTION
START OF TRANSMISSION

FIG. 95

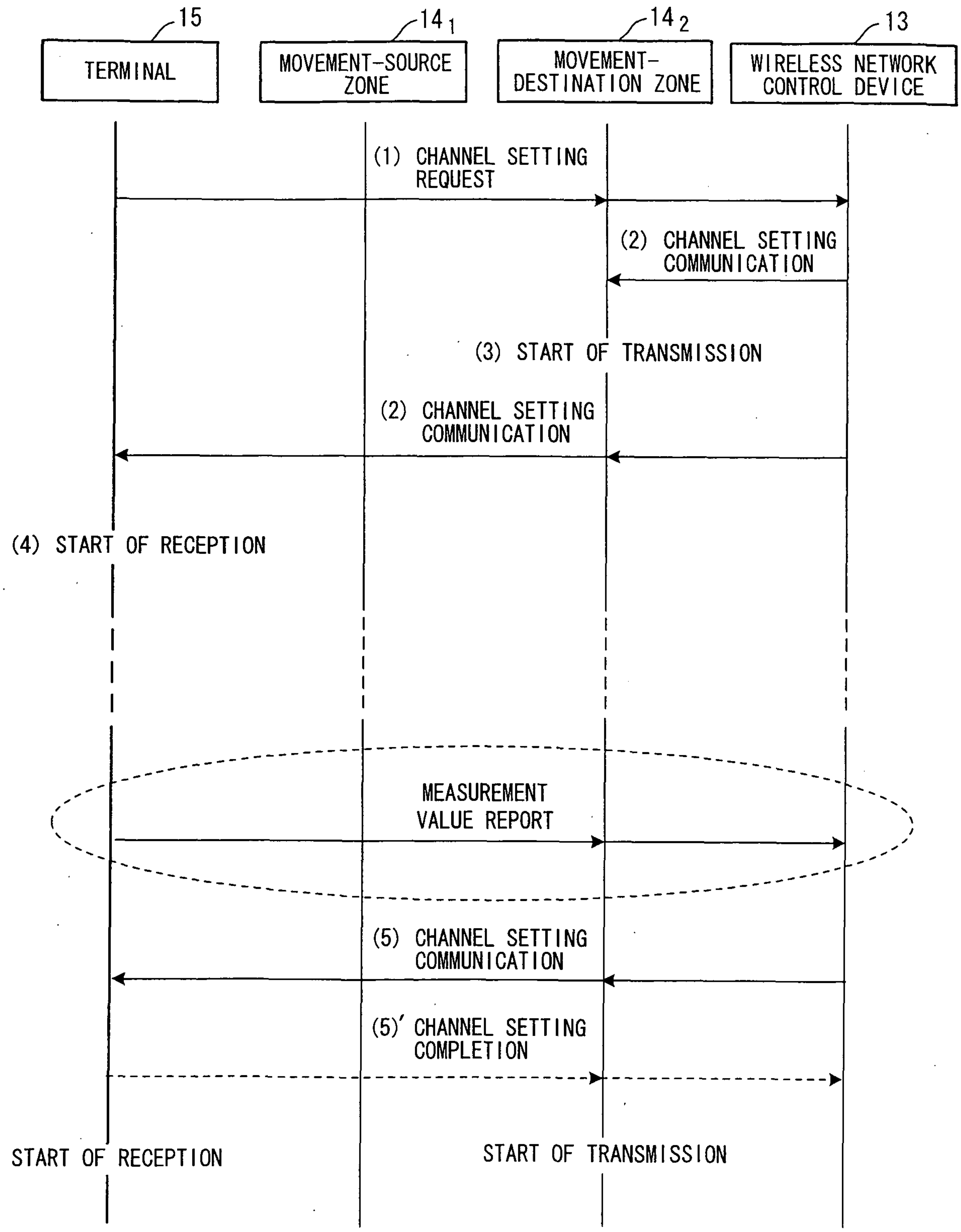
15
TERMINAL
14 1
MOVEMENT-SOURCE ZONE
14 2
MOVEMENT-DESTINATION ZONE
13
WIRELESS NETWORK CONTROL DEVICE
(1) CHANNEL SETTING REQUEST
(2) CHANNEL SETTING COMMUNICATION
(3) START OF TRANSMISSION
(2) CHANNEL SETTING COMMUNICATION
(4) START OF RECEPTION
MEASUREMENT VALUE REPORT
(5) CHANNEL SETTING COMMUNICATION
(5)′ CHANNEL SETTING COMPLETION
START OF RECEPTION
START OF TRANSMISSION

FIG. 96

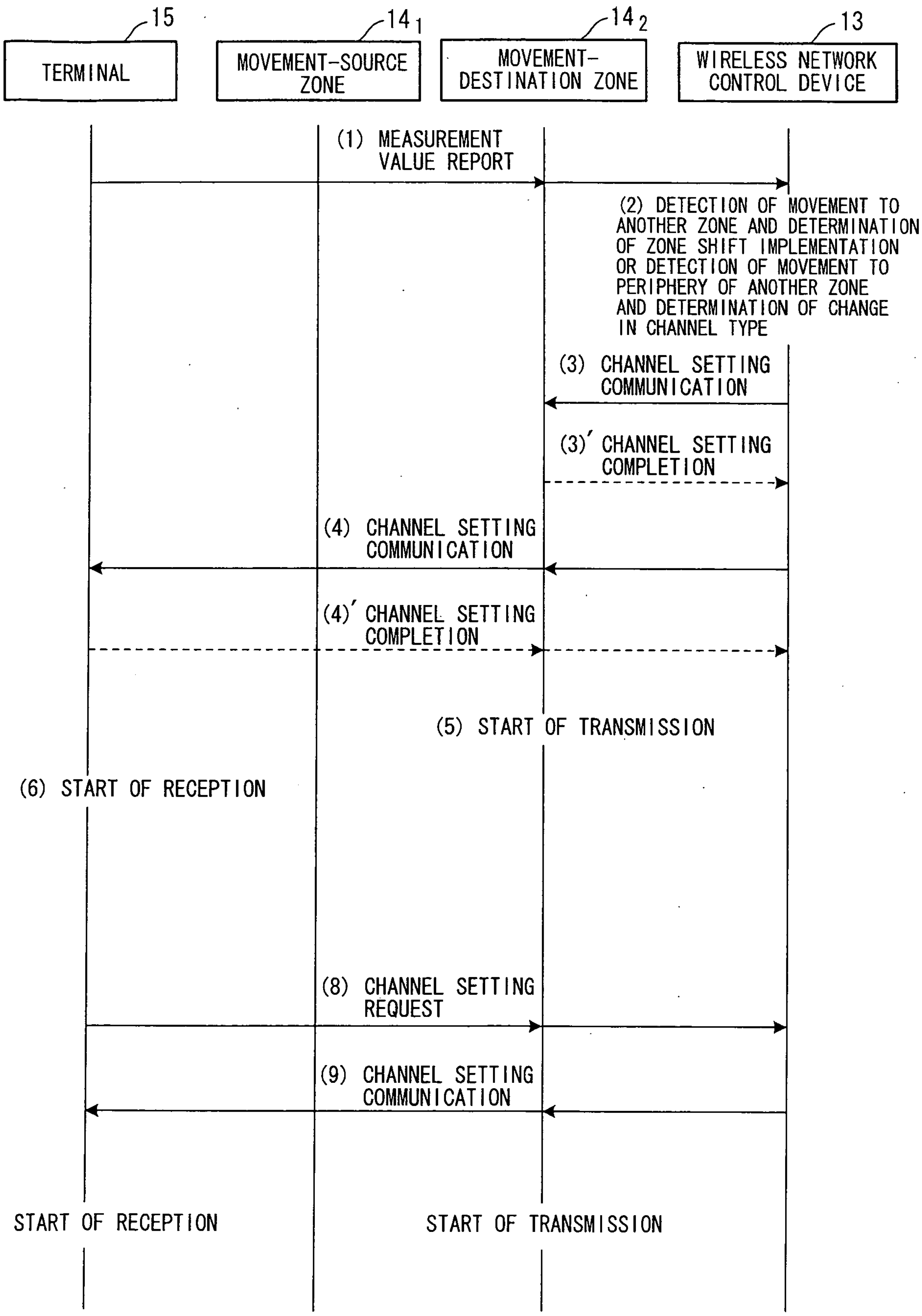
15
TERMINAL
14 1
MOVEMENT-SOURCE ZONE
14 2
MOVEMENT-DESTINATION ZONE
13
WIRELESS NETWORK CONTROL DEVICE
(1) MEASUREMENT VALUE REPORT
(2) DETECTION OF MOVEMENT TO ANOTHER ZONE AND DETERMINATION OF ZONE SHIFT IMPLEMENTATION OR DETECTION OF MOVEMENT TO PERIPHERY OF ANOTHER ZONE AND DETERMINATION OF CHANGE IN CHANNEL TYPE
(3) CHANNEL SETTING COMMUNICATION
(3)′ CHANNEL SETTING COMPLETION
(4) CHANNEL SETTING COMMUNICATION
(4)′ CHANNEL SETTING COMPLETION
(5) START OF TRANSMISSION
(6) START OF RECEPTION
(8) CHANNEL SETTING REQUEST
(9) CHANNEL SETTING COMMUNICATION
START OF RECEPTION
START OF TRANSMISSION

FIG. 97

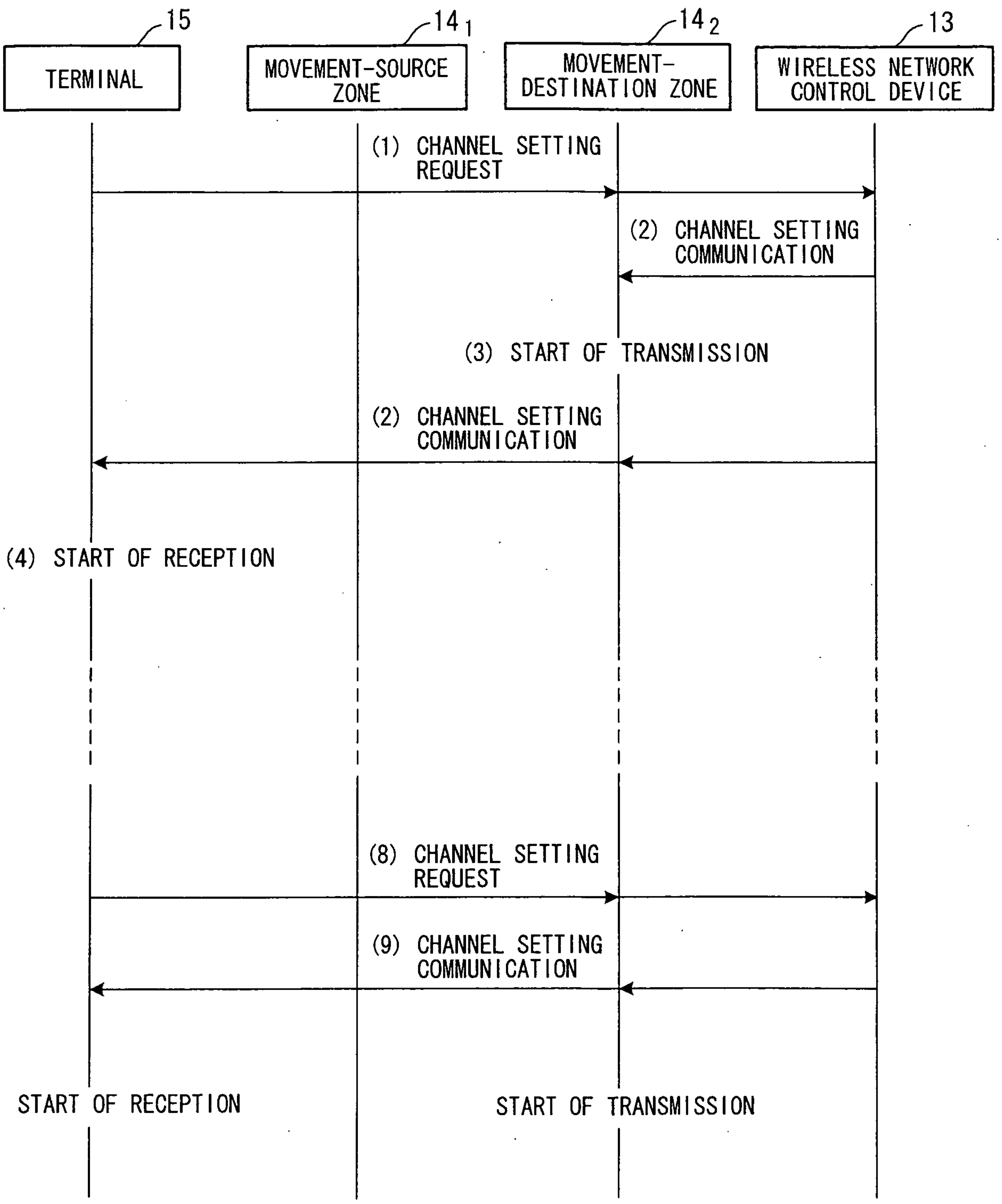
15
TERMINAL
14 1
MOVEMENT-SOURCE ZONE
14 2
MOVEMENT-DESTINATION ZONE
13
WIRELESS NETWORK CONTROL DEVICE
(1) CHANNEL SETTING REQUEST
(2) CHANNEL SETTING COMMUNICATION
(3) START OF TRANSMISSION
(2) CHANNEL SETTING COMMUNICATION
(4) START OF RECEPTION
(8) CHANNEL SETTING REQUEST
(9) CHANNEL SETTING COMMUNICATION
START OF RECEPTION
START OF TRANSMISSION

FIG. 98

| WIRELESS CHANNEL OF MOVEMENT-SOURCE TERMINAL | WIRELESS CHANNEL OF MOVEMENT-DESTINATION BASE STATION | COMMUNICATION TO TERMINAL | IMPLEMENTATION METHOD |
|---|---|---|---|
| DEDICATED WIRELESS CHANNEL | STOPPED | DEDICATED WIRELESS CHANNEL | FOURTH EMBODIMENT |
| DEDICATED WIRELESS CHANNEL | DEDICATED WIRELESS CHANNEL | DEDICATED WIRELESS CHANNEL | SIXTH EMBODIMENT |
| DEDICATED WIRELESS CHANNEL | COMMON WIRELESS CHANNEL | COMMON WIRELESS CHANNEL | SIXTH EMBODIMENT |
| COMMON WIRELESS CHANNEL | STOPPED | DEDICATED WIRELESS CHANNEL | THIRD EMBODIMENT |
| COMMON WIRELESS CHANNEL | DEDICATED WIRELESS CHANNEL | DEDICATED WIRELESS CHANNEL | FIFTH EMBODIMENT |
| COMMON WIRELESS CHANNEL | COMMON WIRELESS CHANNEL | NONE | SEVENTH EMBODIMENT |

FIG. 99

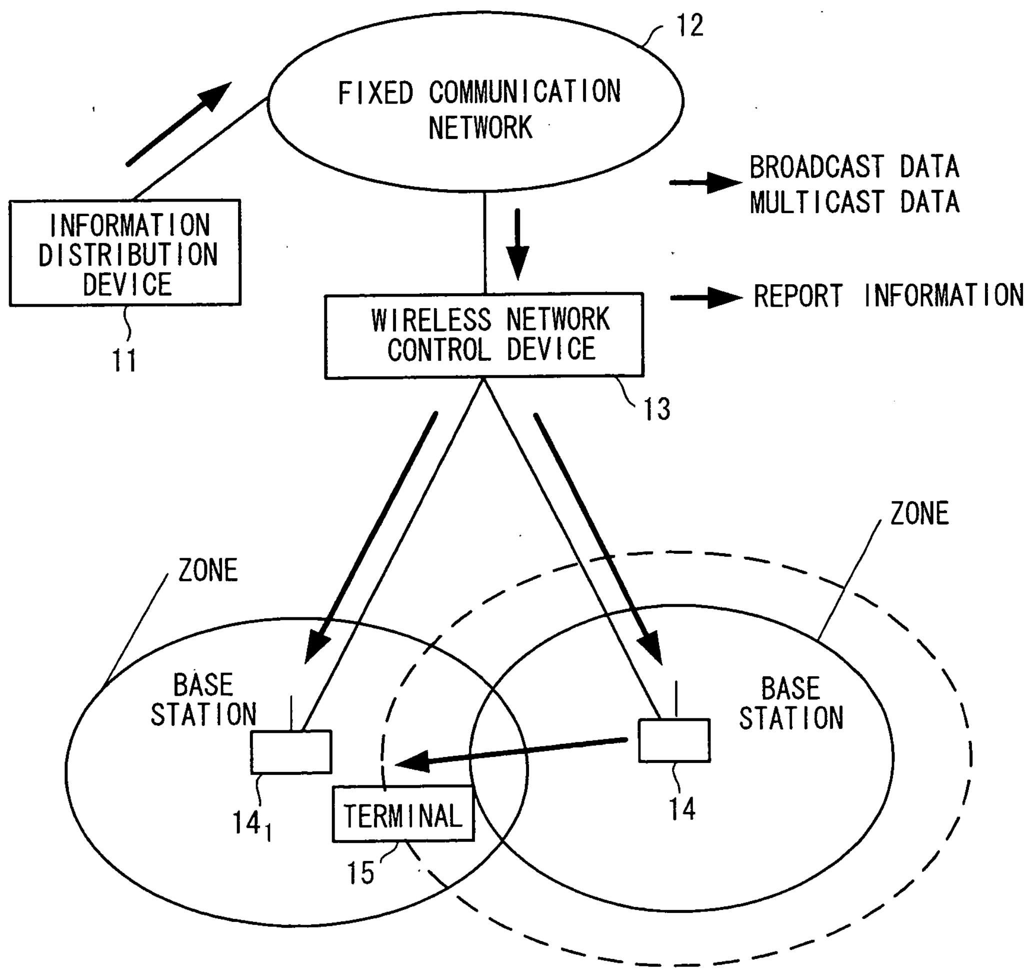

# FIG. 100

| | TRANSMISSION STATE | SUPPLY CHANNEL | WIRELESS RESOURCE | | |
|---|---|---|---|---|---|
| | | | FREQUENCY | SPREAD CODE | TIME SLOT |
| SERVICE 1 | 0 | 0 | f1 | C1 | 0 |
| SERVICE 2 | 1 | 1 | f2 | C2 | 1 |
| SERVICE 3 | 1 | 2 | f3 | C3 | 2 |
| ... | | | | | |
| SERVICE n | 1 | 1 | fn | Cn | 3 |

TRANSMISSION STATE
0: TRANSMISSION STOPPED
1: TRANSMISSION IN PROGRESS

SUPPLY CHANNEL
0: NO SETTING
1: DEDICATED CHANNEL
2: COMMON CHANNEL

FIG. 101

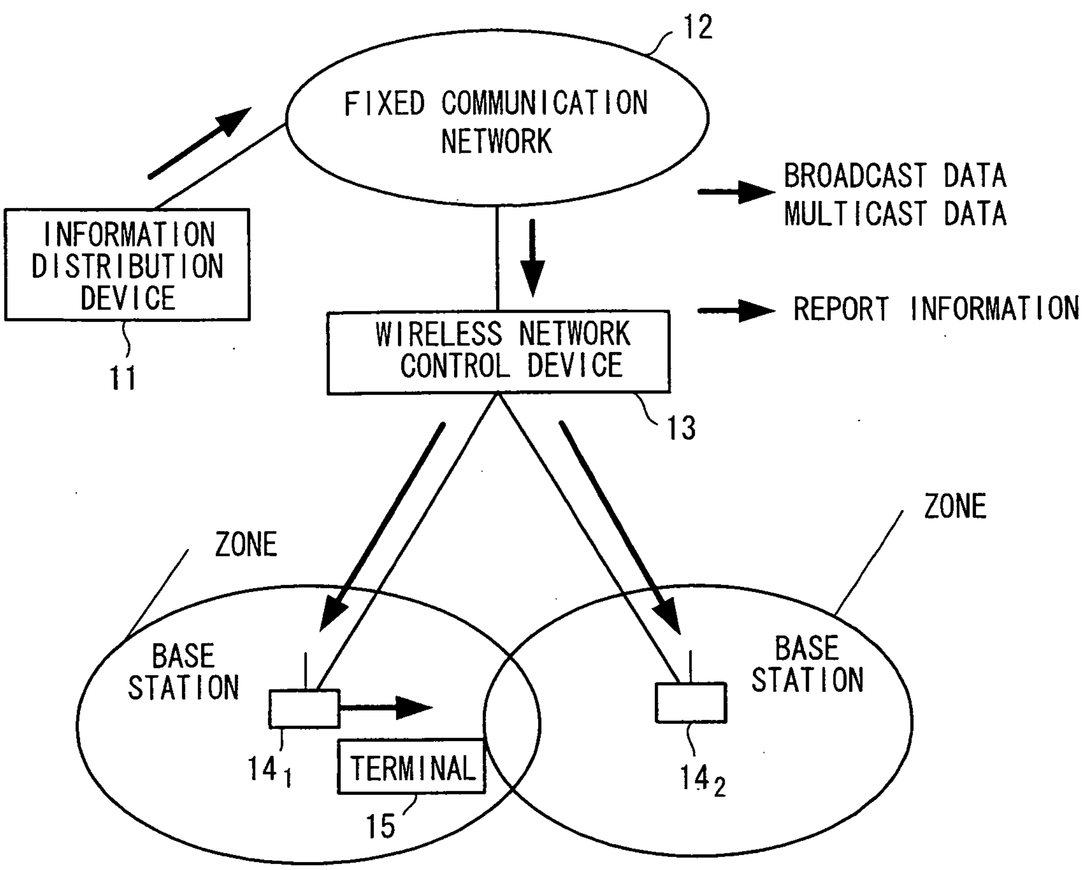
12
FIXED COMMUNICATION NETWORK
BROADCAST DATA
MULTICAST DATA
INFORMATION DISTRIBUTION DEVICE
11
WIRELESS NETWORK CONTROL DEVICE
REPORT INFORMATION
13
ZONE
ZONE
BASE STATION
BASE STATION
$14_1$
TERMINAL
15
$14_2$

FIG. 102

| | | TRANSMISSION STATE | SUPPLY CHANNEL | WIRELESS RESOURCE | | |
|---|---|---|---|---|---|---|
| | | | | FREQUENCY | SPREAD CODE | TIME SLOT |
| ZONE 1 | SERVICE 1 | 0 | 0 | f1 | C1 | 0 |
| | SERVICE 2 | 1 | 1 | f2 | C2 | 1 |
| | SERVICE 3 | 1 | 2 | f3 | C3 | 2 |
| | ... | | | | | |
| | SERVICE n | 1 | 1 | fn | Cn | 3 |
| ZONE 2 | SERVICE 1 | 1 | 2 | f1 | C1 | 0 |
| | SERVICE 2 | 0 | 0 | f2 | C2 | 1 |
| | SERVICE 3 | 1 | 1 | f3 | C3 | 2 |
| | ... | | | | | |
| | SERVICE n | 1 | 1 | fn | Cn | 3 |
| ... | | | | | | |
| ZONE n | SERVICE 1 | 0 | 0 | f1 | C1 | 0 |
| | SERVICE 2 | 1 | 2 | f2 | C2 | 1 |
| | SERVICE 3 | 0 | 0 | f3 | C3 | 2 |
| | ... | | | | | |
| | SERVICE n | 0 | 0 | fn | Cn | 3 |

TRANSMISSION STATE
0: TRANSMISSION STOPPED
1: TRANSMISSION IN PROGRESS

SUPPLY CHANNEL
0: NO SETTING
1: DEDICATED CHANNEL
2: COMMON CHANNEL

## INTERNATIONAL SEARCH REPORT

International application No.
PCT/JP02/11588

A. CLASSIFICATION OF SUBJECT MATTER
Int.Cl[7] H04Q7/38

According to International Patent Classification (IPC) or to both national classification and IPC

B. FIELDS SEARCHED

Minimum documentation searched (classification system followed by classification symbols)
Int.Cl[7] H04B7/24-7/26, H04Q7/00-7/38

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-13847 A (NTT Mobile Communications Network Inc.), | 1,2,4,5,9, 13,14 |
| Y | 14 January, 2000 (14.01.00), | 3,7,11,21 |
| A | Abstract; Claims; page 3, column 3, line 35 to column 4, line 32; Figs. 1, 2 (Family: none) | 6,8,10,12 |
| X | JP 2001-128207 A (NTT Docomo Inc.), 11 May, 2001 (11.05.01), | 15,16,19,20, 24,39,40 |
| Y | Page 3, column 4, line 22 to page 6, column 9, | 3,21,22,26 |
| A | line 17; Figs. 1 to 10 (Family: none) | 17,18,23,25, 27 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 January, 2003 (29.01.03) | 12 February, 2003 (12.02.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/11588

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 2002-171548 A (NTT Docomo Inc.),<br>14 June, 2002 (14.06.02),<br>Abstract; Claims; page 6, line 38 to page 7, column 11, line 28; Figs. 1 to 3<br>& EP 1185125 A1 & US 2002/106985 A1<br>& WO 01/80590 A1 | 28,29,31-33,<br>35-37<br>7,11,22,26<br>30,34,38 |
| A | JP 7-30949 A (NEC Corp.),<br>31 January, 1995 (31.01.95),<br>Abstract; page 4, column 6, line 6 to page 5, column 8, line 47; Figs. 1 to 6<br>& GB 2281177 A & AU 9467466 A<br>& CA 2128137 A | 8,10,12,23,<br>25,27,30,34,<br>38 |

Form PCT/ISA/210 (continuation of second sheet) (July 1998)

## INTERNATIONAL SEARCH REPORT

International application No.
PCT/JP02/11588

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

The inventions of claims 1-14 relate to transmission and stop of transmission of data according to a judgment criterion for determined for each zone whether or not data is transmitted when broadcast data or multicast data is transmitted from a base station.

The inventions of claims 15-27, 39, 40 relate to determination of the type of a radio channel for transmitting data for each zone when broadcast data or multicast data is transmitted from a base station.

The inventions of claims 28-38 relate to a mobile communication system for transmitting broadcast data or multicast data, wherein, when a terminal moves into another zone, (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)

**INTERNATIONAL SEARCH REPORT**

International application No.
PCT/JP02/11588

Continuation of Box No.II of continuation of first sheet(1)

it changes the radio channel to the channel type through which the terminal can receive a service in the zone and receives data.

Form PCT/ISA/210 (extra sheet) (July 1998)